(19) **Europäisches Patentamt**

**European Patent Office**

**Office européen des brevets**

(11) **EP 1 067 471 A1**

(12) **EUROPEAN PATENT APPLICATION**
published in accordance with Art. 158(3) EPC

(43) Date of publication:
**10.01.2001 Bulletin 2001/02**

(51) Int. Cl.⁷: **G06F 17/60**

(21) Application number: **98957206.0**

(86) International application number:
**PCT/JP98/05522**

(22) Date of filing: **07.12.1998**

(87) International publication number:
**WO 99/30259 (17.06.1999 Gazette 1999/24)**

(84) Designated Contracting States:
**GB NL**

(30) Priority: **08.12.1997 JP 33754197**
**08.12.1997 JP 33754297**
**08.12.1997 JP 33754397**
**08.12.1997 JP 33754497**
**08.12.1997 JP 33754597**
**26.06.1998 JP 19652998**
**26.06.1998 JP 19653098**
**13.11.1998 JP 32311898**
**27.11.1998 JP 33741698**

(71) Applicant:
**NIPPON STEEL CORPORATION**
**Tokyo 100-8071 (JP)**

(72) Inventors:
 • **TAKEKUMA, Toshiya**
 **c/o Wise System Corporation**
 **Tokyo 104-0033 (JP)**
 • **MURANAKA, Masanobu**
 **Chiyoda-ku Tokyo 100-8071 (JP)**
 • **NAKAMUTA, Tetsuya**
 **Chiyoda-ku Tokyo 100-8071 (JP)**
 • **SAITO, Yuko**
 **c/o Wise System Corporation**
 **Tokyo 107-0033 (JP)**
 • **SHIBAZAKI, Takikazu**
 **Tokyo 104-0033 (JP)**

(74) Representative:
**VOSSIUS & PARTNER**
**Siebertstrasse 4**
**81675 München (DE)**

(54) **COMMODITY EXCHANGING APPARATUS, COMMODITY EXCHANGING SYSTEM, COMMODITY EXCHANGING METHOD AND STORAGE MEDIUM**

(57) By allowing each of terminal devices of sellers and buyers and a host to intercommunicate with each other, it is made to be possible to execute processing of a cross dealing by pre-engagement based on buying information issued by the buyers, to execute processing of a cross dealing by pre-engagement based on selling information issued by the sellers, and to execute processing of a dealing for making a conclusion sequentially from a first agreement between the buying information and the selling information after collating pieces of buying information and pieces of selling information. As described above, so called a future dealing on a network is enabled, whereby it is the buyers and the sellers needs not to go to a wholesales market, and they can make their selling plan and purchasing plan. Thus, they can perform dealings for goods by their own terminal devices. Accordingly, it is possible to give to the seller and the buyer chances of a selling and a purchasing which have not existed until now, so that an effective dealing that has not been performed can be performed.

FIG. 1

**Description**

Technical Field

The present invention relates to goods dealing apparatus and goods dealing systems used for dealing various kinds of goods that lose or reduce their values after passage of a certain period of time, such as perishable goods including flowers, vegetables, and fruits showing a short life cycle, service goods including tickets having the term of validity, and airline tickets available in a limited period, and to storage media storing processing steps to execute the dealings in a computer-readable manner.

Background Art

For example, dealings of flowers are performed in a wholesale market. More specifically, buyers go to the field, and observe the spot goods being actually sold by sellers. Thus buyers seize as to what flowers are being sold at what prices. When flowers that a buyer wants to buy are being sold, the buyer makes a deal including price with the seller. The buyer thus gets his or her desired flowers.

Besides, other than dealings of flowers for buyers getting desired flowers, for example, so-called "reservation" is executed that a buyer receives goods (a spot goods) in advance before an auction in order to slide the goods price in the auction. Or, so-called "exclusion" is executed that a seller excludes in advance a certain amount of goods from the reception of the goods in order to accommodate urgent need (funeral or the like) of flowers. As a result, in the actually received flowers, an auction is executed for the goods (unsold goods) other than the goods already sold and the goods for reservation and exclusion.

However, there has been no systematization of dealings for selling and buying goods such as flowers as described above. For this reason, distribution in dealings of selling and buying goods has become complicated, and the following problems (1) to (8) have occurred.

(1) Buyers need to go to the field (such as a wholesale market or a wholesale company) at a certain time in order to get desired goods. If desired goods are sold, buyers can buy them, but if not, the buyers waste their time. In particular, goods such as flowers are easily influenced by natural conditions such as weather and disaster, so there are many cases that goods planned to be sold can not be sold as the plan. Thus buyers have a limited chance for buying goods and mostly have a stock without preparation. They can not make buying plans.
(2) Sellers sell goods at a wholesale market, but can not know beforehand as to whether they can find buyers ready for the goods and what quantity of the goods is sold. Thus sellers can not make selling plans. Sellers have to seek other selling means for the goods that could not be sold (hereinafter referred to as "unsold goods" or "goods in stock"). For example, sellers further try to sell the goods that the quantity for exclusion is excepted from the unsold goods. The goods having remained after such selling are then subjected to an auction. However, such dealings of unsold goods in consideration of exclusion and auction makes it very difficult to make selling plans. In particular, in case of goods such as flowers as described above that lose their values after passage of a certain period of time, they are easily spoiled in the process of receipt of goods, selling, reservation and exclusion, preparation for an auction, and assortment after the auction. The goods could be heavily spoiled unless they are sold efficiently. The more seriously they are spoiled, the more the prices need to be lowered.
(3) In many cases, a buyer desires to buy some kinds of goods in large quantity, but can not know beforehand as to which seller sells the desired quantity of the desired goods, unless he or she goes to the field (a wholesale market). Thus the buyer can not make a plan for buying. Besides, if the buyer intends to buy a large quantity of goods, the demand for the goods goes up and the price is raised by him- or herself.
(4) Because sellers can not make selling plans as described above, producers also can not make production plans.
(5) Because the prices of goods in dealings are decided in communication by telephone, facsimile, or the like, it takes a very long time to decide the prices. This is not efficient. This problem is more notable particularly in case of dealings of a large quantity of goods.
(6) The goods received are sold by selling, reservation and exclusion, an auction, and so on. These dealings must be performed only when the goods are ready in the wholesale market, or when shipment of the goods is confirmed from the producers. Thus sellers can not make selling plans in consideration of goods to be sold in each process of receipt of goods, selling, reservation and exclusion, an auction, and so on.
(7) There is the case that a seller makes a deal in response to orders from buyers before the goods are actually received (shipment has been confirmed but the actual goods do not exist in the wholesale market). In this case, the seller assigns pieces of shipment information from producers to the orders from the buyers by telephone, facsimile, or the like. However, the seller In such dealings merely performs a brokerage action, and the producers do not directly participate in the dealings of goods. Because producers can not participate in selling of goods without being limited to such dealings, they can not make production plans along the selling states.

(8) In an assignment process by the seller as described in the above (7), there is the case that goods are not evenly sold to all buyers, but are biased to particular buyers.

In addition to the above problems (1) to (8), there is the following problem on "distribution cost".

Specifically, dealings of industrial products are usually performed regularly and shipment is made in general from stocks. The quantity and date of shipment caused by the conclusion of dealings of such goods can be seized in advance. Consequently, distribution companies who serve transportation (shipment)or the like can seize the distribution cost on a fixed basis, and a fixed distribution charge is set in accordance with a distance to the destination. With regards to regular goods other than industrial products, the quantity and date of shipment can also be seized in accordance with the conclusions of various dealings. Distribution companies estimate distribution costs caused by the dealings, and set distribution charges in consideration of actually fluctuating costs, so as to cover the difference.

In comparison with this, as for goods such as flowers (living flowers), fruits, and vegetables, or goods whose dealings perform on all such occasions, unlike the above-described industrial products and regular goods, dealings are not regularly performed, and the quantity and date of shipment caused by the conclusions of dealings varies always. For example, since goods such as flowers are easily influenced by natural conditions such as weather and disaster, as described above, it is very difficult for sellers (includes production places) to seize the actual quantity of shipment in advance. Due to the short life cycle of goods, shipment needs to be made immediately after picking at the production places. When a buyer gives an order due to an urgent need of flowers for a funeral or the like, goods need to be distributed to the buyer or the closest wholesale market. In this manner, it is quite difficult to forecast as to when dealings occur, what quantity of shipment is caused by the dealings, and so on. There is no concept as shipment from stock. As a result, the distribution cost can not be fixed, but it changes in accordance with the actual quantity to be shipped.

Each seller may make a contract with a specific distributor and give discount in accordance with the quantity of shipment for each destination. For example, when a seller's address is in Aichi prefecture, the distribution charge from Aichi to Tokyo is set at 500 yen per case when a shipment of goods is under 50 cases. 400 yen per case when 50 to 100 cases, the distribution charge from Aichi to Hokkaido is set at 700 yen per case when a shipment of goods is under 50 cases, 500 yen per case when 50 to 100 cases, and so on. Such discounted distribution charge also changes in accordance with the above-described change of quantity and date of shipment.

Accordingly, as for goods such as flowers (living flowers), fruits, and vegetables, or goods whose dealings perform on all such occasions, buyers could not perform dealings in consideration of the total buying cost including distribution cost and best potential buyer, and so on, in advance, because the distribution cost of goods and the distribution discount rate offered by each seller change. This allows buyers perform dealings with sellers who are simply close in address, and buyers naturally perform dealings with specific sellers, which leads to a problem of one-sided goods distribution.

In view of such an actual condition, it is an object of the present invention to provide a goods dealing apparatus and a goods dealing system that enable efficient goods dealings by enabling planned production and selling of goods and planned buying of goods, and a storage medium storing processing steps to execute it in a computer-readable manner.

It is another object of the present invention to provide a goods dealing apparatus and a goods dealing system that enable efficient goods dealings even in case of dealings of a large quantity of goods by enabling planned production and selling of goods and planned buying of goods, and a storage medium storing processing steps to execute it in a computer-readable manner.

It is another object of the present invention to provide a goods dealing apparatus and a goods dealing system that enable remarkably to improve the efficiency of goods dealings by enabling planned production and selling of goods and planned buying of goods on a screen, and a storage medium storing processing steps to execute it in a computer-readable manner.

It is another object of the present invention to provide a goods dealing apparatus and a goods dealing system that enable efficient goods dealings even in case of selling a large quantity of goods through a variety of means such as an auction including goods in stock selling by enabling planned production and selling of goods and planned buying of goods, and a storage medium storing processing steps to execute it in a computer-readable manner.

It is another object of the present invention to provide a goods dealing apparatus, a goods dealing system, and a goods dealing method that enable efficient goods dealings, in particular, efficient in planned selling of goods and its management, in which not only sellers and buyers but also producers can participate, and a storage medium storing processing steps to execute it in a computer-readable manner.

It is another object of the present invention to provide a goods dealing apparatus, a goods dealing system, and a goods dealing method that enable remarkably to improve the efficiency of goods dealings by enabling planned selling and planned buying of goods on a screen, in particular, by enabling to display information on different dealing methods on the same screen, and a storage medium storing processing steps to execute it in a computer-readable manner.

It is another object of the present invention to provide a goods dealing apparatus, a goods dealing system, and a goods dealing method that solve biasing of goods distribution and intend to activate dealings by enabling electronic reference to information on goods distribution cost, and a storage medium storing processing steps to execute it in a computer-readable manner.

Summary of the Invention

A goods dealing apparatus of the present invention that comprises at least one of terminal devices in a system for making a conclusion of a bargain for goods based on selling information and buying information for dealing the goods output from the terminal devices,
the goods dealing apparatus comprising:

first dealing processing means for executing processing of a cross dealing by pre-engagement based on buying information; second dealing processing means for executing processing of a cross dealing by pre-engagement based on the selling information; and
third dealing processing means for executing processing of a dealing in which a conclusion is sequentially made with every agreement between the buying information and the selling information after collating pieces of buying information and pieces of selling information.

The third dealing means of the goods dealing apparatus of the present invention may comprise specifying means for specifying any piece of information on the goods included in the selling information as a dealing condition.
The goods dealing apparatus of the present invention may further comprise copying means for using selling information on unconcluded goods generated in the second dealing means, as the selling information in the third dealing means.
The goods dealing apparatus of the present invention may further comprise display means having an icon function to execute each dealing process.
The goods may be the ones that lose values thereof or reduce them after passage of a period of time estimated for each goods.
A goods dealing system of the present Invention makes a conclusion of a bargain for goods based on selling information and buying information for dealing the goods output from terminal devices, wherein at least one of the terminal devices is the good dealing apparatus of the present invention. A goods dealing system of the present invention that, by allowing terminal devices and a host to Intercommunicate with each other, makes a conclusion of a bargain for goods based on selling information and buying Information for dealing the goods output from the terminal devices,
wherein each of the terminal devices displays information sent thereto on its screen by means of a browser function, and outputs information in response to an operation performed by a user based on the information displayed on the screen,

the host has a first dealing process function for executing processing of a cross dealing by pre-engagement based on the buying information, a second dealing process function for executing processing of a cross dealing by pre-engagement based on the selling information, and a third dealing process function for executing processing of a dealing in which a conclusion is sequentially made with every agreement between the buying information and the selling information after collating pieces of buying information and pieces of selling information.

A storage medium of the present invention that stores a program for executing dealing process steps to make a conclusion of a bargain for goods, based on pieces of selling information and pieces of buying information for a dealing for the goods output from terminal devices,
wherein the dealing process steps comprise a first dealing process step for executing processing of a cross dealing by pre-engagement based on the buying information;

a second dealing process step for executing processing of a cross dealing by pre-engagement based on the selling information; and
a third dealing process step for executing a dealing to make sequentially a conclusion with every agreement between the buying information and the selling information after collating pieces of buying information and pieces of selling information. According to the present invention, so-called a future dealing is enabled on a network, and it is possible to give sellers and buyers chances of selling and purchasing which have not existed until now. Accordingly, an effective dealing that has not been performed can be performed. To be more specific, a dealing for a bargain of the goods is systematized, and a cross dealing by pre-engagement processing based on order information on items, sorts and prices of the goods desired to be provided, which is issued by the buyer, a cross dealing by pre-engagement processing based on selling information on items, sorts and prices of the goods desired to be sold, issued by the seller, and a dealing process for making sequentially a conclusion with every agreement between pieces of buying information and pieces of selling information are made to be enabled on a screen of a terminal device. Moreover, it is made to be possible for the buyer to specify any piece of information, as a dealing condition, in information included in the selling information issued by the sellers. For example, an Item of the goods can be specified, or the item as well as a sort thereof can be specified. With such constitution, the following effects can be at least achieved.

(1) Buyers need not to go to a wholesales market, and they can easily seize by their own terminal device whether their desired goods are on sale. Buyers can stock the desired goods easily. Moreover, buyers can perform this previously. Thus, buyers can make purchasing plans.

(2) Sellers can seize beforehand by their own terminal device whether the goods to be sold can find ready buyers and how quantity of the goods can be sold. Thus, since sellers can make selling plans, occurrence of waste goods can be prevented. Particularly, with reference to flowers, which lose their values after passage of a certain period of time, it is possible to keep their freshness.

(3) Buyers can keep a rich assortment of goods in stock by their own terminal device, even when they want to buy a large amount of goods.

(4) Since sellers can make selling plans, producers can make production plans in accordance with the selling plans.

(5) A dealing of goods can be performed between sellers and buyers before shipment of the goods.

Accordingly, according to the present invention, planned production and selling of goods can be performed. A planned purchasing of the goods can be performed, thus enabling an effective dealing of goods.

A goods dealing apparatus of the present invention is at least one of terminal devices in a system for making the conclusion of a bargain of the goods based on selling information and buying information output from the terminal devices,

the goods dealing apparatus comprising:

dealing processing means for executing processing of a dealing of goods in which a conclusion is sequentially made with every agreement between a seller and a buyer after collating pieces of buying information and pieces of selling information,

wherein the dealing processing means comprises:

first determining means for determining processing procedures of pieces of selling information in accordance with predetermined conditions;

second determining means for determining processing procedures of pieces of buying information in accordance with predetermined conditions.

The dealing processing means of the goods dealing apparatus of the present invention may comprise specifying means for specifying any piece of information on the goods included in the selling information as a dealing condition.

The dealing processing means may comprise clustering means for clustering pieces of selling information in accordance with the conditions specified by the specifying means, and third determining means for determining a processing order for processing pieces of selling information included in each cluster obtained by the clustering means, in accordance with predetermined conditions.

The goods dealing apparatus of the present invention may further comprise display means having an icon function for executing the dealing process.

The goods may be the ones which lose values thereof or reduce them after passage of a period of time estimated for each goods.

A goods dealing system of the present invention makes a conclusion of a bargain for goods based on selling information and buying information for dealing the goods output from terminal devices, wherein at least one of the terminal devices is the good dealing apparatus of the present invention. A goods dealing system of the present invention that, by allowing terminal devices and a host to intercommunicate with each other, makes a conclusion of a bargain for goods based on selling information and buying information for dealing the goods output from the terminal devices, wherein each of the terminal devices displays information sent thereto on its screen by means of a browser function, and outputs information in response to an operation performed by a user based on the information displayed on the screen,

the host has a dealing process function for executing processing of a dealing in which a conclusion is sequentially made with every agreement between the buying information and the selling information after collating pieces of buying information and pieces of selling information, and

the dealing process function includes a first determining function for determining a processing order of pieces of selling information in accordance with predetermined conditions and a second determining function for determining a processing order of pieces of buying information in accordance with predetermined conditions.

A storage medium of the present invention that stores a program for executing dealing process steps to make a conclusion of a bargain for goods based on pieces of selling information and pieces of buying information for dealing the goods output from terminal devices, wherein the dealing process steps include processing steps for executing a dealing for making a conclusion sequentially from a first agreement between the buying information and the selling information after collating pieces of buying information and pieces of selling information, and the processing steps include a first determining step for determining a processing order of pieces of selling information in accordance with predetermined conditions and a second determining step for determining a processing order of pieces of buying information in accordance with predetermined conditions.

According to the present invention, so-called a future dealing is enabled on a network, and it is possible to give to the seller and the buyer chances of a selling and a purchasing which have not existed until now. Accordingly, an effective dealing that has not been performed can be performed. To be more specific, a dealing for a bargain of the goods is systematized, and a dealing process, in which a conclusion is sequentially made with every agreement between the buying information and the selling information after collating pieces of buying information (items, sorts and prices of the goods which the buyer want to provide) and pieces of selling information (items, sorts and prices of the goods which the seller wants to sell), is made to be possible on a screen of a terminal device. Moreover, the buyer can specify any information among information included in selling information issued by sellers as a dealing condition. For example, buyers can specify an item of the goods, or buyers can specify a sort of the goods in addition to the item thereof. When a contract is concluded between a buying information and a selling information, a processing order of pieces of selling information is determined in accordance with conditions such as a previously determined priority order of sellers, and a processing order of pieces of buying information linked with selling object information in this processing order is determined in accordance with predetermined conditions (in the order of higher desired price), thus proceeding with the processing. At this time, when a buyer specifies any information as a dealing condition against a selling information, pieces of selling information are clustered in accordance with the specified condition, and a processing order of pieces of selling information included in each cluster is determined in accordance with a predetermined condition such as the order of higher lower limit price. A processing order of pieces of buying information linked with the selling object information in the processing order of the selling information is determined in accordance with a predetermined condition such the an order of higher desired prices to be sold, thus proceeding with the processing. With such constitution, the following effects are at least obtained.

(1) Buyers need not to go to a wholesales market, and they can easily seize by their own terminal device whether their desired goods are on sale. Buyers can stock the desired goods easily. Moreover, buyers can perform this previously. Thus, buyers can make purchasing plans. For example, the present invention is particularly effective for dealing of a large quantity of goods such as perishable goods including flowers, and perishables showing a short life cycle, service goods including tickets valid in the available period, and airline tickets available in a limited period, which lose or reduce their values after passage of a certain period of time.

(2) Sellers can seize beforehand by their own terminal device whether the goods to be sold can find ready buyers and how much quantity of the goods can be sold. Thus, since sellers can make selling plans, occurrence of waste goods can be prevented. Particularly, with reference to flowers which lose their values after passage of a certain period of time, it is possible to keep their freshness.

(3) Buyers can keep a rich assortment of goods in stock by their own terminal device, even when they want to buy a large amount of goods.

(4) Since the seller can make a selling plan, producers can make production plans in accordance with the selling plans.

(5) A dealing of goods can be performed between sellers and buyers before shipment of the goods.

(6) It is possible to perform the determinations of prices in a short time with a high efficiency, which have been conducted by communications by telephones and facsimiles. This effect is particularly remarkable in dealing a large quantity of goods.

According to the present invention, a planned production and selling of the goods can be performed. A planned purchasing of the goods can be performed, thus enabling an effective dealing of the goods even in dealing a large quantity.

A goods dealing apparatus of the present invention comprises dealing processing means for executing processing of a dealing of goods in which a conclusion is sequentially made every agreement between a seller and a buyer after collating pieces of buying information and pieces of selling information, the dealing processing means being at least one of terminal devices in a system for making the conclusion of a bargain of the goods based on selling information and buying information output from the terminal devices,

wherein the dealing processing means comprises:

first specifying means for specifying any piece of information on the goods included in the selling information as a first dealing condition;
second specifying means for specifying any piece of information on the goods included in the selling information as a second dealing condition; and
processing proceed means for proceeding to a dealing process for processing, in accordance with the first dealing condition, selling information on unconcluded goods generated in a dealing process in accordance with the second dealing condition.

In the goods dealing apparatus of the present invention, the first dealing condition may be made to be wider than the second dealing condition.

The selling information may include lower limit price information.

The good dealing apparatus may further comprise display means having an Icon function for executing each dealing process.

The goods may be the ones which lose or reduce values estimated for each goods after passage of a period of time. A goods dealing system of the present invention that makes a conclusion of a bargain for goods based on buying information and selling information for dealing the goods output from terminal devices, wherein at least one of the terminal devices is the goods dealing apparatus of the present invention. A goods dealing system of the present invention that, by allowing terminal devices and a host to Intercommunicate with each other, makes a conclusion of a bargain for goods based on selling information and buying information for dealing the goods output from terminal devices, wherein each of the terminal devices displays information sent thereto on its screen by means of a browser function, and outputs information in response to an operation performed by a user based on the information displayed on the screen,

the host has a dealing process function for executing processing of a dealing in which a conclusion is sequentially made with every agreement between the buying information and the selling information after collating pieces of buying information and pieces of selling information,
the dealing process function includes a first specifying function for specifying any piece of information on the goods included in the selling information as a first dealing condition, a second specifying function for specifying any piece of information on the goods included in the selling information as a second dealing condition, and a processing proceed function for proceeding to a dealing process for processing, in accordance with the first dealing condition, selling information on unconcluded goods generated in a dealing process in accordance with the second dealing condition.

A storage medium of the present invention that stores a program for executing dealing process steps to make a conclusion of a bargain for goods, based on pieces of selling information and pieces of buying information for a dealing for the goods output from terminal devices,
wherein the dealing process steps include dealing process steps for executing a dealing to make sequentially a conclusion with every agreement between the buying information and the selling information after collating pieces of buying information and pieces of selling information, and
wherein the dealing process steps include a first specifying step for specifying any piece of information on the goods included in the selling information as a first dealing condition, a second specifying step for specifying any piece of information on the goods included in the selling information as a second dealing condition, and a processing proceed step for proceeding to a dealing process for processing, in accordance with the first dealing condition, selling information on unconcluded goods generated in a dealing process in accordance with the second dealing condition.

According to the present invention, so-called a future dealing is enabled on a network, and it is possible to give sellers and buyers chances of selling and purchasing which have not existed until now. Accordingly, an effective dealing that has not been performed can be performed. To be more specific, a dealing for a bargain of the goods is systematized, and a cross dealing by pre-engagement processing based on order information on items, sorts and prices of the goods desired to be provided, which is issued by buyers, a cross dealing by pre-engagement processing based on selling information on items, sorts and prices of the goods desired to be sold, issued by sellers, and a dealing process for making sequentially a conclusion with every agreement between pieces of buying information and pieces of selling information are made to be enabled on a screen of a terminal device. Moreover, it is made to be possible for buyers to specify any information, as first and second dealing conditions, among information included in the selling information issued by the sellers. For example, only an item of the goods can be specified as the second dealing condition, that is, a strict specification, or the item of the goods as well as a sort thereof can be specified as the first dealing condition, that is, a specification wider than the second dealing condition. Selling information that is unconcluded in the dealing process in accordance with the second dealing condition is made to proceed automatically to a dealing process in accordance with the first dealing condition, thus making it possible to perform the dealing again. With such constitution, the following effects can be at least achieved.

(1) Buyers need not to go to a wholesales market, and they can easily seize by their own terminal device whether their desired goods are on sale. Buyers can stock the desired goods easily. Moreover, buyers can perform this previously. Thus, buyers can make purchasing plans.

(2) Sellers can seize beforehand by their own terminal device whether the goods to be sold can find ready buyers and how much quantity of the goods can be sold. Thus, since sellers can make selling plans, occurrence of waste goods can be prevented. Particularly, with reference to flowers which lose their values after passage of a certain period of time, it is possible to keep their freshness.

(3) Buyers can keep a rich assortment of goods in stock by their own terminal device, even when they want to buy a large amount of goods.

(4) Since sellers can make selling plans, producers can make production plans in accordance with the selling plans.

(5) Dealing of goods can be performed between sellers and buyers before shipment of the goods.

(6) A buying in which a strict condition is linked with the goods desired and a buying in which a broad condition is attached thereto can be performed in one operation. Thus, a rate of conclusion can be improved, thus increasing a dealing efficiency remarkably.

According to the present invention, a planned production and selling of the goods can be performed. A planned purchasing of the goods can be performed, thus enabling an effective dealing of the goods.

A goods dealing apparatus of the present invention that comprises at least one of terminal devices in a system for making a conclusion of a bargain for goods based on selling information and buying information for dealing the goods output from the terminal devices, the goods dealing apparatus comprising:

a display including:

a function list display portion for selectively executing one of a first dealing process function for executing a cross dealing by pre-engagement based on the buying information, a second dealing process function for executing a cross dealing by pre-engagement based on the selling information, and a third dealing process function for executing a dealing in which a conclusion is sequentially made with every agreement between the buying Information and the selling information after collating pieces of buying information and pieces of selling information;

an information display portion for displaying information generated by executing one of the functions selected by the function list display portion; and

a condition entering portion for entering conditions at the time any information is extracted from the information generated by executing one of the functions selected by the function list display portion.

In the good dealing apparatus of the present invention, the condition entering portion may be provided at least below the information display portion.

The good dealing apparatus of the present invention may comprise an icon function for executing each dealing process. The third dealing process function may include a function to specify any information, as a dealing condition, among the information on the goods included in the selling information.

The number of display rows in the information display portion may be set externally form the outside.

In executing the first dealing process function, the information display portion may display the total number of pieces of selling information and the total number of unconcluded goods.

In executing the second dealing process function, the information display portion may display the total number of pieces of buying information and the total number of unconcluded goods.

In executing the third dealing process function, the information display portion may inhibit a display of lower limit price information on the goods included in the selling information.

The goods may be the ones which lose or reduces their values after passage of a period of time estimated for each goods.

A goods dealing system of the present invention makes a conclusion of a bargain for goods based on selling information and buying information for dealing the goods output from terminal devices, wherein at least one of the terminal devices is the good dealing apparatus of the present invention. A goods dealing system of the present invention that, by allowing terminal devices and a host to intercommunicate with each other, makes a conclusion of a bargain for goods based on selling information and buying information for dealing the goods output from the terminal devices, wherein the host has a first dealing process function for executing processing of a cross dealing by pre-engagement based on the buying information; a second dealing process function for executing processing of a cross dealing by pre-engagement based on the selling information; and a third dealing process function for executing processing of a dealing in which a conclusion is sequentially made with every agreement between the buying information and the selling information after collating pieces of buying information and pieces of selling information, the terminal device includes a screen which has a function list display portion for displaying information sent thereto on the screen by means of a browser function and for outputting information in response to an operation performed by a user based on the information displayed on the screen, the function list display portion selectively executing one of the first dealing process function, the second dealing process function, and the third dealing process function; an information display portion for displaying information generated by executing one of the functions selected by the function list display portion; and a condition entering portion for entering conditions at the time any information is extracted from the information generated by executing one of the functions selected by the function list display portion.

A storage medium of the present invention that stores a program for executing dealing process steps to make a conclusion of a bargain for goods, based on pieces of selling information and pieces of buying information for a dealing for the goods output from terminal devices,
wherein the dealing process steps comprises a step for displaying a screen including a function list display portion for selectively executing one of a first dealing process function for executing a cross dealing by pre-engagement based on the buying information, a second dealing process function for executing a cross dealing by pre-engagement based on the selling information, and a third dealing process function for executing a dealing in which a conclusion is sequentially made with every agreement between the buying information and the selling information after collating pieces of buying information and pieces of selling information; an information display portion for displaying information generated by executing one of the functions selected by the function list display portion; and a condition entering portion for entering conditions at the time any information is extracted from the information generated by executing one of the functions selected by the function list display portion.

According to the present invention, so-called a future dealing is enabled on a network, and it is possible to give sellers and buyers chances of selling and purchasing which have not existed until now. Accordingly, an effective dealing that has not existed can be performed. To be more specific, a dealing for a bargain of the goods is systematized, and a cross dealing by pre-engagement processing based on order information on Items, sorts and prices of the goods desired to be purchased, which is issued by the buyer, a cross dealing by pre-engagement processing based on selling information on items, sorts and prices of the goods desired to be sold, which is issued by the seller, and a dealing process for making sequentially a conclusion with every agreement between pieces of buying information and pieces of selling information are made to be enabled on a screen of a terminal device. Moreover, it is made to be possible for buyers to specify any information, as a dealing condition, among information included in the selling information issued by the sellers. For example, an item of the goods can be specified, or the item as well as a sort thereof can be specified. A screen at that time is constituted by three parts composed of a function list display portion, an information display portion and a condition entering portion. Any dealing process among kinds of the dealing process can be selected and executed by the function list display portion. Various kinds of information such as order information and selling information generated in the dealing process can be referred to by the information display portion. Any information can be easily extracted (searched) from the various kind of information generated in the dealing process by the condition entering portion. With such constitution, the following effects can be at least achieved.

(1) Buyers need not to go to a wholesales market, and they can easily seize by their own terminal device whether their desired goods are on sale. Buyers can stock the desired goods easily. Moreover, buyers can perform this previously. Thus, buyers can make purchasing plans.
(2) Sellers can seize beforehand by their own terminal device whether the goods to be sold can find ready buyers and how much quantity of the goods can be sold. Thus, since sellers can make selling plans, occurrence of waste goods can be prevented. Particularly, with reference to flowers which lose their values after passage of a certain period of time, it is possible to keep their freshness.
(3) Buyers can keep a rich assortment of goods in stock by their own terminal device, even when they want to buy a large amount of goods.
(4) Since sellers can make selling plans, producers can make production plans in accordance with the selling plans.
(5) Dealing of goods can be performed between sellers and buyers before shipment of the goods. Information on goods which users want to buy can be easily extracted and referred to. Moreover, by utilizing a personal computer and the like, a dealing efficiency can be improved remarkably.

According to the present invention, the planned production and selling of the goods can be easily performed on a screen with high efficiency. A planned purchasing of the goods can be easily performed on the display with high efficiency, thus increasing efficiency of the dealing of the goods remarkably.

A goods dealing apparatus of the present invention that comprises at least one of terminal devices in a system for making a conclusion of a bargain for goods based on selling information and buying information for dealing the goods output from the terminal devices, comprising:

first dealing processing means for executing processing of a cross dealing by pre-engagement based on buying information;

second dealing processing means for executing processing of a cross dealing by pre-engagement based on the selling information;

third dealing processing means for executing processing of a dealing in which a conclusion is sequentially made with every agreement between the buying information and the selling information after collating pieces of buying information and pieces of selling information; and

fourth dealing processing means for executing processing of a dealing for unsold goods generated by an execution of processing the dealing by any one of the first, second and third dealing processing means, or for executing a dealing for a selling not by the first, second and third dealing processing means.

In the goods dealing apparatus of the present invention, the fourth dealing processing means may include means for executing urgent dealing process for the unsold goods either during the dealing process by the first, second and third dealing processing means or after the dealing process by the first, second and third processing means.

The fourth dealing processing means may include means for executing a specification and management of specified object goods of an auction, during the dealing process by the first, second and third dealing processing means or the urgent dealing process, before the dealing process by the first, second and third dealing processing means or the urgent dealing process, or after the dealing process by the first, second and third processing means or the urgent dealing process.

The fourth dealing processing means may execute a dealing process either for the unsold goods generated by the execution of the first and second dealing processing means or for the unsold goods generated by the execution of the third dealing processing means.

The third dealing processing means may include specifying means for specifying any information, as dealing condition, among information on the goods included in the selling information. Copying means may be further provided, which uses selling information of the unsold goods generated in the second dealing processing means as the selling information in the third dealing processing means.

Display means may be further provided, which has an icon function for executing each dealing process. The goods may be the ones which lose or reduce their values estimated for each goods.

A goods dealing system of the present invention which makes a conclusion of a bargain for goods based on buying information and selling information for dealing the goods output from terminal devices, wherein at least one of the terminal devices is the goods dealing apparatus of the present invention.

A goods dealing system of the present invention that, by allowing terminal devices and a host to intercommunicate with each other, makes a conclusion of a bargain for goods based on selling information and buying information for dealing the goods output from terminal devices, wherein each of the terminal devices displays information sent thereto on its screen by means of a browser function, and outputs information in response to an operation performed by a user based on the information displayed on the screen,

the host has a first dealing process function for executing processing of a cross dealing by pre-engagement based on the buying information, a second dealing process function for executing processing of a cross dealing by pre-engagement based on the selling information, a third dealing process function for executing processing of a dealing in which a conclusion is sequentially made with every agreement between the buying information and the selling information after collating pieces of buying information and pieces of selling information, and a fourth dealing process function for executing processing of a dealing for unsold goods generated by an execution of processing the dealing by any one of the first, second and third dealing processing means, or for executing a dealing for a selling not by the first, second and third dealing processing means.

A storage medium of the present invention that stores a program for executing dealing process steps to make a conclusion of a bargain for goods based on pieces of selling information and pieces of buying information for dealing the goods output from terminal devices,

wherein the dealing process steps comprise a first dealing process step for executing processing of a cross dealing by pre-engagement based on the buying information;

a second dealing process step for executing processing of a cross dealing by pre-engagement based on the selling information;

a third dealing process step for executing a dealing to make sequentially a conclusion with every agreement between the buying information and the selling information after collating pieces of buying information and pieces of selling information; and

a fourth dealing process step for executing processing of a dealing for unsold goods generated by an execution of processing the dealing by any one of the first, second and third dealing processing means, or for executing a dealing for a selling not by the first, second and third dealing processing means.

According to the present invention, so-called a future dealing is enabled on a network, and it is possible to give sellers and buyers chances of selling and purchasing which have not existed until now. Accordingly, an effective dealing that has not existed can be performed. To be more specific, a dealing for a bargain of the goods is systematized, and a cross dealing by pre-engagement processing based on order information on items, sorts and prices of the goods desired to be purchased, which is issued by the buyer, a cross dealing by pre-engagement processing based on selling information on items, sorts and prices of the goods desired to be sold, issued by the seller, and a dealing process for making sequentially a conclusion with every agreement between pieces of buying information and pieces of selling information are made to be enabled on a screen of a terminal device. Moreover, it is made to be possible for the buyer to specify any information, as a dealing condition, among information included in the selling information issued by the sellers. For example, an item of the goods can be specified, or the item as well as a sort thereof can be specified. A dealing of unsold goods generated by the execution of each dealing process or a dealing (urgent dealing) generated based on urgent need such as reservation and exclusion can be executed on the display of the terminal device. With such constitution, the following effects can be at least achieved.

(1) Buyers need not to go to a wholesales market, and they can easily seize by their own terminal device whether the desired goods are on sale. Buyers can stock the desired goods easily. Moreover, buyers can perform this previously. Thus, buyers can make purchasing plans.
(2) Sellers can seize beforehand by their own terminal device whether the goods to be sold can find ready buyers and how much quantity of the goods can be sold. Thus, since sellers can make selling plans, occurrence of waste goods can be prevented. Particularly, with reference to flowers which lose their values after passage of a certain period of time, it is possible to keep their freshness. It is possible to sell a large quantity of goods by various kinds of means, and a flow of goods to be sold can be managed intensively, thus increasing efficiency in business of dealers required to sell a large quantity of goods effectively. For example, by performing exclusion for unsold goods generated after each dealing process, it is possible to forecast goods to be auctioned other than the goods for exclusion. Thus, while seizing the total quantity of receipt of goods, taking exclusion and auction into consideration, future dealing and goods-in-stock dealing can be effectively performed.
(3) Buyers can keep a rich assortment of goods in stock by their own terminal device, even when they want to buy a large amount of goods.
(4) Since sellers can make selling plans, producers can make production plans in accordance with the selling plans.
(5) Dealing of goods can be performed between sellers and buyers before shipment of the goods.

According to the present invention, planned production and selling of the goods can be easily performed, and planned purchasing of goods can be performed. Thus, an effective dealing of goods can be performed even when a large quantity of goods are sold by various kinds of means such as an auction including a goods-in-stock selling.

A goods dealing apparatus of the present invention that comprises at least one of terminal devices in a system for making a conclusion of a bargain for goods based on selling information and buying information for dealing the goods output from the terminal devices, comprising:

post-confirmation dealing processing means for executing a dealing process by outputting the selling information based on confirmed information;

goods-in-stock selling processing means for executing a dealing process of unsold goods generated in the execution of the post-confirmation processing means.

A goods dealing apparatus of the present invention that comprises at least one of terminal devices in a system for making a conclusion of a bargain for goods based on selling information and buying information for dealing the goods output from the terminal devices, comprising:

pre-confirmation dealing processing means for executing a dealing process by outputting the selling information based on forecast information before confirmation;

post-confirmation dealing processing means for executing a dealing process by outputting the selling information based on confirmed information; and

goods-in-stock selling processing means for executing a dealing process of unsold goods generated by any execution of the pre-confirmation dealing processing means and the post-confirmation dealing processing means.

In the goods dealing apparatus of the present invention, the pre-confirmation dealing processing means may include first dealing processing means for executing processing of a cross dealing by pre-engagement for buying information based on the forecast information; and second dealing processing means for executing a dealing of a cross dealing by pre-engagement for selling information based on forecast information.

The post-confirmation dealing processing means may include any one of third dealing means for executing processing of a pre-engagement relative dealing for selling information based on the confirmed information, fourth dealing processing means for executing a dealing to make sequentially a conclusion with every agreement between the buying information and the selling information after collating pieces of buying information and pieces of selling information, and fifth dealing processing means for executing a urgent dealing process for the unsold goods during each dealing process or after each dealing process.

Display means having an icon function for executing each dealing process may be provided.

The goods may be the ones which lose or reduce their values after passage of a period of time estimated for each goods.

A goods dealing system of the present invention makes a conclusion of a bargain for goods based on selling information and buying information for dealing the goods output from terminal devices, wherein at least one of the terminal devices is the good dealing apparatus of the present invention.

A goods dealing system of the present invention that, by allowing terminal devices and a host to intercommunicate with each other,

makes a conclusion of a bargain for goods based on selling information and buying information for dealing the goods output from terminal devices,

wherein each of the terminal devices displays information sent thereto on its display by means of a browser function, and outputs information in response to an operation performed by a user based on the information displayed on the screen, and the host comprise post-confirmation dealing process function for executing a dealing process by outputting the selling information based on confirmed information, and goods-in-stock processing function for executing a dealing process of unsold goods generated by the execution of the post-confirmation dealing process function.

In the goods dealing system of the present invention, the host may further comprise a pre-confirmation dealing process function for executing a dealing process by outputting the selling information based on forecast information before confirmation.

A goods dealing method of the present invention that executes a dealing process to make a conclusion of a bargain of goods based on pieces of selling information and pieces of buying information for a dealing of the goods output from terminal devices,

the method comprising:

post-confirmation dealing process step for executing a dealing process by outputting the selling information based on confirmed information; and

goods-in-stock selling processing step for executing a dealing process of unsold goods generated in the execution of the post-confirmation processing step.

The goods dealing method of the present invention may further comprises a pre-confirmation dealing process step for executing a dealing process by outputting the selling information based on pre-confirmation information.

A storage medium of the present invention that stores a program for executing dealing process steps to make a conclusion of a bargain for goods, based on pieces of selling information and pieces of buying information for a dealing for the goods output from terminal devices, wherein the dealing process steps comprise a dealing step of the goods dealing method of the present invention.

According to the present invention, dealings of various selling styles can be executed on a network, and it is possible to give chances of selling and purchasing which have not existed until now to producers who ship the goods as well as to sellers and buyers. Accordingly, an effective dealing that has not existed particularly, an effective selling, can be performed. To be more specific, a dealing style for selling goods by a dealing based on information on a quantity of forecast selling (pre-confirmation dealing process), a dealing style for selling goods by a dealing based on information on a quantity of confirmed selling and for executing an urgent dealing such as exclusion (post-confirmation dealing process), and a dealing style for executing a goods-in-stock selling in which unsold goods as a result of executions of these dealing styles is to be dealt (goods-in-stock processing) can be executed on a terminal device. A result generated by a certain dealing style is reflected on a subsequent dealing style with a change of circumstances at that time. With such constitution, a dealing performed from receipt of goods to a goods-in-stock selling can be effectively performed based on data.

Particularly, sellers can seize beforehand whether the goods to be sold can find ready buyers and how much quantity of the goods can be sold, and sellers can make selling plans. Considering exclusion, reservation, a selling and an auction, a dealing plan for goods is made, so that all goods received can be effectively sold. Even when an object to be sold is a goods such as flowers which reduces their quality after passage of a period of time, it is possible to sell the goods on a higher unit cost before the goods is damaged. Accordingly, effective selling actions and selling management which are made to meet the demand and the supply in the date of an auction. Buyers can be provided with more chances to purchase the goods and they can make an effective purchase plan. Moreover, producers who ship the goods can participate in the dealing in addition to sellers and buyers. A fair dealing for buyers and sellers can be performed, and a management of commercial flow under different circumstances in the dealings, for example, under different circumstances for every confirmation of information on the goods, can be effectively performed.

A goods dealing apparatus of the present invention that comprises at least one of terminal devices in a system for making a conclusion of a bargain for goods by executing at least first and second dealing process on a screen, based on selling information and buying information for dealing the goods output from the terminal devices, the goods dealing apparatus comprising:

a first dealing information display for displaying information on the first dealing process; and
a second dealing information display portion for displaying information on the second dealing process.

In the goods dealing apparatus of the present invention, the first dealing information display portion may be designed so as to display the selling information or the buying information generated in the buyer's and seller's own terminal devices by the fist dealing process, and to display information generated in other terminal devices in response to this information, and the second dealing information display portion may be designed so as to display the buying information and the selling information generated in other terminal devices by the second dealing process.

Any one of the first and second dealing process is the one for executing a pre-engagement relative dealing based on the buying information, and the other dealing process is the one for executing a cross dealing by pre-engagement based on the selling information.

Any one of the first and second dealing process may be the one for executing a cross dealing by pre-engagement relative dealing based on the buying information, and the other dealing process may be the one for executing a dealing in which a conclusion is sequentially made with every agreement after collating pieces of buying information and pieces of selling information with each other.

The screen of the terminal device may further include a condition entering portion for entering conditions at the time information displayed In the first and second dealing information display portions is extracted from the information generated by executing the first and second dealing process. An icon function for executing each processing may be provided. The goods may be the ones which lose or reduce their values after passage of a period of time estimated for each goods. A goods dealing system which makes a conclusion of a bargain for goods based on buying information and selling information for a dealing of the goods output from terminal devices, wherein at least one of terminal device among the terminal devices is the goods dealing apparatus of the present invention.

A goods dealing system of the present invention which, by allowing terminal devices and a host to intercommunicate with each other, makes a conclusion of a bargain for goods based on selling information and buying information for dealing the goods output from terminal devices,
wherein the host has at least one of a first dealing process function to execute a first dealing process and a second dealing process function to execute a second dealing process; and

each terminal device displays information sent thereto on its screen by means of a browser function, and outputs information in response to an operation performed by a user based on the information displayed on the screen, the display having a first dealing information display portion for displaying information on the first dealing process and a second dealing information display portion for displaying information on the second dealing process.

The goods dealing system of the present invention, the first dealing information display portion may be designed so as to display the selling information and the buying information generated in its terminal device by the first dealing process, as well as information generated in other terminal devices in response to the selling information and the buying information and the second dealing information display portion may be designed so as to display the buying information and the buying information generated in other terminal devices by the second dealing process.

A goods dealing method of the present invention that, based on pieces of selling information and pieces of buying information for a dealing of goods output from terminal devices, executes at least first and second dealing process on a screen to make a conclusion of a bargain for the goods,

the method comprising:

a step for displaying information on the first dealing process and information on the second dealing process on the same display.

In the goods dealing method of the present invention, the information on the first dealing information may be either the selling information or the buying information generated in its own terminal device by the first dealing process, and information generated in other terminal devices in response to the buying information or the selling information. The information on the second dealing information may be either the buying information or the selling information generated in other terminal devices by the second dealing process.

A storage medium of the present invention which stores a program for executing a dealing process step to make a conclusion of a bargain for goods by executing at least first and second dealing process on a screen, based on pieces of selling information and pieces of buying information for a dealing for the goods output from terminal devices, wherein the dealing process step includes the processing step of the goods dealing method of the present invention.

According to the present invention, while referring to pieces of information on dealing process having the different dealing styles simultaneously on the same display, the dealing of the good by the execution of these dealing process, that is, so-called a future dealing, is enabled, and chances of selling and purchasing that have not existed until now can be given to the seller and buyers. Therefore, an effective dealing of the goods that have not existed can be performed. To be more specific, buyers enters the buying information on goods which they want to buy, and while referring to information including the buying information and offer information issued by sellers in response to the selling information (information generated by the first dealing process) as well as the selling information corresponding to goods which buyers want to buy among the selling information as to the goods which sellers want to sell (information generated by the second dealing process ) simultaneously on the same screen, it is enabled for the buyer to execute the dealing of the goods which he wants to buy by executing the different two dealing process. Sellers enter the selling information on goods which they want to sell, and while referring to information including the selling information and buying registered information issued by the buyer in response to the selling information (information generated by the second dealing process) as well as the selling information corresponding to goods which sellers want to sell among the buying information as to the goods which buyers want to buy ( information generated by the first dealing process ) simultaneously on the same display, it is enabled for sellers to execute the dealing of the goods which they want to sell by executing the different two of dealing process. With such constitution, at least the following effects can be achieved.

(1) Buyers need not to go to a wholesales market, and they can easily seize by their own terminal device whether their desired goods are on sale. Buyers can seize easily whether goods which buyers want to buy, that is, the goods ordered by buyers, was subscribed by sellers, and buyers can easily and surely stock the goods which they want to buy. Moreover, buyers can perform this previously by making a purchasing plan. Sellers can keep an assortment of goods in stock by their own terminal device easily and surely even when they want a large quantity of good.

(2) Sellers can seize beforehand by their own terminal device whether the goods to be sold can find ready buyers and how much quantity of the goods can be sold. Sellers can easily and surely seize whether buyers want to buy goods which sellers want to sell. Thus, sellers can sell easily and surely the goods which they want to sell. Moreover, the seller can perform this beforehand by making a selling plan. Occurrence of waste goods can be prevented, and particularly, with reference to flowers which lose their values after passage of a certain period of time, it is possible to keep their freshness.

(3) Dealing of goods can be performed between sellers and buyers before shipment of the goods. While referring to information necessary for dealing processes or utilizing them, dealings by these dealing process can be executed simultaneously. Information on goods that sellers and buyers want to obtain can be easily extracted, and the extracted information can be referred to. By utilizing personal computer and the like, an efficiency of dealing can be remarkably improved.

A goods dealing method of the present invention which makes a conclusion of a bargain of goods based on pieces of selling information and pieces of buying information for a dealing of the goods output from terminal devices, the method comprising:

a processing step for forming a cluster which meets buying conditions included in buying information based on pieces of buying information, forming a cluster which meets the buying conditions based on pieces of selling information, and linking the buying information with the selling information, both of which are included in each cluster, between the cluster of the buying information and the cluster of the selling information corresponding to the cluster of the buying information, thus making a conclusion of the bargain.

In the goods dealing method of the present invention, the buying conditions may include conditions specified by buyers randomly.

The processing step may further include a step for determining, in accordance with predetermined conditions, an order to execute the linkage processing for buying information included in pieces of selling information.

The predetermined conditions may include a condition based on a degree of abstract of the buying information included in pieces of buying information.

A goods dealing method of the present invention which makes a conclusion of a bargain of goods based on pieces of selling information and pieces of buying information for a dealing of the goods output from terminal devices, the method comprising:

a processing step for determining, in accordance with predetermined conditions, a processing order to make a conclusion of the bargain for pieces of buying information, forming, based on pieces of selling information, a cluster which meets buying conditions included in processing object buying information in accordance with the processing order, and linking the buying information with the selling information between the processing object buying information and buying information included in the cluster of pieces of buying information, thus making a conclusion of the bargain.

A goods dealing method of the present invention that makes a conclusion of a bargain of goods based on pieces of selling information and pieces of buying information for a dealing of the goods output from terminal devices, the method comprising:

a processing step for determining, in accordance with predetermined conditions, a processing order to make a conclusion of the bargain for pieces of selling information, forming, based on pieces of buying information, a cluster which meets buying conditions included in processing object buying information in accordance with the processing order, and linking the buying information with the selling information between the processing object buying information and buying information included in the cluster of pieces of buying information, thus making a conclusion of the bargain.

In the goods dealing method of the present invention, the predetermined conditions may include an order in which higher desired buying prices included in the buying information are classified.

The goods may be the ones which lose and reduce their values after passage of a period of time estimated for each goods. A goods dealing apparatus of the present invention that makes a conclusion of a bargain of goods based on pieces of selling information and pieces of buying information for a dealing of the goods output from terminal devices, the apparatus comprising:

first cluster formation means for forming a cluster from pieces of buying information, the cluster being in accordance with buying conditions included in pieces of buying information; second cluster formation means for forming a cluster from pieces of selling information, the cluster being in accordance with the buying conditions; and

dealing contract making means for making a conclusion of the bargain by linking the selling information with the buying information between the cluster formed by the first cluster formation means and the cluster formed by the second cluster formation means.

The goods dealing apparatus of the present invention may further comprise processing order determining means for determining, in accordance with predetermined conditions, an order to execute a linkage processing, which is executed by the dealing contract making means, for the buying information included in the cluster formed by the first cluster formation means.

A goods dealing apparatus of the present invention that makes a conclusion of a bargain of goods based on pieces of selling information and pieces of buying information for a dealing of the goods output from terminal devices, the apparatus comprising:

processing order determining means for determining, in accordance with predetermined conditions, an order to make a conclusion of the bargain for pieces of buying information;

cluster formation means for forming a cluster from pieces of selling information, the cluster meeting buying conditions which are included in processing object buying information in accordance with the processing order determined by the processing order determining means; and

dealing contract making means for making a conclusion of the bargain by linking the selling information with the buying information between the processing object buying information and the buying information included in the cluster formed by the cluster formation means.

In the goods dealing method of the present invention, the predetermined conditions may include an order in which higher desired buying prices included in the buying information are classified.

The goods may be the ones which lose and reduce their values after passage of a period of time estimated for each goods. A goods dealing system of the present invention In which terminal devices for outputting selling information for a dealing of goods, terminal devices for outputting buying information for the dealing of the goods, and a host for making a conclusion of a bargain of the goods based on pieces of buying information and pieces of selling information, which are output from the terminal devices, are connected to each other, wherein the host has a function of the goods dealing apparatus of the present invention.

A storage medium of the present invention which stores a program for executing a dealing process step to make a conclusion of a bargain for goods based on pieces of selling information and pieces of buying information for dealing the goods output from terminal devices,

wherein the dealing process step comprises a dealing process step of the goods dealing method of the present invention. In the present invention, from pieces of buying information output from the buyers, a cluster which meets the buying conditions (attributes such as sorts and colors of goods) is formed (clustering processing). The buying conditions are previously decided by market managers (brokers), or decided randomly by buyers. On the other hand, with reference to pieces of selling information, a cluster which meets the buying conditions is formed. Thus, the cluster of the buying information and the cluster of the selling information are formed for each of the buying conditions. The buying information and the selling information are linked with each other between the cluster of the buying information and the cluster of the selling information, which are in accordance with the same buying conditions. At this time, the linkage may be performed in a determined order in accordance with predetermined conditions (for example, an order in which higher desired buying prices are listed) in the buying information which constitutes the cluster of the buying information. In pieces of buying information issued from the buyers, an order to link the selling information with them is determined in accordance with predetermined conditions (an order in which higher desired buying prices are listed). In accordance with the previously determined buying conditions (attributes such as sorts and colors of goods) included in the buying information of the objected processed in this order, the cluster is formed from pieces of selling information issued from the sellers. Thus, the cluster of the selling information corresponding to the buying conditions of the processing object buying information is formed. The linkage of the processing object buying information is performed in the selling information constituting the cluster of the selling information.

Alternatively, in pieces of selling information issued from the sellers, an order to link the buying information with them is determined in accordance with predetermined conditions (for, example, an order in which lower or higher desired buying prices are listed). In accordance with previously determined selling conditions (attributes such as sorts and colors of goods) included in the selling information of the processing object in this order, the cluster is formed from pieces of buying information issued from the buyers. Thus, the cluster of the buying information corresponding to the selling conditions of the processing object selling information is formed. Then, in the buying information constituting the cluster of the buying information, the linkage of the processing object buying information is performed.

According to the present invention, the linkage of pieces of buying information and pieces of selling information with each other can be performed while meeting various kinds of demands in dealings, thus increasing a rate of making a contract effectively in a short time.

A goods dealing apparatus of the present invention which manages a system for making a conclusion of a dealing based on selling information and buying information for the dealing of goods output from terminal devices, the apparatus comprising:

storage means for previously storing information of distribution cost based on distribution route between sellers and buyers, which is generated by a conclusion of the dealing; and
output means for acquiring the information on the distribution cost corresponding to the distribution route between the sellers and the buyers to be objected and outputting the information on the distribution cost.

In the goods dealing apparatus of the present invention, the outputting means may output to the terminal devices of the buyers information on the distribution cost corresponding to the distribution route between the buyers and the sellers who output the selling information, at the time the buyers buy goods using the selling information by their own terminal devices.

The outputting means may individually calculate either a total buying cost of the buyer or the total buying cost and the distribution cost based on the selling information and the information on the distribution cost.

The storage means may store the information on the distribution cost based on plural types of distribution routes generated by combinations of addresses of the sellers and addresses of the buyers.

The information on the distribution may include discount information on the distribution cost based on a quantity of the dealing.

A goods dealing apparatus of the present invention that comprises at least one of terminal devices in a system for making a conclusion of a bargain for goods based on selling information and buying information for dealing the goods output from the terminal devices, comprising:

display means for displaying, depending on a customer, information on distribution cost based on a distribution route between sellers and buyers, which is generated by making the conclusion of the bargain.

In the goods dealing apparatus of the present invention, the display means may display the information on the distribution cost in response to the sellers who issue the selling information at the time buying of the goods is performed using the selling information.

The display means may individually display either a total buying cost or the total buying cost and a distribution cost, which are obtained from the selling information and the information on the distribution cost.

The display means may display distribution information corresponding to a customer in the bargain among the information on the distribution cost based on plural types of distribution routes generated by combinations of an address of the party concerned and an address of the customer.

The distribution information may include discount information on the distribution cost based on a quantity of dealings.

The display means may have icon function for executing each dealing process.

The goods may include perishables.

A goods dealing system of the present invention which makes a conclusion of a bargain for goods based on buying information and selling information for dealing the goods output from terminal devices,

the system comprising:

the goods dealing apparatus of the present invention.

A goods dealing system of the present invention which makes a conclusion of a bargain for goods based on buying information and selling information for dealing the goods output from terminal devices, wherein at least one of the terminal devices is the goods dealing apparatus of the present invention.

A goods dealing system of the present invention which, by allowing terminal devices and a host to intercommunicate with each other,
makes a conclusion of a bargain for goods based on selling information and buying information for dealing the goods output from terminal devices,
wherein each terminal device displays information sent thereto on a screen by means of a browser function and outputs information in response to an operation performed by a user based on the information on the screen, and

the host comprises storage means for storing previously information on distribution cost based on a distribution route between a seller and a buyer, which is generated by making a conclusion of the dealing, and transmitting means for acquiring information on distribution cost corresponding to the distribution route between the seller and the buyer, which are concerned, from the storage means and outputting the information on the distribution cost to the terminal device at the time the dealing is performed by the terminal device.

In the goods dealing system of the present invention, the transmitting means may transmit to the terminal device the information on the distribution cost corresponding to the distribution route between the seller and the buyer who outputs the selling information at the time buyer buys the goods using the selling information by means of the terminal device. The transmitting means may individually calculate either a total buying cost of the buyer or the total buying cost and the distribution cost based on the selling information and the information on the distribution cost and transmit the calculated value.

The storage means may store the information on the distribution cost based on the plural type of distribution routes generated by combinations of the address of each seller and an address of each buyer.

The information on the distribution may include discount information on the distribution cost based on a quantity of dealings.

A goods dealing method of the present invention which, based on selling information and buying information for a dealing of goods output from terminal devices, makes a conclusion of the dealing for the goods, comprising:

a storing step for previously storing information on distribution cost based on a distribution route between a seller and a buyer, which is generated by making a conclusion of the dealing of the goods, in a memory; and
an outputting step for acquiring from the memory the information on the distribution cost corresponding to the distribution route between the seller and the buyer, which are concerned, and outputting the information thereof.

In the goods dealing method of the present invention, the outputting step may include a step for outputting to the terminal device of the buyer the distribution information corresponding to the distribution route between the buyer and the seller who output the selling information at the time the buyer buys the goods using the selling information by his own terminal device.

The outputting step may include a step for calculating either the total buying cost or the total buying cost and the distribution cost based on the selling information and the distribution cost information, and outputting the calculated values.

In the storing step, the information on the distribution cost may be stored in the memory based on plural types of distribution routes generated by combinations addresses of sellers and addresses of buyers.

The distribution cost information may include discount information on the distribution cost based on a quantity of dealings.

A storage medium of the present invention which stores a program for executing a dealing process step to make a conclusion of a dealing for goods, based on selling information and buying information for the dealing for the goods output from terminal devices,

wherein the processing step includes the processing step of the goods dealing method of the present invention.

According to the present invention, the information on the distribution cost of the goods is constituted so as to be referred electrically to, so that one-sided distributions of the goods can be solved and the dealing of the goods can be activated. Particularly, the present invention is advantageous to the dealing of the goods such as flowers and perishables including vegetables and fruits, which show an unsteady cost of the distribution such as transportation owing to constant changes of a quantity of shipments and a shipment date.

To be more specific, the storage medium is constituted such that the information on a distribution cost generated by making a conclusion of the dealing with the customer, the distribution cost including transportation cost with the customer, can be referred to, at the time the dealing of the goods such as flowers. Therefore, when the buyer buy the goods, the selling information issued by the seller, which includes information on a desired buying price of the goods and a quantity of selling, is displayed on a screen, and information on the distribution cost between the buyer and the seller is displayed on the display. Here, the information on the distribution cost is previously prepared so as to correspond to addresses of the buyers dotted all over the country, for each of addresses of the sellers dotted all over the country, which include a district of production. Each distribution cost information includes discount information on the distribution cost which gradually reduces with an increase of a quantity of dealings. The discount information has, for example, contents such that 500 yen per one box is discounted for 1 to 50 cases and 250 yen per one case is discounted for 50 to 100 cases. Among such distribution cost information, distribution cost information corresponding to the buyer and the seller who are concerned in the current dealing is searched, and displayed on the screen of the terminal device of the buyer. Accordingly, the buyer can easily seize the distribution cost generated when the buyer deals with sellers dotted all over the country, and the buyer can easily seize the discount rate of the distribution cost of the seller . Thus, the buyer can performs a dealing in consideration of the total buying cost including the distribution costs and the best potential seller, and so on in advance. Since the buyer can seize that he can buy goods at a lower price from a remote seller depending on a discount rate, a seller whom the buyer deals with is not limited to a certain area. Accordingly, a new dealing can be created, and an activation of the distribution at a wide range can be achieved. When the total buying cost including the distribution cost can be referred to on a screen, the buyer can instantly confirm the total buying cost per number of cases containing the goods which the buyer wants to buy, so that the buyer can performs a dealing effectively.

Brief Description of the Drawings

Fig. 1 is a block diagram showing the constitution of a flower dealing system to which the present invention is applied in the first embodiment.
Fig. 2 is a block diagram showing internal constitutions of terminal devices on each dealer side and the server side in the above flower dealing system.
Fig. 3 is a diagram for explaining a top screen on a buyer side in the above flower dealing system.
Fig. 4 is a diagram for explaining a top screen on a seller side in the above flower dealing system.
Fig. 5 is a diagram for explaining a cross dealing by pre-engagement processing (dealing process (A)) based on order information, which is executed in the above flower dealing system.
Fig. 6 is a diagram for explaining a screen showing an order information list in the above dealing process (A).
Fig. 7 is a diagram for explaining a cross dealing by pre-engagement processing based on selling information (dealing process (B)) and, a cross dealing by pre-engagement processing based on pieces of order information and pieces of selling information (dealing process (C)), which are executed in the above flower dealing system.

Fig. 8 is a diagram for explaining a screen showing a selling (shipment) information list in the above dealing process (B).

Fig. 9 is a diagram for explaining a screen displaying selling information issued by sellers in the above dealing process (B).

Fig. 10 is a diagram for explaining a selling price forecast function that the above flower dealing system has.

Fig. 11 is a diagram for explaining a copying process that the flower dealing system has.

Fig. 12 is a diagram for explaining an unconcluded shipment list screen in the above copying process.

Fig. 13 is a diagram for explaining a selling information list screen in the above copying process.

Fig. 14 is a diagram for explaining a numerical statistics information screen list in the function of numerical statistics processing that the above flower dealing system has.

Fig. 15 is a diagram for explaining a linkage between selling information $1$ and buying information $n$ in the above dealing process (C), which is performed in the above flower dealing system in the second embodiment.

Fig. 16 is a diagram for explaining a linkage between selling information $n$ and buying information $n$ in the above dealing process (C) in the above flower dealing system.

Fig. 17 is a diagram for explaining a dealing conclusion process (1) in the linkage between the above selling information $n$ and buying information $n$.

Fig. 18 is a diagram for explaining a dealing conclusion process (2) in the linkage between the above selling information $n$ and buying information $n$.

Fig. 19 is a diagram for explaining process proceeding from (C2) to (C1) in the above dealing process (C), which is performed in the above flower dealing system in the third embodiment.

Fig. 20 is a diagram for explaining setting on a screen on a buyer side for executing the above proceeding process.

Fig. 21 is a diagram for explaining a process executed on the server side for information on unconcluded selling that occurs after the above proceeding process.

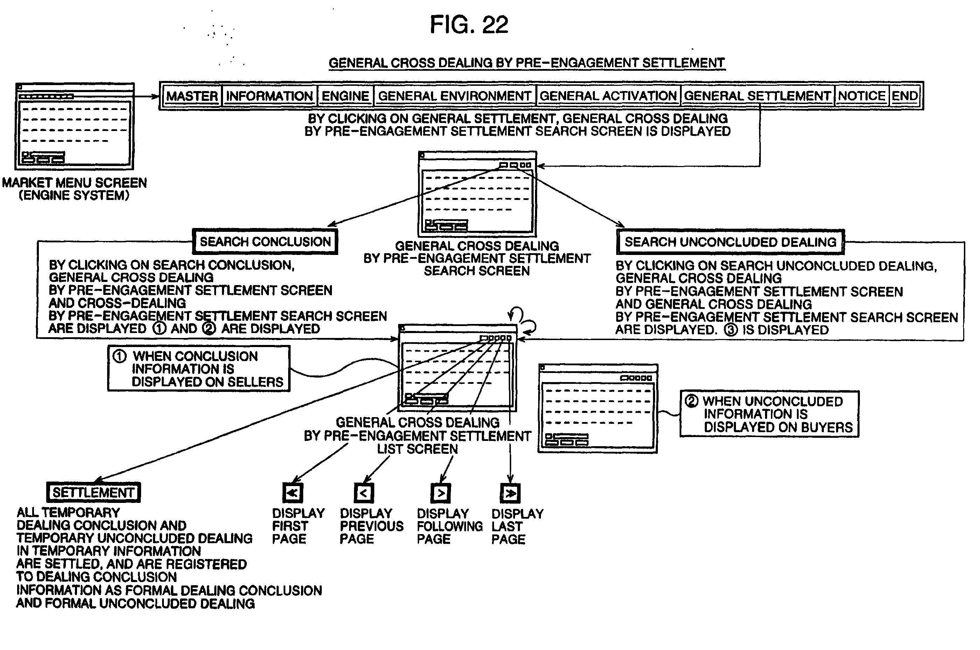

Fig. 22 is a diagram for explaining an operation on a screen on the above server side for executing the above proceeding process.

Fig. 23 is a diagram for explaining a screen composition of the above terminal device in the above flower dealing system in the fourth embodiment.

Fig. 24 is a diagram for explaining an exclusion function and a goods-in-stock selling function of the terminal device on the above server side in the above flower dealing system in the fifth embodiment.

Fig. 25 is a diagram for explaining a specifying process and a management process of exclusion processing and the like according to the above exclusion function and goods-in-stock selling function.

Fig. 26 is a diagram for explaining an exclusion process executed by the above exclusion function and goods-in-stock selling function.

Fig. 27 is a diagram for explaining a goods flow in the above exclusion process.

Fig. 28 is a diagram for explaining a dealing flow outline of selling styles 1 to 3 on a seller side in the above flower dealing system in the sixth embodiment.

Fig. 29 is a diagram for explaining a top screen (shipment disposition management top screen) on the above seller side.

Fig. 30 is a flowchart for explaining a dealing flow of the above selling styles 1 to 3.

Fig. 31 is a diagram for explaining a forecast selling operation screen in executing the dealing process in the above selling style 1.

Fig. 32 is a diagram for explaining a forecast selling operation screen at the time of dealing settlement in the dealing process in the above selling style 1.

Fig. 33 is a diagram for explaining a forecast selling operation screen at the time of arrival number confirmation in the dealing process in the above selling style 1.

Fig. 34 is a diagram for explaining an unprocessed selling operation screen before executing the dealing process in the above selling style 2.

Fig. 35 is a diagram for explaining an unprocessed selling operation screen in executing the dealing process in the above selling style 2.

Fig. 36 is a diagram for explaining an unprocessed selling operation screen at the time of dealing confirmation in the dealing process in the above selling style 2.

Fig. 37 is a diagram for explaining an unprocessed selling operation screen at the time of goods-in-stock number confirmation in the dealing process in the above selling style 2.

Fig. 38 is a diagram for explaining a case of displaying information on selling quantity, selling result, and the like, in the dealings in the above selling styles 1 to 3 in rows according to progress of process.

Fig. 39 is a diagram for explaining a matching process of goods attributes in the dealings in the above selling styles 1 to 3.

Fig. 40 is a diagram for explaining a screen composition of the terminal device on the above each dealer side in the above flower dealing system in the seventh embodiment.

Fig. 41 is a diagram for explaining an order information list in the above dealing process (A) that is displayed on a screen in the above screen composition.

Fig. 42 is a diagram for explaining a shipment information list in the above dealing process (B) that is displayed on a screen in the above screen composition.

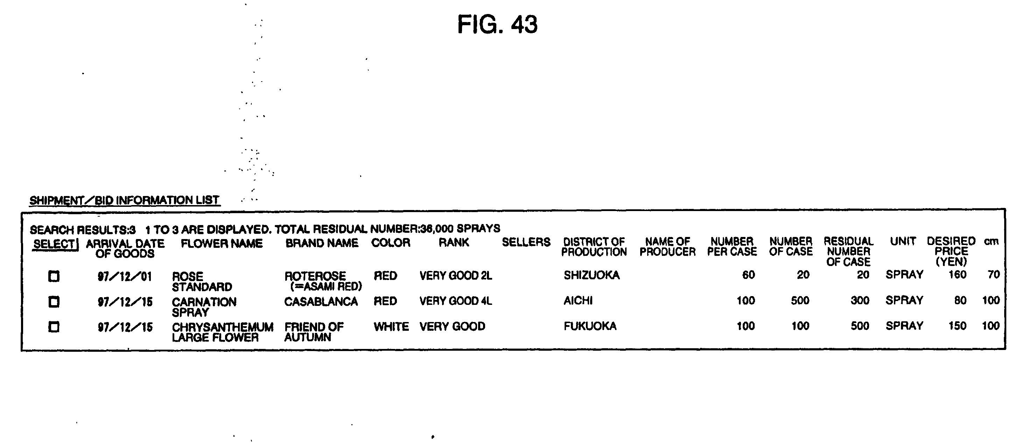

Fig. 43 is a diagram for explaining a shipment/bid information list in the above dealing process (C) that is displayed on a screen in the above screen composition.

Fig. 44 is a diagram for explaining information that can be referred to by each dealer in the above dealing processes (A) and (B).

Fig. 45 is a diagram for explaining a display state on a buyer side in the above screen composition in the above dealing processes (A) and (B).

Fig. 46 is a diagram for explaining a display state on a seller side in the above screen composition in the above dealing processes (A) and (B).

Fig. 47 is a diagram for explaining a flow of information in the above dealing processes (A) and (C).

Fig. 48 is a diagram for explaining a display state on a buyer side in the above screen composition in the above dealing processes (A) and (C).

Fig. 49 is a diagram for explaining a display state on a seller side in the above screen composition in the above dealing processes (A) and (C).

Fig. 50 is a block diagram showing the constitution of the above flower dealing system in the eighth embodiment.

Fig. 51 is a diagram for explaining buying information output from buyers in the above flower dealing system.

Fig. 52 is a diagram for explaining selling information output from sellers in the above flower dealing system.

Fig. 53 is a flowchart for explaining an algorithm 1 for linking pieces the above buying information and pieces of the above selling information to conclude dealings.

Fig. 54 is a flowchart for explaining a clustering process in the above algorithm 1.

Fig. 55 is a diagram for explaining a buying information cluster and a selling information cluster formed by the above clustering process.

Fig. 56 is a flowchart for explaining linkage processing in the above buying information cluster and the above selling information cluster.

Fig. 57 is a diagram for explaining the above linkage process more specifically.

Fig. 58 is a flowchart for explaining an algorithm 2 for linking pieces of the above buying information and pieces of the above selling information to conclude dealings.

Fig. 59 is a diagram for explaining a processing order decision of buying information in the above algorithm 2.

Fig. 60 is a diagram for explaining a linkage process in the cluster of buying information and selling information according to the processing order decision of the above buying information.

Fig. 61 is a flowchart for explaining an algorithm 3 for linking pieces of the above buying information and pieces of the above selling information to conclude dealings.

Fig. 62 is a flowchart for explaining an algorithm 4 for linking pieces of the above buying information and pieces of the above selling information to conclude dealings.

Fig. 63 is a diagram for explaining an example of linkage between corresponding clusters of buying information and selling information in each of the above algorithms.

Fig. 64 is a diagram for explaining a level of abstraction for linkage processing order, when objective goods are airline tickets, when buyers specify variety of conditions to selling information of sellers.

Fig. 65 is a diagram for explaining the linkage processing order more specifically (in case where buyers specify a level of conditions).

Fig. 66 is a diagram for explaining the linkage processing order more specifically (in case where buyers specify conditions optionally).

Fig. 67 is a bock diagram showing the constitution of the above flower dealing system in the ninth embodiment.

Fig. 68 is a diagram for explaining a processing outline in dealing execution based on selling information in the above flower dealing system.

Fig. 69 is a diagram for explaining selling information issued by sellers, which is managed by the server of the above flower dealing system.

Fig. 70 is a diagram for explaining a selling information display which is displayed on the terminal device of buyers.

Fig. 71 is a diagram for explaining discount rate information which is displayed in a pop-up window on the selling information display.

Fig. 72 is a diagram for explaining a registration display which is displayed on the terminal device of the buyer.

Fig. 73 is a diagram for explaining a discount table which is set by the server.

Fig. 74 is a flowchart for explaining processing by the server.

Fig. 75 is a diagram for explaining another example of constitution of the discount table.

Detailed Description of the Preferred Embodiments

The first to ninth embodiments of the present invention will be described below with reference to the accompanying drawings.

[First Embodiment]

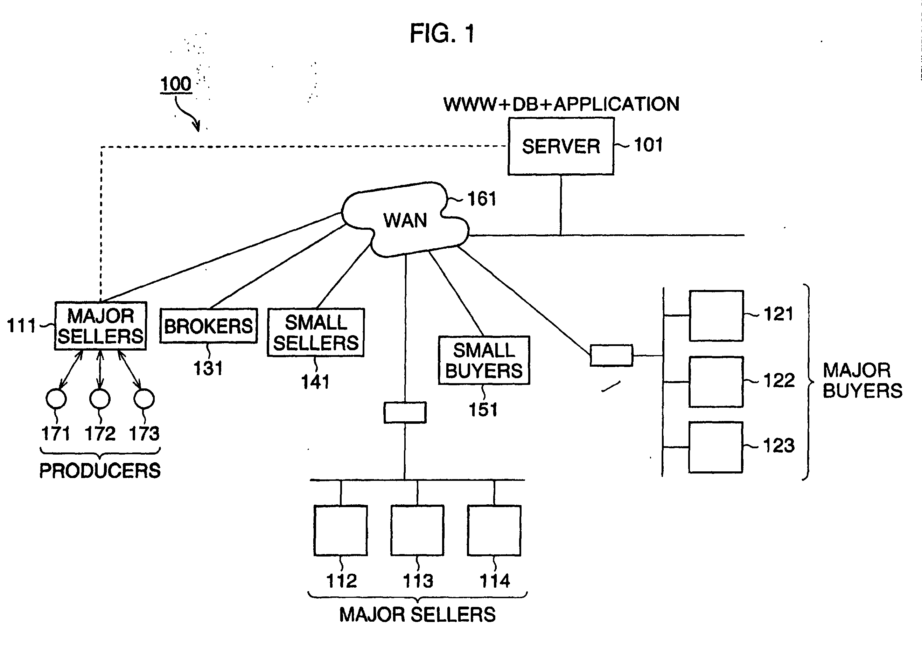

The present invention is applied to a flower dealing system 100 as shown in Fig. 1.

In this flower dealing system 100, a terminal device 101 of a server which performs a market management of flowers and terminal devices 111 to 114 and 141 of sellers, terminal devices 121 to 123 and 151 of buyers, and a terminal device 131 of a broker are connected so as to be intercommunicated with each other through a WAN 161 as shown in Fig. 1.

Here, major dealers (major sellers) and small dealers (small sellers) shall be included in the sellers, and major dealers (major buyers) and small dealers (small buyers) shall be included in the buyers.

Each of the terminal devices of the servers, the sellers, the buyers and the brokers is constituted, for example, by a personal computer which comprises a central processing unit (CPU), a keyboard, a mouse, a display, a communicator, a memory storing previously a processing program of this system, and the like. The processing program stored in the memory is read out by the CPU, and executed. Thus, the terminal device can execute various kinds of processing described later.

Note that in the flower dealing system 100 of Fig. 1, a goods dealing apparatus of the present invention is applied to each of the terminal devices of the server, the sellers, the buyers and the brokers. Although the terminal device of the server and the terminal device are connected through the WAN 161, the constitution of the flower dealing system 100 is not limited to this, and a constitution in which the terminal device is connected to a host computer may be adopted, or alternatively a constitution in which the terminal devices 111 to 114 of the sellers and the terminal devices 121 to 123 of the buyers are individually connected to the server through the WAN 161 may be adopted. Reference numerals 171 to 173 in Fig. 1 denote producers, and the producers 171 to 173 are not connected so as to be intercommunicated with each other. The producers 171 to 173 contact the major sellers 111 by telephones or facsimiles.

The above-described flower dealing system 100 is constructed such that dealings of flowers are performed by the terminal devices of the dealers (participants) participant in the flower dealing system 100, the dealings of flowers including a dealing between the dealers based on goods information issued by the buyer (dealing based on order information), a dealing between the dealers based on goods information issued by sellers (dealing based on selling information), and dealings among dealers based on pieces of order information issued by buyers and pieces of selling information issued by pieces of selling information (dealings based on pieces of order information and pieces of selling information).

Here, the goods information includes, for example, a quantity, a price, a time of information entry and attribute data, and this attribute data includes a date, a time limit, a sort, a color and the like. The producer includes a selling agent, a selling broker, a buying agent and an importer.

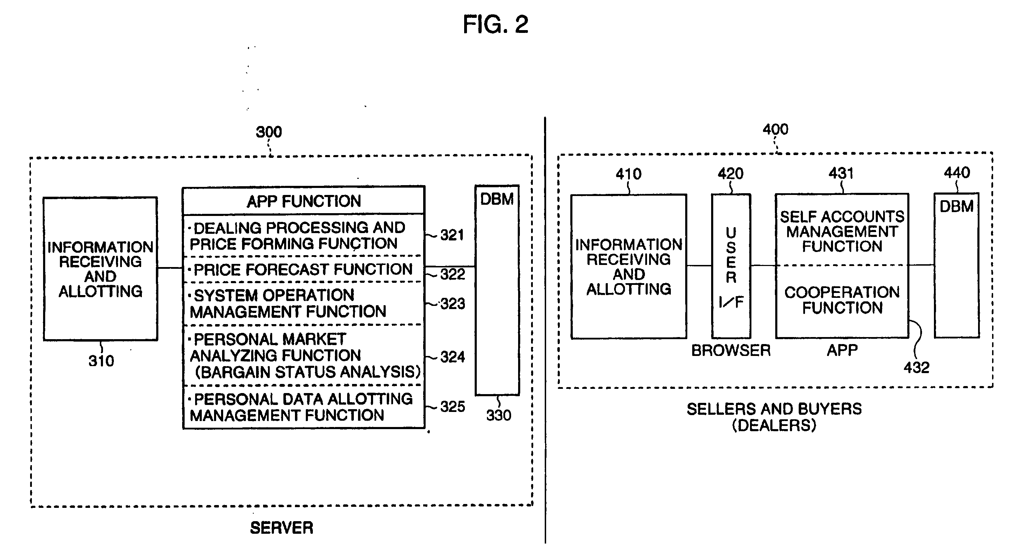

First of all, an internal constitution of the terminal device of the server as well as an internal constitution of the terminal device of the dealers will be described with reference to Fig. 2.

As shown in Fig. 2, the terminal device 300 of the server comprises an information receiving/allotting function 310 for receiving and transmitting (allotting) various kinds of information, a dealing process/price forming function 321 as an application function (APP function), a price forecast function 322, a system operation management function 323, a personal market analyzing function 324, a personal data allotting management function 325 and a storing function (data base memory DBM) 330 for storing transaction data and master data and for storing data necessary for each processing.

The dealing process/price formation function 321 is a function to perform various kinds of dealings such as a dealing based on order information, a dealing based on selling information and a dealing based on pieces of order information and pieces of selling information.

The price forecast function 322 is a function to forecast changes of prices of the flowers to be dealt in dealings among the dealers.

The system operation management function 323 is a function to control and manage the flower dealing system 100 by operating the terminal device of the server.

The personal market analyzing function 324 is a function to perform a registration of a participant, to allow the DBM to information on a dealing performed by the participant such as information on a date when the participant actually performs the dealing and a dealing condition after the dealing, and information on the dealt flowers including sorts and prices, and to analyze a price trend of the flower to be dealt depending on a season, a price level and a dealing trend of the participant in the future (dealing attitude).

The personal data allotting management function 325 is a function to apply filtering to a data allotting management for the participant, for example, a function to display all allotting data and a part of the allotting data or not to display the allotting data depending on business conditions of the participants such as brokers and large discount stores, delivery conditions of the goods, and service conditions provided to the participant, or a function to change the total contents or a part of the contents displayed on a screen of the terminal device of each participant by the above-described reasons.

On the other hand, the terminal device 400 of each dealer comprises an information receiving allotting function 410 for receiving and allotting various kinds of information, a user interface (I/F) function 420 by means of WWW browser, a self-accounts management function 431 and a cooperation function 432 as an application function, and a storing function 440 for storing transaction data and master data and for storing data necessary for various kinds of processing.

The self-accounts management function 431 is a function to manage a self-accounts to be processed by the participant such as a management for a payment generated by a previous dealing.

The cooperation function 432 is a function to make it possible to cooperate with the participant by notifying information as to the previous dealing, in cooperation with a system of a retail shop under the immediate control, and an internal house selling system.

Although the self-accounts management function 431, the cooperation function 432 and the storing function 440 are provided in the terminal device 400 of the dealer, it is not always necessary to provide these functions in the terminal device 400 of the dealer. These functions may be provided in the terminal device 300 of the server instead of the arrangement of them in the terminal device 400 of the dealer.

Procedures of dealing processes by the flower dealing system 100, particularly (A) a dealing process based on order information, (B) a dealing process based on selling information, and (C) a dealing process based on pieces of order information and pieces of selling information, will be described. In descriptions for the dealing processes (A), (B), and (C), the dealing shall mean the one performed between the buyer and the seller.

In the terminal device of each dealer, various kinds of data sent through the server by means of the WWW browser as an interface function shall be displayed on its screen. The dealing process shall proceed by an operation of a user of a terminal device on a screen.

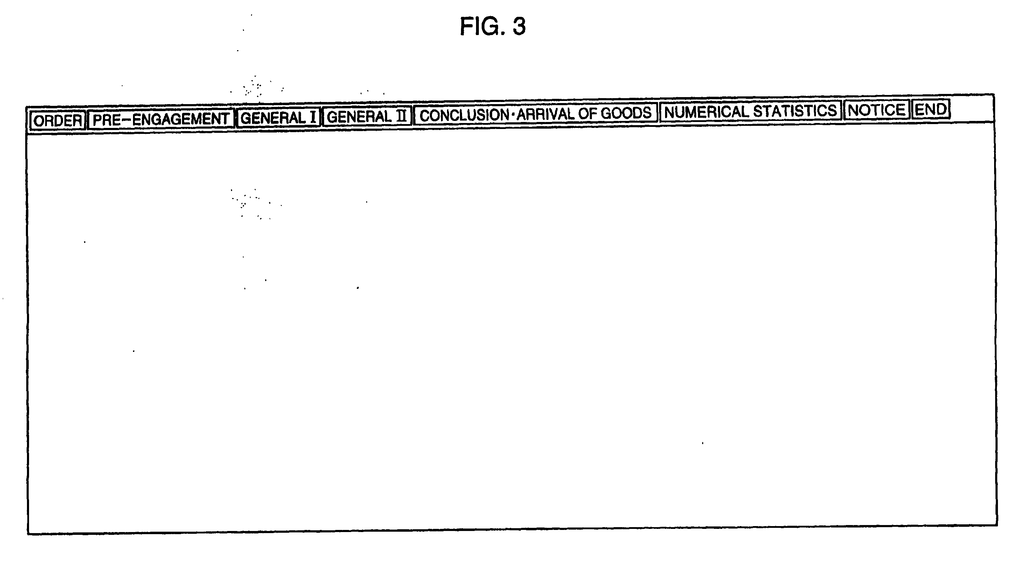

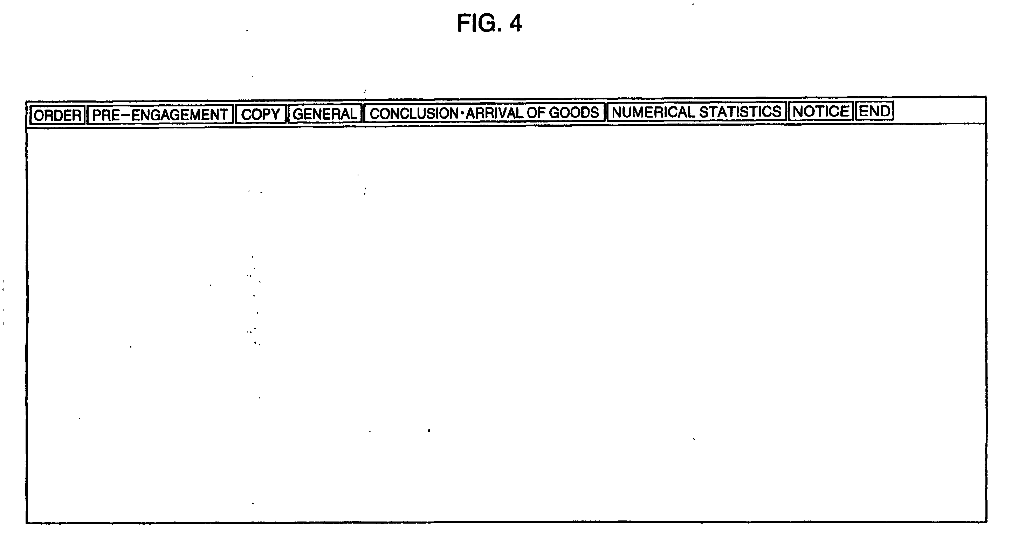

When a user performs any of the dealing processes (A), (B) and (C) utilizing the flower dealing system 100, he accesses first to the server by his own terminal device, and hence a top screen as shown in Figs. 3 and 4 is displayed in his own terminal device.

Fig. 3 shows the top screen displayed when the user is a buyer, and various items such as "Order" , "Pre-engagement" , "General I" , "General II" , "Conclusion • Arrival of goods" , "Numerical Statistics" , "Notice" and "End" are displayed.

On the other hand, Fig. 4 shows the top screen displayed when the user is a seller, and various items such as "Order" , "Pre-engagement" , "Copy" , "General" , "Conclusion • arrival of goods" , "Numerical statistics" , "Notice" and "End" are displayed.

As to these items displayed, when the character portion of the items is clicked, a processing corresponding to a meaning of the character portion is executed similarly to an icon function. Here, although the items are displayed in the form of characters, the items may be displayed in the form of patterns or the like other in addition to the characters.

The user (buyer or seller) of the terminal device in which the top screen of Figs. 3 and 4 is displayed selectively specifies (clicks on) any of the items using a mouse. Thus, a processing corresponding to the specified item is executed. In executing the dealing process (A), the item "Order" is selected and specified. In executing the dealing process (B), the item "Pre-engagement" is selected and specified. In executing the dealing process (C), one of the items "General I" and "General II" , or the item "General" , is selected and specified.

(A) Dealing process based on order information:
(the first dealing: a cross dealing by pre-engagement based on order information)

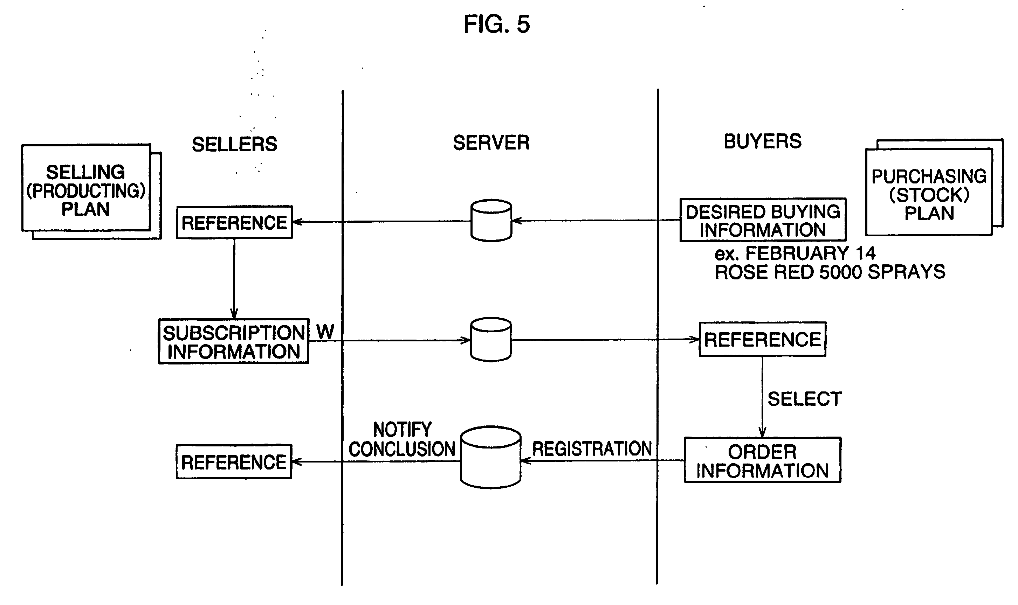

This dealing process is executed in accordance with the flow shown in Fig. 5.

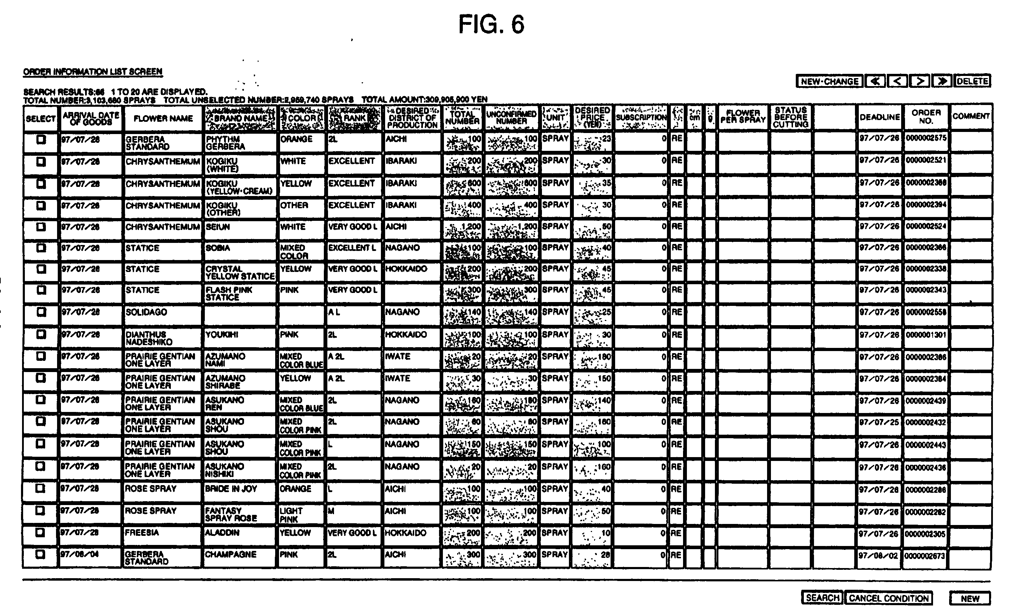

The buyer selects and specifies the item "Order" on the top screen (see Fig. 3) of his own terminal device. With the operation of the buyer, the terminal device of the buyer falls in an order information entry standby state. Then, the buyer enters by keyboard order information, that is, desired buying information, such as a desired buying date, a flower name, a brand name, a rank, a district of production, a total number, and a price, in accordance with his purchasing (stock) plan. This information is sent to the server. As a result, the order information list shown in Fig. 6 is, for example, made by the server, and this list is displayed on the screen of the terminal device of the buyer. On the screen which displays the order information list, information such as "Grand total number" , "Unselected total number" and "Total amount" is displayed in addition to the order information input by the buyer. These items "Grand total number", "Unselected total number" and "Total amount" are obtained by calculation by the server, and transmitted to the terminal device of the buyer and displayed. As described above, the buyer performs an order of flowers on his own terminal device in accordance with his purchasing (stock) plan.

The seller refers to the order information issued by the buyer on a screen of his own terminal device, and the seller decides in accordance with his selling (production) plan whether the flowers desired by the buyer can be shipped. If the flowers can be shipped, the seller enters that effect as subscription information with a keyboard. At this time, the seller can subscribe for all of the total numbers desired by the buyer, and alternatively he can subscribe a part of the total number. The seller can subscribe for the number of flowers than that of the flowers the buyer wants. Such subscription information is sent to the server. In such manner described above, the seller subscribes for the order information issued by the buyer on the terminal device of the server.

The buyer refers to the order information list shown in Fig. 6 on the screen of his own terminal device. The subscription information issued by the seller is reflected on the order information list at this time by the server. Specifically, in the column "Subscription" of the order information list, the number of orders by the seller who subscribed for the order information is displayed. The buyer specifies an icon portion representing "RE" adjacent to the column Subscription, "RE" being a part of "Reference", and thus the buyer can refer to detailed information issued by the seller who subscribed for the order information. The buyer refers to such order information list screen, and the buyer selects a desired seller among the sellers who subscribed for the order information and pre-engages, and the buyer enters the content of the pre-engagement as order information with a keyboard. This order information is sent to the server and registered.

When the contract is made between the buyer and the seller in the server, and the server sends to the seller the notification to the effect that the contract was made. The seller receives the notification and recognizes that the dealing with the buyer is settled. At this time, a manner that the server does not send the notification and the seller refers to, for example, a conclusion information list on a screen of his own terminal device to recognize the settlement of the dealing may be adopted.

Accordingly, the above-described conclusion is reflected on "unselected" column of the order information list screen shown in the above Fig. 6. For example, when total desired number of flower is 100 and all of the 100 flowers are settled in this dealing, the unselected number as unconcluded number is 0. If 40 among 100 flowers are settled, the unselected number should be 60. If the number which is subscribed by the seller is greater than total desired number, the unselected number should be a negative number (such as -60) allowing a negative number display.

In this example, the buyer refers to the subscription information in order to selects sellers after the sellers subscribed to order information of the buyer (refer to the above Fig. 5). But the buyer may additionally register new order information, instead of selecting sellers. Alternatively, the buyer may delete previous order information, and register new order information. In this case, the above-described subscription of the seller is repeatedly made to the renewed order information. In selecting the above-described subscription information, the buyer may selects or rejects all or a part of the subscription information.

(B) Dealing process based on selling information
       (The second dealing: cross dealing by pre-engagement based on selling information)

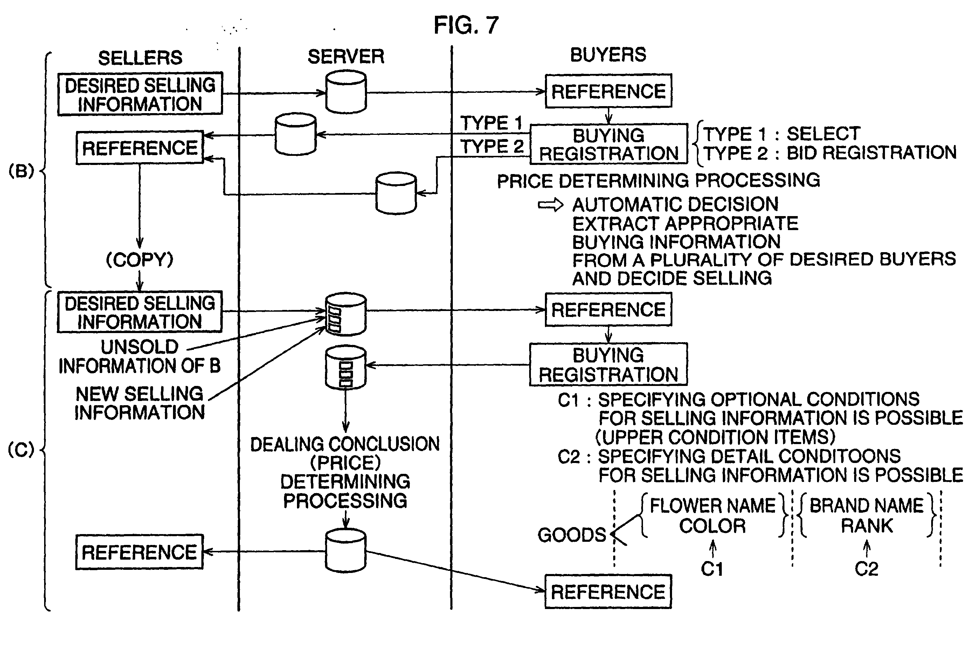

This dealing process is executed, for example, by the flow described in Fig. 7 (B).

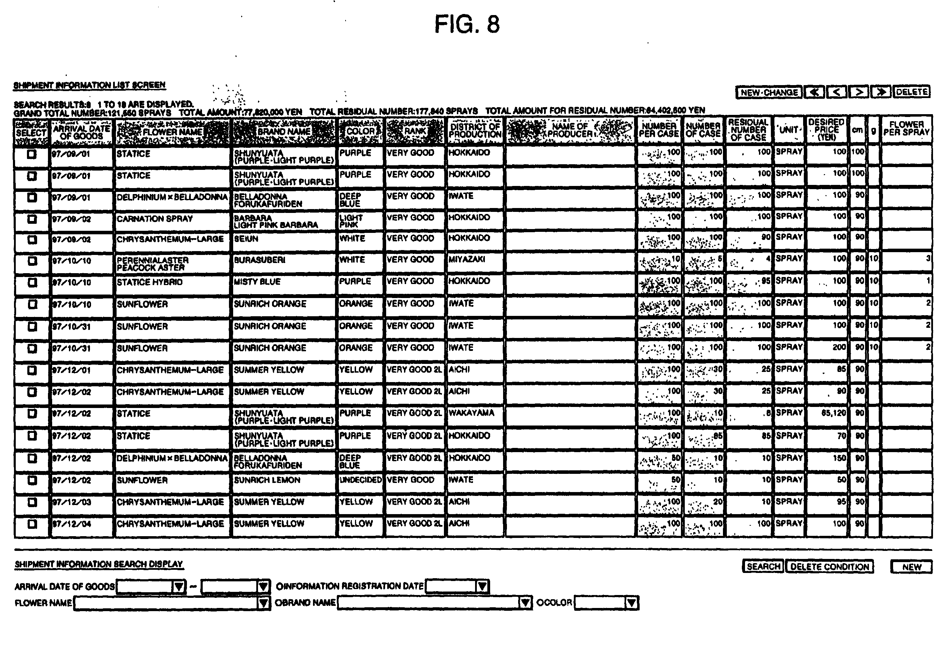

The sellers select and specify "pre-engagement" item on top screen (refer to the above Fig. 4) of their own terminal devices, which makes the device be ready for selling information entry. The sellers enter selling information (shipment information) on keyboard which is the desired selling information for flower name, brand name, arrival date of goods, rank, district of production, name of producer, the number of cases and price and so on of desired flowers. As a result, shipment information list screen as shown in Fig. 8, for example, is formed and displayed on screen. Such selling information is sent to the server. The sellers perform selling of flowers on their own terminal device in this manner.

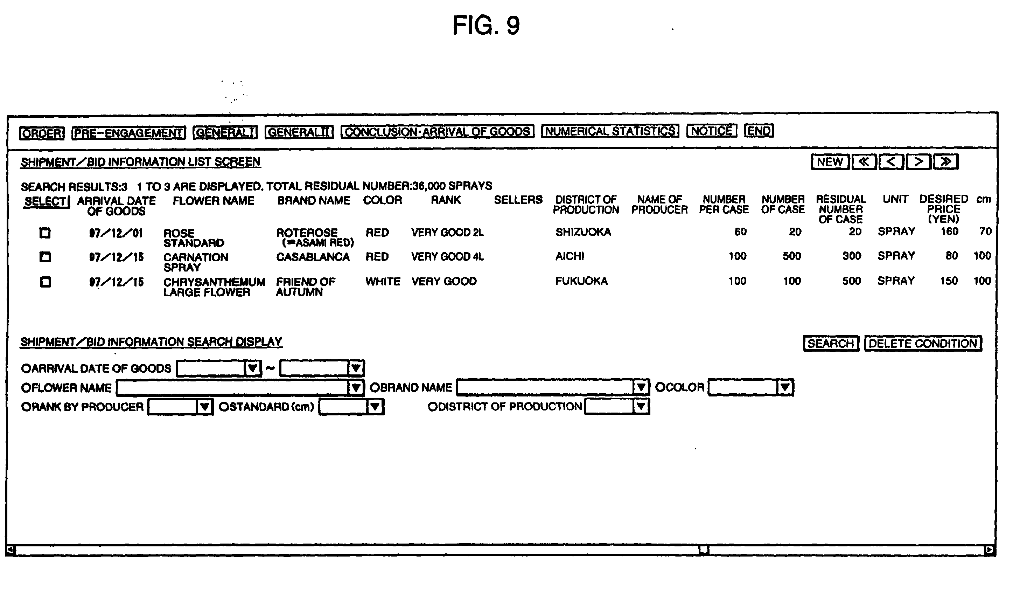

The buyers register information such as the number of cases for desired goods on keyboard by searching and referring to desired goods on selling information as in Fig. 9 issued by the sellers on screen of their own terminal devices. A part of desired number of cases can be registered. For example, when the residual number of cases of shipment information is 50 cases and originally desired number of cases by the buyers are 20 cases, the buyers can register only 10 cases. Such buying registration information is sent to the server. The buyers register buying information for selling information issued by the sellers on their own terminal devices (type 1).

The sellers refer to and judge registration status of the buyers on screen of their own terminal devices, and conclude dealing with the buyers.

When buyers register above-described buying information (hereinafter, also referred to as type 1 dealing process or (B1) dealing process), the buyers can specify buying price to make it a buying registration information (hereinafter, also referred to as called type 2 dealing process or (B2) dealing process). In this case, for example, the sellers can execute an algorithm on their terminal devices which automatically decides an appropriate buyer (for example buyer with the highest buying price) based on buying prices specified by buyers. The buyers, for the residual number of case as 10 cases, can register the buying registration information as, for example 6 cases, and at the same time, can express intention to buy even if under 6 cases. Accordingly, if the buyers x and y both register buying for 6 cases, and the buyer y intends buying even under 6, dealing can be settled in 6 cases to the buyer x and 4 cases to the buyer y.

(C) Dealing process based on pieces of buying information and pieces of selling information
    (The third dealing: dealing which makes conclusion for pieces of buying information and pieces of selling information sequentially from conditions of buying information and selling information meet)

This dealing process is executed, for example, by the flow described in Fig. 7 (C).
This dealing process separates in 2 kinds of dealing process ((C1) dealing process and (C2) dealing process), which corresponds to "General I" and "General II" of the top screen (the above Fig. 3) in case of the buyers. (C1) dealing process and (C2) dealing process have different buying registration method for selling information issued by the sellers when the buyers enter buying registration, detail will be described later.
For example, when a seller was not able to sell all of the number issued as the selling information after the dealing process (B), specifically, despite that the seller desired to sell 100 cases of flowers and only 60 cases concluded dealing with a buyer, 40 cases are left unsold.
In such case when the seller has flower that did not sell (unconcluded flower), the seller searches unconcluded flower, upon obtainment of the information, selects and specifies "copy" item of the top screen (refer to the above Fig. 4). This operation makes the seller proceed the flower that was not sold, in other words, the unsold flower, from the dealing process (B) to this dealing process. The seller, in the same manner as the dealing process (B), enters the selling information on keyboard, and also enters the selling information of any newly desired flower for selling. The seller enters the lower limit desired price (the lower limit selling price) at this time. Other sellers enter selling information of desired flowers for selling at their own terminal devices in the same manner. Such selling information is sent to the server. Accordingly, selling information of sellers exists in the server.
Details for "copy" processing on the top screen (refer to the above Fig. 4) will be described later.
The buyers, similarly to dealing process (B), refer to selling information issued by sellers on their own terminal devices, and register buying for selling information which meets buying conditions. Buying registration is performed on the above-described dealing process (C1) or (C2). Specifically, in case of buying processing on the dealing process (C1), the buyers select and specify "General I" on the top screen (refer to the above Fig. 3) on their own terminal devices. This operation makes a terminal device ready for reference to selling information issued by sellers and buying registration on their own terminal devices as described above. But in this buying registration, the buyers can specify only "Flower name" and "Color" as registration conditions.
On the other hand, in case of buying registration on the dealing process (C2), the buyers select and specify "General II" on the top screen (refer to the above Fig. 3) on their own terminal devices. The buyers can refer to selling information issued by sellers on their own terminal devices, and are ready for buying registration. In this buying registration, the buyers can specify not only "Flower name" and "Color", but also other detail conditions such as "Brand name" and "Rank by producer". The buyers also can specify such detail conditions to sellers.
Other buyers refer to the selling information issued by sellers and enter buying registration on the dealing process (C1) or (C2) on their own terminal devices in the same manner. Such buying registration information is sent to the server. Accordingly, the selling information issued by the sellers and buying registration information issued by the buyers exist in the server.
The server, in accordance with a dealing conclusion processing on a prescribed dealing conclusion algorithm, concludes dealing (price) between the selling information issued by the sellers and buying registration information issued by the buyers sequentially from conditions of both dealers meet. The dealing conclusion algorithm in this example concludes dealing for information which satisfies a lower limit selling price, and at the same time, in the order of higher buying price and earlier entry time of buying information. The dealing conclusion information is notified to the dealers, by which both the sellers and the buyers recognize dealing conclusion on their own terminal devices.
Alternatively, constitution of the above-described dealing process (C) may be constituted as follows.
Dealing conclusion may be constituted, not limited to an algorithm which concludes dealing in the order of higher buying price and earlier entry time of the buying information, in an algorithm with a prescribed priority order based on an element such as larger desired buying quantity or larger dealing volume in the past. An algorithm for dealing conclusion which accepts demand for buying even a part of the desired quantity and reflects such demand on priority order decision may also be adopted. Specifically, in case of an algorithm in the order of higher buying price, if more than one buying information with same buying price exist, other algorithm with larger buying quantity, earlier entry of buying information or buying intention when selling quantity does not satisfy desired buying quantity (buying conditions with more options) may be used.

An algorithm which makes dealing proceed to the dealing process (C) when object of dealing has higher level of condition allowance (easy conditions), and does not make dealing proceed to the dealing process (C) when object of dealing has lower level on allowance (strict conditions) may be added.

Herein, the selling information issued by the sellers includes the lower limit price information (the lower limit selling price value). The lower limit price information may be set at "0" (zero) to consign the goods completely to buyers, or parameter other than the lower limit price information. For example, information for the minimum selling quantity may be used.

The buyers decide and enter conditions on the dealing process (C1) and (C2) (detail conditions entry on (C2), easier conditions entry on (C1)). For example, items (such as "Brand name", "Flower name" and "Color") and their contents (such as "chrysanthemum" and "rose" for item "Flower name") are previously set, then buyers may specify their desired item and its content (conditions). Specifically, in case when object goods for dealing is vegetable, condition with "Vegetable name" and "Standard" and other conditions added with district of production and name of producer are prepared in form of tables. In case of airline ticket, conditions with flight date and destination and another condition added with airline name or specific flight no. (two or more are acceptable) are prepared in a form of tables. Accordingly, the buyers can specify variety of conditions.

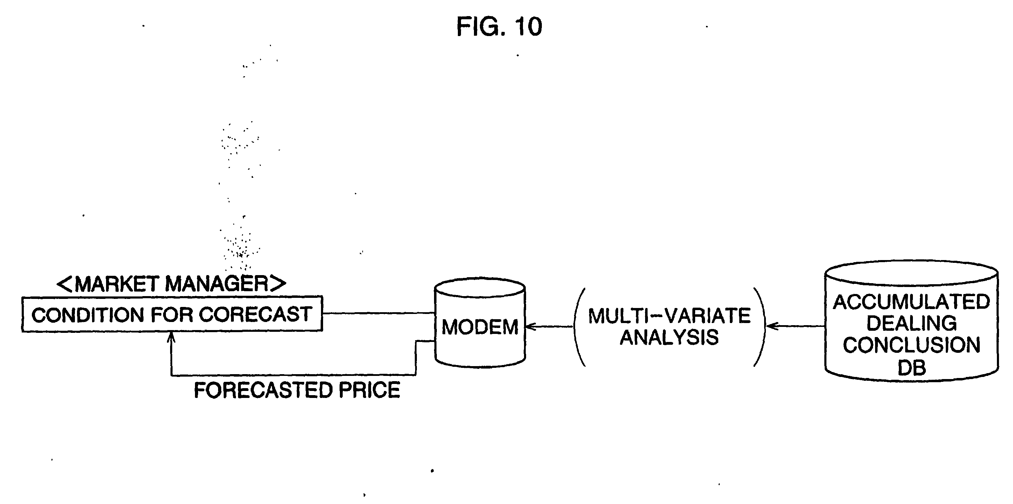

Flow of dealing process (A), (B) and (C) on flower dealing system 100 has been described above. Following, description is made for the price forecast function installed in terminal, device of the above-described server. The price forecast function is the function to forecast price fluctuation of object flower for each of above-described dealing process (A), (B) and (C). Market operators (managers) can easily forecast prices on their own terminal devices (the terminal devices of the server) by using this function. As shown in Fig. 10, specifically, storage function (DBM) of terminal device of the server stores kinds of data occurred in dealing as well as variety of data stored by the personal market analyzing function. The server analyzes the data stored in DBM based on such as multi-variate analysis, and forms a model according to analysis result. Consequently, the server forecast price fluctuation and so on for market status by using the formed model. The price forecast can be performed according to each flower and season.

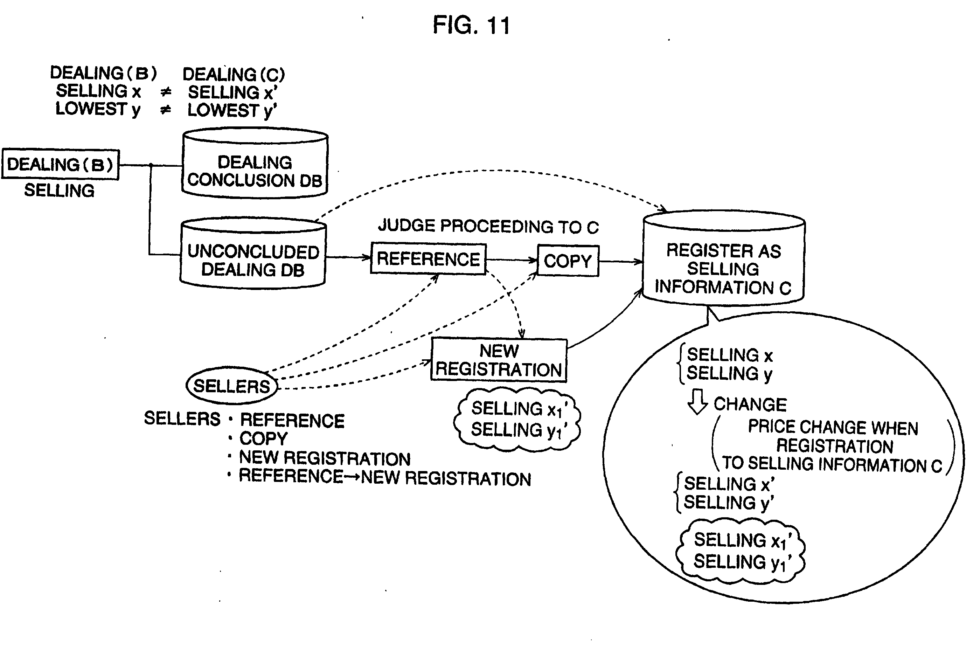

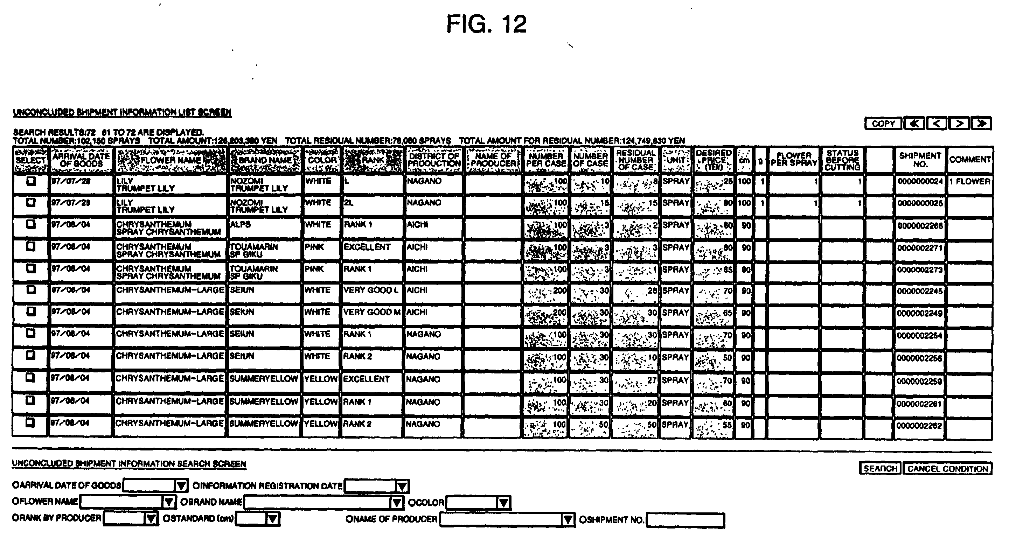

Processing by "Copy" of the above-described top screen (refer to the above Fig. 4) will be specifically described as follows. The processing by "Copy" (copy processing) is executed when, as described above, the sellers did not sell all of the flowers on the dealing process (B). By executing the copy processing, the dealing process (B) proceeds to the dealing process (C). In other words, as a result of the dealing process (B), the flower which concluded dealing (concluded goods ready for shipment) and the flower which did not concluded dealing (unconcluded goods ready for shipment) are generated as shown in Fig. 11. Price of goods (selling price) should be "x" and lower limit price (desired lower limit price) should be "y" at this stage. Information of such concluded goods ready for shipment and unconcluded goods ready for shipment is sent to terminal devices of the server, and is stored in DBM. The sellers, on their own terminal devices, refer to unconcluded shipment information list display as shown in Fig. 12 which is formed by the stored information in DBM of the server. The sellers, then, judge whether or not to execute copy processing, and select to specify "copy" on a screen as shown in the above Fig. 4. Consequently, the sellers select goods for copy individually in order to specify them. In selecting goods for copy processing, all of unconcluded goods may be specified at a time.

The sellers can also specify price change as; from the selling price x to the selling price x' (x≠x') and from the lower limit price y to the lower limit price y' (y≠y').

After executing above processing, information on unconcluded goods ready for shipment stored in DBM of the server is considered as goods information on dealing process (C) including price changes. When the sellers newly register goods (new registration) on the selling price $x_1'$ and the lower limit price $y_1'$, the newly registered information is also considered as goods information on the dealing process (C).

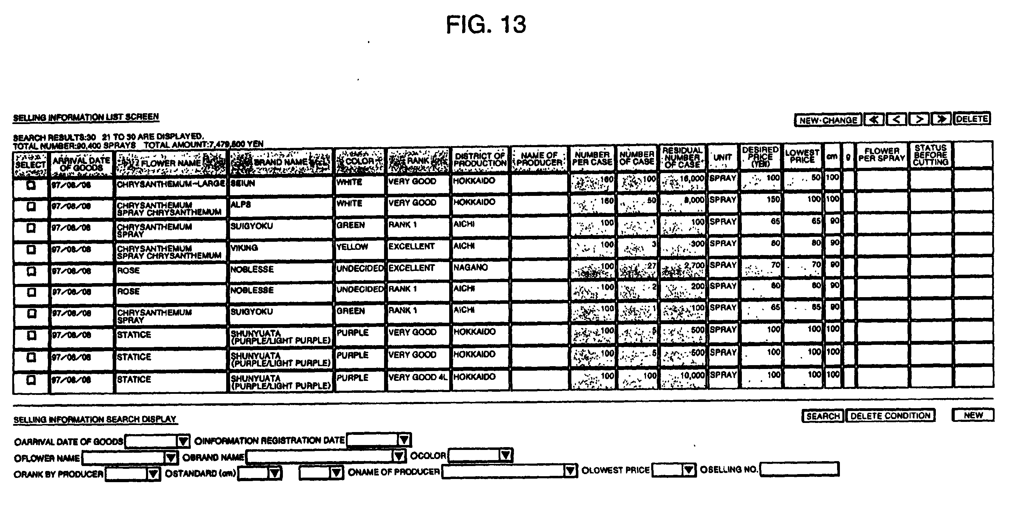

Further, the sellers, on their own terminal devices, confirm goods proceeded to the dealing process (C), the newly registered goods and the date when the information is registered (information registration date) on selling information list display as shown in Fig. 13, for example. If the above-described parameter (such as minimum selling quantity) is used in selling information issued by the sellers other than the lower limit price, such parameter should be changed.

Numerical statistics, as a processing executed by flower dealing system 100, will be described as follows.

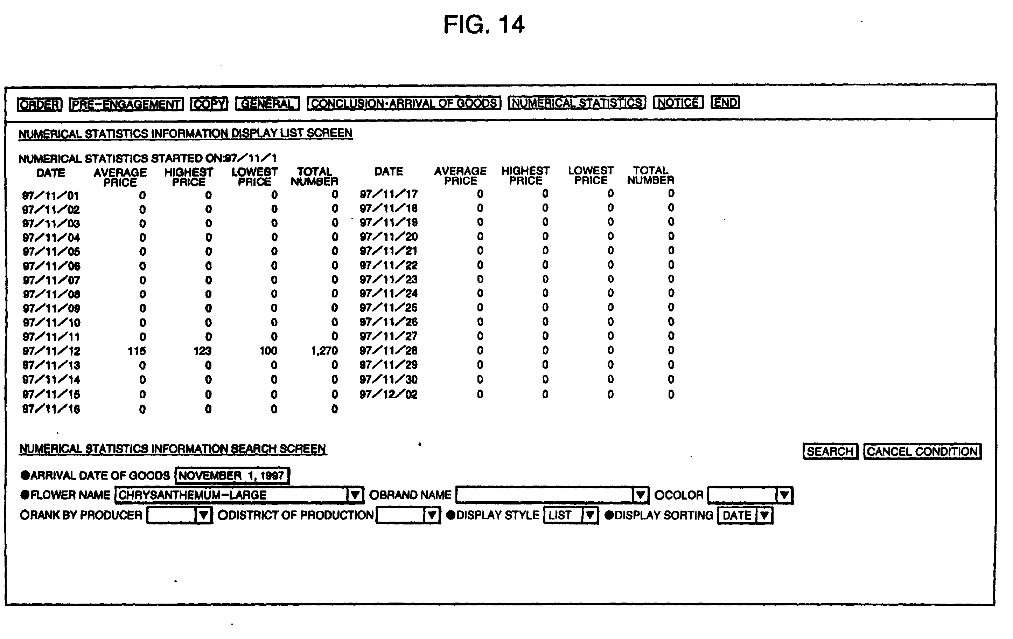

The numerical statistics is a processing executed when the sellers, select and specify "Numerical statistics" item on the top screen of their terminal devices, as shown in the above Fig. 4. In short, the sellers select and specify "Numerical statistics" item of the top screen on their own terminal devices, which displays numerical statistics information display list as shown in Fig. 14. The numerical statistics information display list includes information of dealing which is going to occur in future (dealing which is already decided), more specifically, reservation date (exclusion date), average price of flowers, the highest price, the lower limit price, total number of flowers and so on. By specifying conditions such as date, flower name, and brand name on screen, information for each specified item can be displayed. Sellers, by referring to such display, can seize future plan. The buyers can similarly seize future plan, on their own terminal devices, by specifying "Numerical statistics" item and by specifying kinds of conditions on the top screen (the above Fig. 3).

In this embodiment, explanation has been made taking the perishables such as flowers as a object goods for dealing example, but the object goods are not limited to such perishable products. The embodiment may be applied to goods such as airline tickets, other transportation tickets and concert tickets with limited period of validity. In case of airline tickets, the above-described producers correspond to airline companies, major sellers correspond to sales division such as branch offices of airline companies and sales agents of major travel companies, and small sellers correspond to travel agencies and retail stores (convenience stores) which sell airline tickets such as seven-eleven. More specifically, a demand for 2 seats of flight no. xxx on December 29 or 30, or 2 seats of flight no. xxx or yyy from A airport to B airport on December 29 correspond to dealing process (A), dealing based on information that 100 seats of flight no. xxx at $\alpha$ yen and flight no. yyy at $\beta$ yen between December 29 to January 5 correspond to dealing process (B), dealing for deciding price and the number of tickets by matching buying information and selling information with variety of conditions correspond to dealing process (C). Accordingly, the present invention is applicable to goods with a term of validity such as airline tickets and goods with a time limit.

[Second Embodiment]

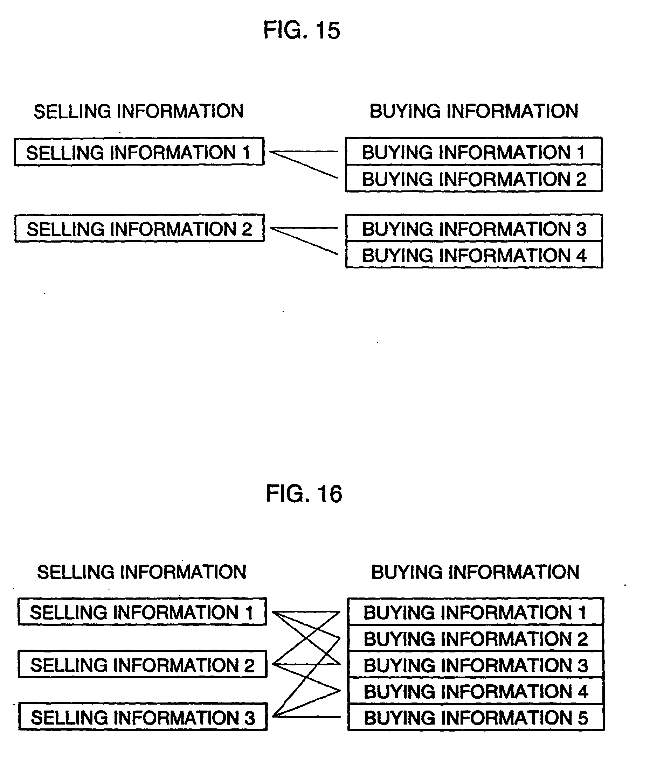

In this embodiment, dealing process (C) of the above-described first embodiment is executed as follows. The described dealing process is a processing which makes conclusion by collating pieces of buying information and pieces of selling information sequentially from conditions of buying information and selling information meet. At first, when two selling information 1 and 2 (including desired selling price and lower limit price) are registered and two buying information 1 and 2 are registered to the selling information 1 and another two buying information 3 and 4 are registered to the selling information 2, as shown in Fig. 15, decision should be made for which buying information be matched to each selling information, In short, whether dealing should be concluded or not.

One method for concluding dealing is to extract buying information which has higher buying price than the lower limit selling price, then extract buying information which has the highest buying price, and if the buying prices are the same, extract buying information with larger buying quantity. This processing may be performed sequentially from selling information 1.

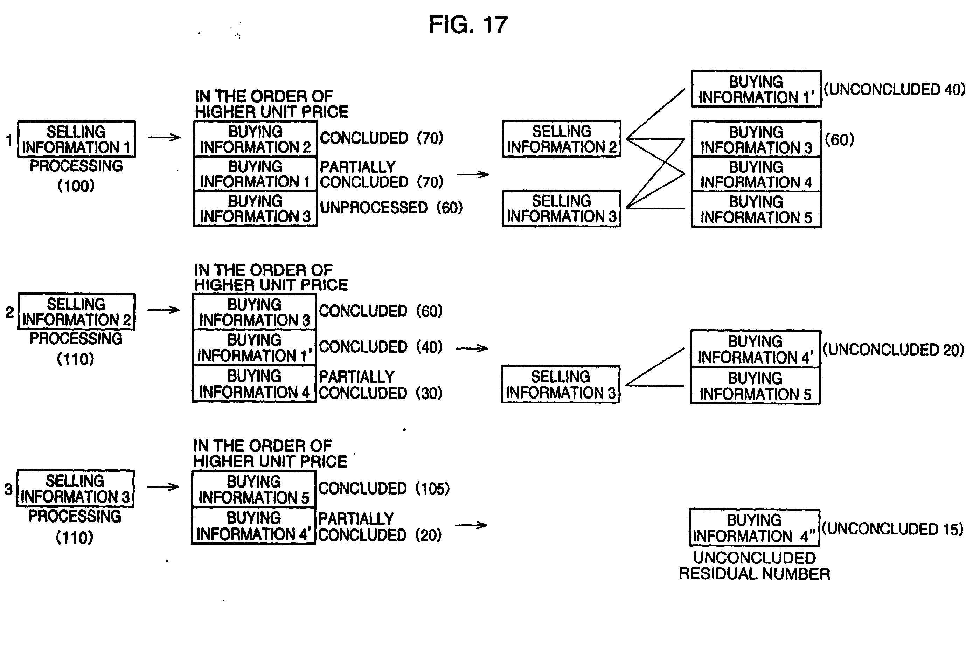

This method for concluding dealing works when pieces of buying information is linked with selling information (pieces of buying information to each selling information, N numbers of 1 : n linkage sets). However, when the method is used for the dealing process (C2), as shown in Fig. 16 in this dealing process, buying information is influenced by processing order of selling information, because the buying information is also linked with pieces of selling information (conforming m : n linkage sets). In order to solve the problem, dealing conclusion is made between pieces of selling information and pieces of buying information on the dealing process (C2) according to processing shown in Fig. 17. In description for the above Fig. 17, it is assumed that three selling information and five buying information as shown in Fig. 16, buying information 1,2 and 3 are registered to selling information 1, buying information 1,3 and 4 are registered to selling information 2 and buying information 2, 3 and 4 are registered to selling information 3.

First of all, in case of the dealing process (C2), processing order of selling information is decided regardless of selling goods in selling information. High priority for processing order is given to the selling information issued by the sellers who is designated in the market, and the order for the rest of selling information is decided in the order of earlier entry. Alternatively, processing order may be decided on larger dealing volume in the past, on larger dealing amount in the past, or on higher desired total amount (= desired selling price × the number of flower) in current dealing. As a result, in the above Fig. 17, processing order is decided as in the selling information 1, the selling information 2, the selling information 3.

Consequently, processing order of the buying information is decided for each selling information on the decided order. Priority is given to a linked buying information with higher desired buying price, and the buying information with earlier entry time is given priority when there are more than one information with same desired buying price.

Specifically, processing order for the buying information 1, 2 and 3 registered to the selling information 1 is decided in the order of higher desired price. The resulted processing order is as in the buying information 2, the buying informationl and the buying information 3. Herein, when the selling number of the selling information 1 is 100, the desired number of the buying information 2 is 70, the desired number of the buying informationl is 70 and the desired number of the buying information 3 is 60, dealing for all of the desired number 70 is concluded for the buying information 2 (dealing conclusion) and dealing for 30 of the desired number 70 is concluded for the buying information 1 and the remaining 40 is the residual number (partially unconcluded). The buying information 3 is not processed (unconcluded). Accordingly, the following the selling information 2 is linked with the buying information 1 with the residual number 40 (the buying information 1'), the unprocessed buying information 3 and the buying information 4 for processing.

Processing order for the buying information 1', 3 and 4 registered to the selling information 2 is decided in the order of higher desired price in the same manner. The resulted order is as in the buying information 3, the buying information 1' and the buying information 4. When the selling number of selling information 2 is 100, the desired number of the buying information 4 is 30, dealing for all of the desired number 60 of the buying information 3 is concluded and dealing for the all residual number 40 is concluded for the buying information 1' is also concluded. Dealing for 10 among the desired number 30 of the buying information 4 is concluded, and the remaining 20 is the residual number.

Accordingly, the following selling information 3 is linked with buying information 4 with the residual number 20 (buying information 4'), the unprocessed buying information 5 for processing. Since dealing for the buying information 2 which was registered first already concluded on the above-described selling information 1, buying information 2 is not processed. Finally, processing order for the buying information 4' and 5 registered to the selling information 3 is decided in the order of higher desired price in the same manner. The resulted order is as in the buying information 5 and the buying information 4'. When the selling number of the selling information 3 is 110, the desired number of the buying information 5 is 105, dealing for all of the 105 of the buying information 5 is concluded, and dealing for 5 of the residual number 20 for the buying information 4' is concluded which leaves 15 as the residual number. The residual number 15 for the buying information 4' is the unconcluded residual number. The dealing conclusion decision processing on the dealing process (C2) has been described as above.

On the other hand, the dealing conclusion decision processing on the dealing process (C1) is executed as follows. First, processing order of the selling information is decided in the order of higher lower limit price among the selling information which is defined by flower name and color. Then processing order for buying information is decided in the order of higher desired price according to the previously decided selling information processing order.

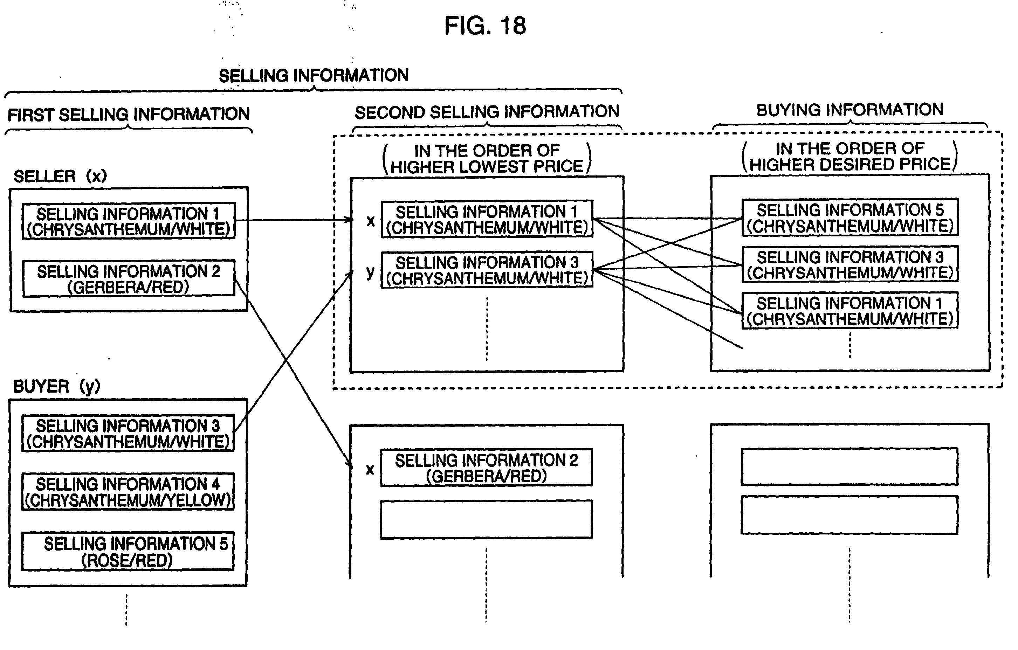

The dealing process (C1) is to processing for buying registration by specifying desired flower name (such as "chrysanthemum") and color (such as "white") as conditions. One example of such processing is shown in Fig. 18. In the Fig. 18, the selling information 1 (chrysanthemum/white) and the selling information 2 (gerbera/red) issued by the seller (x), the selling information 3 (chrysanthemum/white) and the selling information 4 (chrysanthemum/yellow) issued by another seller and the selling information 5 (rose/5) exist. The selling information 1 to 5 are clustered by flower name and color, in another word, to specifying a group. As a result of cluster processing, for example a group (cluster) of information on chrysanthemum/white including the selling information 1 and 3 is obtained. Processing order of pieces of selling information included in this information in the order of higher lower limit price in the selling information. The resulted order is as in the selling information 1, the selling information 3, and so on.

First of all, with regard to the selling information 1 of chrysanthemum/white information group, processing order of the registered buying information is decided in the order of higher desired price. The buying information in this processing includes information which proceeded from dealing process (C2) to (C1). When, for example, three buying information, the buying information 1 (chrysanthemum/white), the buying information 3 (chrysanthemum/white) and the buying information 5 (chrysanthemum/white) is registered to the selling information 1, processing order of these buying information is decided in the order of earlier entry time. The resulted order is as in the buying information5, the buying information 3 and the buying information 1. After the processing order is decided, following processing is executed in the same manner as the above-described (C2) dealing process.

Selling information group for not only for chrysanthemum/white but also for other flower name/color is obtained. Processing order is decided in the information group in the order of higher lower limit price, then processing order of buying information for each selling information is decided in the order of earlier entry time, which is executed according to previously decided processing order.

In this embodiment, as shown in the above Fig. 18, the buying information issued by the buyers are clustered based on the selling information issued by the sellers. On the contrary, the selling information may be clustered based on the buying information. In this case, when the selling information of sellers are matched with buying information of the buyers, the buying information includes the highest limit price. The selling information is then matched in the order of higher limit price, or in the order of lower limit price depending on goods. This processing can be applied to goods with a term of validity such as airline tickets and other transportation tickets.

[Third embodiment]

In this embodiment, on the dealing process (C) in the above-described first embodiment, if an unconcluded buying information occurs as a result of the dealing process (C2) (conditions for such as brand name as well as flower name and color is specified), the buyers ease conditions of buying information (conditions only for flower name and color can be specified) on their own terminal devices in order for the unconcluded buying information to proceed to dealing process (C1), which can also be executed automatically.

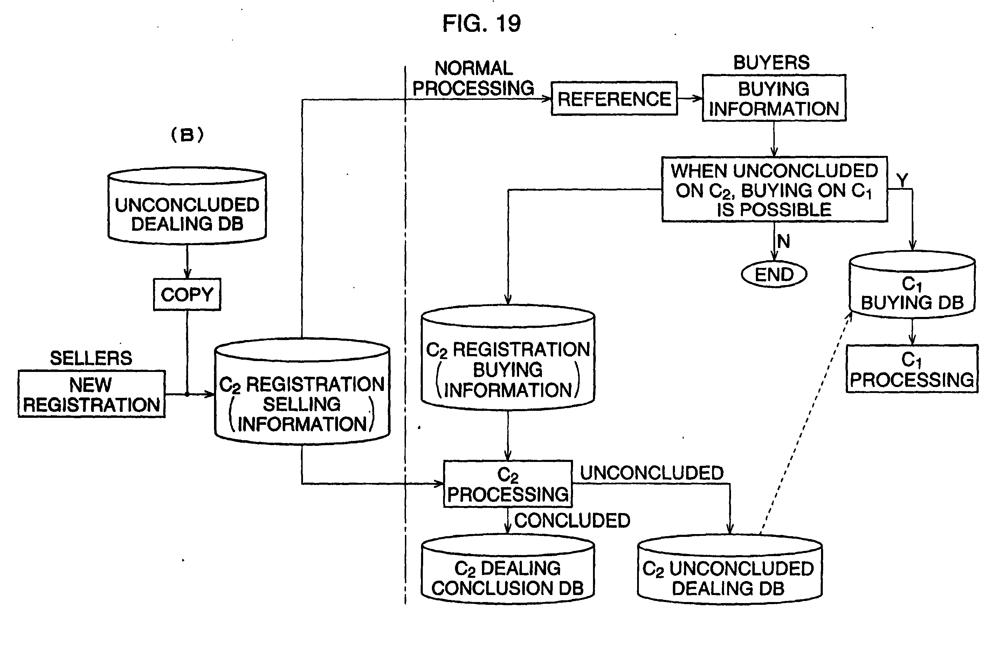

For example, as shown in Fig. 19, as a result of the dealing process (B) the unconcluded flower proceed to the dealing process (C) by sellers to select and specify "Copy" item on the top screen (refer to the above Fig. 4). The unconcluded flower proceeds to dealing process (C2) for example, by which the unconcluded flower on dealing process (B) is now registered as the selling information on dealing process (C2). If sellers have new desired flower for selling, such selling information is registered as the selling information on dealing process (C2) as well.

Consequently, the buyers, on their own terminal devices, refer to unconcluded selling information which is registered as the selling information on the dealing process (C2), and register buying information if any desired flower in the selling information.

Accordingly, the server collate the selling information and buying information, then conclude dealing when conditions from both dealers meet, or dealing does not conclude if conditions do not meet. Such result is notified to sellers and buyers. The buyers, on receiving notification from the server, in case there the registered buying information did not conclude, ease conditions of the buying information (specify only flower name and color conditions) on their terminal devices to make the buying information proceed to the dealing process (C1). The buying information is registered as buying information on the dealing process (C1), which is processed in the dealing process (C1).

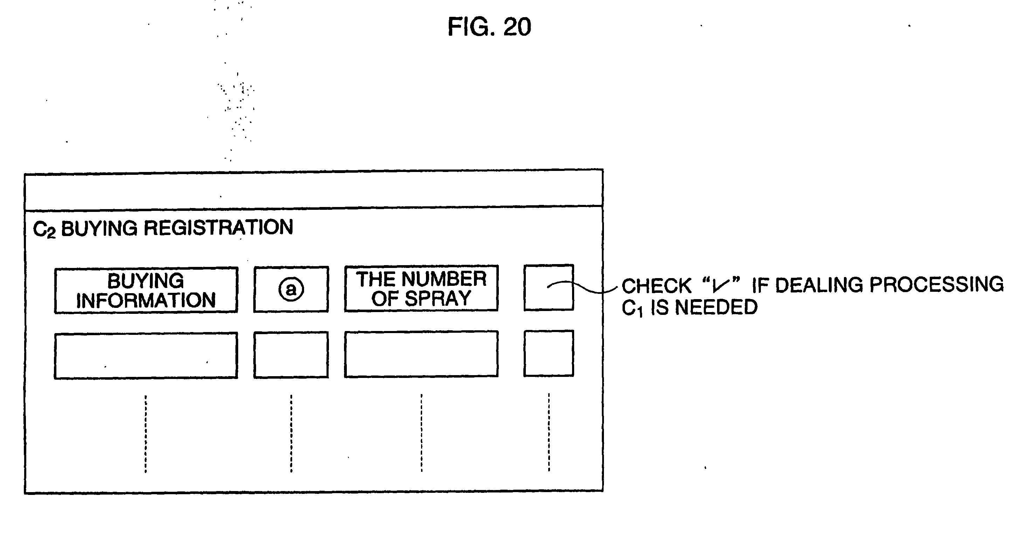

If the buyers want to proceed buying information from the dealing process (C2) to the dealing process (C1) automatically, the buyers perform setting at time of buying information registration, on their own terminal devices, that buying information should automatically proceed from the dealing process (C2) to the dealing process (C1) if dealing becomes unconcluded on the dealing process (C2). For example as shown in Fig. 20, the buyers specify (click on) an icon portion by using a mouse which correspond to each buying information, which enables buying information proceed from the dealing process (C2) to the dealing process (C1). This setting information is sent to the server.

The server recognizes automatic proceeding setting, and match the selling information from sellers and buying information from buyers, then conclude dealing when conditions from both parties meet as described above, or dealing does not conclude if conditions do not meet. Such unconcluded buying information is automatically registered as buying information on dealing process (C1), which is processed in dealing process (C1). The above-described automatic proceeding setting makes buyers perform dealing on dealing process (C2) and dealing process (C1) in one operation. Further, for example, if a large amount of buying information residual unconcluded as a result of the dealing process (C2), the server can intervene between the buyers and the sellers for dealing process.

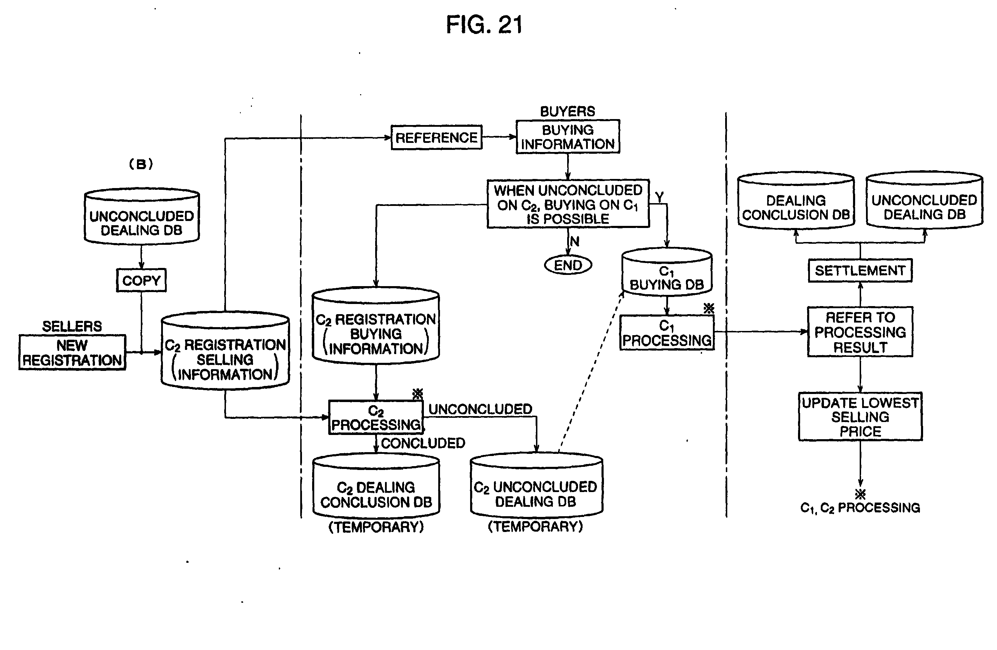

Specifically, as shown in Fig. 21, the server (such as market manager) refers to result of the dealing process (C1). The server (market manager), by specifying (clicking on) "Search conclusion" or "Search unconcluded dealing" icon on his own terminal device, outputs list screen of the concluded selling information or the unconcluded selling information, and seizes result of the dealing process (C1) by information on screen. The server adjusts various information included in the unconcluded selling information in order to increase conclusion rate for settlement.

If the server adjusts lower limit price included in the unconcluded selling information, such adjusted selling information is again registered as the selling information on the dealing process (C1) and the dealing process (C2). Accordingly, the selling information with adjusted lower limit price is processed on dealing process (C1) and (C2) sequentially as described above.

When the adjusted selling information is again registered as the selling information on the dealing process (C1) and the dealing process (C2) as described above, the result should be a temporary dealing conclusion or a temporary unconcluded dealing.

[Fourth embodiment]

In this embodiment, variety of information (such as order information and the selling information) occurred on the above-described dealing process (A) to (C) in the first embodiment can be referred to on screen, also desired information among the variety of information can be easily extracted (searched) on screen.

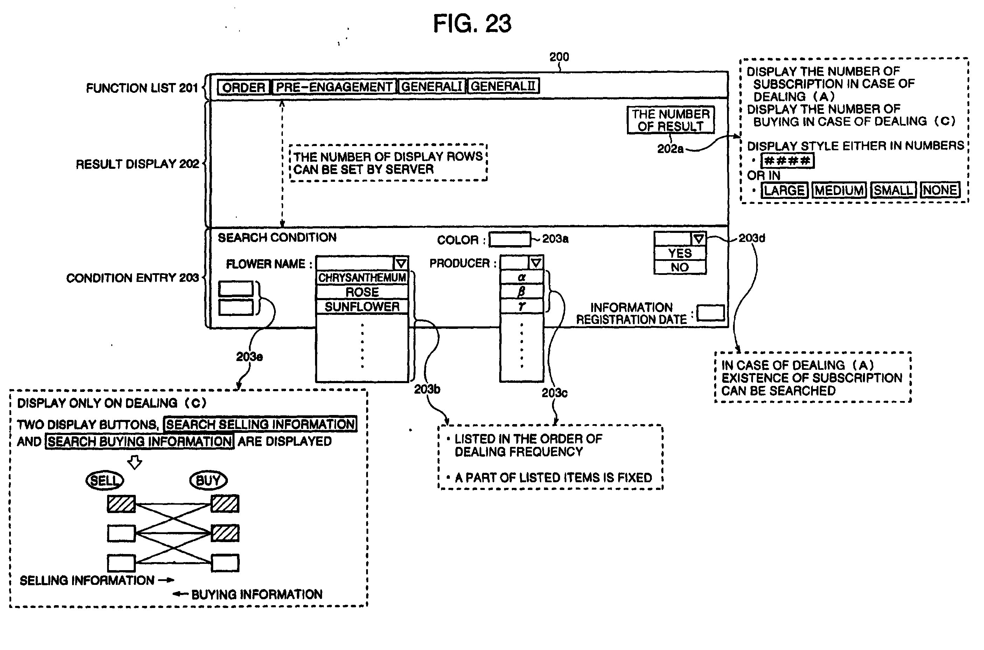

The screen composition as shown in Fig. 23 is prepared for terminal device of sellers and buyers. This display is composed of function list portion 201, result display portion 202 and condition entry portion 203. These display portions are positioned sequentially from the uppermost part of screen, and items of each portion are displayed in icons and so on. Display of items on screen may be either characters or patterns, and similar to icon function, clicking on such characters or patterns enables corresponding processing to execute. The function list portion 201 has items such as "Order", "Pre-engagement", "General I" and "General II", which execute various functions of flower dealing system 100. By selecting and specifying an item optionally by operation of terminal device, processing corresponding to a selected item is executed.

The result display portion 202 displays data for processing selected on the function list portion 201. The number of displaying rows (including the number of dealing) of the result display portion 202 can be optionally set by the server. For example, the server set the number of displaying rows which corresponds to data amount for transmission. Additionally, the result display portion 202 is prepared with number display portion 202a which displays the number of subscription (the number of subscription by the sellers for order information of the buyers) in case of the dealing process (A) and displays the number of buying (the number of buying registration by the buyers) in case of the dealing process (C). For example, display is made in either by numbers such as "0018" or by rank such as "large", "medium", "small" and "none". Variety of conditions for extracting (searching) goods information which corresponds to a certain dealing process are entered in the condition entry portion 203. In this case, the color entry portion 203a for entering color of flower for object goods, the flower name entry portion 203b for entering the name of flower and the producer entry portion 203c are prepared. Information which matches the entered conditions in the condition entry portion 203 are searched in variety of information occurred in dealing. The result is displayed on the result display portion 202.

In the flower name entry portion 203b, flower names such as "chrysanthemum", "rose" and "sunflower" are classified in the order corresponding to dealing frequency of each buyer or seller. Similarly, producer names are classified in the order corresponding to dealing frequency in the producer entry portion 203c.

With regard to the flower name entry portion 203b and the producer entry portion 203c, certain flower names and producer names can be fixed on display portion. For example, names that are always used in searching information are fixed on the upper rows of the portions followed by other names for less frequent dealing. A function to change an object term for deciding display order also may be employed, and such term may be set on 3 months for example. The display order can further be changed automatically on a season or a term.

Further, the condition entry portion 203 is prepared with subscription existence entry portion 203d, which the buyers enter on the dealing process (A) as a search condition in order to know processing status of order information issued by the buyers for goods subscribed by the sellers and for goods is not subscribed by the sellers. When buyers select and specify "yes" on the subscription existence entry portion 203d, order information to which the sellers subscribed are searched, and when the buyers select and specify "no", order information to which sellers did not subscribe are searched. If neither "yes" nor "no" are selected, search processing is executed for all information on the dealing process (A).

Furthermore, the condition entry portion 203 is prepared with search entry portion 203e composed of "Search selling information" and "Search buying information" items, which is displayed only on dealing process (C).

When "Search selling information" item is selected and specified, the selling information issued by sellers and buying information linked with the selling information are searched. On the other hand, when "Search buying information" item is selected and specified, the selling information which correspond to buying information issued by the buyers are searched. This search function makes especially the buyers execute the following processing more easily.

(1) Change (such as change of unit price and quantity) and deletion of buying information by "Search selling information"

(2) Addition and deletion of selling information which corresponds to buying information by "Search buying information"

[Fifth embodiment]

In this embodiment, dealing can be performed on the terminal device for unsold goods after the dealing processes (A) to (C) and for goods occurred due to urgent need such as reservation and exclusion (urgent dealing).

Urgent dealing process such as reservation and exclusion (urgent dealing process) is executed for flowers left unsold (unsold goods) after the dealing processes (A) to (C). The exclusion processing is described as an example of urgent dealing process as follows.

The exclusion processing is to exclude certain quantity of goods from unsold goods for auction. This processing is executed in order to secure flower for urgent need (such as funerals). The unsold goods after exclusion processing are auctioned accordingly. In the flower dealing system 100, exclusion processing and auction processing (goods-in-stock dealing process) can be executed on the terminal device.

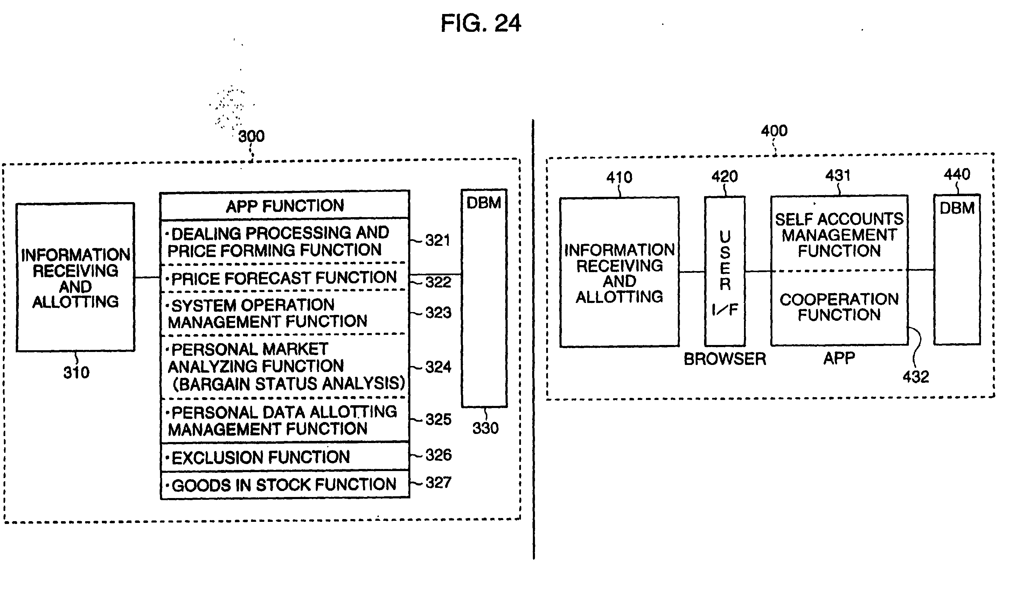

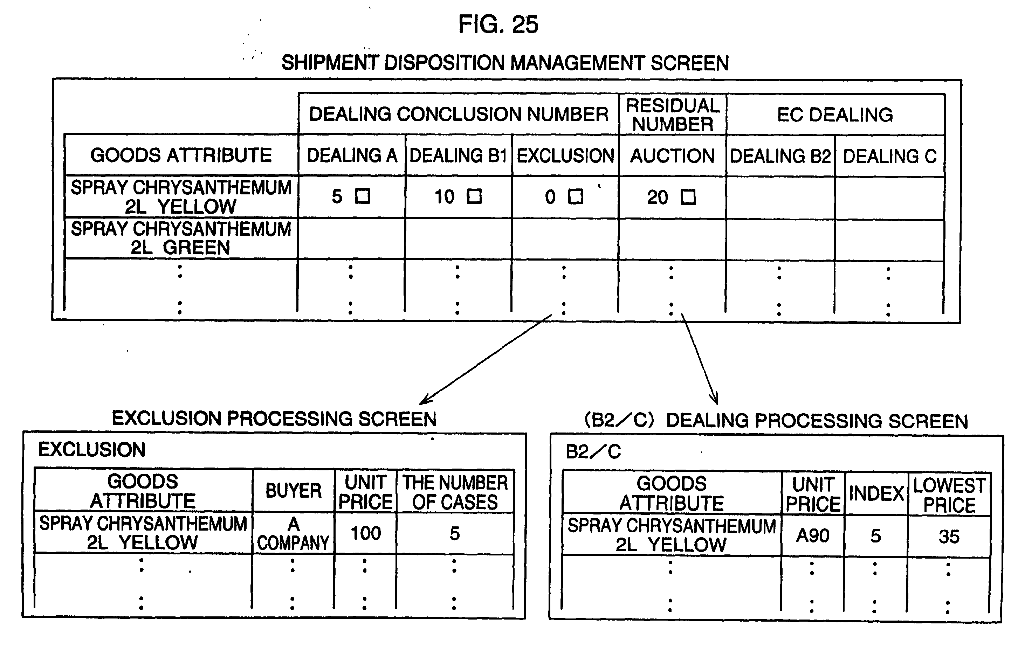

The terminal device of the server, in addition to function as application function as shown in the above Fig. 2, has the exclusion function 326 for executing exclusion processing and the goods-in-stock selling function 327 as shown in Fig. 24. Fig. 25 shows display flow in specifying object goods for auction and display flow in management processing, which is designated before, after and during the dealing process (A), the dealing process (B) and the dealing process (C).

Specifying object goods for auction and display flow in management processing is the processing executed by the exclusion function 326 and the goods-in-stock selling function 327, which can also be executed before, after and during reservation processing and exclusion processing such as urgent dealing process.

The shipment disposition management display of the above Fig. 25 shows the residual number is 20 cases, the settled number of 5 cases for the dealing process (A) and 10 cases for the dealing process (B) with regard to flower with goods attribute of "spray chrysanthemum/2L/yellow". For example, if a broker wants to take 5 cases among the residual 20 cases for exclusion on the shipment disposition management display, the broker clicks on a square portion next to quantity "0", which proceeds to entry display for exclusion processing. Since the exclusion processing is executed for spray chrysanthemum on the uppermost row of the shipment disposition management display, the goods attribute is copied as it is.

Consequently, the broker enters company A on the entry display whom the broker sell the excluded goods, followed by unit price and quantity as, for example unit price 100 yen and the number of cases 5 respectively. When the execution command is entered for the entry display, the exclusion processing is executed. As a result, the number for exclusion becomes 5 cases, and the residual number decreases from 20 cases to 15 cases.

On the other hand, If the broker wants to make 5 cases among the residual number of 15 cases after the above-described exclusion processing be executed for a dealing process which automatically decides appropriate buyer according to specified conditions (dealing process type 2, specifically dealing process (B2)), the broker clicks on a square portion next to the residual number on the shipment disposition management display. This operation makes the broker proceed to entry screen for dealing process (B2). Since the exclusion processing is executed for spray chrysanthemum on the uppermost row of the shipment disposition management display, the goods attribute is copied as it is.

Consequently, the broker enters unit price and quantity as, for example unit price 90 yen and the number of cases 5. On entering the execution command for the entry display, the exclusion processing (B2) for 5 cases among the residual number of 15 cases is executed.

In the same manner, If the broker wants to make a part of the residual number 15 cases be executed for dealing process (C), the broker enters not only unit price and quantity but also lower limit price, for example as 85 yen, on the entry display of dealing process (C). When the execution command is entered for the entry display, the dealing process (C) is executed for a specified number of cases with the lower limit price as a registration.

Accordingly, specifying and managing object goods for auction can be performed by the above-described shipment disposition management display.

Additionally, a column for electronic commerce dealing process (EC) Is prepared on the right part of the shipment disposition management display, with columns for the dealing process (B2) and the dealing process (C) prepared below. By clicking on the dealing process (B2) and the dealing process (C), processing proceeds to the entry display corresponding to each processing, which begins the dealing process. In other words, this display may be called the display for managing whole dealings.

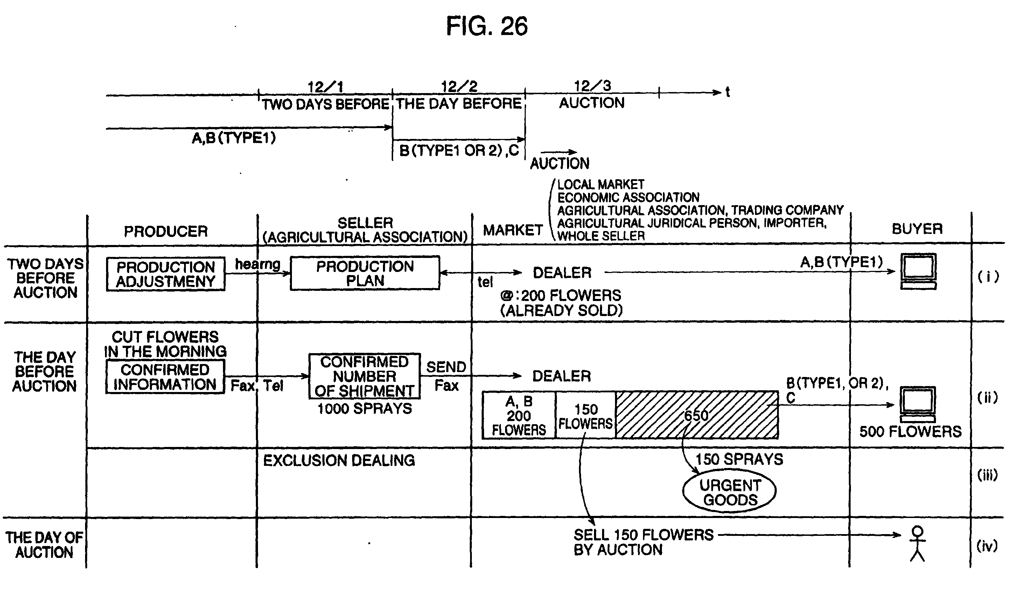

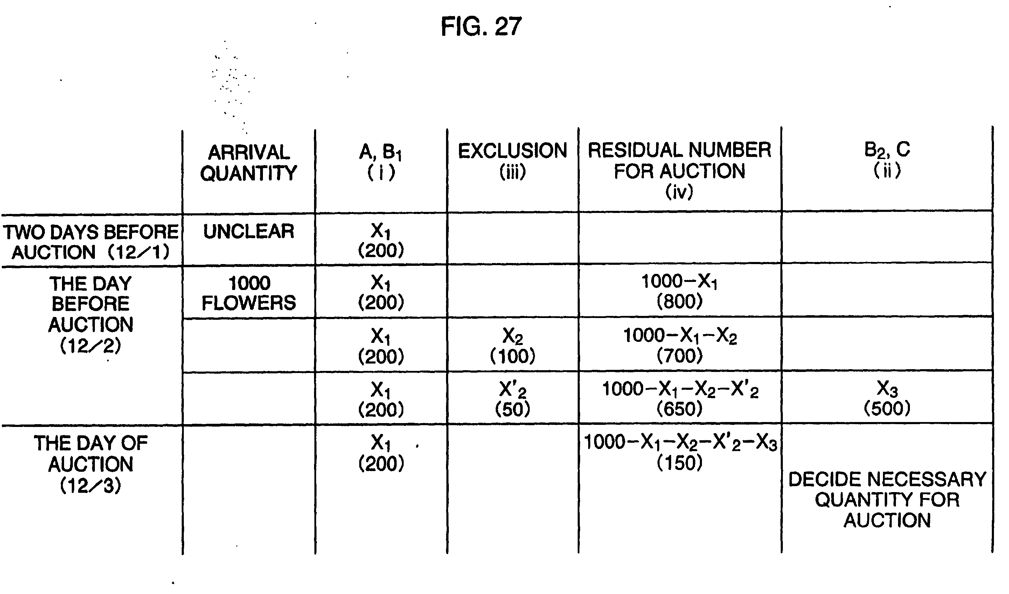

The processing flow by such as the above-described shipment disposition management display is described by using Fig. 26 and Fig. 27.

The total number of flower for actual shipment (the arrival quantity) is unclear on 2 days before auction (Dec. 1). This is because flowers are easily influenced by natural condition such as weather and disaster. Dealing is performed between wholesale market (dealer: local market, economic association, agricultural association, trading company, agriculture juridical person, importer, whole seller and so on) and the buyers on the dealing process (A) and (B1) (dealing process type 1). At this time, dealing is concluded for 200 flowers = $x_1$ The sellers make production plan according to the dealing, and producers adjust production based on the production plan. The total number of flower for shipment from producer is confirmed on the day before auction (Dec. 2), and this information (confirmed information) is notified to the sellers. The number of shipment is confirmed (1000 flowers are confirmed for shipment) when the sellers receives the confirmed information from producers. This information (confirmed shipment number information) is notified from the sellers to a wholesale market. The wholesale market executes exclusion for 800 flowers among the confirmed shipment number 1000 flowers (dealing already concluded for $x_1$ = 200 flowers), $x_2$ = 100 flowers are excluded. If additional exclusion is necessary for the residual 700 flowers ($x_2'$ = 50 are excluded), the residual number is 650 flowers. Accordingly, the wholesale market performs dealing for the residual 650 flowers with buyer 1 on the above-described dealing process (B1 or B2) and the dealing process (C) ($x_3$ = dealing concluded for 500 flowers). The residual number after this dealing is 150 flowers, which is to be sold by auction. Specifying object goods for auction and managing unsold goods are made on the shipment disposition management display as shown in the above Fig. 25.

By using the exclusion function 326 and the goods-in-stock selling function 327 for the above-described processing, dealers who have business relationship with brokers in the past (local market, economic association, agricultural association, trading company, agriculture juridical person, importer, whole seller and so on who already have producers and perform dealing with producers on telephone communication) also can participate in the flower dealing system 100. The dealers, then, can seize total arrival quantity on their own terminal device, and perform future dealing and goods-in-stock dealing taking such as exclusion in consideration.

In this example, further dealing for the residual goods (goods-in-stock) is performed after the dealing process (A), (B) and (C), but, not limited for this, residual goods can be further processed (future dealing) after dealing process (A) and (B). Although the exclusion processing is described as an example of urgent dealing process, the reservation processing also can be executed urgent dealing process in the same manner.

[Sixth embodiment]

In this embodiment, selling style of sellers has special feature on the above-described dealing process (A) to (C) in the first embodiment. Specifically, the sellers can perform efficient shipment disposition management from arrival of goods to auction by performing selling under circumstance where arrival goods quantity is not settled (pre-confirmation selling processing, hereinafter also referred as "selling 1"), under the circumstance where arrival goods quantity is confirmed (post-confirmation selling processing, hereafter is called "selling 2") and goods-in-stock selling by auction (goods-in-stock selling processing, hereafter is called "selling 3") on their own terminal devices.

Terminal device of the server has the exclusion function 326 for executing exclusion processing and the goods-in-stock selling function 327 as shown in Fig. 24. Each dealing process on the dealing process (A) to (C) is also called dealing process by EC (Electronic commerce) system or EC dealing process.

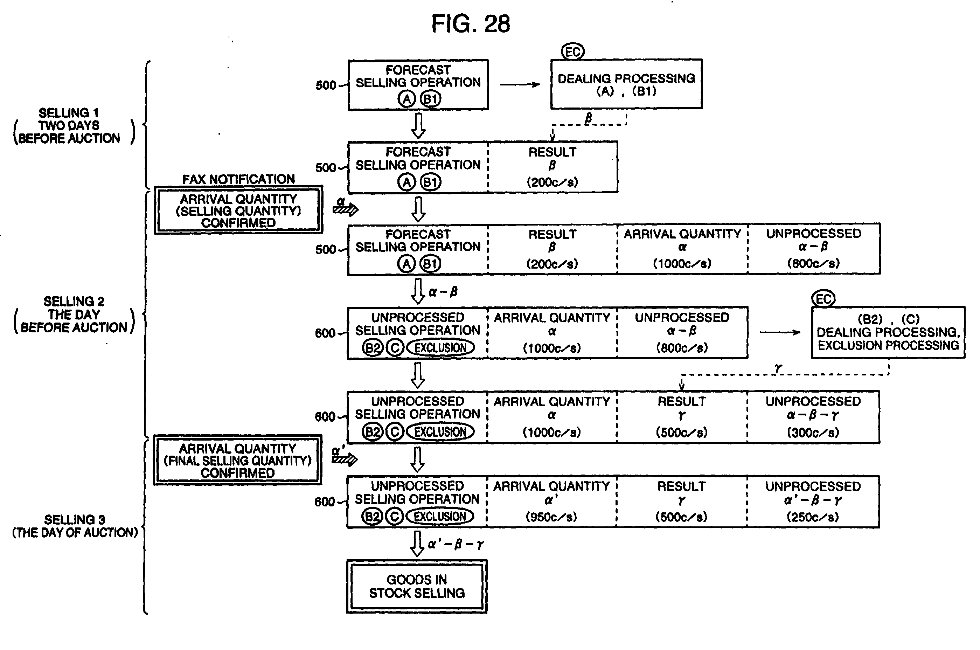

Fig. 28 shows screen images on terminal device of the sellers on a chronological order. Flow of flowers from selling 1 to selling 3 are described by as follows using the above Fig. 28.

(Selling style 1: selling under circumstance where arrival goods quantity is not settled)

It is assumed that selling is performed 2 days before auction in this example. Arrival quantity of flower is not settled at the point of 2 days before auction. Accordingly, dealing is performed on a forecast quantity. Sellers proceed to the dealing process (A) and (B1) (EC dealing process) by a prescribed operation on forecast selling operation 500. When the dealing process (A) and (B1) are executed, in other words when selling on the dealing process (A) and (B1) based on a forecast (prediction) selling quantity is performed, a concluded number $\beta$ on this dealing is settled (result: 200 cases for example). The result number $\beta$ is reflected on the forecast selling operation 500 as the result information of selling 1.

(Selling style 2: selling under circumstance where arrival goods quantity is settled)

It is assumed that selling is performed the day before auction in this example. When an arrival quantity $\alpha$ (a selling quantity: 1000 cases for example) is confirmed by such as fax notification, arrival quantity $\alpha$ is reflected on the forecast selling operation display 500. The result, unprocessed number $\alpha$-$\beta$ (= 1000-200 = 800 cases) is displayed on screen.

Practically, selling style 2 begins at this point. Sellers, on selling style 2, proceed to dealing process (B2) and (C) (EC dealing process) and exclusion processing (the fifth dealing process) by a prescribed operation on unprocessed selling operation 600. The arrival quantity $\alpha$ (= 1000 cases) and the unprocessed number $\alpha - \beta$ (= 800 cases) are displayed on the unprocessed selling operation screen 600. Dealing process (B2), dealing process (C) and exclusion processing are executed for the unprocessed number $\alpha - \beta$. As a result, the added number (the result number $\gamma$) between the conclusion number on the dealing process (B2), (C) and exclusion number (for example 500 cases) is settled, and the unprocessed number before confirmation $\alpha - \beta$ (= 800 cases) is updated to the unprocessed number $\alpha - \beta - \gamma$ (= 1000-200-500 = 300 cases).

(Selling style 3: goods-in-stock selling by auction)

This example describes selling on the same day of auction. When flowers are actually received (arrival) and the selling quantity $\alpha'$ (the final selling quantity, for example, 950 cases) is settled, the received quantity before settlement $\alpha$ (= 1000 cases) is updated to the final selling quantity $\alpha'$ (= 950 cases) is displayed on the unprocessed selling operation screen 600. The number of unprocessed goods $\alpha - \beta - \gamma$ (= 300 cases) is also updated to the number of unprocessed goods $\alpha' - \beta - \gamma$ (= 950-200-500 = 250 cases). Practically, selling style 3 begins at this point, in other words, selling style 3 begins at the point when flowers actually arrives at the market and the number of unprocessed goods $\alpha' - \beta - \gamma$ is settled. As a result, in selling style 3, the number of unprocessed goods $\alpha' - \beta - \gamma$ (= 250 cases) are object of auction (goods-in-stock selling), and the number of unprocessed goods $\alpha' - \beta - \gamma$ are sold by auction.

As described above, selling style 1 performs dealing for a forecast selling quantity by the dealing process (A) and (B), and selling style 2 performs dealing for a selling quantity ($\alpha - \beta$) which is obtained from dealing result on selling style 1 ($\beta$) and a settled selling quantity ($\alpha$) by means of the dealing process (B2), (C) and the exclusion processing. At the stage of selling style 3 where actual selling quantity is settled, goods which residual after dealing on selling style 2 ($\alpha' - \beta - \gamma$) are sold by goods-in-stock selling (auction).

Consequently, dealing process for the above-described selling styles, that is, selling 1, selling 2 and selling 3 are described as follows.

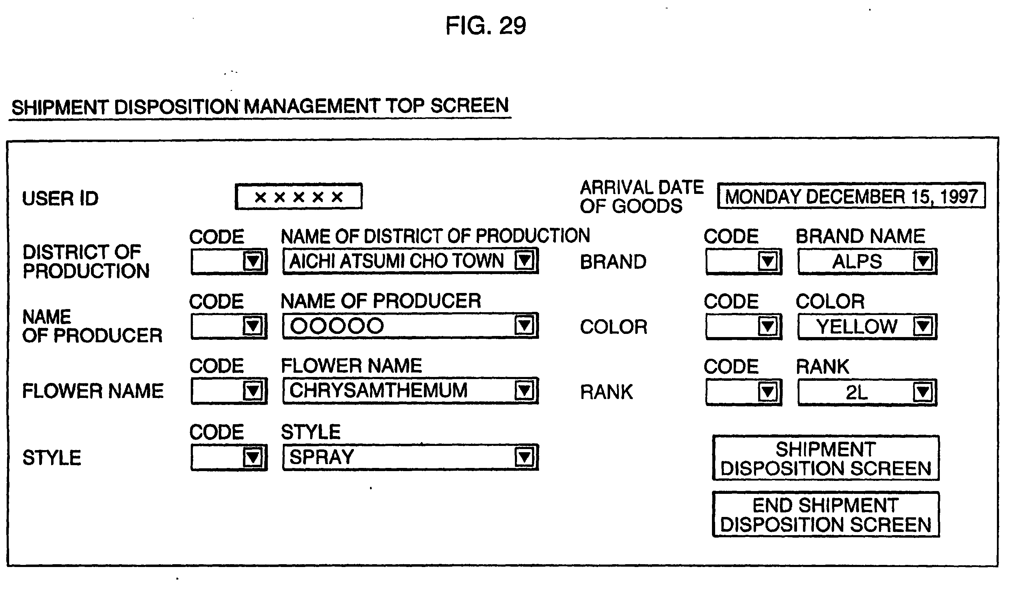

Terminal device of sellers who perform dealing on selling styles 1 to 3 displays a top screen (shipment disposition management top screen) as shown in Fig. 29. The shipment disposition management top screen has entry portions corresponding to items such as "User ID (ID of seller)", "Arrival date of goods", "District of production", "Name of producer", "Flower name", "Style", "Brand name", "Color" and "Rank". Items "Shipment disposition display" and "End shipment disposition display" are also prepared on the display, and dealing corresponding to each item is performed when the character portion is clicked on, similar to icon function. Items "Shipment arrangement display" and "End shipment arrangement display" can be displayed not only in characters but also in patterns.

Also in the shipment disposition management top screen, entry of user ID, arrival date of goods and so on can be made in codes which are previously specified, although actual names ("Aichiatsumi town" or "yellow") can be entered.

An operator of terminal device enters attribute of each item, on a keyboard and a mouse, user ID and arrival date of desired selling flower (such as "1997 December 15th (Monday)", district of production (such as "Aichiatsumi town"), name of producer, flower name (such as "chrysanthemum"), style (such as "spray"), brand name (such as "alps"), color (such as "yellow") and rank (such as "2L"), then specifies (clicks on) "shipment arrangement display" portion. Accordingly, dealing on selling styles 1 to 3 as shown the above Fig. 28 is performed.

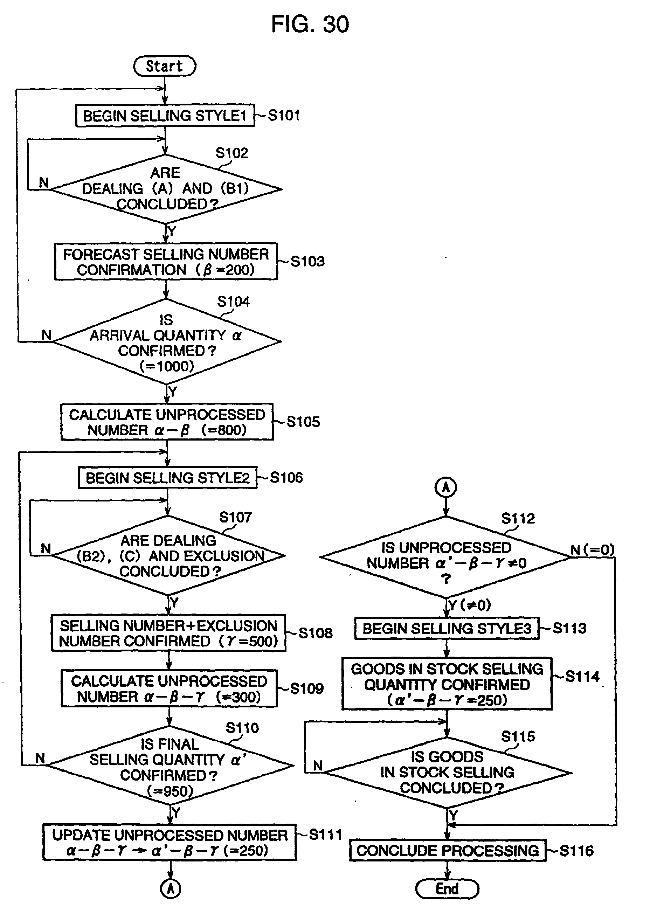

The dealing process on selling styles 1 to 3 which begins from the shipment disposition management top screen of the above Fig. 29 is executed according to flowchart as shown in Fig. 30 for example.

Step S101:

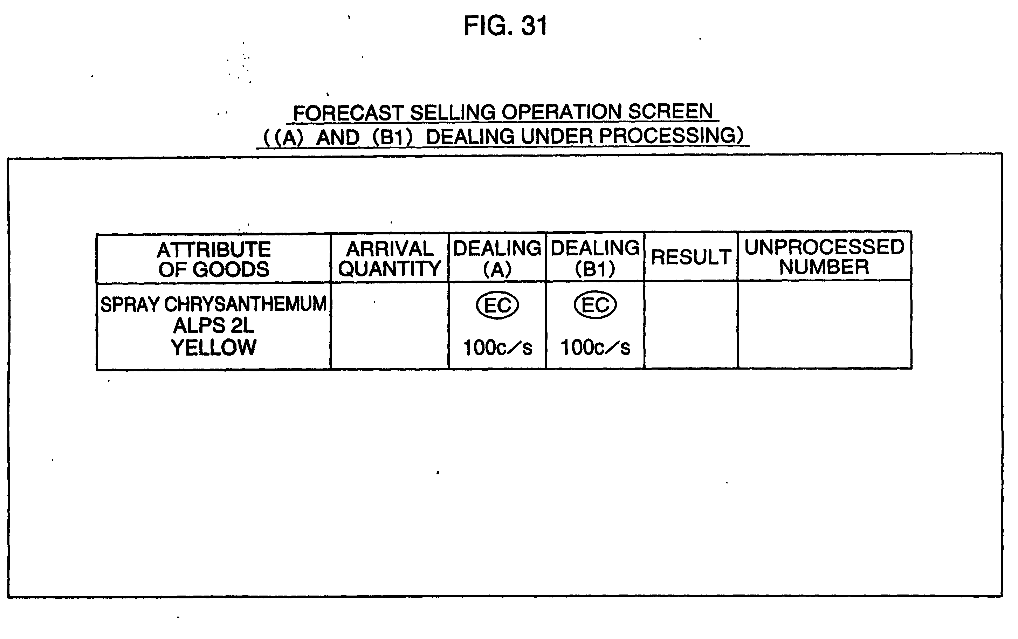

First of all, dealing on selling style 1 begins. A seller enters attribute of desired selling flower 2 days before auction on the shipment disposition management top screen of the above Fig. 29. When "Shipment disposition display" item is clicked on, terminal device displays "forecast selling operation display" as shown on Fig. 31. It is assumed, in the example, that attribute is entered in flower name "chrysanthemum", style "spray", brand name "alps", color "yellow" and rank "2L". The forecast selling operation display has display portions which correspond to items "Arrival quantity", "(A) Dealing", "(B1) Dealing", "Result" and "Unprocessed number" in order to show dealing process status for entered flower on the shipment disposition management display. Display portions corresponding to "(A) dealing" and "(B1) dealing" on the display shows "EC" items. By clicking on the character portion, similar to icon function, processing (to be described later) which corresponds to the character portion is executed. The "EC" item may be displayed not only in characters but also in patterns.

Since, at this point, arrival quantity of flower $\alpha$ is not confirmed yet, status of display portions corresponding to "Arrival quantity", "Result" and "Unprocessed number" on the forecast selling operation display are blank.

The seller, by using a mouse, clicks on "EC" portion corresponding to "(A) dealing", which proceeds to dealing top screen as shown in the above Fig. 4. Consequently, the seller sells, for example, 100 cases of flower by executing (A) dealing process as described above. In the same manner, the seller clicks on "EC" portion corresponding to "(B1) dealing", which proceeds to dealing top screen as shown in the above Fig. 4. The seller sells, for example. 100 cases of flower by executing (B1) dealing process as described above.

Step S102:

Once (A) and (B1) dealing process is executed on step S101, the seller stays on standby status until the dealing concludes. The seller proceeds to the following step S103 after the dealing process concludes.

Step S103:

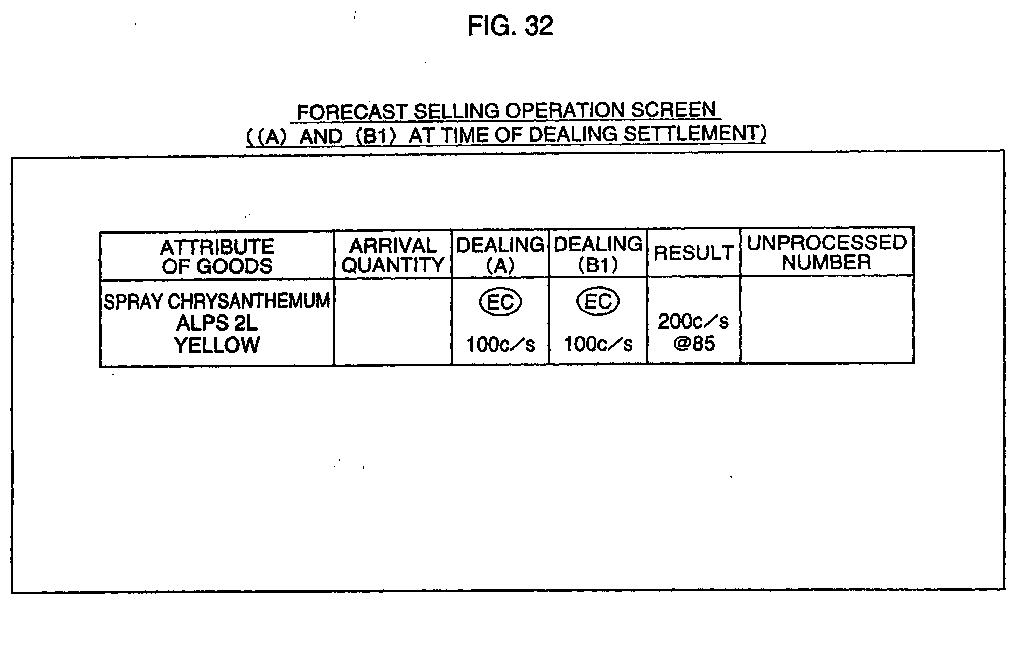

It is assumed that dealing for total of 200 cases concluded as a result of (A) and (B1) dealing process. The number of dealing conclusion (result number) $\beta$, as shown in Fig. 32, is displayed in display portion corresponding to "Result" on the forecast selling operation display as "200 c/s", "@85" which means the average unit price is also displayed.

Step S104:

The selling (forecast selling) on (A) and (B1) dealing process as described in the steps S101 to S103 can be repeated until the arrival quantity $\alpha$ is settled. On the day before auction, when the arrival quantity $\alpha$ (for example, 1000 cases) is settled as a result of notice from producers by fax, the seller proceeds to the following step S105.

Step S105:

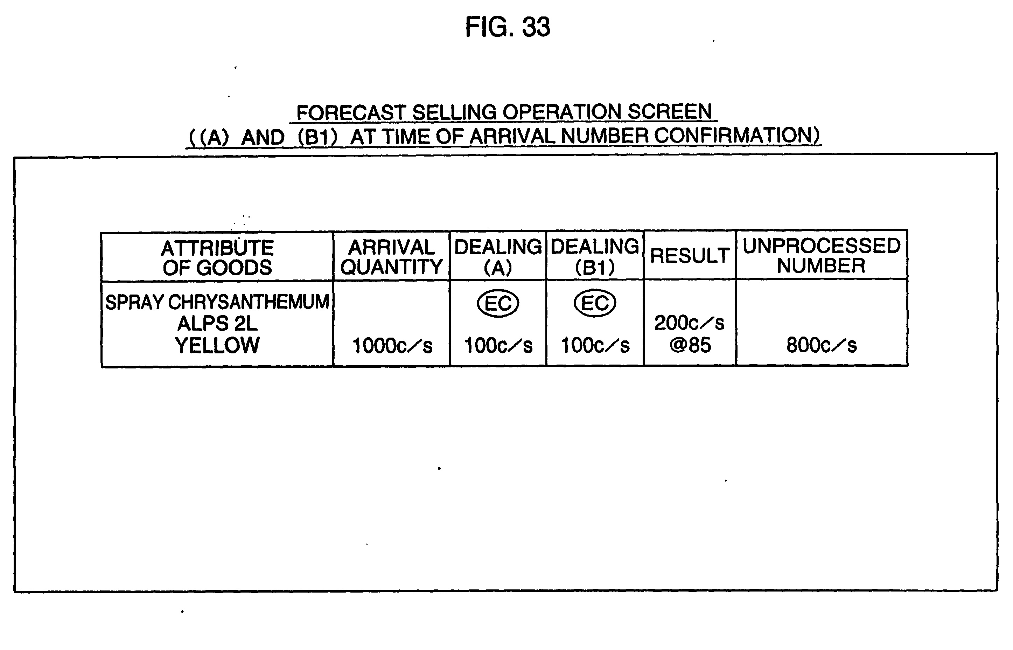

The settled arrival quantity a is displayed in display portion corresponding to "Arrival quantity" on the forecast selling operation display as "1000 c/s" as shown in Fig. 33. The unprocessed number $\alpha - \beta$ (= 1000-200 = 800 cases) is calculated from the result number $\alpha$ and the arrival quantity $\beta$, and the calculated number "800 c/s" is displayed in the display portion corresponding to "Unprocessed number".

Step S106:

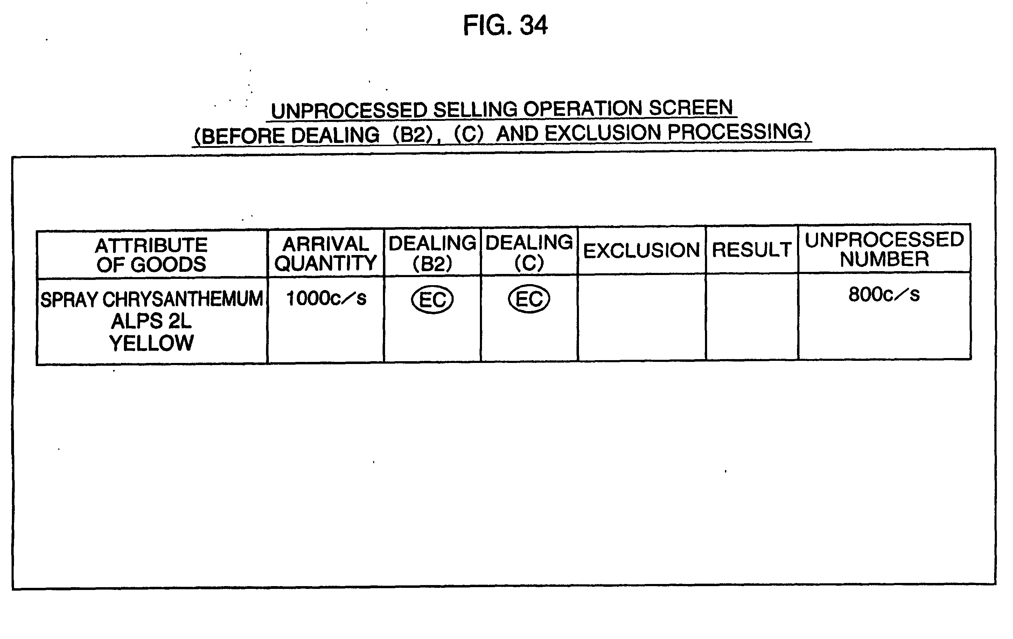

Dealing on selling style 2 begins after the above-described dealing on selling style 1 is concluded. The dealing is executed for the unprocessed flower on selling style 1 (unprocessed number $\alpha - \beta$ = 800 cases ) on the unprocessed selling operation display as shown in the above Fig. 34. The unprocessed selling operation display has display portions which correspond to items "Arrival quantity", "(B2) dealing", "(C) dealing", "Exclusion" and "Result" and "Unprocessed number" in order to show dealing process status for unprocessed number $\alpha - \beta$ as shown in the above Fig. 34. As a result, these display portions have information corresponding to current dealing status.

Display portions corresponding to "(B2) dealing" and "(C) dealing" on the display shows "EC" items. On clicking on the character portion, similarly to icon function, processing (to be described later) which corresponds to the character portion is executed. The "EC" item may be displayed not only in characters but also in patterns.

The arrival quantity $\alpha$ on selling style 1 (= 1000 cases) and the unprocessed number $\alpha - \beta$ (= 800 cases) are displayed as "1000 c/s" and "800 c/s" in the display portions corresponding to "Arrival quantity" and "Unprocessed number" on the unprocessed selling operation screen. The seller, by using a mouse, clicks on "EC" portion corresponding to "(B2) dealing", which proceeds to dealing top screen as shown in the above Fig. 4. Consequently, the seller sells, for example, 150 cases of flower by executing (B2) dealing process as described above.

In the same manner, the seller clicks on "EC" portion corresponding to "(C) dealing", which proceeds to dealing top screen as shown in the above Fig. 4. The seller sells, for example, 150 cases of flower by executing (C) dealing process as described above. In addition, the seller enters, for example, "200" as the number of exclusion in a display portion corresponding to "Exclusion" item.

In this manner, the number processed on dealing process (B2) and (C) and the number of exclusion are displayed as "150 c/s" and "150 c/s" in display portions corresponding to (B2) dealing and (C) dealing.

Step S107:

Once (B2) and (C) dealing process and exclusion are executed on step S106, the seller stays on standby status until the dealing concludes. The seller proceeds to the following step S108 after the dealing process concludes.

Step S108:

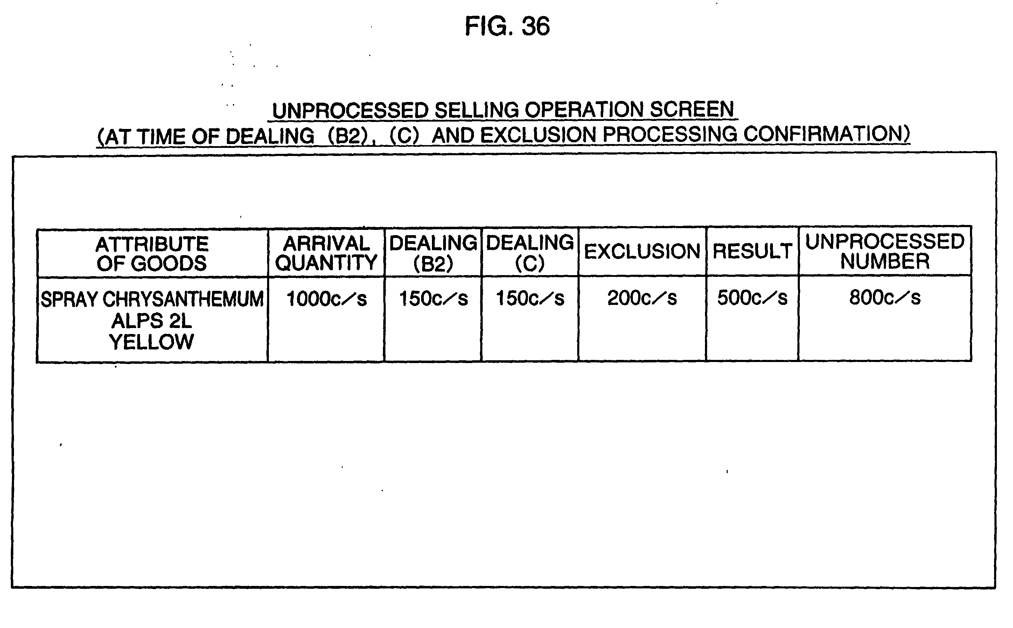

It is assumed that dealing is concluded for total of 300 cases as a result of (B2) and (C) processing, and that "200" is entered as the number of cases for exclusion cases. In such case, selling number 300 + exclusion number 200 = 500 cases become result number $\gamma$, and the result number $\gamma$ is displayed as "500 c/s" In a display portion corresponding to "Result" item as shown in Fig. 36.

Step S109:

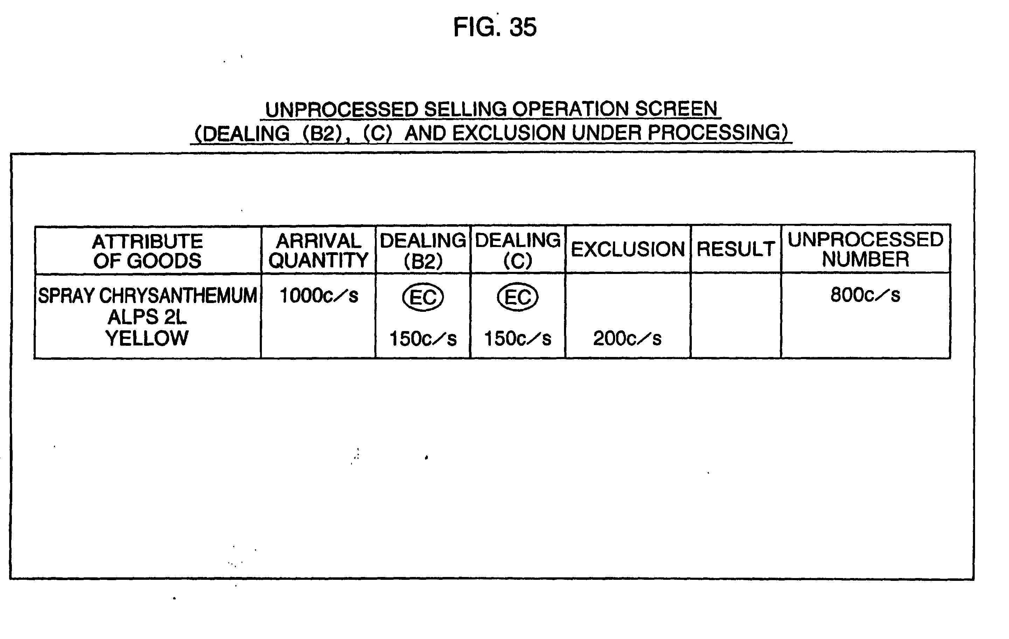

The unprocessed number $\alpha - \beta - \gamma$ (= 1000 - 200- 500 = 300 cases) is calculated from the arrival quantity $\alpha$ (= 1000 cases), the result number $\beta$ on selling 1 (= 200 cases), the result number $\gamma$ on selling 2 (= 500 cases). The calculated result which is shown in the above Fig. 36 is reflected on the unprocessed selling operation screen shown in the above Fig. 35. In other words, the number in a display portion corresponding to "unprocessed numbers" is updated from "800 c/s" to "300 c/s".

Step S110:

Selling and exclusion on (B2) and (C) dealing process based on settled arrival quantity $\alpha$ as described in the steps S106 to S109 can be repeated until actual arrival quantity (actual goods number) is settled. When flowers arrive at the market and the actual arrival quantity $\alpha'$ (for example, 950 cases) is settled on the day of auction, the seller proceeds to the following step S111.

Step S111:

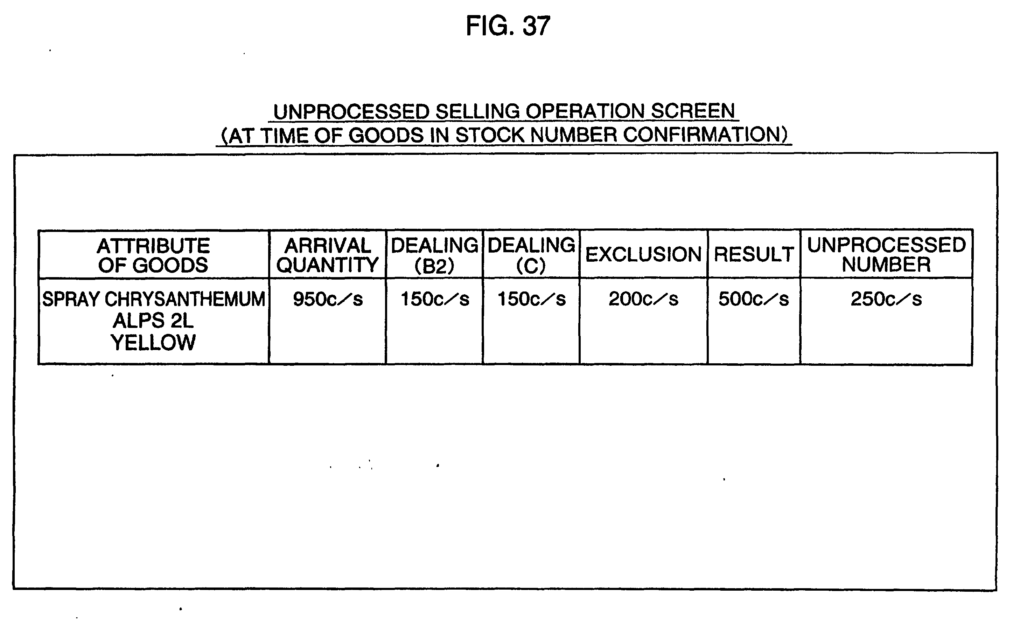

The actual arrival quantity $\alpha'$ (= 950 cases ) which is shown in Fig. 37 is reflected on the unprocessed selling operation display as shown in the above Fig. 35. Specifically, the number in a display portion corresponding to "arrival quantity" is updated from "1000 c/s" to "950 c/s. Accordingly, the number in a display portion corresponding to "unprocessed number" is updated from "300 c/s" to "250 c/s" (= $\alpha' - \beta - \gamma$) .

Step S112:

After dealing on above-described selling 1 and selling 2 and unprocessed number $\alpha' - \beta - \gamma$ is settled, the following steps S113 to S115 are executed in case when the unprocessed number $\alpha' - \beta - \gamma$ is not "0", then the seller proceeds to final processing step S116 for conclusion of the whole processing. This is because, for example, there are cases when all, of the actual arrival quantity $\alpha'$ are sold on selling styles 1 and 2.

Further, in case when the unprocessed number $\alpha' - \beta - \gamma$ is not "0" but the unprocessed number $\alpha' - \beta - \gamma$ is not be executed on selling 3, the seller proceeds directly to final processing step S116, in the same manner as the unprocessed number $\alpha' - \beta - \gamma$ is "0".

Step S113:

Dealing on selling style 3 begins after the dealing on the above-described selling 1 and selling 2 is concluded, the unprocessed number $\alpha' - \beta - \gamma$ is settled and the unprocessed number $\alpha' - \beta - \gamma$ is not "0".

Step S114:

In the selling style 3, quantity for auction (goods-in-stock selling) is settled from the unprocessed number $\alpha' - \beta - \gamma$ (= 250 cases) , and the settled quantity is sold by auction.

Step S115:

The seller stays on standby until the auction concludes, and proceeds to the step S116.

Step S116:

The final processing is executed in this step. The step turns dealing process conclusion flag to "ON" , the flag being added on information of flower (flower name "chrysanthemum", style "spray", brand name "alps", color "yellow" and rank "2L" in this example) with the unprocessed number $\alpha' - \beta - \gamma$ as "0". This processing helps market managers discriminate between flowers which concluded dealing and flowers which is under dealing process among variety of flowers for selling. In this step, a message such as "Dealing for this flower is concluded," to accountants' section or administration section of the market.

As described above, this embodiment of the present invention has a selling constitution which systematizes the different selling styles based on forecast (prediction) selling quantity before confirmation of arrival quantity, which can be executed on terminal device. Specifically, in addition to selling styles ① and ②, other selling styles ③, ④ and ⑤ are systematized and can be executed on terminal device as follows.

① In selling under the circumstance that arrival goods are settled, buyers notify orders to sellers on telephone and fax, and sellers match the orders by checking with the notification.

② In selling under the circumstance that goods actually arrived and exist in the market, sellers perform selling by reservation (or exclusion) and auction.

③ Selling style1: Based on forecast (prediction) before arrival quantity, selling is performed on the dealing process (A) according to order information issued by buyers and on the dealing process (B1) according to the selling information issued by the sellers and wholesale market.

④ Selling style 2: Based on settled arrived quantity, selling is performed on the dealing process (B2) according to the selling information issued by the sellers and on the dealing process (C) according to buying information issued by the buyers and the selling information issued by the sellers as well as exclusion (or reservation).

⑤ Selling style 3: Goods-in-stock selling is performed for goods that did not sell on exclusion (or reservation) and other selling.

The embodiment is also constituted so as to reflect selling result occurred on a selling style on a subsequent selling style with changes of circumstance.

This makes dealing of flowers from shipment arrival to goods-in-stock selling performed efficiently by operating data on terminal device. The sellers, especially, can know beforehand if they can find ready buyers and how much they can sell and so on in order to make selling plans. The sellers also plan flower dealing taking exclusion (or reservation), selling, auction and the like in consideration, and as a result, can sell all of the selling flowers efficiently. Further, even if an object of selling is goods which lose value as certain period of time passes like flowers, the sellers can sell flowers at even a higher unit price efficiently before flowers lose value. Accordingly, the sellers can perform effective selling activity and selling management that match demand and supply condition on the day of auction. On the other hand, the buyers can make efficient purchasing plans due to increased buying opportunity for flowers (increased time for dealing). In addition, not only the sellers and the buyers, but producers of flowers also can involve with dealing. Still further, fair dealing to both the buyers and the sellers can be performed, and efficient commercial flow management under the circumstance with different dealing styles (circumstance on each occasion of flower information confirmation) can be achieved.

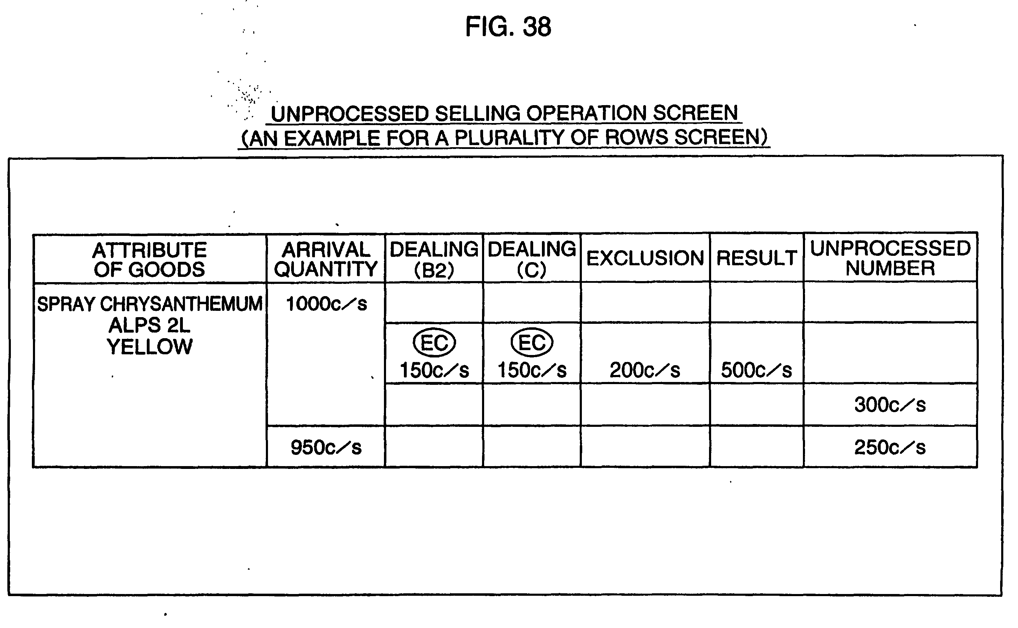

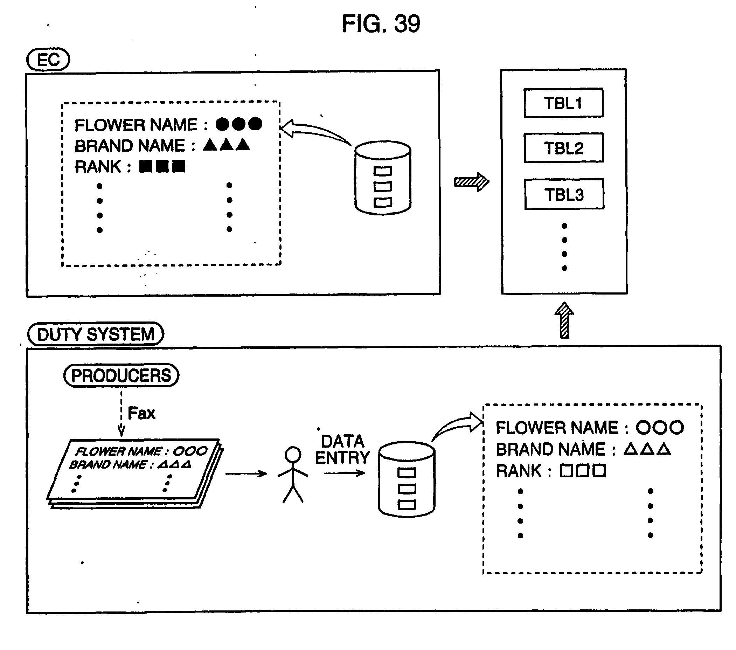

In a flowchart shown in the above Fig. 30, confirmation of the arrival quantity is judged in the steps S104 after dealing on selling style 1 begins. The arrival quantity, in some cases, is settled before dealing on selling style 1 begins. For example, the arrival quantity is settled for imported flowers arriving by ship or by air cargo. Information of arrival quantity and other dealing results in the above Fig. 31 to Fig. 37 are shown in one row, but results can be displayed in rows as shown in Fig. 38 according to progress of dealing process. Conversion function of attribute of flowers entered (faxed or telephoned) by producers to the attribute used in the dealing process (A), (B1), (B2) and (C) (EC dealing process) may also be employed. Specifically, before dealing process proceeds from selling style 1 to selling style 2, the arrival quantity is notified from producers by fax as shown in Fig. 39. The notified information is such as flower name, brand name, rank and quantity for arrived flowers, which is entered in system (duty system) of sellers and buyers. A file formed in accordance with a prescribed format in the duty system, which is entered in this system. However, file structure output from the duty system may be different from file structure of this system. Therefore, the file structure of data input in this system is matched with the file structure of this system by utilizing the conversion table for each attribute.

specifically, the conversion table TBL1 for flower name, the conversion table TBL2. the conversion table TBL3 and so on. Instead of utilizing the conversion tables, file structures are matched by utilizing WAIS (Wide Area Information Server) or by prescribing common attribute codes. By performing such conversion, proceeding from selling style 1 to selling style 2 can be made smoothly no matter what kind of file structure of information is entered from sellers.

[Seventh embodiment]

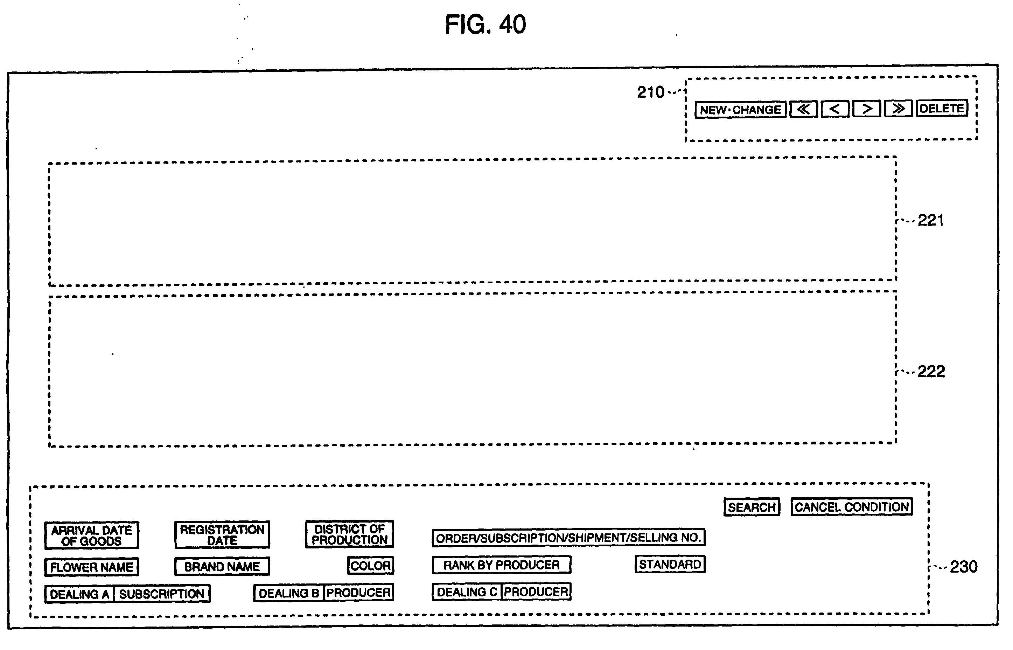

In this embodiment, information for the dealing process (A) to (C) which is described in the above first embodiment, is displayed on a same display simultaneously. As described above, information which is sent through the terminal device of the server is displayed on terminal devices of the buyers and the sellers, by www browser as interface function 420 (refer to the above Fig. 2). Each processing is executed by operating display of terminal device. The display composition in dealing process, especially in this embodiment, should have command portion 210, two dealing information display portions 221 and 222, and display entry portion 230 as shown in Fig. 40, for example. Display control for each information on the screen is performed by personal data allotting management function (refer to the above Fig. 2).

In the above Fig. 40, the command portion 210 has displays items such as "New/Change", "《《", "》》", "《", "》" and "Delete", and operators can optionally select and specify (click on) an item by operating a mouse in order to perform processing which corresponds to the selected item. The dealing information display portions 221 and 222 display, in accordance with dealing being executed, two information which occurred from different dealing styles. Conditions for extracting (searching) information of goods for a certain dealing process are entered in the condition entry portion 230. In this case, the portion has entry items of flowers (goods for dealing) such as "Arrival date of goods", "Registration date", "District of production", "Order/Subscription/Shipment/Selling number", "Flower name", "Brand name", "Color", "Rank by producer", "Standard", "A dealing/producer", B dealing/producer" and "C dealing/ producer". The condition entry portion 230 also has "Search" and "Cancel condition" items. Operators can optionally select and specify (click on) an item by operating a mouse in order to perform processing which corresponds to the selected item. For example, by clicking on "Search" item, Information which corresponds to entered conditions in the above-described entry items is searched, then search results are displayed on the dealing information display portion 221 and 222. The above-described "Rank by producer" means, for example, rank which the producers use to classify kinds of flowers, specifically, "very good", "excellent", "good" and so on depending on sizes of flowers are put on flowers. This example uses classification (rank) which the producers put on, but it is not limited to such classification. The display items such as "New/Change", "〈〈", "〉〉", "〈", "〉" and "Delete" of command portion 210, and "Search" and "Cancel condition" items of the condition entry portion 230 can be patterns ,similar to icon function, by clicking on a pattern, the processing which correspond to the pattern is executed.

With regard to the dealing process (A) to (C), explanation is made on a point which is different from the above-described first embodiment.

Dealing process (A)

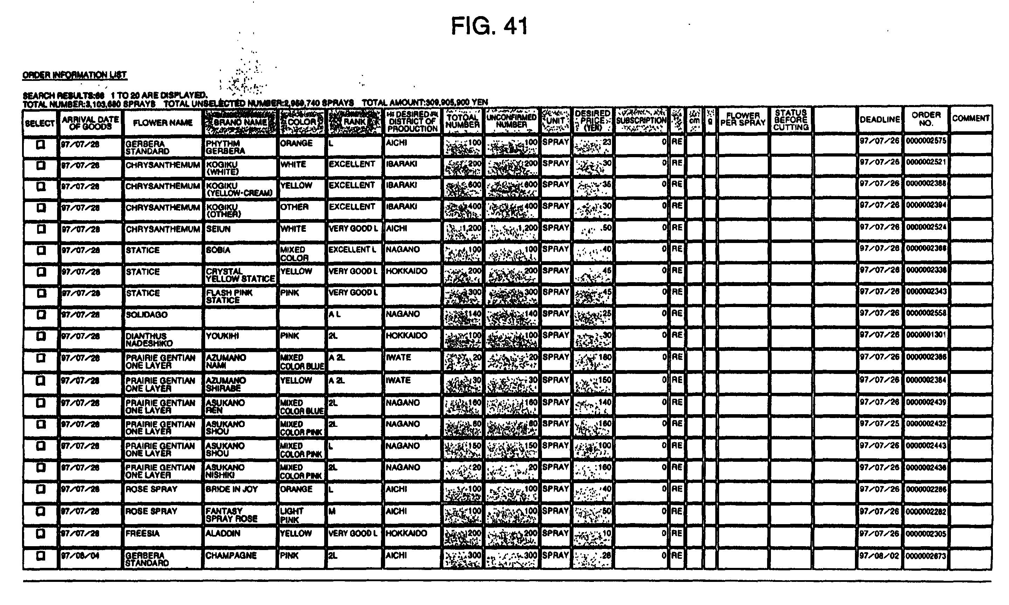

A buyer selects and specifies "Order" item on top screen of his own terminal device (refer to the above Fig. 3). Then the terminal device has a display composed as shown in the above Fig. 40. The buyer, according to the buying (stock) plan, enters buying information such as desired buying date, flower name, brand name, color, rank, district of production, total number and price on the command portion 210 and the condition entry portion 230. As a result, order information list as shown in Fig. 41 is formed, which has the entered buying information and "total number", "total unselected number" and "total amount". This list information is displayed on the dealing information display portion 222 of terminal device of the buyer. The buyer orders flowers on his own terminal device in this manner, according to the buying (stock) plan.

A seller, at his own terminal device, refers to the buying information (order/subscription information list) issued by the buyer on dealing information display 222, and judges shipment of flowers which the buyer desire can be made according to the selling (production) plan. If shipment is possible, the seller enters the subscription information on keyboard. This subscription information is sent to the server. The seller subscribes to the buying information issued by the buyer on his own terminal device.

The buyer refers to the order information list again on the dealing information display 222 of his own terminal device. The order information list which is displayed at this time reflects the subscription information issued by the seller through the server. The "subscription" column of the order information list should indicate the number of orders from sellers who subscribe to the buying information. The buyer can refer to the detail information of the seller who subscribed to the buying information by specifying the icon "RE" next to "Subscription" column by using a mouse. The buyer, by referring to such order information list, selects his desired seller among the sellers who subscribed to the buying information, and reserve the subscription. The buyer, then, enters the subscription as the buying information on keyboard, which is sent to the server and registered.

When dealing conclusion between the buyer and the seller is made at the server, the server sends conclusion notice to the seller. The seller, on receiving the conclusion notice, recognizes that dealing with the buyer is settled.

At the same time, the order information list displayed on terminal device of the buyer reflects this conclusion at "Unselected" column. For example, when a desired buying number for a flower is 100 and dealing is settled for all the 100 flowers, the unselected number (unconcluded number) is 0. In the same manner, when 40 out of the 100 flowers are settled, the unselected number should be 60. If the number which is subscribed by a seller is greater than total desired number, the unselected number should be a negative number (such as -60) allowing a negative number display.

Dealing process (B)

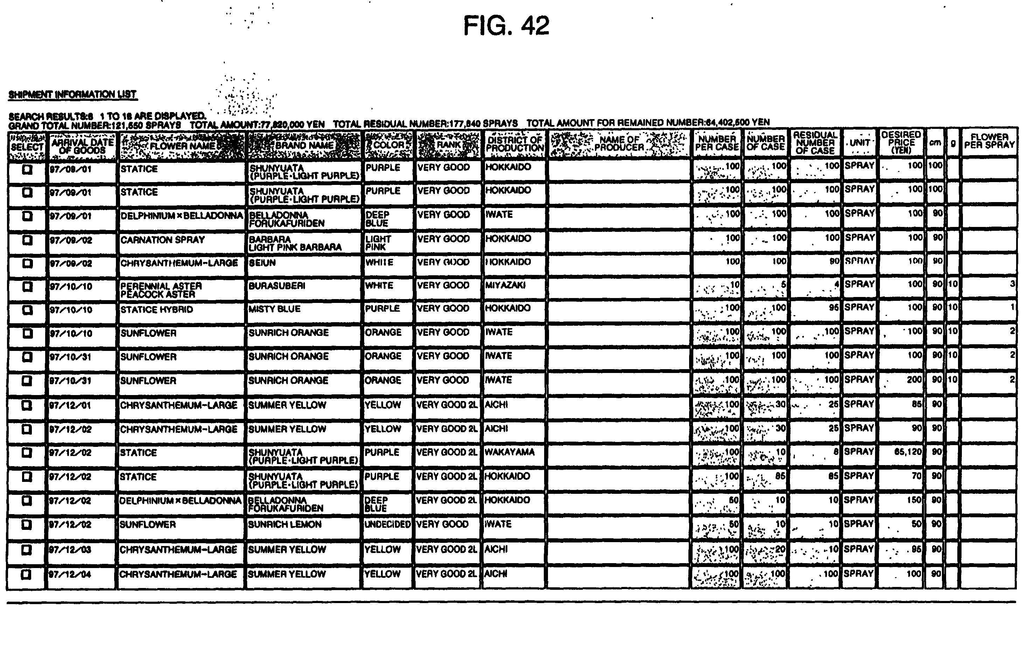

A seller selects and specifies "pre-engagement" item on top screen of his own terminal device (refer to the above Fig. 4). Then the terminal device has a screen composed as shown in the above Fig. 40. The seller enters the selling information (shipment information) such as flower name, brand name, color, arrival date of goods, rank, district of production, name of producer, the number of cases and price on the command portion 210 and the condition entry portion 230 on keyboard. As a result, shipment information list information as shown in Fig. 42 is formed, which includes information for the residual number of unconcluded case (residual case), and displayed on the dealing information display portion 221 on terminal device of the seller. The seller sells flowers on his own terminal device in this manner.

The buyer, by searching and referring to such selling information (shipment/bid information list information) issued by the seller on the dealing information display portion 221, enters his desired buying number of case as the buying registration information on keyboard. The buyer can register a part of his desired buying number of case. For example, when the residual number of case of the shipment information is 50 cases and the number which the buyer originally desires is 20 cases, the buyer can register only 10 cases. Then, such buying registration information is sent to the server. The buyer registers buying for the shipment information issued by the seller on his own terminal device in this manner.

The seller, on his own terminal device, refers to registration status of the buyer on the dealing information display portion 221, and judges for dealing conclusion with the buyer. When the buyer registers buying on (B1) dealing process, he can specify buying price to form another buying registration information for (B2) dealing process. In this dealing process, for example, terminal device of the seller can execute an algorithm which automatically decide an appropriate buyer (such as a buyer with the highest buying price) based on buying prices that are specified by buyers. The buyer, for the residual number of case as 10 cases, can register the buying registration information as, for example 6, and at the same time, can express intention to buy even if under 6. Accordingly, if buyers x and y both register buying for 6 cases, and buyer y intends buying even under 6, dealing can be settled in 6 cases to buyer x and 4 cases to buyer y.

Dealing process (C)

For example, when the seller was not able to sell all of the number issued as the selling information after dealing process (B), specifically, despite that the seller desired to sell 100 cases of flowers and only 60 cases concluded dealing with a buyer, 40 cases are left unsold.

In such case when the seller has flower that did not sell (unconcluded flower), the seller searches unconcluded flower, then select and specifies "Copy" item of the top screen (refer to the above Fig. 4). This operation proceeds the flower that did not sell, in another word the unsold flower from dealing process (B) to this dealing process. The seller, in the same manner as dealing process (B), enters the selling information on keyboard, and also enters the selling information of any newly desired flower for selling. The seller enters the lower limit desired price (the lower limit selling price) at this time. Such selling information is sent to the server, and other sellers enter the selling information of desired flowers for selling at their own terminal device in the same manner.

Accordingly, the selling information of sellers exists in the server.

A buyer, similarly to dealing process (B), refers to the selling information issued by sellers on their terminal devices, and registers buying for the selling information which meets buying condition. Buying registration is performed on the above-described dealing process (C1) or (C2). Specifically, in case of buying processing on dealing process (C1), the buyer selects and specifies "General I" on the top screen (refer to the above Fig. 3) on his terminal device. Terminal device should have display as shown in Fig. 40. Accordingly, the buyer, by means of the command portion 210 and the condition entry portion 230, refers to a desired selling information among the selling information issued by sellers on the dealing information display portion 221, and enters buying registration. In this buying registration, buyers can specify not only "Flower name" and "Color", but also other detail conditions such as "Brand name" and "Rank by producer". Buyers also can specify such detail conditions to sellers.

On the other hand, in case of buying processing on dealing process (C2), the buyer selects and specifies "General II" on the top screen (refer to the above Fig. 3) on his terminal device. The buyer can refer to the selling information issued by sellers on his terminal device, and is ready for buying registration. But in this buying registration, buyers can specify only "Flower name" and "Color" as registration condition. Other buyers refer to the selling information issued by sellers and enter buying registration on their terminal devices in the same manner. Such buying registration information is sent to the server. Accordingly, the selling information issued by sellers and buying registration information issued by buyers exist in the server. The selling information displayed at this time does not include "lower limit price" information.

The server, in accordance with a dealing conclusion processing on a prescribed dealing conclusion algorithm, concludes dealing (price) between the selling information issued by sellers and buying registration information issued by buyers sequentially from conditions of both dealers meet. The dealing conclusion algorithm in this example concludes dealing for information which satisfies the lower limit selling price, and at the same time, in the order of higher buying price and earlier entry time of buying information. The dealing conclusion information is notified to the sellers and the buyers, by which both the sellers and the buyers recognize dealing conclusion on their own terminal devices.

Information which is displayed on the above Fig. 40 is specifically described as follows. Information of buyers (buying information) occurred on the dealing process (A), is displayed on terminal devices of the buyers and the sellers on a screen composition as in the above Fig. 40. In accordance with dealing progress, two different dealing information from sellers' information (the selling information) occurred on the dealing information (B) or buyers' information (buying information) occurred on the dealing information (C), specifically, dealing process (C1), is simultaneously displayed on the same screen.

For simple explanation, display pattern 1 should be a display status which displays buying information on the dealing process (A) and the selling information on the dealing process (B) simultaneously, and display pattern 2 should be a display status which displays buying information on dealing process (A) and the selling information on dealing process (C) simultaneously.

[Display pattern 1]

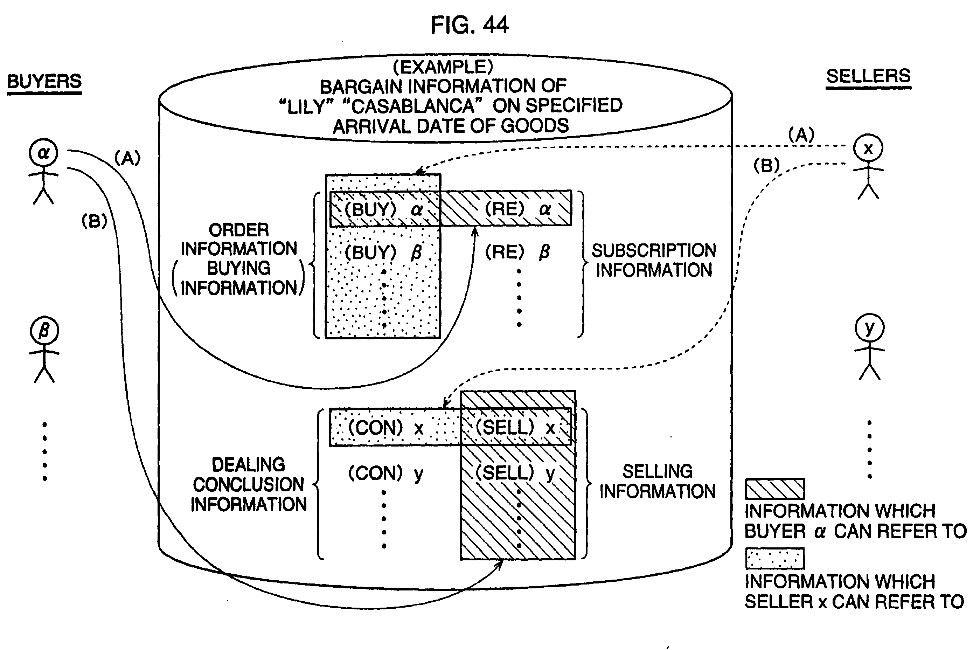

Fig. 44 shows information which the buyers and the sellers can refer to on their terminal devices as in the above Fig. 40.

In the Fig. 44, α, β, ... mean the buyers who participate in this dealing system, and x, y, ...mean the sellers who participate in this dealing system. In addition, (buy) α, (buy) β, ...mean buying information which the buyers output on the dealing process (A), and (re) x, (re) y, ... mean the registration information which the sellers output at their option to (buy) α, (buy) β, ... .

Items (sell) x, (sell) y, ...mean the selling information which the sellers x, y, ...output on the dealing process (B), and (con) x, (con) y, ... mean the dealing conclusion information with the buyers. When attention is paid on the buyer α and the seller x, the buyer α can refer to (buy) α issued by himself and the corresponding (re) α, and (sell) x, (sell) y, ...which all of the sellers x, y, ...issued. Accordingly, such information is displayed on a screen of the dealing information display portion 221 and 222 of terminal device of the buyer α. The buyer α, by specifying "numerical statistics" Item on top screen of the above Fig. 4, also can refer to numerical statistics information. The numerical statistics information includes dealing which will occur in future (decided dealing), specifically, such as date of future dealing (delivery of goods), average price of flowers, the highest price, the lower limit price and the total number of goods. Such information can be displayed on the dealing information display portion 222 at each of the specified conditions by entering conditions such as date, flower name and brand name on the condition entry portion 230 on screen.

On the other hand, the seller x can refer to (buy) α, (buy) β (buy) a issued by himself and the corresponding (re) α, and (sell) x, (sell) y, ...which all of the sellers x, y, ...issued. Accordingly, such information is displayed on the dealing information display portion 221 and 222 of terminal device of the buyer α. The seller x, by specifying "Numerical statistics" item on top screen of the above Fig. 4, also can refer to numerical statistics information. Such information, by means of the condition entry portion 230 on the screen, can be displayed on the dealing information display portion 221 at each specified condition by entering condition such as date, flower name and brand name on the condition entry portion 230 on display.

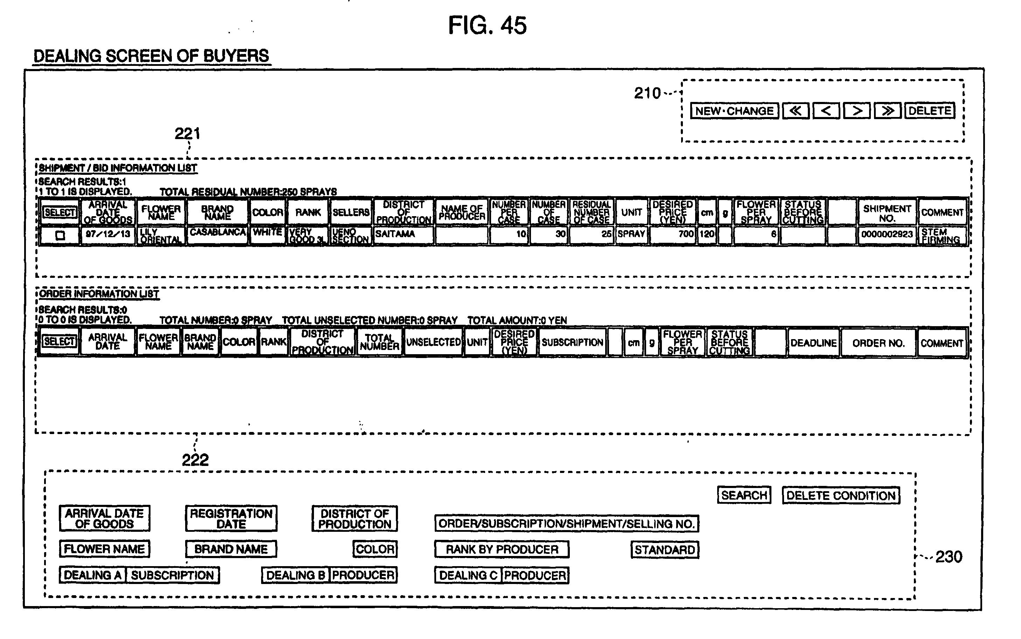

Therefore, when a buyer enters conditions of desired flower (attribute such as "flower name" and "brand name") in order to buy flowers which the buyer wants to buy, by operating the condition entry portion 230 on the above Fig. 40, the entered information is displayed on the dealing information display portion 222 as an order information (buying information) list as shown in Fig. 45 and, at the same time, shipment/bid information (the selling information) list which occurred in sellers corresponding to the order information is displayed on the dealing information display portion 221. The buyer refers to the buying information issued by himself and the selling information issued by the sellers, and execute dealing with the sellers by performing dealing process (A) or (B). The buyers can securely buy their desired flowers in this manner, because they can execute dealing by referring to the buying information issued by themselves and the selling information issued by corresponding sellers simultaneously.

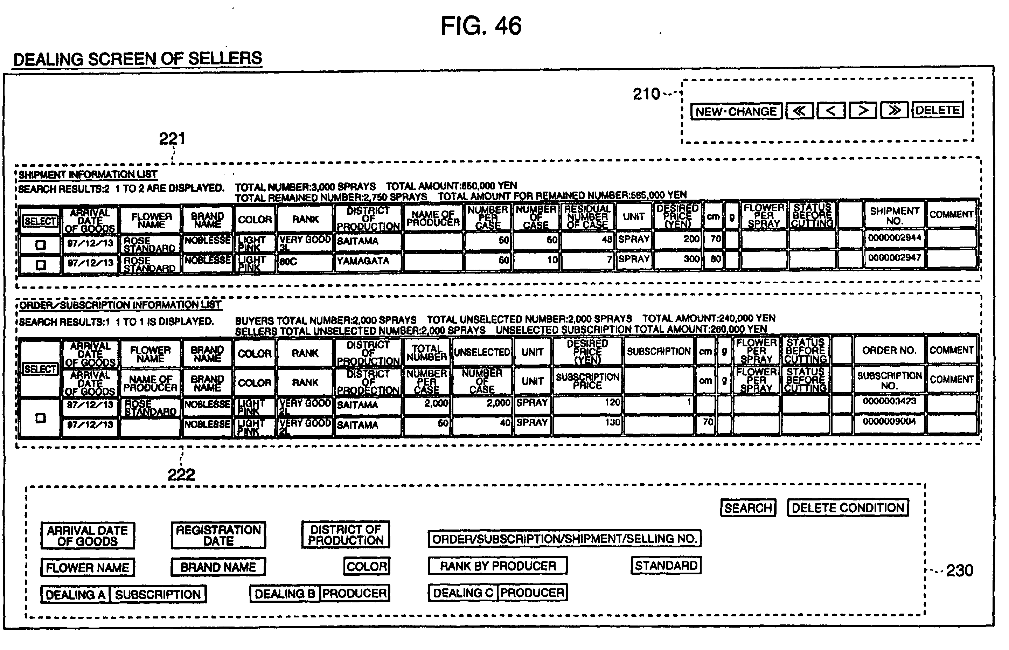

On the other hand, when a seller enters conditions for selling flowers by means of the condition entry portion 230 on a screen as shown in the above Fig. 40 display, in order to sell flowers, terminal device of the seller displays the entered information on the dealing information display portion 221 as shipment information (the selling information) list and, at the same time, order/bid information (order information) list which occurred in the corresponding buyers on the dealing information display portion 222 , as shown in Fig. 46. The seller refers to the buying information issued by himself and the buying information issued by the buyer, and execute dealing with the buyer by performing the dealing process (A) or (B). Sellers also can securely sell their desired flowers in this manner, because they can execute dealing by referring to the selling information issued by themselves and the buying information issued by corresponding buyers simultaneously.

[Display pattern 2]

In the dealing process (C), as described above, the sellers will get the selling information output for unconcluded flowers. As a result, in this pattern 2 the buyers can refer to both the buying information which the buyers entered and the selling information for unconcluded goods which the sellers entered, and the sellers can refer to both the selling information for unconcluded goods the sellers entered and the buying information the buyers entered.

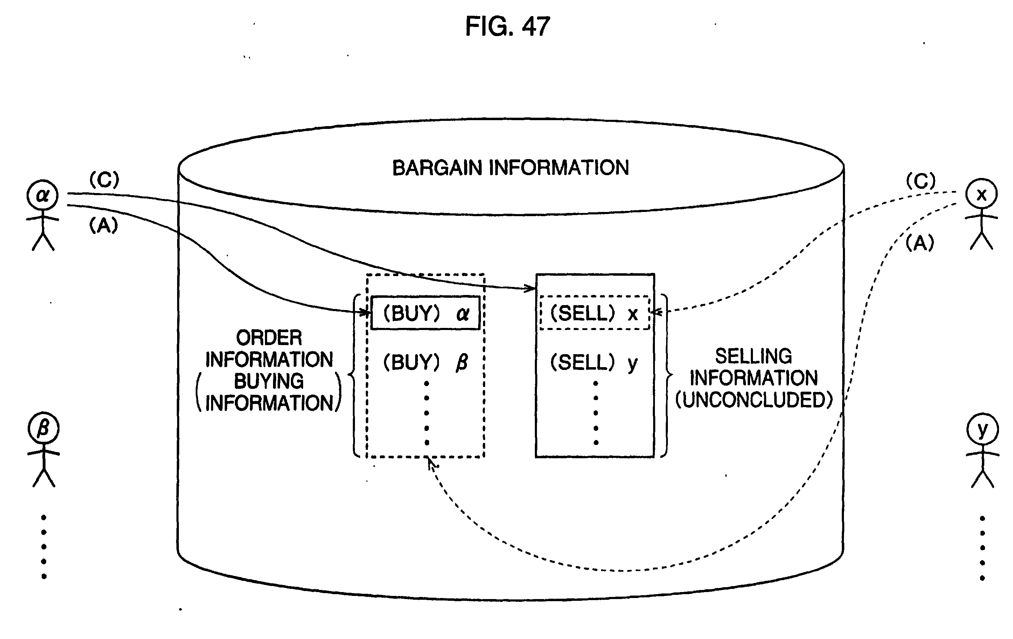

Specifically, as shown in Fig. 47 for example, when attention is paid on the buyer α and the seller x, the buyer α can refer to (buy) α the seller entered and unconcluded goods information (sell) x, (sell) y, ... entered by all sellers x, y, ... . Accordingly, such information will be displayed on the screen of the terminal display of the buyer α at the dealing information display portions 221 and 222.

On the other hand, the seller x can refer to unconcluded goods information (sell) x and the buying information (buy) α, (buy) β ,... entered by all buyers. Accordingly, such information will be displayed on the screen of the terminal display of the seller x at the dealing information display portions 221 and 222.

With regard to the information among the dealing process (A) that each buyer and seller can refer to, detail explanation is omitted because the information is displayed as similar to the above-described display pattern 1 (see the above Fig. 44). In the dealing process(C), the sellers can enter the selling information for new flowers, but detail explanation is also omitted, because the information for new flowers is dealt with similar to the selling information in the dealing process (B).

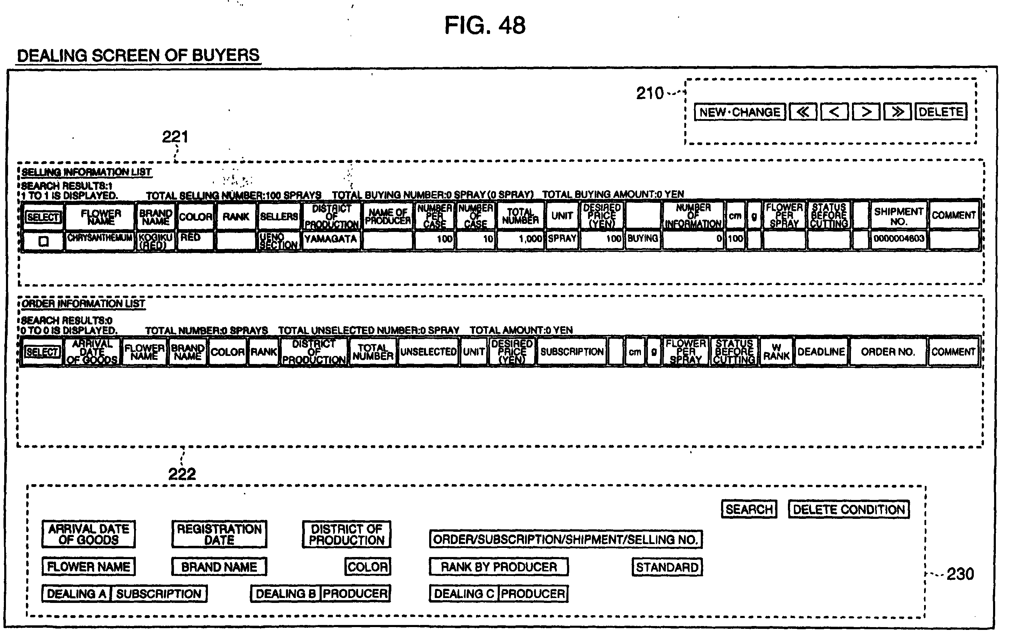

For example, when a buyer enters a desired flower condition (attribute such as "Flower name" and "Brand name") on the above-described Fig. 40 at the condition entry portion 230, the entered information is displayed on the screen of the terminal device as order information (buying information) list at dealing Information display portion 222 as shown on Fig. 48. The selling information list of the sellers which meets the entered conditions by the buyer is also displayed at dealing information display portion 221 simultaneously. The buyer refers to the buying information which he entered and the selling information which sellers entered, and performs dealing with the sellers by executing the dealing process (A) or (C). In this manner, the buyers can secure their desired flowers because the buyers can perform dealing by referring to the buying information they entered and the selling information which meets the selling information entered by sellers simultaneously.

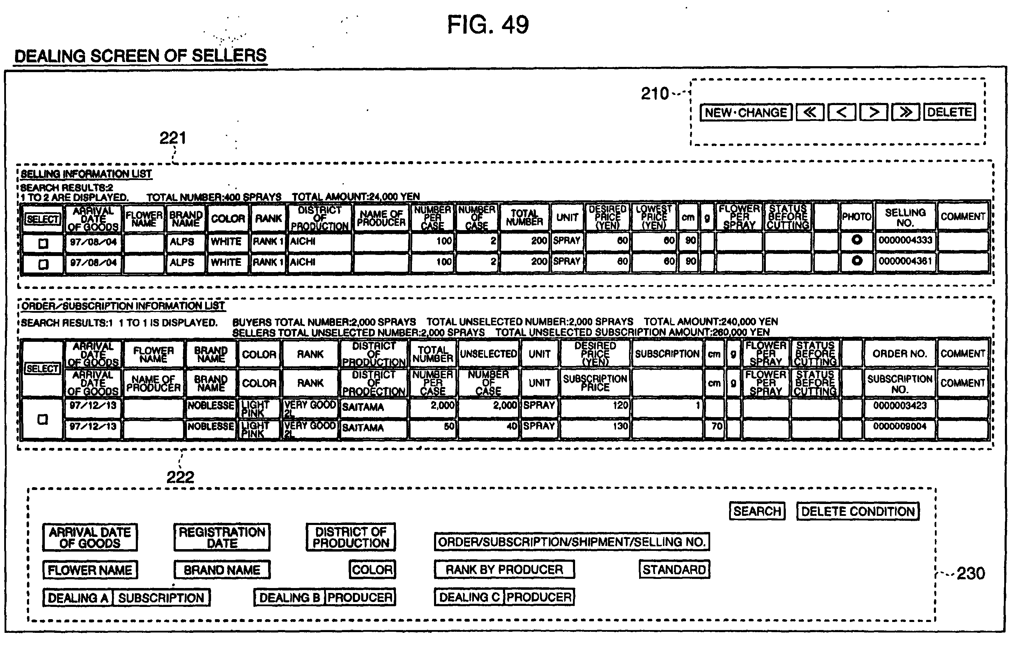

On the other hand, when the sellers enter selling conditions for unconcluded or new flowers on the screen of the display of the above Fig. 40 at the condition entry portion 230, the entered information is displayed on the terminal device as the selling information list as shown on Fig. 49 at dealing information display portion 221. An order/bid information (order information) list is also displayed simultaneously at dealing information display portion 222. The Sellers refer to the selling information which they entered and the buying information which the buyers entered, and performs dealing with the buyers by executing dealing process (A) or (C). In this manner, the sellers can securely sell unconcluded or new flowers because the sellers can perform dealing by referring to the selling information they entered and buying information which meets the selling information entered by the sellers simultaneously.

As described above, in this embodiment, the display composition on each terminal of the dealers should be as shown in the above Fig. 40. Based on the entered information at condition control entry portion 230, dealing information display portion 221 should display information (the selling information) regarding dealing process (B) or (C), and dealing information display portion 222 should display information (buying information) regarding dealing process (A). Because the screen composition is made to display information regarding dealing process for different dealing styles simultaneously, the buyers can refer to the buying information for desired flowers and all the information for subscription information of the sellers and the selling information for the desired flowers, and can perform dealing with the sellers on a different dealing style. The sellers also can refer to the selling information for flowers which they want to sell and all the information for subscription information of the buyers and the buying information for the desired flowers, and can perform dealing with the buyers on a different dealing style.

Accordingly, the buyers can systematically buy flowers on the screen easily and efficiently, and also can buy the flowers securely. The sellers also can systematically sell flowers on terminal display easily and efficiently, and can sell the flowers securely.

[Eighth embodiment]

By the first through seventh embodiments of the invention, electrically systematized constitution of goods dealing enables dealers perform goods dealing on their terminal displays without going to a wholesale market. Buyers and sellers participate in this dealing system (flower dealing system 100), as described above. When buyers and sellers issue buying information and selling information respectively, dealing is settled by matching the buying information with the selling information on a fixed rule, for example, in the order of entry of buying intentions, conditions and buying information with respect to respective pieces of information, which are offered by the buyers, or in the order of a higher buying price which are included in such buying information. However, conditions offered by buyers and sellers in dealing vary greatly, and buying information and selling information usually differ from each other. Under such circumstances, if dealing is performed simply according to a fixed rule, dealing opportunities are limited, and opportunities and a rate for dealing settlements may also be decreased. For example, specifically, in the case where buying information and the selling information are matched simply in the order of a higher desired buying price, dealing will be less likely to settle for buyers who offer lower buying price. This will be disadvantageous for sellers who want to sell a volume of goods at a low price and for buyers who want to buy a volume of goods at a low price.

Thus, the embodiment of the invention will enable dealing between buyers and sellers efficiently, on the goods dealing according to the first embodiment through seventh embodiments, thus increasing a rate of dealing settlements.

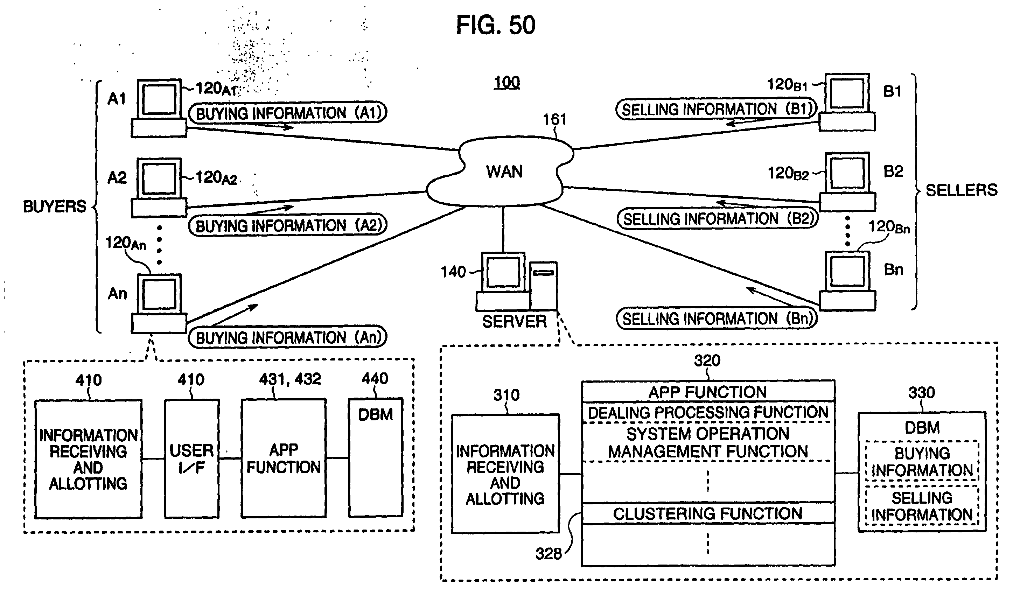

A terminal device on the server, in addition to each function as an application function shown in the above Fig. 2, has a clustering function 328, for example, as shown in Fig. 50. The clustering function characterizes the embodiment of the invention most, which will be described later. Each clustering function is for linking pieces of buying information (A1), (A2),..., (An) or selling information (B1), (B2),..., (Bn) according to a specified algorithm to settle dealing.

The above Fig. 50 shows buying information and the selling information issued by each buyer and seller, when attention is paid on buyers (A1), (A2),..., (An) and sellers (B1), (B2),..., (Bn) on the flower dealing system 100 of the above Fig. 1.

Specifically, the flower dealing system 100 has a constitution in which a terminal device 140 of the server for managing a flower market (corresponding to the server 101 in the above Fig. 1), terminal devices $120_{A1}$, $120_{A2}$,..., $120_{An}$ of buyers A1, A2,...,An (corresponding to the small buyer 151 and major buyers 121 to 123 in the above Fig. 1) and terminal devices $130_{B1}$, $130_{B2}$,..., $130_{Bn}$ of sellers B1, B2,...,Bn (corresponding to the major sellers 111 to 114 and a small seller 141) are mutually connected through WAN 161 so as to be able to intercommunicate. Each of the terminal devices of the server, the sellers B1 to Bn and the buyers A1 to An consist of a personal computer equipped with a central processing unit (CPU), a keyboard, a mouse, a display device, a communication device, a memory storing previously a processing program of this system and the like. Variety of the later-described processing is executed by the CPU reading out the processing program of the memory for execution thereof.

Further, the flower dealing system 100, as described above, can process flower dealing on each dealing system of buyers and sellers. Dealing is processed in a manner that the buyers A1, A2,..., An issue information (buying information) (A1), (A2),..., (An) concerning goods (flowers) with their own terminal devices $120_{A1}$, $120_{A2}$,..., $120_{An}$ , and the sellers also issue information (selling information) (B1), (B2),..., (Bn) concerning goods they want to sell (flowers) with their own terminal devices $130_{B1}$, $130_{B2}$,..., $130_{Bn}$, then refer to the information on the screen of the terminal device with each other.

On the above-described flower dealing system 100, for example, when the buyers A1, A2,..., An and sellers B1, B2,..., Bn participate in this system and the buying information (A1), (A2),..., (An) and the selling information (B1), (B2),..., (Bn) are issued, these buying information (A1), (A2),..., (An) and these selling Information (B1), (B2),.., (Bn) are stored in a DBM 330 in the terminal device 140 of the server through WAN110.

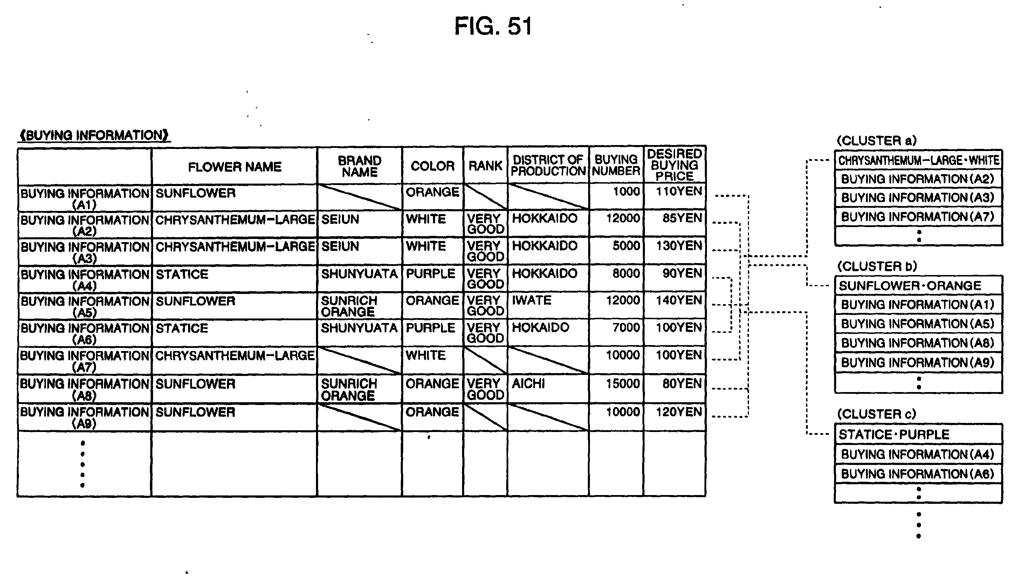

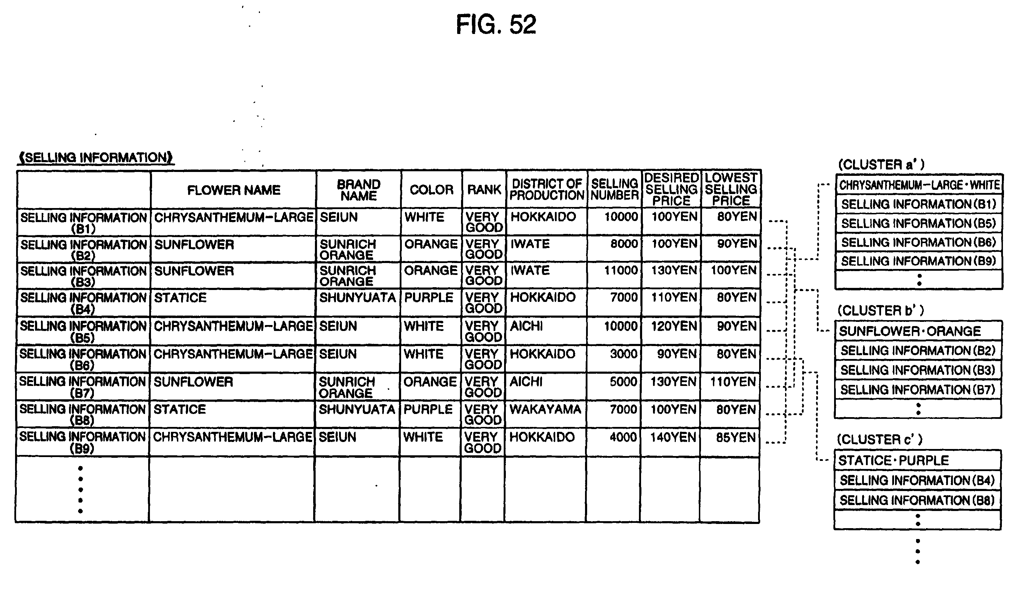

In this case, the buying information (A1), (A2),..., (An) and the selling information (B1), (B2),..., (Bn) stored in the DBM 330 is to be information shown in Figs. 51 and 52. As shown in the above Fig. 51, the buying information includes "flower name", "brand name", "color", "rank", "district of production", "buying number" and "desired buying price" of goods which the buyers want to buy. And with regard to the selling information, as shown in the above Fig. 52, the selling information includes "flower name". "brand name", "color", "rank", "district of production", "buying number", "desired selling price" and "lower limit selling price".

The buying information (A1), (A2),..., (An) and selling information (B1), (B2),..., (Bn) stored in the DBM 330 shown in the above Figs. 51 and 52, are linked respectively according to the later-described algorithm by means of clustering function equipped in the terminal device 140 of the server, then dealing is settled. Descriptions will be made for Algorithm 1 though Algorithm 4 exemplifying the above-described algorithm below.

[Algorithm 1]

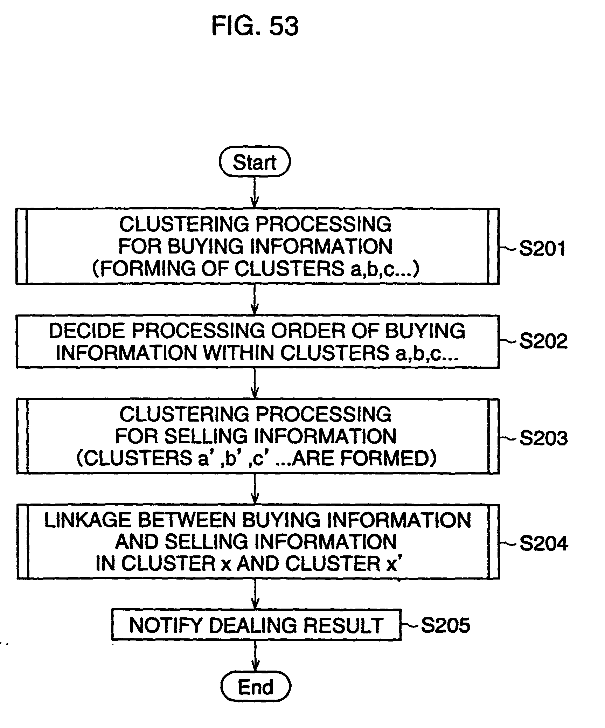

This algorithm is described, for example, in a flowchart of Fig. 53.

Step S201:

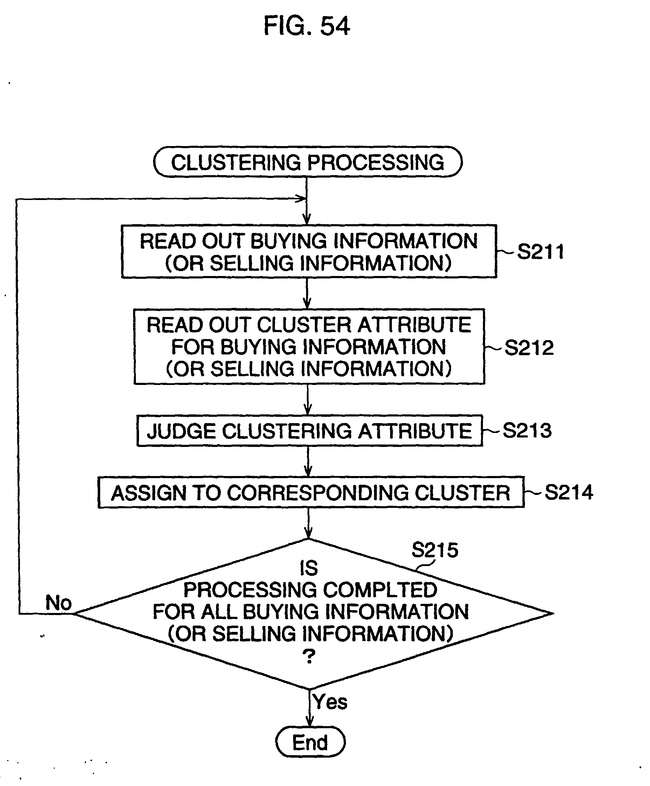

Clustering processing is performed for buying information (A1), (A2), ..., (An), which is shown in a flowchart of Fig. 54. Herein, the "clustering" described in this example means forming a set (hereinafter, also referred to as "cluster" or "clustering field") from all the buying information (A1), (A2), ..., (An) based on a previously set clustering attribute.

Specifically, first of all, the terminal device 140 reads out the first buying information (A1) of the buying information (A1), (A2),..., (An) stored in the DBM 330 (step S211).

Then, a clustering attribute of the buying information (A1) is read out in the step S211. As this clustering attribute, a market manager sets important items among goods attributes as elements for deciding goods prices. "Flower name" and "color" are set in this example.

Accordingly, "flower name - sunflower" and "color - orange" are read out in the step S212. Next, the clustering attribute read out in the step S212 is judged (step S213), then the buying information (A1) to a corresponding cluster is assigned according to the judgment (step S214). As a result, the buying information (A1) is assigned to a cluster b of "sunflower - orange" as shown in the above Fig. 51.

The same processing steps S211 through S214 are performed on the following buying information (A2),..., (An), and this processing ends when the steps S211 through S214 are performed on all the buying information (A1) through (An). Each of the buying information (A1), (A2) ,..., (An) is clustered as follows, as shown in the above Fig. 51. Cluster a of "chrysanthemum large - white": buying information (A2), buying information (A3), buying information (A7)

Cluster b of "sunflower - orange":

buying information (A1), buying information (A5), buying information (A8),
buying information (A9)

Cluster c of "startice - purple": buying information (A4), buying information (A6),
Step S202:

The terminal device 140 decides a processing order (matching order) of the buying information within the clusters a through c which were formed in the above-described clustering processing.

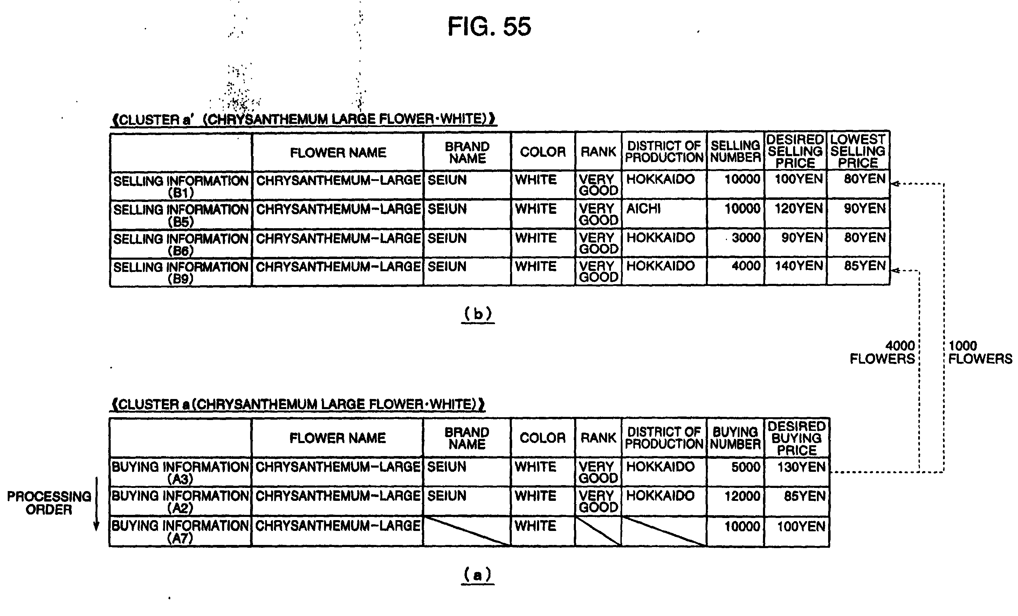

For example, regarding the cluster a, this cluster a consists of the buying information (A2), buying information (A3), buying information (A7). Then a processing order is decided for the buying information (A2), (A3) and (A7) according to the order of a higher price of the desired buying price. Consequently, the processing order in this case is buying information (A3), buying information (A7) and buying information (A2). Although the desired buying price of the buying information (A7) is higher than that of the buying information (A2), the information (A7) has less number of designation for conditions (number of designated items) than the information (A2). In other words, the information (A7) designates "flower name", "color", "buying number" and "desired buying price". On the other hand, the information (A2) designates "brand name", "rank" and "district of production" in addition to the items designated by information (A7). When items for a desired buying flower is more specifically designated, the buying information (A2) has a priority. The processing order in cluster a is decided as shown in Fig. 55 (a), that is, buying information (A3), buying information (A2), buying information (A7). Processing orders for the buying information regarding the other clusters b and c are decided similarly to the cluster a.
Step S203:

Clustering processing is executed also for the selling information (B1), (B2),..., (Bn) according to the clustering processing as shown in the above Fig. 54.

As a result, each of the selling information (B1), (B2),..., (Bn) is clustered as follows, as shown in the above Fig. 52.

Cluster a' of "chrysanthemum large - white":

selling information (B1), selling information (B5), selling information (B6), selling information (B9)

Cluster b' of "sunflower - orange"

selling information (B2), selling information (B3), selling information (B7)

Cluster c' of "startice - purple":

selling information (B4), selling information (B8)

Step S204:

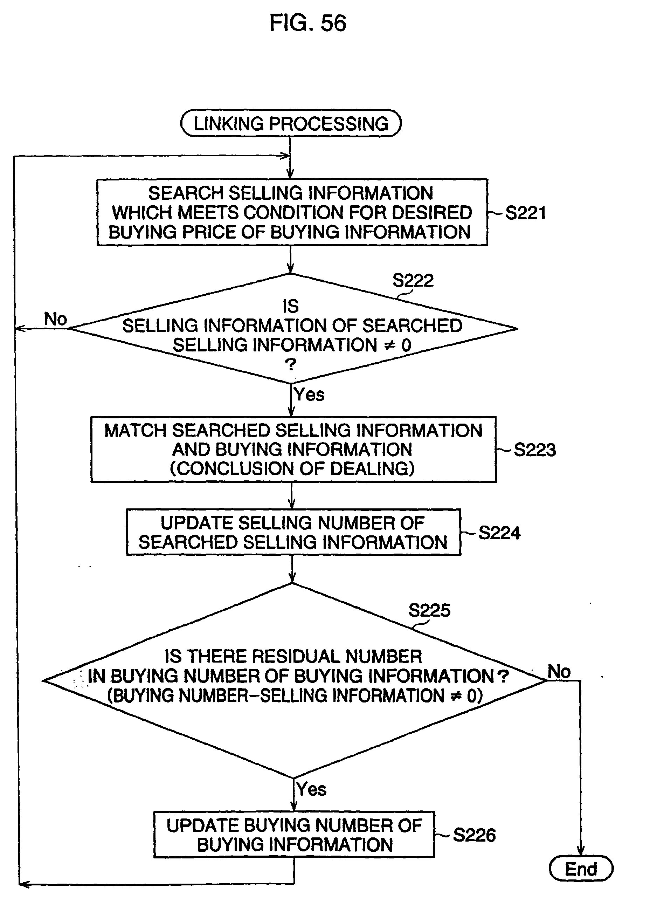

In the clusters a, b and c of the buying information and the corresponding clusters a', b' and c' of the selling information, a conclusion of dealing is decided by linking the buying information and the selling information with each cluster. The linkage processing is shown in a flowchart of Fig. 56.

For example, in case of the clusters of "chrysanthemum large - white", the clusters are shown as follows, as shown in Figs. 55 (a) and (b).

Cluster a of the buying information:

buying information (A3), buying information (A2), buying information (A7)

Cluster a' of the selling information:

selling information (B1), selling information (B5), selling information (B6), selling information (B9).

In accordance with the processing order decided in the step S202, the processing shown in Fig. 56 is executed starting from the buying information (A3).

First of all, regarding the buying information (A3), the terminal device 140 searches a selling information which has a desired selling price closest to the desired buying price "130 yen" of the buying information (A3), and in which the desired buying price "130 yen" is not less than the lowest selling price (step S221). Herein, the selling information (B9) is searched.

Next, it is judged whether or not the selling number of the selling information (B9) searched in the step S221 is "0". Specifically, it is judged whether or not all of the selling number of the selling information (B9) went through dealing (dealing conclusion is made) (step S222). Herein, since dealing for the selling information (B9) is not performed yet, processing from the following step S223 is executed.

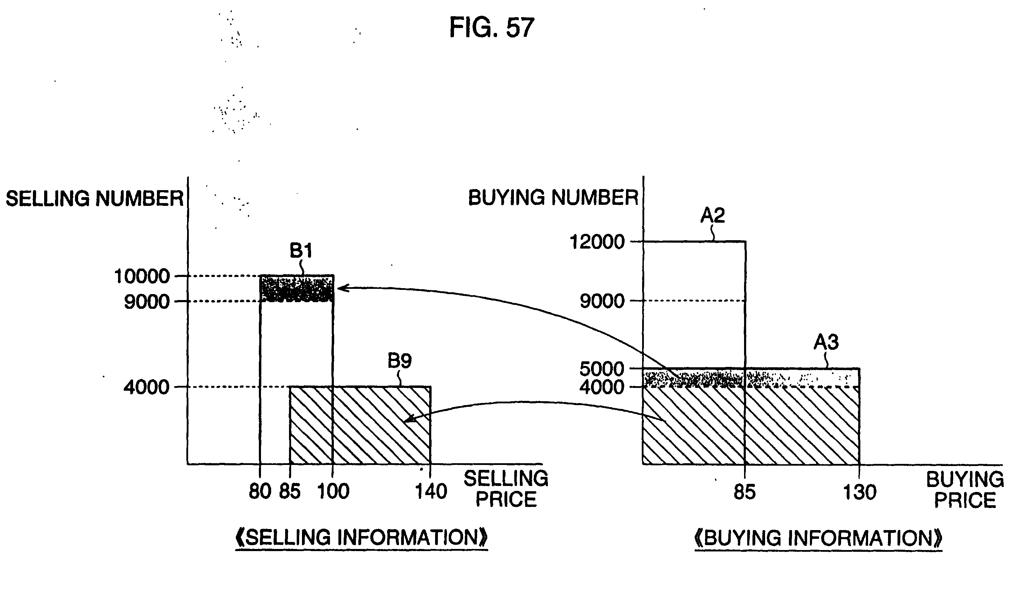

In the step S223, the selling number of the selling information (B9) is matched with the buying information (A3). Since the buying number of the buying information (A3) is "5,000" and the selling number of the selling information (B9) is "4,000", the selling number "4,000" is matched with the number "4,000" out of the buying number "5.000" (slash lined area) as shown in Fig. 57. As a result, dealing between "4,000" out of the buying number "5,000 of the buying information (A3) and the selling number of the selling information (B9) "4,000" is concluded.

After the dealing conclusion is made between the buying information (A3) and the selling information (B9) in the step S223, the selling number of the selling information (B9) is updated (step S224). In this case, the selling number is updated to "0", because all of the selling number "4,000" of the selling information (B9) concluded its dealing. And it is judged whether or not the residual number exists in the buying number of the buying information (A3) (step S225). Herein, dealing is concluded for the number "4,000" of the buying number "5,000" of the buying information (A3) to the selling information (B9), and dealing is not concluded for the number "1,000" which is judged to be residual. Accordingly, in this case, the buying number is updated to "1,000" in the following step S226. Then the processing returns to the step S221.

When the processing returns to the step S221, the selling information (B1) which matches the buying information next to the selling information (B9) is searched in the step S223 and the following step S222. In the step S223, the number "1,000" (black area in the drawing) of the selling number "10,000" of the selling information (B1) is matched to the residual buying number of the buying information (A3) as shown in the above Fig. 57. Dealing is concluded between the residual buying number "1,000" of the buying information (A3) and the number "1,000" of the selling number "10,000" of the selling information (B1), Thereby, dealing is concluded for all the buying number "5,000" of the buying information (A3). After the selling number of the selling information (B1) is updated to the number "9,000 in the step S224, it is judged that the residual number of the buying information (A3) does not exist in the step S225. then all the processing for the buying information (A3) is terminated.

As described above, when the processing for the buying information (A3) is terminated, processing for the next buying information (A2) is executed. Also, in this case, in the same manner as the buying information (A3), the terminal device 140 first searches selling information which has a desired selling price closest to the desired buying price "85 yen" of the buying information (A2) and in which the desired buying price "85 yen" is not less than the lowest selling price (step S221). Herein, the selling information (B1) is searched in this example. Next, the terminal device judges whether the selling number of the selling information (B1) searched in the step S221 is "0" or not, specifically, it is judged whether all of the selling number of the selling information (B1) went through dealing (the dealing conclusion is made) or not (step S222). Herein, since the number for which the dealing conclusion is not made is "9,000", processing from the following step S223 is executed.

In the step S223, the selling number of the selling information (B1) is matched with the buying information (A2). Since the buying number of the buying information (A2) is "12,000" and the selling number of the selling information (B1) is "9,000", the selling number "9,000" is matched with the buying number "9,000" out of the buying number "12,000". As a result, dealing between the number "9,000" out of the buying number "12,000" of the buying information (A2) and the selling number of the selling information (B1) "9,000" is concluded. After dealing conclusion is made between the buying information (A2) and the selling information (B1) in the step S223, the selling number of the selling information (B1) is updated (step S224). In this case, the selling number is updated to "0" because all of the selling number "9,000" of the selling information (B1) concluded its dealing.

And the terminal devise 140 judges whether the residual number exists in the number of the buying information (A2) (step S225) Herein, dealing is concluded between the selling information (B1) and the number "9,000" of the buying number "12,000" of the buying information (A2), and dealing is not concluded for the number "3,000" which is judged as the residual number. Accordingly, in this case, the buying number is updated as "3,000" in the following step S226.

Then the processing returns to the step S221, and the following processing is executed as described above. After the processing for the buying information (A2) is terminated, processing for the next buying information (A7) is executed.

Step S205:

The dealing conclusion made on the above-described step S204 will be noticed to each buyer and seller.

In [Algorithm 1], as described above, clustering is executed for the buying information (A1), (A2), ..., (An) output from each buyer according to the clustering attribute ("flower name", "color") which is previously set by a market manager. Thereby, the clusters a, b, c, ... are formed. The processing order of the buying information is also decided in each cluster at the same time. Clustering is also executed in the same manner as the above-described for the selling information (B1), (B2), ..., (Bn) output from each seller. Thereby the clusters a', b', c', ... are formed. Then, the buying information and the selling information are linked according to the order that a higher desired buying price comes first, in between the cluster a of the buying information and the cluster a' of the selling information, between the cluster b of the buying information and the cluster b' of the selling information, and so on. Thereby, linkage between pieces of buying information and pieces of selling information can be made in accordance with variety of bargain requests, and the ratio of the dealing conclusion will increase in a short time and efficiently.

[Algorithm 2]

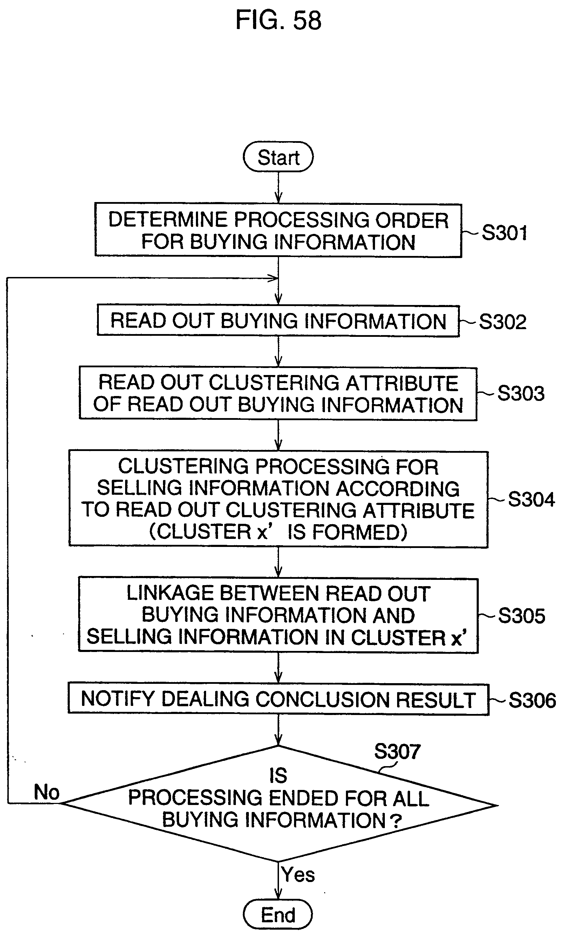

This algorithm is shown, for example, in a flowchart of Fig. 58.

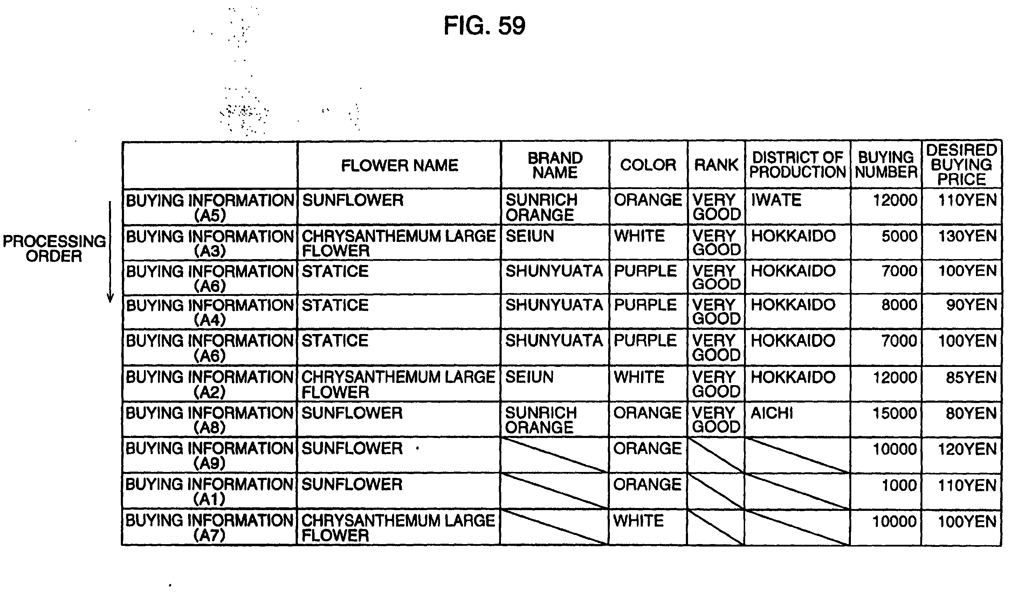

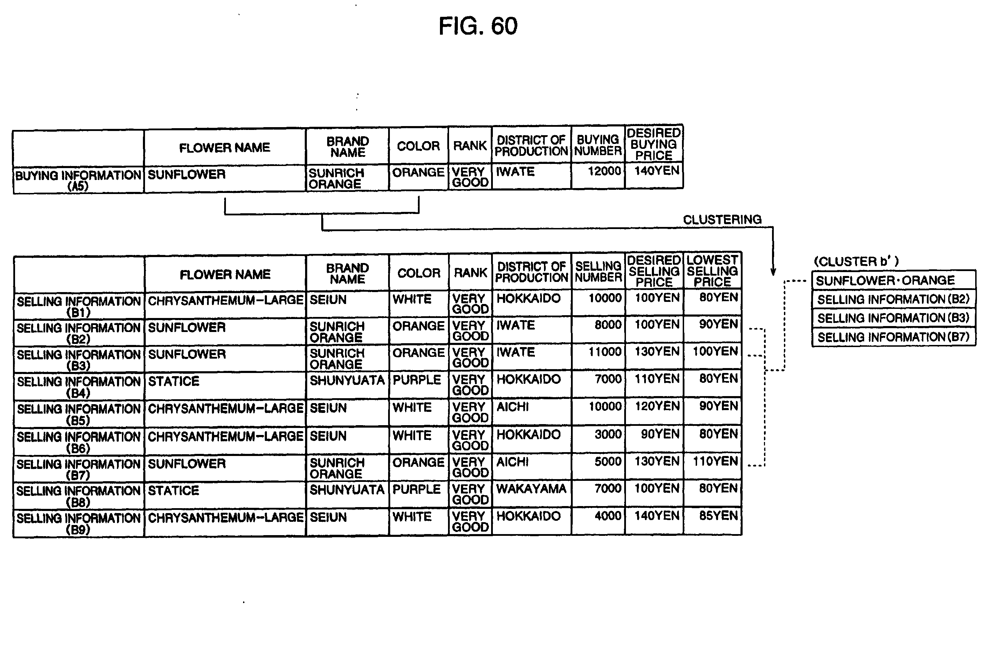

Step S301:
A processing order for executing the processing steps after the next step S302 is decided regarding all the buying information (A1), (A2),..., (An) shown in the above Fig. 51. Decision for this processing order is made, for example, in the order that a higher desired buying price comes first in the same manner as in the step S202 of [Algorithm 1]. Buying information with more designated items has a priority. Accordingly, the processing order for the buying information (A1), (A2), ..., (An) is decided as shown in Fig. 59.
Step S302:
The first buying information (A5) is read out in accordance with the processing order decided in the step S303 (see the above Fig. 59).
Step S303:
The clustering attribute of the buying information (A5) is read out in the step S302. The clustering attribute in this step should be "flower name" and "color" described in [Algorithm 1]. As a result, "flower name - sunflower" and "color - orange" included in the buying information (A5) can be read out in this step S303.
Step S304:
Clustering processing is executed for the selling information (B1), (B2), ..., (Bn) shown in the above Fig. 52 according to the clustering attribute ("flower name - sunflower" and "color - orange"). As a result, from the selling information (B1), (B2), ..., (Bn), the following can be obtained as shown in Fig. 60.
Cluster b' of "sunflower - orange":

buying information (B2), buying information (B3), buying information (B7)

Step S305:
Linkage is executed between the buying information (A5) and the buying information (B2), the buying information (B3), the buying information (B7) in the cluster b' in the same manner as the step S204 of [Algorithm 1], and the dealing conclusion is decided. In this case, when the buying information designates items other than "flower name" and "color", the selling information which matches the designation has a priority. Thereby, the buying information (A5) designates items such as "district of production" other than "flower name" and "color". As a result, linkage is executed with the selling information (B3) which matches the designation. Accordingly, the selling number "11,000" of the selling information (B3) matches the number "11,000" out of the buying number "12,000" of the buying information (A5). With the residual number "1,000", the number "1,000" out of the selling number "8,000" of the selling information (B2) is matched.
Step S306:
The dealing conclusion made on the step S205 will be noticed to each buyer and seller.
Step S307:
After the processing for the buying information (A5) is terminated, the processing returns to the step S302 in order to execute processing for the next buying information (A3). The same processing steps S302 through S306 are also executed on the buying information (A3). And the same processing steps are also executed for the following buying information (A6), (A4) and so on.
As described above, In [Algorithm 2], the buying information (A1), (A2), ..., (An) output from each buyer are sorted in the order that a higher desired buying price comes first, and linkage is made in between the clusters which are formed by clustering the selling information according to the clustering attribute of the buying information.
Thereby also, linkages between pieces of buying information and pieces of selling information can be made in accordance with variety of bargain requests and the ratio of the dealing conclusion will increase in a short time and efficiently. Note that, in the above-described [Algorithm 1] and [Algorithm 2], the processing order for the buying information is set in the order that a higher buying price comes first, but the processing order is not limited to this order. For example, processing can be executed in the order that a larger buying number comes first or in the order of entry. The clustering attribute is also not limited to "flower name" and "color".

[Algorithm 3]

In the above-described [Algorithm 1] and [Algorithm 2], the items for the clustering attribute ("flower name", "color" and so on) are previously decided by a market manager. On the contrary, in this algorithm 3 and [Algorithm 4] which will be described later, buyers can set items and contents (conditions) for clustering attributes at their will.

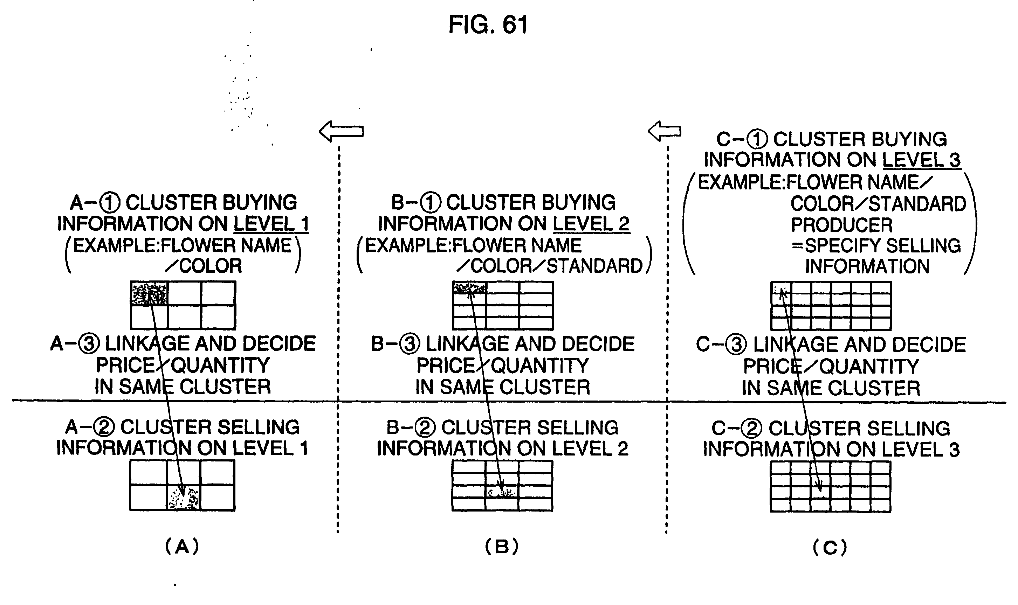

Fig. 61 shows this algorithm. As described in this Fig. 61, level 1 (A in the drawing) with clustering attributes of "brand name" and "color", level 2 (B in the drawing) with clustering attributes of "brand name", "color" and "size" and level 3 (C in the drawing) with clustering attributes of "brand name", "color", "size" and "producer" are previously set.

Specifically, the level 2 has more detailed condition designation than the level 1, and the level 3 has even more detailed condition designation than the level 2. These levels (hereinafter, also referred to as "cluster level") are previously decided, for example, by a market manager and prepared in the processing system. In this case, three levels are set for simple description, but the level to be set is not limited to this example but other levels may be prepared. Buyers designate on which level of the levels 1 to 3 dealing is to be made, and the buyers set dealing contents thereof in each item of the clustering attribute of the designated level. Specifically, for example, a buyer designates dealing on the level 1, and sets the desired "seiun" and "white" in the items of the clustering attribute of the level 1 "brand name" and "color". Another buyer designates dealing on the level 2, ands sets his desired "seiun", "white" and "very good L" in the items of the clustering attribute of the level 1 "brand name", "color" and "rank".

Accordingly, buyers issue buying information in which dealing contents are set to items of clustering attribute of each designated level. In this case, the buying information designated on the level 1 is buying information A-①, the buying information designated on the level 2 is buying information B-① and the buying information designated on the level 3 is buying information C-①.

First of all, the buying information A-③ which has the most detailed condition designation is clustered by "brand name" ,"color" , "rank" and "producer" as items of the clustering attribute. Selling information is clustered according to the above-described clustering attribute. Then the buying information and the selling information are linked in the same cluster to conclude dealing (hereinafter, the dealing conclusion processing described here is referred to as "dealing conclusion processing 1").

Secondly, the buying information A-② which has the detailed condition designation next to the buying information A-③ is clustered by items of the clustering attribute "brand name" ,"color" and "rank". Selling information from sellers (unconcluded selling information after dealing conclusion processing 1) is clustered according to the above-described clustering attribute. Then the buying information and the selling information are linked in the same cluster to conclude dealing (hereinafter, the dealing conclusion processing described here is referred to as "dealing conclusion processing 2").

Finally, the buying information A-① is clustered by items of the clustering attribute "brand name" and "color". The selling information (unconcluded selling information after dealing the conclusion processing 1 and 2) is clustered according to the above-described clustering attribute. Then buying information and the selling information are linked in the same cluster to conclude dealing.

In the clustering according to the above-described algorithm, dealing conclusions are made in the previously set order (level 3 → level 2 → level 1 in this case) for each cluster where the buying information and the selling information correspond to each other. This dealing conclusion order is set because there are cases where a part of a cluster overlap another cluster, for example, clusters of "seiun" and "white" in the level 1 are included in the clusters of "seiun", "white" and "very good L" in the level 2.

Accordingly, since the processing order of level 3 → level 2 → level 1 is generally accepted in which the more demanded level by sellers and the level having a higher price by sellers comes first, processing is executed here in the order of level 3 → level 2 → level 1 such that the level having more detailed condition designation comes first. However, processing of dealing is not limited to this order, and a market manager and the like may set an order at his option.

The detail for linkage at a dealing conclusion will be described later.

[Algorithm 4]

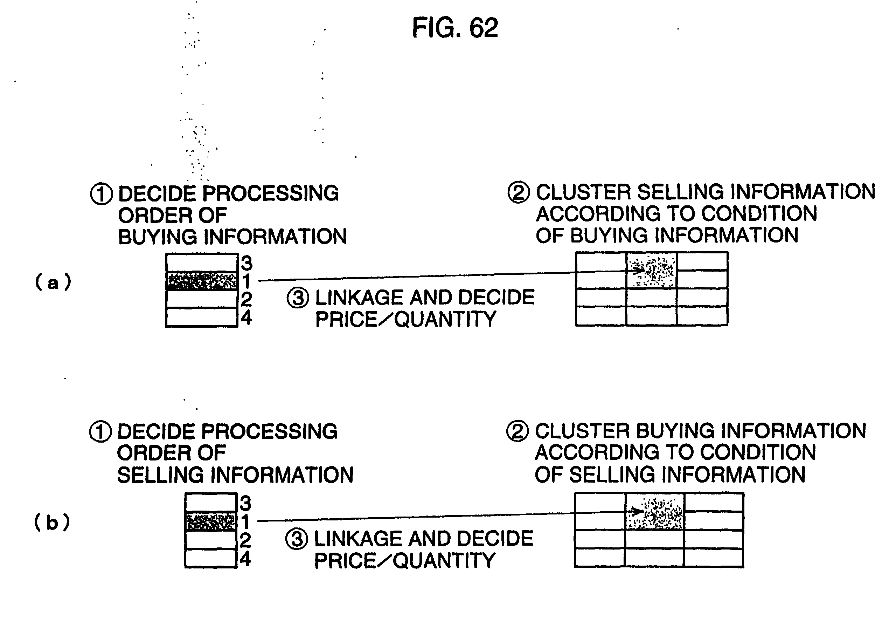

In above-described [Algorithm 2], a processing order for buying information from buyers (previously set processing order such as orders of higher desired buying price, more buying number, earlier information entry time) for buying information from buyers is decided as shown in Fig. 62 (a), and clustering is executed for the selling information in the decided order according to conditions of the buying information.

On the contrary, in this algorithm, as shown in the above Fig. 62 (b), a processing order for buying information from buyers (previously set processing order such as orders of higher or lower desired buying price, more buying number, earlier information entry time) is decided, and clustering is executed for the buying information in the decided order according to conditions of the selling information.

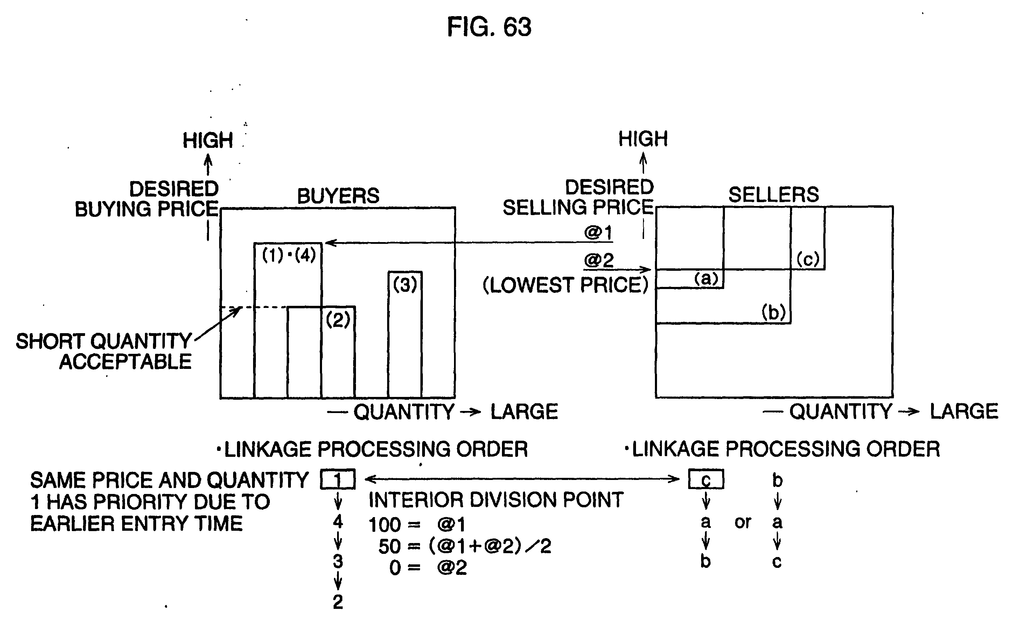

Fig. 63 shows an example of linkage in a cluster where buying information and the selling information correspond to each other in each algorithm as described above.

In this example, pieces of buying information (1) to (4) exist in a cluster of a buying information, and pieces of the selling information (a) to (b) exist in a cluster of a corresponding selling information. Linkage standard in each cluster is price, number and information entry time.

The buying information (1) and (4) designate the same upper limit price and also the same range of number. But the buying information (1) is entered earlier than the buying information (4). The buying information (2) and (3) designate upper limit prices, numbers and ranges which are different from other information.

On the other hand, the selling information (b) designates a lower limit price which is the lowest, and the selling information (c) designates a lower limit price which is the highest. The selling information (a) designates a price between the lower limit prices designated by the selling information (b) and (c) as a lower limit price thereof. Then, linkage between the clusters of the buying information (1) to (4) and the selling information (a) to (b) as described above is executed in the following order.

1. A linkage processing order for the buying information is decided in the order of higher limit prices. When two or more of the buying information with the same upper limit price exist, information which designates more buying number has a priority. IF the same buying number is designated among them, information which is entered earlier has a priority. In this case, buying information which designates the highest upper limit price are the buying information (1) and (4). Since the buying information (1) entered the information earlier than the buying information (4), the buying information (1) has a priority. As a result, a linkage processing order for the buying information is buying information (1) → buying information (4) → buying information (3) → buying Information (2).

2. A linkage processing order for selling information is decided in the order that lower limit prices are higher. On the contrary, from a viewpoint of encouraging buyers to enter upper limit prices so as to be higher and sellers to enter lower limit prices so as to be lower, a linkage processing order for the selling information is decided in the order that lower limit prices are lower. Also in this case, when two or more of the selling information with the same lower limit price exist, information which designates a more buying number has a priority. And when the same number is designated among them, information which is entered earlier has a priority.

Accordingly, in case of the order of higher lower limit prices, a linkage processing order for the selling information is the selling information (c) → the selling information (a) → the selling information (b). And in case of the order that lower limit prices are lower, a linkage processing order for the selling information is the selling information (b) → the selling information (a) → the selling information (c).

3. When a linkage processing order for the selling information is the order of higher lower limit prices, the buying information (1) is linked with the first the selling information (c) if the selling information (c) satisfies the condition of the buying information (1), which concludes dealing.

When the selling information (c) is not satisfactory, the buying information (1) is linked with the next selling information (a). The buying information (1) is then linked with the last selling information (b) if the selling information (a) is not satisfactory. Also, for example, when the buying information (1) and the selling information (c) are linked, and a selling number designated by the selling information (c) does not satisfy a desired number (necessary number) of the buying information (1), linkage with the following selling information (selling information (a) and (b) in this case) is repeatedly executed until the desired number will be satisfied. When a linkage processing order for the selling information is the order that lower limit prices are lower, linkage for the buying information (1) is executed in the same manner. Specifically, the linkage is executed in the order of the selling information (b), the selling information (a), the selling information (c), which concludes dealing. When dealing process is executed in this order, the goods with the lower limit price (the lower limit price) of the selling information which is lower than the upper limit price of the buying information (1) is linked with the buying information (1). Thus, it is advantageous that a probability of dealing conclusion increases, and dealing will be more activated. Thereafter, linkage is executed for the next buying information (4) in the same manner, followed by the buying information (3) and the buying information (2) in this order.

The price at a dealing conclusion in above-described processing 3 is generally decided based on an upper limit price (@1) designated by the buying information. However, the price may also be decided based on a lower limit price (@2) designated by the selling information. Alternatively, the price can be decided based on one of the prices designated by the buying information and the selling information. For example, a price is decided based on the interior division point ((@1+@2)/2) of the upper limit price of the buying information (@1) and the lower limit price of the selling information (@2).

With regard to the above-described linkage processing and price decision processing, no rule may be specified (NON-ruling) depending on characteristics of concerned contents and evaluation functions of dealing participants, or genetic algorithm (GA) may be utilized.

In the embodiment of the present invention, the object goods for dealing are live flowers. However, the object goods are not limited to live flowers as the same as in other embodiments. The goods may be, for example, airline tickets, other transportation tickets and concert tickets which have a limited period of validity.

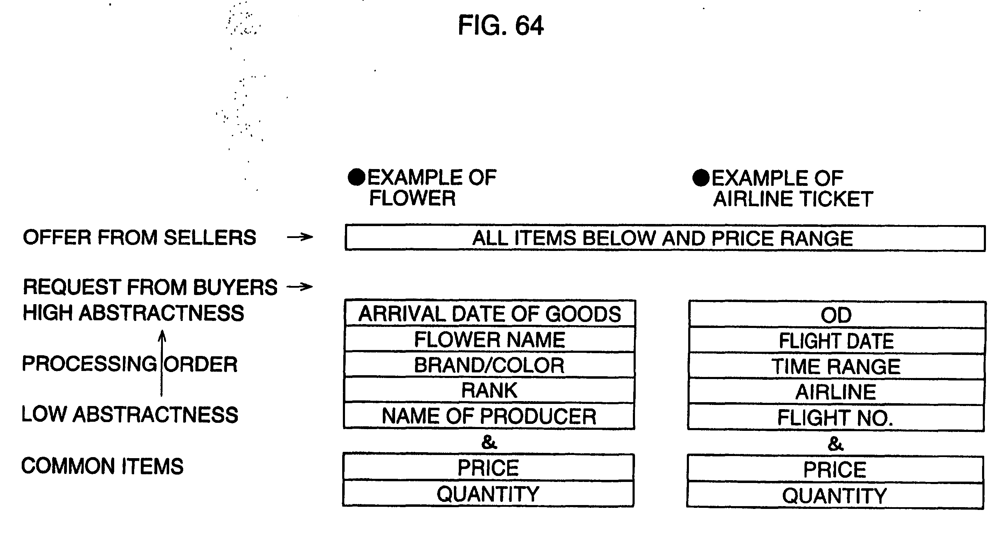

As an example, Fig. 64 illustrates, in case of airline tickets as the object goods, illustrates levels of abstractness on a linkage processing order when buyers enter variety of conditions with respect to selling information of sellers (limiting contents of clustering attribute items at every cluster level). The drawing also illustrates how the levels of abstractness correspond to clustering attribute items of the above-described live flowers.

As shown in Fig. 64, also in the case of airline tickets, in addition to the common items "price" and "number", the more items are designated such as "flight no.", "airline", "time range", "flight date" and "origin/destination (OD)", the higher the level of abstractness gets, and such buying information with more designation items concludes dealing first.

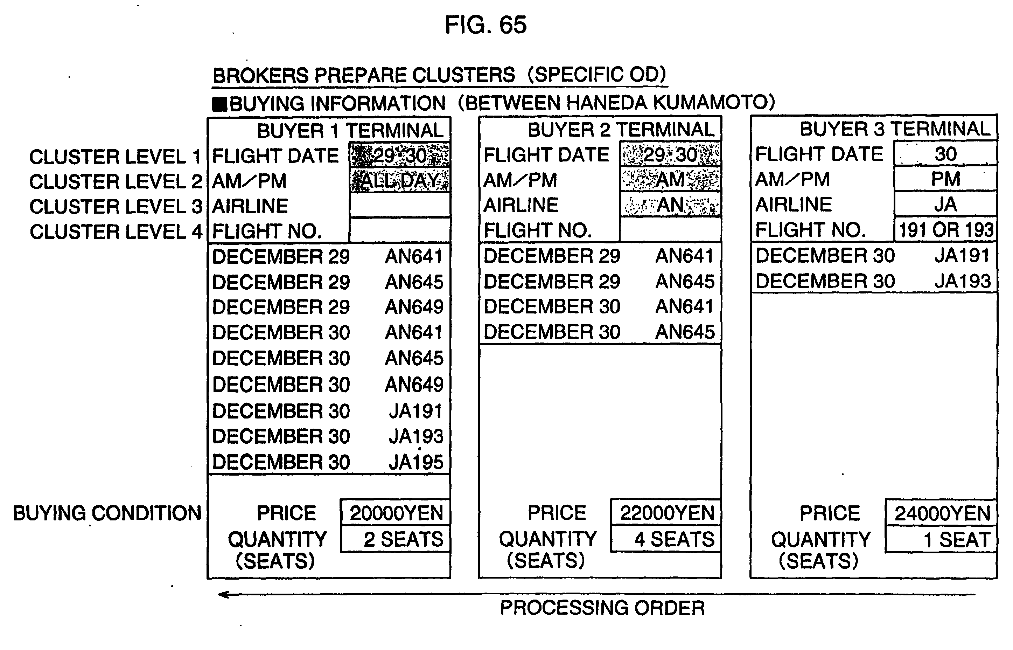

In case of airline tickets, producers correspond to airlines, major sellers correspond to sales divisions of airlines such as branch offices or sales agents of major travel companies, and small sellers correspond to travel agents and retail shops selling airline tickets such as a convenience store. Specifically, for example in Fig. 65, cluster levels 1 to 4 are decided by brokers. Fig. 65 shows a linkage processing order for buyers 1 to 3 when the buyers designate each clustering attribute item of the cluster level which the buyers select optionally among the cluster levels 1 to 4.

As shown in Fig. 65, the buyer 3 who designates the cluster level 4 having the most detailed condition designation ("flight date", "designation of a.m. or p.m.", "airline" and "flight number") is the first object for linkage processing. The buyer 2 who designates the cluster level 3 having the second most detailed condition next to those of the cluster level 4 ("flight date", "designation of a.m. or p.m.", and "airline") is the following object for linkage processing. Then the last buyer 1 is the object for the next linkage processing.

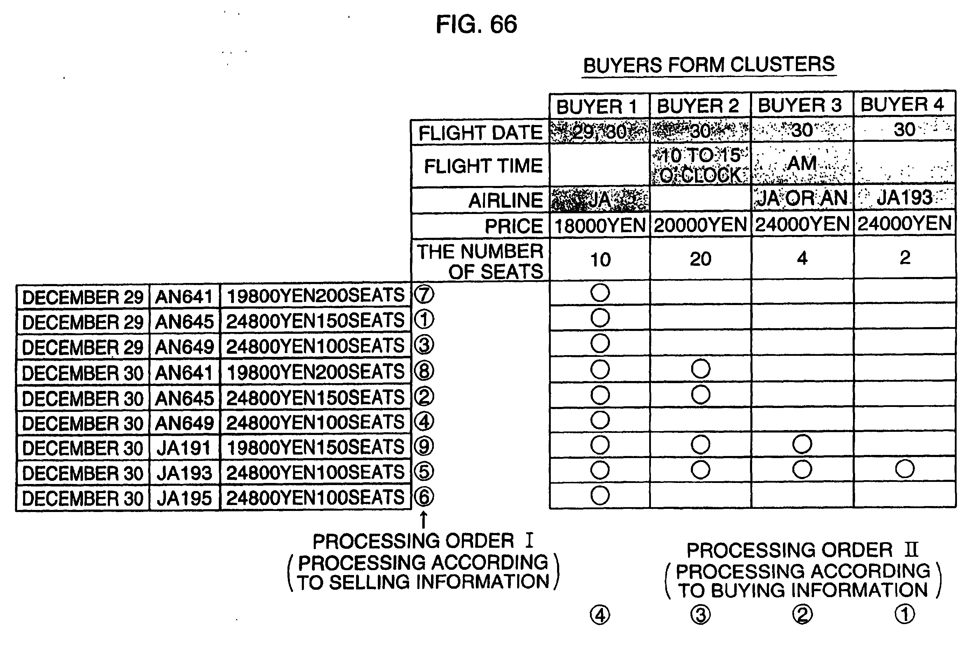

Fig. 66 illustrates a linkage processing order for the buyers 1 to 4 when the buyers 1 to 4 designate each clustering attribute item and contents (condition) optionally.

As shown in Fig. 66, the buyer 4 who has the most detailed condition designation is the first object for linkage processing, followed by the buyer 3, the buyer 2 and the buyer 1 in this order.

Regarding the first buyer 4, the corresponding selling information is only the selling information ⑤, which is linked. Since the next buyer 3 has the two corresponding selling information ⑤ and ⑨, the selling information ⑤ with a higher selling price has a priority for linkage. In the same manner, the next buyer 2 is linked with the selling information ⑧, ②, ⑨ and ⑤ in the order of higher selling price. When the selling prices are the same, selling information with more available seats has a priority for linkage. And regarding the last buyer 1, also in the same manner, linkage is executed for the corresponding selling information ① through ⑨ (all the selling information) in the order of higher selling price. When selling prices are the same, selling information with more available seats has a priority for linkage. Even when the available seats are the same, selling information with earlier information entry time has a priority for linkage.

The above explanation for the item designation and the processing order of clustering attribute in the embodiment of the present invention is summarized as follows.

Items of clustering attribute and contents thereof ① Market managers and brokers previously decide items and contents. ② Buyers decide items and contents optionally.

Processing order between clusters

① Processing is executed in the order of more detailed condition designation (more designation items, more detailed limitation for contents).
② Market managers and brokers previously decide items and contents.

Processing order in a cluster

Selling information is clustered for each buying information after a processing order in a cluster of buying information is decided.

Buying information is clustered for each buying information after a processing order In a cluster of selling information is decided.

With regard to the processing order and the like between clusters and in a cluster which are described in the embodiment, it is needless to say that such processing order is applicable to a dealing conclusion between pieces of buying information and pieces of selling information in the above-described first embodiment through the seventh embodiment.

[Ninth embodiment]

In this embodiment, a complete systematization including distribution costs is realized in which the system (flower dealing system 100) enables dealing between buyers and sellers on a network in the first through the eighth embodiments described above. Because of realization of the complete systematization, dealing is performed on an ad hoc basis in completely separated dealing styles between distribution and commercial flows, and problems caused by distribution cost fluctuation will be solved.

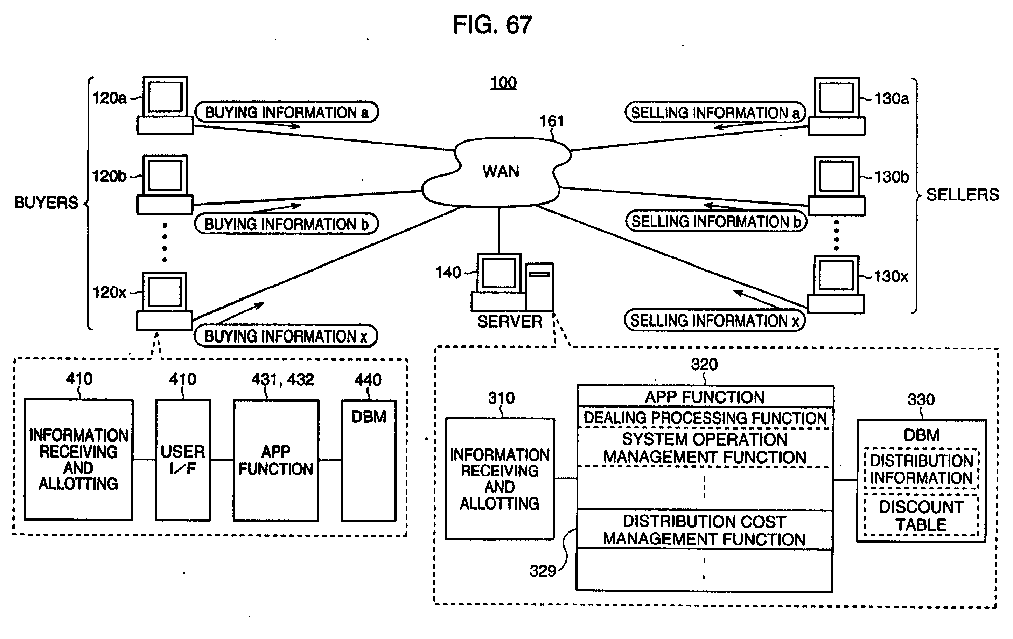

To achieve the above-described, the terminal device of the server is equipped with the distribution cost management function 329 as shown In Fig. 67 in addition to each function as the application function shown in the above Fig. 2. The DBM 330, also stores distribution information and discount table (hereinafter, simply referred to as "table") which are used in the distribution cost management function.

The above Fig. 67 illustrates the buying information and the selling information which are issued by pieces of buyers A1, A2,..., An and the sellers B1, B2, ..., Bn in the flower dealing system 100 shown in Fig. 1.

Specifically, the flower dealing system 100 illustrated in the drawing is constituted so as to comprise a terminal device of the server 140 for managing a flower market (corresponding to the server 101 of Fig. 1), terminal devices 120a, 120b, ..., 120x of buyers (corresponding to small buyers 151 and major buyers 121 to 123 in Fig. 1) and terminal devices of 130a, 130b, ..., 130x (corresponding to major sellers 111 to 114 and small sellers 141 in Fig. 1), which are connected through WAN 161 so as to be able to intercommunicate.

The terminal devices of the server, sellers, and buyers consist of personal computers equipped with a central processing unit (CPU), a keyboard, a mouse, a display device, a communication device and a memory storing previously a processing program of this system and the like. Variety of the later-described processing is executed by the CPU reading out the processing program of the memory for execution thereof.

Further, in the flower dealing system 100, as described above, buyers can issue information (buying information) a, b, ..., x of flowers (goods) they want to buy by utilizing their own terminal devices 120a, 120b, ..., 120x. The sellers also issue information (selling information) a, b, ..., x of flowers they want to sell by utilizing their own terminal devices 130a, 130b, ..., 130x in the same manner. Dealing is processed by referring to the information on the screen of the terminal device with each other.

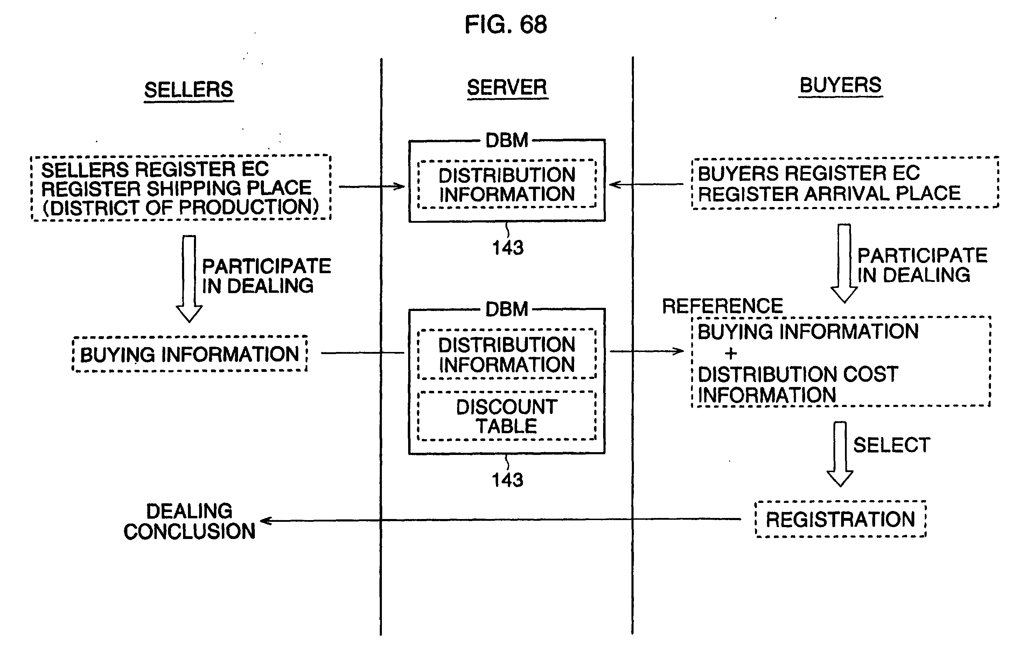

An example of dealing performance based on the selling information a, b, ..., x issued by the sellers in the above flower dealing system 100 will be described below. An outline of the processing flow of this case is shown in a flowchart of Fig 68.

The sellers and the buyers first take necessary steps (registration) for participating this system by utilizing their own terminal devices 130a, 130b, ..., 130x and 120a, 120b, ..., 120x. The necessary steps include registration of addresses of the buyers and the sellers.

The registered information of each dealer is sent to the server through WAN 161, and is managed by the DBM 330. Each address of the dealers is managed as distribution information. The addresses of the sellers include addresses (district of production) of producers which are managed.

For example, a seller enters selling information a by his own terminal device 130a according to a selling plan. The selling information a includes desired selling information such as flower name, brand name, color, shipment arrival date, rank, district of production, producer name, number of cases, price and the like for flowers which the seller wants to sell. Other sellers also enter selling information b, ..., x by their own terminal devices 130b, ..., 130x in the same manner.

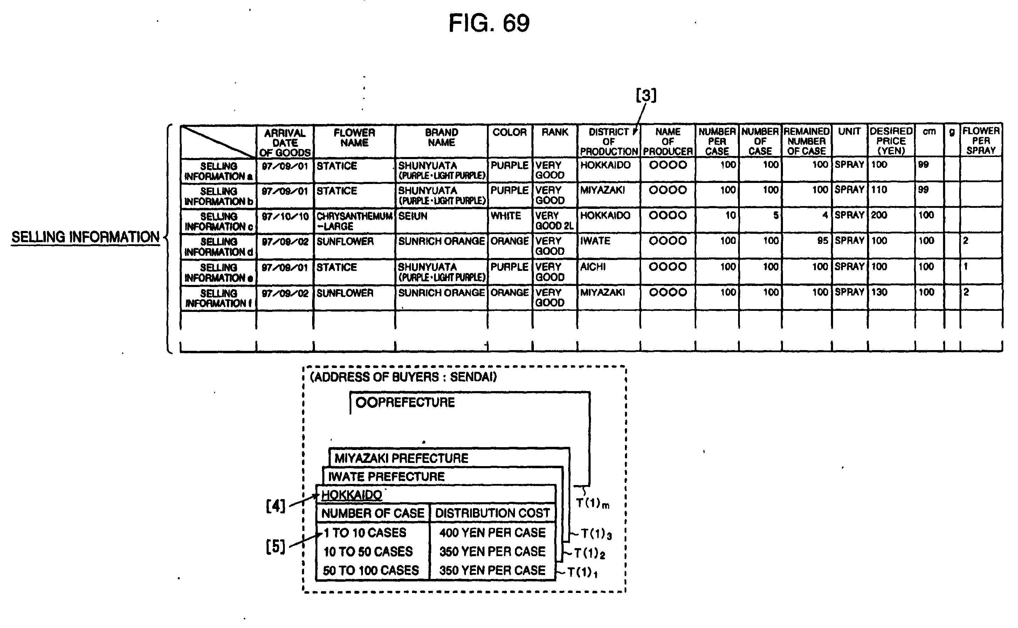

These selling information a, b, ..., x are sent to the server. Accordingly, the DBM 143 of the server manages the selling information a, b, ...as shown in Fig. 69.

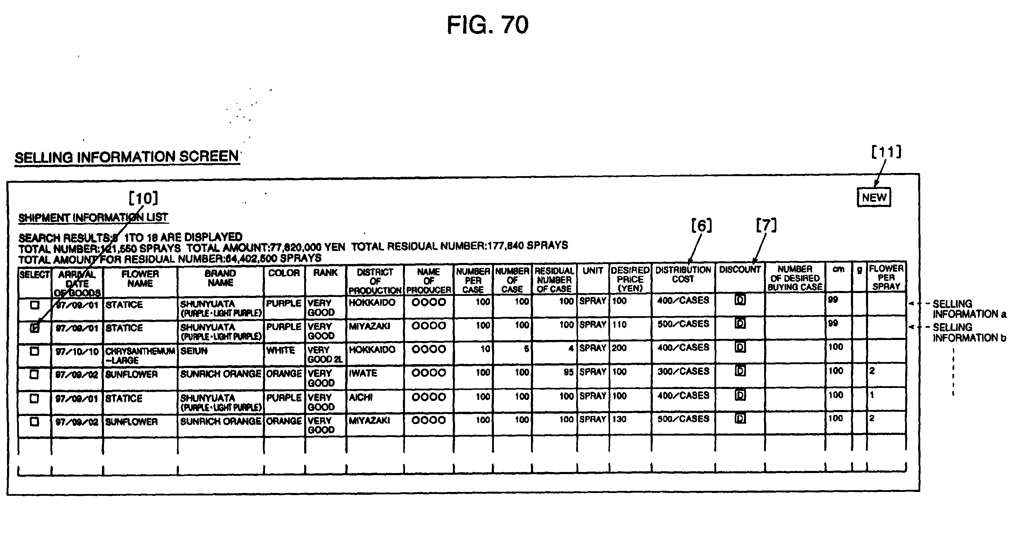

On the other hand, when a buyer (for example, the buyer with the terminal device 120x) participates the dealing in order to buy a flower (for example, "startice"), the terminal device 120x displays a selling information screen as shown in Fig. 70. The selling information screen in Fig. 70 is made by the server, and the information includes items "distribution cost" and "discount" with respect to the selling information a, b, ...shown in Fig. 69. The item "distribution cost" shows a distribution cost to an address of a buyer starting from an address of a seller (corresponding to "district of production" in selling information).

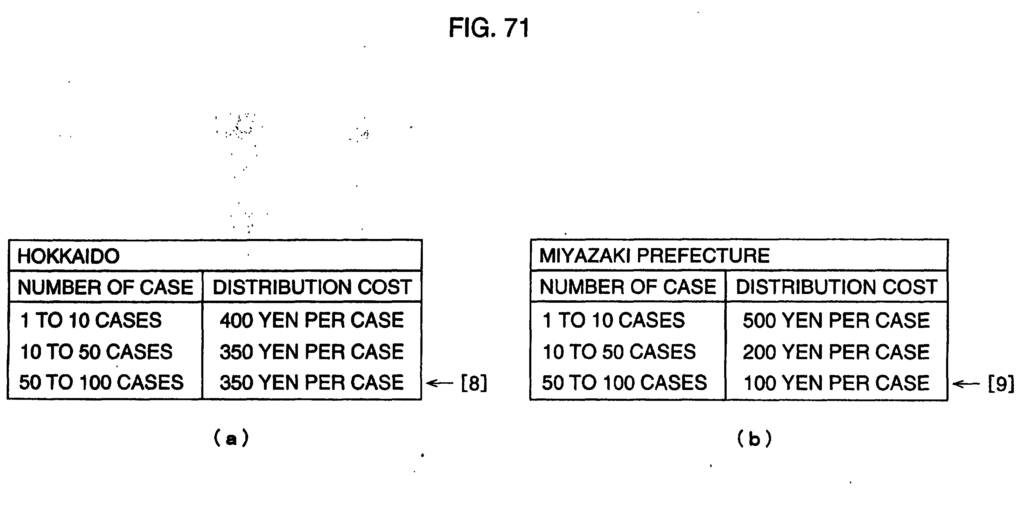

A character "D" is displayed in the "discount" item. By clicking on the "D", as shown in Figs. 71 (a) and (b), a discount rate information concerning a distribution cost from a seller issuing the clicked selling information to a buyer who clicked on "D" is displayed as a pop up window.

The buyer, by referring to the selling information screen and the discount rate information by clicking on the "discount" item, selects the selling information enabling the optimal dealing among selling information a, b and the like corresponding to the desired flower "startice", taking a distribution cost and the like into consideration.

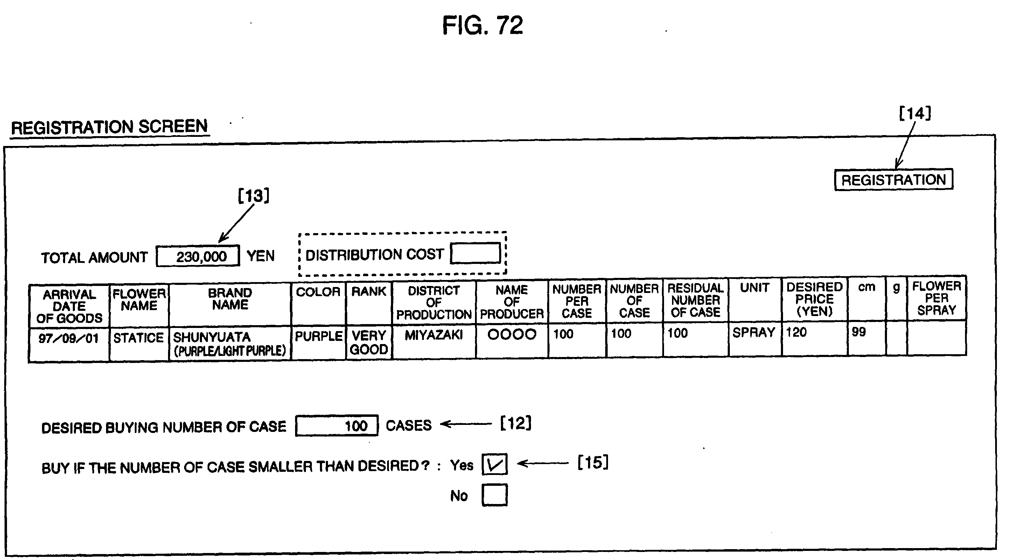

Then, the buyer checks (" "), the "select" item on the far left of the selected selling information (here, selling information b) on the selling information screen, then clicks on "new" on the upper right of screen. With this procedure, the screen of the terminal device 120x changes from the selling information screen of Fig. 69 to the registration screen as shown in Fig. 72, which is also made by the server.

The buyer reconfirms the selected selling information b on the registration screen, and enters the desired buying number of cases for the desired "startice" on the keyboard. The buyer can also register a part of the desired buying number of cases. For example, when the originally desired buying number of cases is 100 and the residual selling number of cases of the selling information b is 80 due to the change of "residual number of cases" after variety of dealing timings, the buyer can check "yes" of the "yes" and "no" items on the lower left of the screen to buy the 80 cases. The "total amount" on the upper left of the screen shows the total buying amount, including a distribution cost for the desired buying number of cases which the buyer entered.

Further, the buyer clicks on "registration" on the upper right of the screen. Thereby, the buying registration information for the selling information b is sent to the server. This concludes dealing (gives a contract) between the seller of the selling information b and the buyer who entered buying registration to the selling information b at the server. By clicking on a character portion "D" of the "discount" item and displays such as "new" and "registration" in the selling information display of Fig. 69 and the registration screen of Fig. 72, similarly to icon function, the processing corresponding to the character and the displays are executed. Herein, the character is displayed. However, the display is not limited to the character, and may be patterns and so on. As shown by a dotted line in the above Fig. 72, a total buying amount of goods and a distribution cost may be output and displayed separately. In this case, "total amount" in the drawing shows a total buying amount of goods excluding a distribution cost, and the distribution cost is shown in "distribution cost" separately from the total buying amount. Display of "distribution cost" and discount rate information" is now specifically described, which characterizes the embodiment most. The described configuration is realized by the distribution cost management function which is included in the terminal device 140 of the server shown in the above Fig. 67.

DBM 330 of the server, as described above, manages addresses of buyers and sellers as distribution information and selling information a, b, ... shown in the above Fig. 69.

The DBM 330 previously prepares groups of tables T(1), T(2), ..., T(n) which correspond to addresses of buyers (Sendai, Tokyo, ...). These groups of tables T(1), T(2), ..., T(n) are prepared by market managers or sellers.

The groups of tables T(1), T(2), ..., T(n) have the same format. For example, tables T(1) of buyers in Sendai consists of tables $T(1)_1$, $T(2)_2$, ..., $T(1)_m$ which are made up with discount rate information for the distribution cost from each seller (district of production such as Hokkaido, Iwate prefecture, Miyagi prefecture, ...).

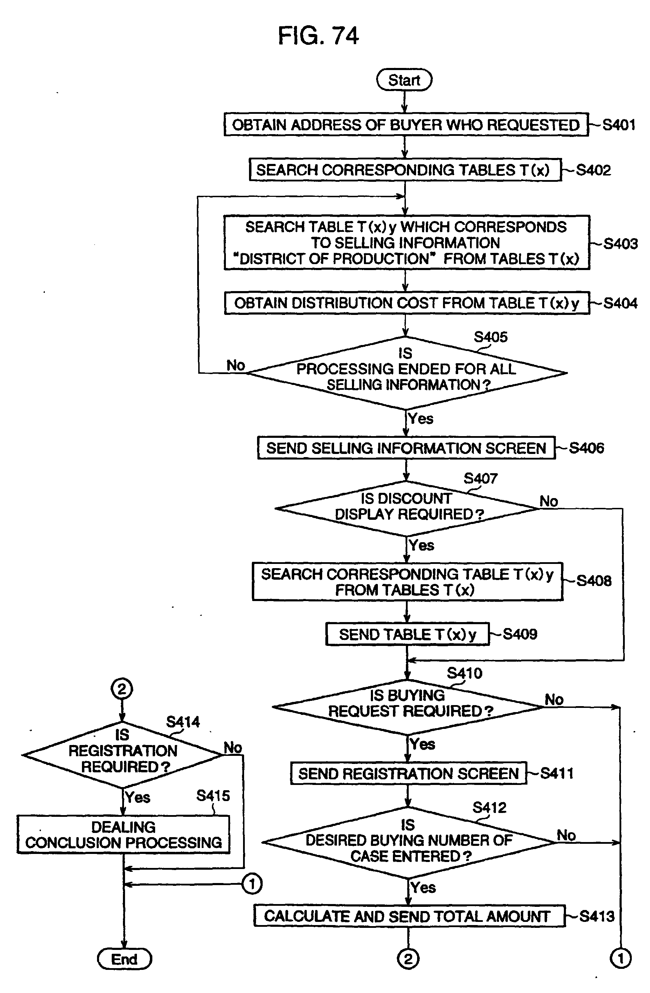

When a buyer issues dealing start request to the server by using selling information screen shown in the above Fig. 70, the server executes processing according to the flowchart as shown in Fig. 74, for example.

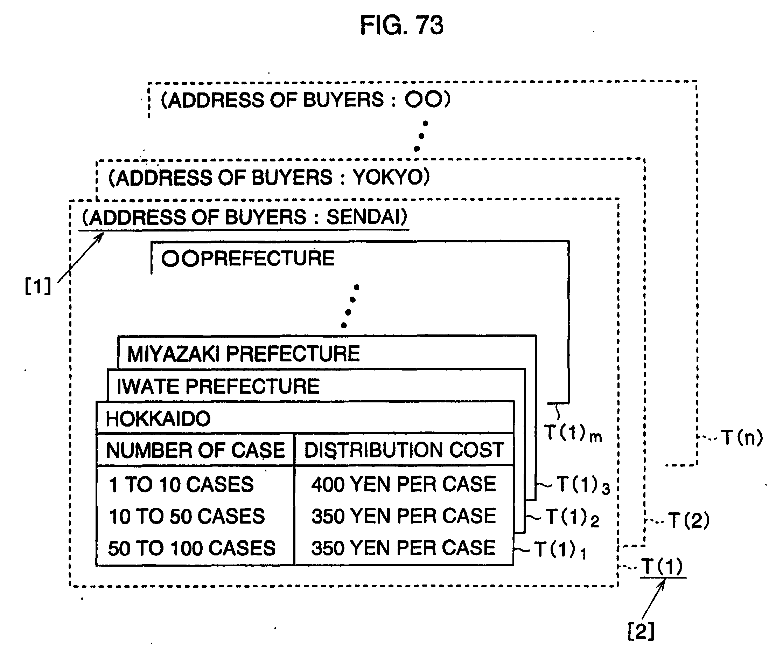

First of all, the server obtains an address of the buyer who requests the dealing start from the DBM 330 (step S401). In this example, the address of the buyer is set to be "Sendai". The server then searches a group of tables T(1) corresponding to the address of the buyer (Sendai) out of the group of tables T(1), T(2), ..., T(n) (step S402: refer to the above Fig. 73 [1] and [2]).

Further, by utilizing tables T(1) searched in the step S402, the server looks up a distribution cost for each selling information a, b, ...which is managed by the DBM 330 as shown in the above Fig. 69 (steps S403~S405).

Specifically, an address of a seller of selling information a can be obtained from the "district of production" item of the selling information a (refer to the above Fig. 69 [3]). Herein, the obtained address is "Hokkaido". The server searches the group of table $T(1)_1$ which corresponds to "Hokkaido" out of the tables $T(1)_1$, $T(1)_2$, ..., $T(1)_m$ of the groups of tables T(1) searched in the step S402. At this time, the tables $T(1)_1$ has distribution cost information between "Sendai" and "Hokkaido" (step S403: refer to the above Fig. 69 [4]). The server obtains the highest distribution cost from the distribution cost information prepared in the table $T(1)_1$ (step S404). Herein, "400 yen/case" as the distribution cost for 1 to 10 cases is obtained (refer to the above Fig. 69[5]). The steps S403 and S404 are executed on all the selling information a, b, ... .

The distribution cost obtained in the step S404 may be the distribution cost corresponding to "residual number of cases" of the selling information a (refer to the above Fig. 69 [5]). In this case, since the "residual number of cases" is "100", the distribution cost of 350 yen/case for 50 to 100 cases is obtained.

According to the selling information a, b, ... in the above Fig. 69 and the distribution cost and the like obtained in the step S404 corresponding to the selling information, the selling information screen of the above Fig. 70 is prepared, and is sent to the buyer (step S406).

As a result, the terminal device 120x of the buyer displays the selling information screen in the above Fig. 70, by which the buyer refers to the selling information corresponding to the desired flower (here, "startice"). It is assumed that the buyer pays attention to the selling information a and b. The buyer can understand that the distribution cost of 400 yen per case is required in the selling information a and that of 500 yen per case is required in the selling information b, because the selling information screen includes the "distribution cost" item (refer to the above Fig. 70 [6]). The buyer clicks on the "D" character of the "discount" item (refer to the above Fig. 70 [7]) if he wants to refer to the discount rates of the sellers included in the selling information a and b. In this example, it is assumed that the buyer clicks on the "D" character of the "discount" item. By clicking on the "D" character, a discount display request for the selling information a is sent to the server.

On recognizing the discount display request from the buyer (step S407), the server searches table $T(1)_1$ (corresponding to the "district of production" item of the selling information a) which corresponds to the discount display request out of the tables $T(1)_1$, $T(1)_2$ ..., $T(1)_m$ of tables $T(1)$ searched in the step S402 (step S408). Then the server sends table $T(1)_1$ searched in the step S408 to the buyer (step S409). Accordingly, the terminal device 120x of the buyer displays the discount rate information as shown in the above Fig. 71 (a) in a pop up window. The buyer refers to the discount rate of the distribution cost from the seller of the selling information a (Hokkaido) to his district (Sendai) by looking at the display. The buyer, in the same manner, refers to the discount rate of the selling information b as shown in the above Fig. 71 (b) by clicking on the "D" character of the "discount" item. By referring to the discount rate of the selling information a and b, the buyer can understand that the discount rate of the selling information b of Miyazaki prefecture is higher than that of the selling information a of Hokkaido. This means that the buyer can buy the goods from the seller of the selling information b at a lower cost in spite of remote district and higher desired selling price (refer to the above Fig. 71 [8] and [9]). In other words, the buyer can understand the buying amount including the distribution cost as follows, in case of 20 flowers per case.

The selling information a (Hokkaido):

$$(20 \text{ flowers} \times 100 \text{ cases} \times 100 \text{ yen/flower}) + (100 \text{ cases} \times 350 \text{ yen/case}) = 235.000 \text{ yen}$$

The selling Information b (Miyazaki prefecture):

$$(20 \text{ flowers} \times 100 \text{ cases} \times 110 \text{ yen/flower}) + (100 \text{ cases} \times 100 \text{ yen/case}) = 230,000 \text{ yen}$$

The buyer checks "select" item of the selling information b. then clicks on the "new" portion on the screen (refer to the above Fig. 70 [10] and [11]). By clicking on the "new" portion, the buying request for the selling information b is sent to the server.

On recognizing the buying request from the buyer (step S410), the server prepares a registration screen according to the selling information b, and send it to the buyer (step S411). As a result, the terminal device 120x of the buyer displays the registration screen of the above Fig. 72. The buyer enters "100" in the "desired buying number of case" item (refer to the above Fig. 72 [12]). The entered information is sent to the server.

On recognizing the entry of "desired buying number of cases" from the buyer (step S412), the server calculates the present total amount (buying amount) including a distribution cost according to the entered information and the table $T(1)_3$ corresponding to the selling information b, and send the calculated amount to the buyer (step S413). In this case, as described above, a total buying cost of goods (total buying cost excluding a distribution cost) and a distribution cost can be output separately.

As a result, on the registration screen of the above Fig. 72 of the buyer, the "total amount" item displays the total amount calculated by the server (refer to the above Fig. 72 [13]). The buyer refers to the total amount, and judges whether or not to buy the goods. When the buyer desires to buy the goods, he clicks on the "registration" portion on the screen (refer to the above Fig. 72[14]). If necessary, the buyer checks either "yes" or "no" item in order to express buying intention in case of 100 cases or less (refer to the above Fig. 72 [15]). By executing the procedure, the registration request is sent to the server. Finally, on recognizing the registration request from the buyer (step S414), the server concludes dealing between the buyer and the seller (dealing conclusion). This dealing conclusion information is sent to the seller (step S415), by which the seller recognizes that dealing with the buyer is settled.

As described above, in this embodiment, display is prepared in such manner that buyers can refer to a distribution cost for selling information issued by sellers and discount rate. Thereby, buyers all over the country can easily refer to a distribution cost occurred in dealing with sellers (producers) located all over the country and the discount rate for the distribution cost at sellers. By obtaining such distribution cost and discount rate, buyers can perform dealing with sellers after consideration that how much total buying amount including distribution cost will be and which seller will be optimal for dealing. Since buyers can understand that they can buy desired flowers at a lower cost from remote sellers depending on a discount rate, sellers for dealing are not limited to those in a certain district. This creates dealing with new sellers, and realizes activated distribution over a wide range. In addition, buyers can immediately confirm a buying amount for an entered desired buying number of cases by referring to a buying amount including a distribution cost on a screen, thus enabling efficient dealing.

The selling information screen of the above Fig. 70 is prepared in the format including the "distribution cost" and "discount" items. However, for example, only a "discount" item may be prepared in the format. In this case, clicking on the "D" character of the "discount" item makes buyers refer to a distribution cost thereof. Alternatively, neither "distribution cost" nor "discount" items is provided in the format of the above Fig. 70, and these items may be prepared in the registration screen in the above Fig. 72. Specifically, buyers can refer to a distribution cost and a discount rate on the registration screen of the above Fig. 72.

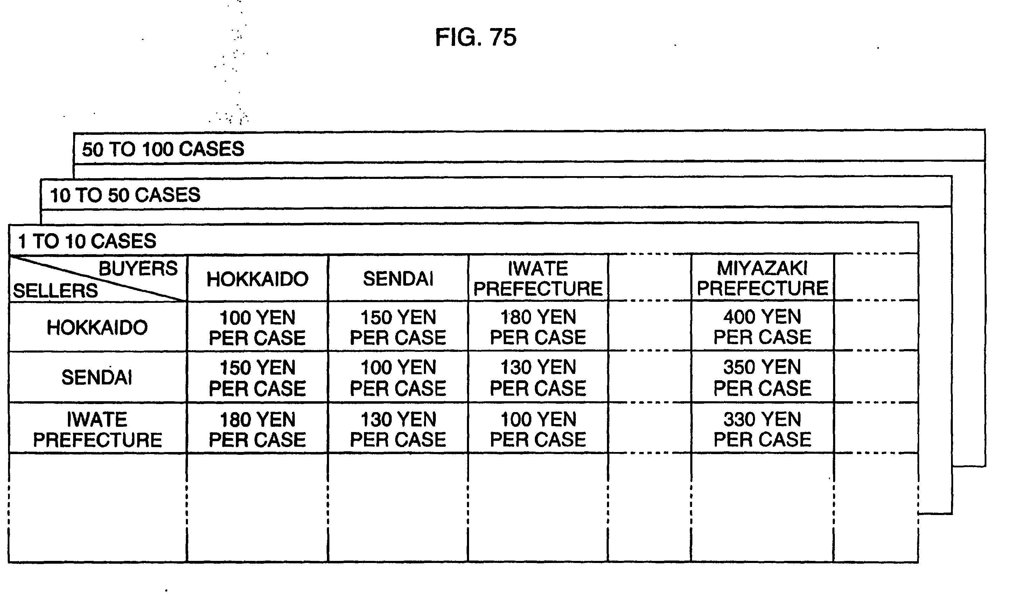

With, regard to a discount table as shown in the above Fig. 73, sellers can prepare their own discount tables for specified buyers. More specifically, for example, sellers can use a discount table which has a higher discount rate than a regular table for buyers frequently dealing with the sellers. Sellers also can use different discount tables according to an attribute of flowers for dealing (plants in pot, cut flowers, volume, weight and the like), season or distribution company. Further, sellers can use a table (distribution cost discount table) which sets a discount rate based on an accumulated volume of future dealing with a buyer and other buyers in a same area. Alternatively, such table can be used for distribution companies. A matrix table for each shipment as shown in Fig. 75 may be also used instead of the discount table shown in the above Fig. 73.

In the embodiment of the present invention, the object goods for dealing are live flowers. But the object goods are not limited to live flowers, and the embodiment can be applied to vegetables and fruits. In other words, the embodiment is advantageous in dealing where distribution cost such as transportation is not fixed due to a constant change of shipment volume and shipment date. The embodiment is also efficient, in dealing other than perishables, in a distribution network where buyers and sellers (dealing counterparts) change at each dealing.

It is needles to say that the object of the present invention is also achieved by supplying a memory medium which memorizes program codes of the software which realizes the server and terminal device functions for the above-described embodiments 1 to 9 to a system or a device, and by reading out and executing the program codes stored in the memory medium by computers (or CPU, MPU and the like) of the system and the device. In such case, the program codes themselves which are read out from the memory medium realize functions of the above-described embodiments, and the memory medium which memorizes the program codes comprises the present invention. Memory medium such as ROM, floppy disk, hard disk, optical disk, magnetic optical disk. CD-ROM, CD-R, magnetic tape, non volatile memory card can be used as the memory medium to supply program codes. It is also needless to say that not only execution of a program code realizes functions of the above-described embodiments, but operation system (OS) of computer also, based on an instruction of the program code, performs a part or all of the actual processing which realizes a function of each embodiment. It is further needless to say that, after the program code which is read out of memory medium is written in an extended function board inserted in a computer or in a memory equipped with an extended function unit. CPU which is equipped in the extended function board and the extended function unit performs a part or all of the actual processing based on instruction of the program code, then the function of the above-described embodiment is realized.

Industrial Applicability

According to the present invention as described above, so called future dealing can be performed on a network by operating the processing on a screen of a terminal device, which are processing of cross dealing by pre-engagement based on order information (buying information) issued by buyers, processing of cross dealing by pre-engagement based on selling information issued by sellers, and dealing process to conclude dealing between pieces of order information and pieces of selling information simultaneously, which is executed in order that conditions of both parties meet. Both buyers and sellers can make up a selling plan and a buying plan for goods without going to a wholesale market, and can perform dealing for desired goods on their own terminal devices. This dealing system gives variety of dealing opportunities to both buyers and sellers that they never had, thus providing efficient goods dealing which did not exist in the past.

In concluding dealing between buying information and selling information, a processing order for pieces of selling information (or buying information) is decided on fixed conditions, and a processing order for the corresponding pieces of buying information (or selling information) which are linked to the selling information (or the buying information) is decided on the fixed condition. Efficient goods dealing can be performed even in case of dealing for large quantity. With respect to selling information issued by sellers, buyers can designate any of the issued selling information as the first or the second dealing condition. Unconcluded selling information on dealing process based on the second dealing condition is automatically sent to the dealing process based on the first dealing condition in order to perform the dealing process again. Thereby, buyers perform two kinds of buying in one operation, one is the buying which strictly conditioned for desired goods (buying due to the second dealing condition), the other is the buying which has a wider condition range (buying due to the first dealing condition). As a result, a rate of dealing conclusion will increase, and dealing efficiency will also tremendously increase.

A screen by which buyers designate any of selling information issued by sellers as dealing condition is composed of three portions, that is, function list display portion, information display portion and condition entry portion. Buyers can select and perform any dealing process from each dealing process on the function list display portion, can refer to information (order information, selling information and the like) occurred from dealing process on the information display portion, and can easily extract (search) any information from information occurred from dealing process on the information entry portion. Accordingly, sellers and buyers can perform dealing before shipment, and can perform dealings simultaneously by referring to or utilizing necessary information. Sellers and buyers also can extract desired goods information for reference. Further, efficiency of dealing greatly increases by means of personal computers and the like.

With regard to dealing for unsold goods caused by dealing process and dealing (urgent dealing) occurred due to an urgent demand such as reservation and exclusion, such dealings also can be performed on a screen of a terminal device. As a result, sellers can sell a large quantity of goods in a variety of dealing means, and can perform unified management of selling goods flow as well. Business efficiency of sellers who need to sell a large quantity of goods efficiently rapidly increases.

Sellers also can perform dealing on a terminal device for the following dealing styles, that is, a dealing style (pre-confirmation dealing process) to sell goods based on information such as forecast (prediction) selling quantity, a dealing style (post-confirmation dealing process) to sell goods based on information such as a confirmed selling quantity as well as perform urgent dealing such as exclusion, and a dealing style (goods-in-stock dealing process) to sell unsold goods after above dealings (pre-confirmation dealing process and post-confirmation dealing process) by auction. Since a result caused by a dealing style is reflected on the following dealing style in accordance with a change of business circumstances, sellers can perform dealing in a different dealing style on a network. This dealing system gives a variety of dealing opportunities not only to both buyers and sellers but also to producers who ship goods that they never had, thus they can perform efficient goods dealing which did not exist in the past, especially efficient.

Additionally, sellers and buyers can perform dealing further efficiently, because they can refer to different dealing process information for each dealing style on the same screen. Further, in dealing conclusion by linking pieces of buying information and pieces of selling information, a set of buying information and a set of selling information are formed by clustering processing, linkage of buying information and selling information is executed on fixed conditions between a set of buying information with the same buying condition and a set of selling information. Linkage of pieces of buying information and pieces of selling information is executed in accordance with a variety of bargain demands, which can increase a rate of dealing conclusion in a short time and efficiently.

Furthermore, buyers and sellers can electrically refer to a distribution cost (such as transportation cost with customers) which occurs after dealing conclusion with customers, and can solve one-sided distribution of goods to activate dealing. This dealing process is especially advantageous in dealing perishables such as live flowers, vegetables and fruits, where distribution cost is not fixed due to a fluctuation of shipment volume and shipment date.

### Claims

1. A goods dealing apparatus that comprises at least one of terminal devices in a system for making a conclusion of a bargain for goods based on selling information and buying information for dealing the goods output from the terminal devices, comprising:

    first dealing processing means for executing processing of a cross dealing by pre-engagement based on said buying information;
    second dealing processing means for executing processing of
    a cross dealing by pre-engagement based on said selling information; and
    third dealing processing means for executing processing of a dealing in which a conclusion is sequentially made with every agreement between said buying information and said selling information after collating pieces of buying information and pieces of selling information.

2. A goods dealing system that makes a conclusion of a bargain for goods based on selling information and buying information for dealing the goods output from terminal devices, wherein at least one of the terminal devices is the goods dealing apparatus claimed in claim 1.

3. A goods dealing system that, by allowing terminal devices and a host to intercommunicate with each other, makes a conclusion of a bargain for goods based on selling information and buying information for dealing the goods output from terminal devices, wherein each of said terminal devices displays information sent thereto on its screen by means of a browser function, and outputs information in response to an operation performed by a user based on the information displayed on the screen;

    said host has a first dealing process function for executing processing of a cross dealing by pre-engagement based on said buying information;
    a second dealing process function for executing processing of
    a cross dealing by pre-engagement based on said selling information; and
    a third dealing process function for executing processing of
    a dealing in which a conclusion is sequentially made with every agreement between said buying information and said selling information after collating pieces of buying information and pieces of selling information.

**4.** A storage medium that stores a program for executing dealing process steps to make a conclusion of a bargain for goods, based on selling information and buying information for a dealing for the goods output from terminal devices, wherein the dealing process steps comprises a first dealing process step for executing processing of a cross dealing by pre-engagement based on said buying information;

a second dealing process step for executing processing of a cross dealing by pre-engagement based on said selling information; and
a third dealing process step for executing dealing to make sequentially a conclusion with every agreement between said buying information and said selling information after collating pieces of buying information and pieces of selling information.

**5.** A goods dealing apparatus that comprises at least one of terminal devices in a system for making a conclusion of a bargain for goods based on selling information and buying information for a dealing the goods output from the terminal devices, comprising:

dealing processing means for executing dealing to make sequentially a conclusion with every agreement between said buying information and said selling information after collating pieces of buying information and pieces of selling information;
wherein the dealing processing means comprises first determining means for determining processing procedures of pieces of selling information in accordance with predetermined conditions, second determining means for determining processing procedures of pieces of buying information in accordance with predetermined conditions.

**6.** A goods dealing system for making a conclusion of a bargain for goods based on selling information and buying information for a dealing of the goods output from terminal devices, wherein at least one of the terminal devices is the goods dealing apparatus claimed in claim 5.

**7.** A goods dealing system for making a conclusion of a bargain for goods based on selling information and buying information for a dealing of the goods output from terminal devices, by allowing the terminal devices and a host to intercommunicate with each other,
wherein each of said terminal devices displays information sent thereto on its screen by means of a browser function, and outputs information in response to an operation performed by a user based on the information displayed on the screen;

said host has a dealing process function for executing processing of a dealing in which a conclusion is sequentially made with every agreement between the buying information and the selling information after collating pieces of buying information and pieces of selling information; and
said dealing process function includes a first determining function for determining a processing order of pieces of selling information in accordance with predetermined conditions, a second determining function for determining a processing order of pieces of buying information in accordance with predetermined conditions.

**8.** A storage medium that stores a program for executing dealing process steps to make a conclusion of a bargain for goods based on selling information and buying information for dealing the goods output from terminal devices, wherein said dealing process steps include a processing step for executing a dealing for making a conclusion sequentially from a first agreement between the buying information and the selling information after collating pieces of buying information and pieces of selling information, and said processing step includes a first determining step for determining a processing order of pieces of selling information in accordance with predetermined conditions, a second determining step for determining a processing order of pieces of buying information in accordance with predetermined conditions.

**9.** A goods dealing apparatus that comprises at least one of terminal devices in a system for making a conclusion of a bargain for goods based on selling information and buying information for dealing the goods output from terminal devices, comprising: dealing processing means for executing dealing for making a conclusion sequentially from a first agreement between the buying information and the selling information after collating pieces of buying information and pieces of selling information, wherein said dealing processing means includes first specifying means for specifying any piece of information on the goods included in the selling information as a first dealing condition, second specifying means for specifying any piece of information on the goods included in the selling information as a second dealing condition, and processing proceed means for proceeding to a dealing process for processing, in accordance with the first dealing condition, selling information on unconcluded goods generated in a dealing process in accordance with the second dealing condition.

10. A goods dealing system for making a conclusion of a bargain for goods based on selling information and buying information for a dealing of the goods output from terminal devices, wherein at least one of the terminal devices is the goods dealing apparatus claimed in claim 9.

11. A goods dealing system that, by allowing terminal devices and a host to intercommunicate with each other, makes a conclusion of a bargain for goods based on selling information and buying information for dealing the goods output from the terminal devices,
   wherein each of the terminal devices displays information sent thereto on its screen by means of a browser function, and outputs information in response to an operation performed by a user based on the information displayed on the screen,

   said host has a dealing process function for executing processing of a dealing in which a conclusion is sequentially made with every agreement between the buying information and the selling information after collating pieces of buying information and pieces of selling information, and said dealing process function includes a first specifying function for specifying any piece of information on the goods included in the selling information as a first dealing condition, a second specifying function for specifying any piece of information on the goods included in the selling information as a second dealing condition, and a processing proceed function for proceeding to a dealing process for processing, in accordance with the first dealing condition, selling information on unconcluded goods generated in a dealing process in accordance with the second dealing condition.

12. A storage medium that stores a program for executing processing steps to make a conclusion of a bargain for goods based on selling information and buying information for dealing the goods output from terminal devices,
   wherein said processing steps include a dealing process step for executing dealing for making a conclusion sequentially from a first agreement between the buying information and the selling information after collating pieces of buying information and pieces of selling information, and

   said dealing process step includes first specifying step for specifying any piece of information on the goods included in said selling information as a first dealing condition, second specifying step for specifying any piece of information on the goods included in said selling information as a second dealing condition, and processing proceed step for proceeding to a dealing process for processing, in accordance with said first dealing condition, selling information on unconcluded goods generated in a dealing process in accordance with the second dealing condition.

13. A goods dealing apparatus that comprises at least one of terminal devices in a system for making a conclusion of a bargain for goods based on selling information and buying information for dealing the goods output from the terminal devices, the goods dealing apparatus comprising:

   a screen including:
   a function list display portion for selectively executing one of a first dealing process function for executing a cross dealing by pre-engagement based on the buying information, a second dealing process function for executing a cross dealing by pre-engagement based on the selling information, and a third dealing process function for executing a dealing in which a conclusion is sequentially made with every agreement between the buying information and the selling information after collating pieces of buying information and pieces of selling information;
   an information display portion for displaying information generated by executing one of the functions selected by the function list display portion; and
   a condition entering portion for entering conditions at the time any piece of information is extracted from the information generated by executing one of the functions selected by the function list display portion.

14. A goods dealing system that makes a conclusion of a bargain for goods based on selling information and buying information for dealing the goods output from terminal devices, wherein at least one of the terminal devices is the goods dealing apparatus claimed in claim 13.

15. A goods dealing system that, by allowing terminal devices and a host to intercommunicate with each other, makes a conclusion of a bargain for goods based on selling information and buying information for dealing the goods output from the terminal devices,

wherein said host has a first dealing process function for executing processing of a cross dealing by pre-engagement based on said buying information, a second dealing process function for executing processing of a cross dealing by pre-engagement based on said selling information, and a third dealing process function for executing processing of a dealing in which a conclusion is sequentially made with every agreement between the buying information and the selling information after collating pieces of buying information and pieces of selling information; and

each of said terminal devices has a screen which displays information sent thereto by means of a browser function and outputs information in response to an operation performed by a user based on the information displayed thereon, the screen including a function list display portion for selectively executing one of said first dealing process function, said second dealing process function, and said third dealing process function, an information display portion for displaying information generated by executing one of the functions selected by said function list display portion, and a condition entering portion for entering conditions at the time any piece of information is extracted from the information generated by executing one of the functions selected by said function list display portion.

16. A storage medium that stores a program for executing dealing process steps to make a conclusion of a bargain for goods, based on selling information and buying information for a dealing for the goods output from terminal devices, wherein said dealing process steps include steps for displaying

a screen comprises:
a function list display portion for selectively executing one of a first dealing process function for executing a cross dealing by pre-engagement based on the buying information, a second dealing process function for executing a cross dealing by pre-engagement based on the selling information, and a third dealing process function for executing a dealing in which a conclusion is sequentially made with every agreement between the buying information and the selling information after collating pieces of buying information and pieces of selling information;
an information display portion for displaying information generated by executing one of the functions selected by the function list display portion; and
a condition entering portion for entering conditions at the time any piece of information is extracted from the information generated by executing one of the functions selected by the function list display portion.

17. A goods dealing apparatus that comprises at least one of terminal devices in a system for making a conclusion of a bargain for goods based on selling information and buying information for dealing the goods output from terminal devices, comprising:

first dealing processing means for executing processing of a cross dealing by pre-engagement based on buying information;
second dealing processing means for executing processing of a cross dealing by pre-engagement based on the selling information;
third dealing processing means for executing processing of a dealing in which a conclusion is sequentially made with every agreement between the buying information and the selling information after collating pieces of buying information and pieces of selling information; and
fourth dealing processing means for executing processing of a dealing for unsold goods generated by an execution of processing the dealing by any one of the first, second and third dealing processing means, or for executing a dealing for a sale not by the first, second and third dealing processing means.

18. A goods dealing system for making a conclusion of a bargain for goods based on selling information and buying information for dealing the goods output from terminal devices, wherein at least one of the terminal devices is the goods dealing apparatus claimed in claims 17.

19. A goods dealing system that, by allowing terminal devices and a host to intercommunicate with each other, makes a conclusion of a bargain for goods based on selling information and buying information for dealing the goods output from the terminal devices, wherein each of the terminal devices displays information sent thereto on its screen by means of a browser function, and outputs information in response to an operation performed by a user based on the information displayed on the screen, and said host has a first dealing process function for executing processing of a cross dealing by pre-engagement based on buying information, a second dealing process function for executing processing of a cross dealing by pre-engagement based on the selling information, a third dealing process function for executing processing of a dealing in which a conclusion is sequentially made with every agreement between the buying information and the selling information after collating pieces of buying information and pieces of selling information, and a fourth dealing process function for executing processing of a dealing for unsold goods generated by an execution of processing the dealing by any one of the first, second and third dealing process functions, or for executing a dealing for a sale not by the first, second and third dealing process functions.

20. A storage medium that stores a program for executing processing steps to make a conclusion of a bargain for goods based on selling information and buying information for dealing the goods output from terminal devices, wherein said dealing process steps comprise:

a first dealing process step for executing processing of a cross dealing by pre-engagement based on the buying information;
a second dealing process step for executing processing of a cross dealing by pre-engagement based on the selling information;
a third dealing process step for executing a dealing to make sequentially a conclusion with every agreement between the buying information and the selling information after collating pieces of buying information and pieces of selling information; and
a fourth dealing process step for executing processing of a dealing for unsold goods generated by an execution of processing the dealing by any one of the first, second and third dealing processing means, or for executing a dealing for a sale not by the first, second and third dealing processing means.

21. A goods dealing apparatus that comprises at least one of terminal, devices in a system for making a conclusion of a bargain for goods based on selling information and buying information for dealing the goods output from terminal devices, comprising:

post-confirmation dealing processing means for executing a dealing process by outputting the selling information based on confirmed information; and
goods-in-stock selling processing means for executing a dealing process of unsold goods generated by execution of the post-confirmation dealing processing means.

22. A goods dealing apparatus that comprises at least one of terminal devices in a system for making a conclusion of a bargain for goods based on selling information and buying information for dealing the goods output from terminal devices, comprising:

pre-confirmation dealing processing means for executing a dealing process by outputting the selling information based on forecast information before confirmation;
post-confirmation dealing processing means for executing a dealing process by outputting the selling information based on confirmed information; and
goods-in-stock selling processing means for executing a dealing process of unsold goods generated by any execution of the pre-confirmation dealing processing means and the post-confirmation dealing processing means.

23. A system that makes a conclusion of a bargain for goods based on selling information and buying information for dealing the goods output from terminal devices, wherein at least one of the terminal devices is the goods dealing apparatus claimed in claim 22 or claim 23.

24. A goods dealing system that, by allowing terminal devices and a host to intercommunicate with each other, makes a conclusion of a bargain for goods based on selling information and buying information for dealing the goods output from the terminal devices, wherein each of said terminal devices displays information sent thereto on its screen by means of a browser function, and outputs information in response to an operation performed by a user based on the information displayed on the screen; and said host comprise post-confirmation dealing process function for executing a dealing process by outputting the selling information based on confirmed information, and goods-in-stock selling processing function for executing a dealing process of unsold goods generated by the execution of the post-confirmation dealing process function.

25. A goods dealing method that executes a dealing process to make a conclusion of a bargain of goods based on selling information and buying information for a dealing of the goods output from terminal devices,
the method comprising:

post-confirmation dealing process step for executing a dealing process by outputting the selling information based on confirmed information; and
goods-in-stock selling processing step for executing a dealing process of unsold goods generated in the execution of the post-confirmation processing step.

26. A storage medium that stores a program for executing dealing process steps to make a conclusion of a bargain for goods, based on selling information and buying information for a dealing for the goods losing or reducing their values after passage of a period of time, which are output from terminal devices,
wherein said dealing process steps include the processing step of the goods dealing method claimed in claim 25.

27. A goods dealing apparatus that comprises at least one of terminal devices in a system for making a conclusion of a bargain for goods by executing at least one of first and second dealing process on its screen, based on selling information and buying information for dealing the goods output from the terminal devices,
wherein each of the terminal devices comprises a screen including a first dealing Information display portion for displaying information on the first cross dealing by pre-engagement processing; and

a second dealing information display portion for displaying information on the second cross dealing by pre-engagement processing.

28. A goods dealing system for making a conclusion of a bargain for goods based on selling information and buying information for dealing the goods output from terminal devices, wherein at least one of the terminal devices is the goods dealing apparatus claimed in claim 27.

29. A goods dealing system that, by allowing terminal devices and a host to intercommunicate with each other, makes a conclusion of a bargain for goods based on selling information and buying information for dealing the goods output from the terminal devices,
wherein said host has at least a first dealing process function for executing a first dealing process and a second dealing process function for executing a second dealing process; and each terminal device displays information sent thereto on its screen by means of a browser function, and outputs information in response to an operation performed by a user based on the information displayed on the screen, the screen having a first dealing information display portion for displaying information on the first dealing process and a second dealing information display portion for displaying information on the second dealing process.

30. A goods dealing method that, based on selling information and buying information for a dealing of goods output from terminal devices, executes at least first and second dealing process on its screen to make a conclusion of a bargain for the goods, comprising:

a step for displaying information on the first cross dealing by pre-engagement processing and information on the second cross dealing by pre-engagement processing on the same screen.

31. A storage medium that stores a program for executing at least first and second dealing process on a screen to make a conclusion of a bargain for goods based on selling information and buying information for dealing, which are output from terminal devices,
wherein said dealing step includes the processing step of the goods dealing method claimed in claim 30.

32. A goods dealing method that makes a conclusion of a bargain for goods based on pieces of selling information and pieces of buying information for a dealing of the goods output from terminal devices, comprising:

a processing step that includes the steps of:

forming, from pieces of buying information, clusters in accordance with the buying condition included in the buying information;
forming, from pieces of selling information, clusters in accordance with said buying condition; and
making the conclusion of the bargain for the goods by linking the buying information included in the respective clusters with the selling information included in the corresponding clusters between the clusters of the buying information and the selling information.

33. A goods dealing method that makes a conclusion of a bargain for goods based on pieces of selling information and pieces of buying information for a dealing of the goods output from terminal devices, comprising:

a processing step that includes the steps of:

determining, in accordance with predetermined conditions, a processing order to make a conclusion of the bargain for pieces of buying information;forming, from pieces of selling information, a cluster of the selling information which meets buying conditions Included in processing object buying information in accordance with the processing order; and linking the buying information with the selling information between the processing object buying information and buying information included in the cluster of pieces of buying information, thus making a conclusion of the bargain.

34. A goods dealing method that makes a conclusion of a bargain for goods based on pieces of selling information and pieces of buying information for a dealing of the goods output from terminal devices, comprising:

a processing step that includes the steps of:

determining, in accordance with predetermined conditions, a processing order to make a conclusion of the bargain for pieces of buying information;forming, from pieces of selling information, a cluster which meets buying conditions included in processing object buying information in accordance with the processing order; and
linking the buying information with the selling information between the processing object buying information and buying information included in the cluster of the buying information, thus making a conclusion of the bargain.

35. A goods dealing apparatus that makes a conclusion of a bargain of goods based on pieces of selling information and pieces of buying information for a dealing of the goods output from terminal devices, the apparatus comprising:

first cluster formation means for forming, from pieces of buying information, clusters in accordance with the buying condition included in the buying information;
second cluster formation means for forming, from pieces of selling information, clusters in accordance with said buying condition; and
dealing contract making means for making a conclusion of the bargain by linking the selling information with the buying information between the clusters formed by the first cluster formation means and the clusters formed by the second cluster formation means.

36. A goods dealing apparatus that makes a conclusion of a bargain of goods based on pieces of selling information and pieces of buying information for a dealing of the goods output from terminal devices, the apparatus comprising:

processing order determining means for determining, in accordance with predetermined conditions, a processing order to make a conclusion of the bargain for pieces of buying information;
cluster formation means for forming a cluster from pieces of selling information, the cluster meeting buying conditions which are included in processing object buying information in accordance with the processing order determined by the processing order determining means; and
dealing contract making means for making a conclusion of the bargain by linking the selling information with the buying information between the processing object buying information and the buying information included in the cluster formed by the cluster formation means.

37. A goods dealing system In which terminal devices for outputting selling information for dealing goods, terminal devices for outputting buying information for dealing the goods, and a host for making a conclusion of a bargain for the goods based on pieces of selling information and pieces of buying information output from the terminal devices are connected to each other,
wherein said host has the function of the goods dealing apparatus claimed in any one of claims 35 and 36.

**38.** A storage medium which stores a program for executing processing steps to make a conclusion of a bargain for goods based on pieces of selling information and pieces of buying information for dealing the goods output from terminal devices, wherein said processing step Includes the processing steps of the goods dealing method claimed in any one of claims 32, 33 and 34.

**39.** A goods dealing apparatus which manages a system for making a conclusion of a dealing based on selling information and buying information for dealing goods output from terminal devices, comprising:

> storage means for storing previously information on distribution cost based on a distribution route between sellers and buyers, which is generated by a conclusion of the dealing; and
> outputting means for acquiring distribution cost information corresponding to the distribution route between the seller and the buyer, being objects of the dealing, from the storage means, thus outputting the distribution cost information, when the dealing is performed.

**40.** A goods dealing apparatus that comprises at least one of terminal devices in a system for making a conclusion of a dealing based on selling information and buying information for dealing goods output from terminal devices, comprising:

> display means for displaying information on distribution cost based on a distribution route between the sellers and the buyers, which is generated by a settlement of the dealing in accordance with customers in the dealing.

**41.** A system which makes a conclusion of a dealing for goods based on selling information and buying information for dealing the goods output from terminal devices, comprising: the goods dealing apparatus claimed in any one of claims 39 and 40.

**42.** A goods dealing system, which makes a conclusion of a dealing based on selling information and buying information for dealing goods output from terminal devices, wherein at least one of terminal devices is the goods dealing apparatus claimed in claim 39 or claim 40.

**43.** A goods dealing system that, by allowing terminal devices and a host to intercommunicate with each other, makes a conclusion of a bargain for goods based on selling information and buying information for dealing the goods output from the terminal devices,
wherein each of the terminal devices displays information sent thereto on its screen by means of a browser function, and outputs information in response to an operation performed by a user based on the information displayed on the screen; and said host comprises storage means for storing previously information on distribution cost based on a distribution route between sellers and buyers, which is generated by making a conclusion of the dealing, and transmitting means for acquiring information on distribution cost corresponding to the distribution route between the sellers and the buyers, being objects of the dealing, from the storage means and outputting the information on the distribution cost and the information on the goods to the terminal device at the time the dealing is performed by the terminal device.

**44.** A goods dealing method that makes a conclusion of a bargain of goods based on selling information and buying information for a dealing of the goods output from terminal devices, comprising the steps of:

> previously storing information on distribution cost based on a distribution route between sellers and buyers, which is generated by a settlement of the dealing, in a memory; and acquiring information on the goods and the information on the distribution cost corresponding to the distribution route between the sellers and the buyer, being objects of the dealing, from the memory to output the information on the goods and the information on the distribution cost when the dealing is performed.

**45.** A storage medium that stores a program for executing processing steps to make a conclusion of a bargain for goods based on selling information and buying information for dealing the goods output from terminal devices, wherein said processing steps include the processing steps of the goods dealing method claimed In claim 44.

# FIG. 1

# FIG. 2

SERVER

INFORMATION RECEIVING AND ALLOTTING
310

APP FUNCTION

- DEALING PROCESSING AND PRICE FORMING FUNCTION ~321
- PRICE FORECAST FUNCTION ~322
- SYSTEM OPERATION MANAGEMENT FUNCTION ~323
- PERSONAL MARKET ANALYZING FUNCTION (BARGAIN STATUS ANALYSIS) ~324
- PERSONAL DATA ALLOTTING MANAGEMENT FUNCTION ~325

DBM
330

300

SELLERS AND BUYERS (DEALERS)

INFORMATION RECEIVING AND ALLOTTING
410

USER I/F
420
BROWSER

SELF ACCOUNTS MANAGEMENT FUNCTION
431

COOPERATION FUNCTION
432
APP

DBM
440

400

EP 1 067 471 A1

## FIG. 3

| ORDER | PRE-ENGAGEMENT | GENERAL I | GENERAL II | CONCLUSION-ARRIVAL OF GOODS | NUMERICAL STATISTICS | NOTICE | END |

# FIG. 4

| ORDER | PRE-ENGAGEMENT | COPY | GENERAL | CONCLUSION·ARRIVAL OF GOODS | NUMERICAL STATISTICS | NOTICE | END |
|---|---|---|---|---|---|---|---|

EP 1 067 471 A1

# FIG. 5

SELLERS                    SERVER                    BUYERS

SELLING (PRODUCTING) PLAN

REFERENCE ◄──────────────────────── DESIRED BUYING INFORMATION

PURCHASING (STOCK) PLAN

ex. FEBRUARY 14
ROSE RED 5000 SPRAYS

SUBSCRIPTION INFORMATION  W ──────────────────► REFERENCE

SELECT

NOTIFY CONCLUSION          REGISTRATION

REFERENCE ◄────────────────────── ORDER INFORMATION

EP 1 067 471 A1

# FIG. 6

EP 1 067 471 A1

ORDER INFORMATION LIST SCREEN

[NEW·CHANGE] [«] [<] [>] [»] [DELETE]

SEARCH RESULTS:66  1 TO 20 ARE DISPLAYED.
TOTAL NUMBER:3,103,660 SPRAYS   TOTAL UNSELECTED NUMBER:2,959,740 SPRAYS   TOTAL AMOUNT:309,905,900 YEN

| SELECT | ARRIVAL DATE OF GOODS | FLOWER NAME | BRAND NAME | COLOR | RANK | DISTRICT OF PRODUCTION | TOTAL NUMBER | UNCONFIRMED NUMBER | UNIT | DESIRED PRICE (YEN) | SUBSCRIPTION | cm | g | FLOWER PER SPRAY | STATUS BEFORE CUTTING | | DEADLINE | ORDER NO. | COMMENT |
|---|---|---|---|---|---|---|---|---|---|---|---|---|---|---|---|---|---|---|---|
| □ | 97/07/28 | GERBERA STANDARD | PHYTHM GERBERA | ORANGE | 2L | AICHI | 100 | 100 | SPRAY | 23 | 0 | RE | | | | | | 97/07/26 | 0000002575 | |
| □ | 97/07/28 | CHRYSANTHEMUM | KOGIKU (WHITE) | WHITE | EXCELLENT | IBARAKI | 200 | 200 | SPRAY | 30 | 0 | RE | | | | | | 97/07/26 | 0000002521 | |
| □ | 97/07/28 | CHRYSANTHEMUM | KOGIKU (YELLOW-CREAM) | YELLOW | EXCELLENT | IBARAKI | 600 | 600 | SPRAY | 35 | 0 | RE | | | | | | 97/07/26 | 0000002368 | |
| □ | 97/07/28 | CHRYSANTHEMUM | KOGIKU (OTHER) | OTHER | EXCELLENT | IBARAKI | 400 | 400 | SPRAY | 30 | 0 | RE | | | | | | 97/07/28 | 0000002394 | |
| □ | 97/07/28 | CHRYSANTHEMUM | SEIUN | WHITE | VERY GOOD L | AICHI | 1,200 | 1,200 | SPRAY | 50 | 0 | RE | | | | | | 97/07/26 | 0000002524 | |
| □ | 97/07/28 | STATICE | SOBIA | MIXED COLOR | EXCELLENT L | NAGANO | 100 | 100 | SPRAY | 40 | 0 | RE | | | | | | 97/07/26 | 0000002366 | |
| □ | 97/07/28 | STATICE | CRYSTAL YELLOW STATICE | YELLOW | VERY GOOD L | HOKKAIDO | 200 | 200 | SPRAY | 45 | 0 | RE | | | | | | 97/07/26 | 0000002338 | |
| □ | 97/07/28 | STATICE | FLASH PINK STATICE | PINK | VERY GOOD L | | 300 | 300 | SPRAY | 45 | 0 | RE | | | | | | 97/07/26 | 0000002343 | |
| □ | 97/07/28 | SOLIDAGO | | | A L | NAGANO | 140 | 140 | SPRAY | 25 | 0 | RE | | | | | | 97/07/26 | 0000002558 | |
| □ | 97/07/28 | DIANTHUS NADESHIKO | YOUKIHI | PINK | 2L | HOKKAIDO | 100 | 100 | SPRAY | 30 | 0 | RE | | | | | | 97/07/26 | 0000001301 | |
| □ | 97/07/28 | PRAIRIE GENTIAN ONE LAYER | AZUMANO NAMI | MIXED COLOR BLUE | A 2L | IWATE | 20 | 20 | SPRAY | 180 | 0 | RE | | | | | | 97/07/26 | 0000002366 | |
| □ | 97/07/28 | PRAIRIE GENTIAN ONE LAYER | AZUMANO SHIRABE | YELLOW | A 2L | IWATE | 30 | 30 | SPRAY | 150 | 0 | RE | | | | | | 97/07/26 | 0000002384 | |
| □ | 97/07/28 | PRAIRIE GENTIAN ONE LAYER | ASUKANO REN | MIXED COLOR BLUE | 2L | NAGANO | 160 | 180 | SPRAY | 140 | 0 | RE | | | | | | 97/07/26 | 0000002439 | |
| □ | 97/07/28 | PRAIRIE GENTIAN ONE LAYER | ASUKANO SHOU | MIXED COLOR PINK | 2L | NAGANO | 60 | 60 | SPRAY | 160 | 0 | RE | | | | | | 97/07/25 | 0000002432 | |
| □ | 97/07/28 | PRAIRIE GENTIAN ONE LAYER | ASUKANO SHOU | MIXED COLOR PINK | L | NAGANO | 150 | 150 | SPRAY | 100 | 0 | RE | | | | | | 97/07/28 | 0000002443 | |
| □ | 97/07/28 | PRAIRIE GENTIAN ONE LAYER | ASUKANO NISHIKI | MIXED COLOR PINK | 2L | NAGANO | 20 | 20 | SPRAY | 160 | 0 | RE | | | | | | 97/07/28 | 0000002436 | |
| □ | 97/07/28 | ROSE SPRAY | BRIDE IN JOY | ORANGE | L | AICHI | 100 | 100 | SPRAY | 40 | 0 | RE | | | | | | 97/07/28 | 0000002266 | |
| □ | 97/07/28 | ROSE SPRAY | FANTASY SPRAY ROSE | LIGHT PINK | M | AICHI | 100 | 100 | SPRAY | 50 | 0 | RE | | | | | | 97/07/26 | 0000002262 | |
| □ | 97/07/28 | FREESIA | ALADDIN | YELLOW | VERY GOOD L | HOKKAIDO | 200 | 200 | SPRAY | 10 | 0 | RE | | | | | | 97/07/26 | 0000002305 | |
| □ | 97/08/04 | GERBERA STANDARD | CHAMPAGNE | PINK | 2L | AICHI | 300 | 300 | SPRAY | 28 | 0 | RE | | | | | | 97/08/02 | 0000002673 | |

[SEARCH] [CANCEL CONDITION]   [NEW]

# FIG. 7

SELLERS      SERVER      BUYERS

**(B)**

DESIRED SELLING INFORMATION → REFERENCE

TYPE 1
TYPE 2

REFERENCE ← BUYING REGISTRATION

TYPE 1 : SELECT
TYPE 2 : BID REGISTRATION

PRICE DETERMINING PROCESSING

⇨ AUTOMATIC DECISION
EXTRACT APPROPRIATE
BUYING INFORMATION
FROM A PLURALITY OF DESIRED BUYERS
AND DECIDE SELLING

(COPY)

**(C)**

DESIRED SELLING INFORMATION → REFERENCE

UNSOLD INFORMATION OF B

NEW SELLING INFORMATION

BUYING REGISTRATION

DEALING CONCLUSION (PRICE) DETERMINING PROCESSING

C1 : SPECIFYING OPTIONAL CONDITIONS
FOR SELLING INFORMATION IS POSSIBLE
(UPPER CONDITION ITEMS)

C2 : SPECIFYING DETAIL CONDITOONS
FOR SELLING INFORMATION IS POSSIBLE

REFERENCE ←

GOODS
{ FLOWER NAME / COLOR } { BRAND NAME / RANK }

C1      C2

REFERENCE

EP 1 067 471 A1

# FIG. 8

SHIPMENT INFORMATION LIST SCREEN

NEW·CHANGE [≪] [<] [>] [≫] DELETE

SEARCH RESULTS:8 1 TO 18 ARE DISPLAYED.
GRAND TOTAL NUMBER:121,560 SPRAYS  TOTAL AMOUNT:77,820,000 YEN  TOTAL RESIDUAL NUMBER:177,840 SPRAYS  TOTAL AMOUNT FOR RESIDUAL NUMBER:84,402,500 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY |
|---|---|---|---|---|---|---|---|---|---|---|---|---|---|---|---|
| □ | 97/09/01 | STATICE | SHUNYUATA (PURPLE-LIGHT PURPLE) | PURPLE | VERY GOOD | HOKKAIDO | | 100 | 100 | 100 | SPRAY | 100 | 100 | | |
| □ | 97/09/01 | STATICE | SHUNYUATA (PURPLE-LIGHT PURPLE) | PURPLE | VERY GOOD | HOKKAIDO | | 100 | 100 | 100 | SPRAY | 100 | 100 | | |
| □ | 97/09/01 | DELPHINIUM × BELLADONNA | BELLADONNA FORUKAFURIDEN | DEEP BLUE | VERY GOOD | IWATE | | 100 | 100 | 100 | SPRAY | 100 | 90 | | |
| □ | 97/09/02 | CARNATION SPRAY | BARBARA LIGHT PINK BARBARA | LIGHT PINK | VERY GOOD | HOKKAIDO | | 100 | 100 | 100 | SPRAY | 100 | 90 | | |
| □ | 97/09/02 | CHRYSANTHEMUM—LARGE | SEIUN | WHITE | VERY GOOD | HOKKAIDO | | 100 | 100 | 90 | SPRAY | 100 | 90 | | |
| □ | 97/10/10 | PERENNIALASTER PEACOCK ASTER | BURASUBERI | WHITE | VERY GOOD | MIYAZAKI | | 10 | 5 | 4 | SPRAY | 100 | 90 | 10 | 3 |
| □ | 97/10/10 | STATICE HYBRID | MISTY BLUE | PURPLE | VERY GOOD | HOKKAIDO | | 100 | 100 | 95 | SPRAY | 100 | 90 | 10 | 1 |
| □ | 97/10/10 | SUNFLOWER | SUNRICH ORANGE | ORANGE | VERY GOOD | IWATE | | 100 | 100 | 100 | SPRAY | 100 | 90 | 10 | 2 |
| □ | 97/10/31 | SUNFLOWER | SUNRICH ORANGE | ORANGE | VERY GOOD | IWATE | | 100 | 100 | 100 | SPRAY | 100 | 90 | 10 | 2 |
| □ | 97/10/31 | SUNFLOWER | SUNRICH ORANGE | ORANGE | VERY GOOD | IWATE | | 100 | 100 | 100 | SPRAY | 200 | 90 | 10 | 2 |
| □ | 97/12/01 | CHRYSANTHEMUM—LARGE | SUMMER YELLOW | YELLOW | VERY GOOD 2L | AICHI | | 100 | 30 | 25 | SPRAY | 85 | 90 | | |
| □ | 97/12/02 | CHRYSANTHEMUM—LARGE | SUMMER YELLOW | YELLOW | VERY GOOD 2L | AICHI | | 100 | 30 | 25 | SPRAY | 90 | 90 | | |
| □ | 97/12/02 | STATICE | SHUNYUATA (PURPLE-LIGHT PURPLE) | PURPLE | VERY GOOD 2L | WAKAYAMA | | 100 | 10 | 8 | SPRAY | 85,120 | 90 | | |
| □ | 97/12/02 | STATICE | SHUNYUATA (PURPLE-LIGHT PURPLE) | PURPLE | VERY GOOD 2L | HOKKAIDO | | 100 | 85 | 85 | SPRAY | 70 | 90 | | |
| □ | 97/12/02 | DELPHINIUM × BELLADONNA | BELLADONNA FORUKAFURIDEN | DEEP BLUE | VERY GOOD 2L | HOKKAIDO | | 50 | 10 | 10 | SPRAY | 150 | 90 | | |
| □ | 97/12/02 | SUNFLOWER | SUNRICH LEMON | UNDECIDED | VERY GOOD | IWATE | | 50 | 10 | 10 | SPRAY | 50 | 90 | | |
| □ | 97/12/03 | CHRYSANTHEMUM—LARGE | SUMMER YELLOW | YELLOW | VERY GOOD 2L | AICHI | | 100 | 20 | 10 | SPRAY | 95 | 90 | | |
| □ | 97/12/04 | CHRYSANTHEMUM—LARGE | SUMMER YELLOW | YELLOW | VERY GOOD 2L | AICHI | | 100 | 100 | 100 | SPRAY | 100 | 90 | | |

SHIPMENT INFORMATION SEARCH DISPLAY

SEARCH DELETE CONDITION  NEW

ARRIVAL DATE OF GOODS [　　▼] ~ [　　▼]  OINFORMATION REGISTRATION DATE [　　▼]
FLOWER NAME [　　▼]  OBRAND NAME [　　▼]  OCOLOR [　　▼]

# FIG. 9

EP 1 067 471 A1

[ORDER] [PRE-ENGAGEMENT] [GENERAL I] [GENERAL II] [CONCLUSION·ARRIVAL OF GOODS] [NUMERICAL STATISTICS] [NOTICE] [END]

SHIPMENT／BID INFORMATION LIST SCREEN                                                     [NEW] [≪] [＜] [＞] [≫]

SEARCH RESULTS:3  1 TO 3 ARE DISPLAYED. TOTAL RESIDUAL NUMBER:36,000 SPRAYS

| SELECT | ARRIVAL DATE OF GOODS | FLOWER NAME | BRAND NAME | COLOR | RANK | SELLERS | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm |
|---|---|---|---|---|---|---|---|---|---|---|---|---|---|---|
| ☐ | 97／12／01 | ROSE STANDARD | ROTEROSE (＝ASAMI RED) | RED | VERY GOOD 2L | | SHIZUOKA | | 60 | 20 | 20 | SPRAY | 160 | 70 |
| ☐ | 97／12／15 | CARNATION SPRAY | CASABLANCA | RED | VERY GOOD 4L | | AICHI | | 100 | 500 | 300 | SPRAY | 80 | 100 |
| ☐ | 97／12／15 | CHRYSANTHEMUM LARGE FLOWER | FRIEND OF AUTUMN | WHITE | VERY GOOD | | FUKUOKA | | 100 | 100 | 500 | SPRAY | 150 | 100 |

SHIPMENT／BID INFORMATION SEARCH DISPLAY                                                  [SEARCH] [DELETE CONDITION]

OARRIVAL DATE OF GOODS [＿＿＿＿＿ ▼] ~ [＿＿＿＿＿ ▼]

OFLOWER NAME [＿＿＿＿＿＿＿＿＿ ▼]  OBRAND NAME [＿＿＿＿＿＿＿ ▼]  OCOLOR [＿＿＿＿ ▼]

ORANK BY PRODUCER [＿＿ ▼]  OSTANDARD (cm) [＿＿ ▼]      ODISTRICT OF PRODUCTION [＿＿ ▼]

FIG. 10

EP 1 067 471 A1

<MARKET MANAGER>

| CONDITION FOR CORECAST |

MODEM

( MULTI-VARIATE ANALYSIS )

ACCUMULATED DEALING CONCLUSION DB

FORECASTED PRICE

# FIG. 11

DEALING (B)    DEALING (C)
 SELLING x   ≠   SELLING x'
 LOWEST y   ≠   LOWEST y'

DEALING (B)
SELLING

DEALING CONCLUSION DB

UNCONCLUDED DEALING DB

JUDGE PROCEEDING TO C

REFERENCE → COPY → REGISTER AS SELLING INFORMATION C

SELLERS

SELLERS · REFERENCE
         · COPY
         · NEW REGISTRATION
         · REFERENCE→NEW REGISTRATION

NEW REGISTRATION

SELLING x₁'
SELLING y₁'

SELLING x
SELLING y

⇩ CHANGE

( PRICE CHANGE WHEN REGISTRATION TO SELLING INFORMATION C )

SELLING x'
SELLING y'

SELLING x₁'
SELLING y₁'

EP 1 067 471 A1

# FIG. 12

UNCONCLUDED SHIPMENT INFORMATION LIST SCREEN

SEARCH RESULTS:72  61 TO 72 ARE DISPLAYED.
TOTAL NUMBER:102,150 SPRAYS   TOTAL AMOUNT:126,203,380 YEN   TOTAL RESIDUAL NUMBER:78,060 SPRAYS   TOTAL AMOUNT FOR RESIDUAL NUMBER:124,749,830 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY | STATUS BEFORE CUTTING | | SHIPMENT NO. | COMMENT |
|---|---|---|---|---|---|---|---|---|---|---|---|---|---|---|---|---|---|---|---|
| ☐ | 97/07/28 | LILY TRUMPET LILY | NOZOMI TRUMPET LILY | WHITE | L | NAGANO | | 100 | 10 | 8 | SPRAY | 25 | 100 | 1 | 1 | 1 | | 0000000024 | 1 FLOWER |
| ☐ | 97/07/28 | LILY TRUMPET LILY | NOZOMI TRUMPET LILY | WHITE | 2L | NAGANO | | 100 | 15 | 15 | SPRAY | 80 | 100 | 1 | 1 | 1 | | 0000000025 | |
| ☐ | 97/08/04 | CHRYSANTHEMUM SPRAY CHRYSANTHEMUM | ALPS | WHITE | RANK 1 | AICHI | | 100 | 3 | 2 | SPRAY | 60 | 90 | | | | | 0000002268 | |
| ☐ | 97/08/04 | CHRYSANTHEMUM SPRAY CHRYSANTHEMUM | TOUAMARIN SP GIKU | PINK | EXCELLENT | AICHI | | 100 | 3 | 3 | SPRAY | 80 | 90 | | | | | 0000002271 | |
| ☐ | 97/08/04 | CHRYSANTHEMUM SPRAY CHRYSANTHEMUM | TOUAMARIN SP GIKU | PINK | RANK 1 | AICHI | | 100 | 3 | 1 | SPRAY | 65 | 90 | | | | | 0000002273 | |
| ☐ | 97/08/04 | CHRYSANTHEMUM-LARGE | SEIUN | WHITE | VERY GOOD L | AICHI | | 200 | 30 | 28 | SPRAY | 70 | 90 | | | | | 0000002245 | |
| ☐ | 97/08/04 | CHRYSANTHEMUM-LARGE | SEIUN | WHITE | VERY GOOD M | AICHI | | 200 | 30 | 30 | SPRAY | 65 | 90 | | | | | 0000002249 | |
| ☐ | 97/08/04 | CHRYSANTHEMUM-LARGE | SEIUN | WHITE | RANK 1 | NAGANO | | 100 | 30 | 30 | SPRAY | 70 | 90 | | | | | 0000002254 | |
| ☐ | 97/08/04 | CHRYSANTHEMUM-LARGE | SEIUN | WHITE | RANK 2 | NAGANO | | 100 | 30 | 10 | SPRAY | 50 | 90 | | | | | 0000002256 | |
| ☐ | 97/08/04 | CHRYSANTHEMUM-LARGE | SUMMERYELLOW | YELLOW | EXCELLENT | NAGANO | | 100 | 30 | 27 | SPRAY | 70 | 90 | | | | | 0000002259 | |
| ☐ | 97/08/04 | CHRYSANTHEMUM-LARGE | SUMMERYELLOW | YELLOW | RANK 1 | NAGANO | | 100 | 30 | 20 | SPRAY | 80 | 90 | | | | | 0000002261 | |
| ☐ | 97/08/04 | CHRYSANTHEMUM-LARGE | SUMMERYELLOW | YELLOW | RANK 2 | NAGANO | | 100 | 50 | 50 | SPRAY | 55 | 90 | | | | | 0000002262 | |

UNCONCLUDED SHIPMENT INFORMATION SEARCH SCREEN

○ARRIVAL DATE OF GOODS [      ] ▼  ○INFORMATION REGISTRATION DATE [      ] ▼
○FLOWER NAME [      ] ▼  ○BRAND NAME [      ] ▼  ○COLOR [      ] ▼
○RANK BY PRODUCER [      ] ▼  ○STANDARD (cm) [      ] ▼  ○NAME OF PRODUCER [      ] ▼  ○SHIPMENT NO. [      ]

# FIG. 13

SELLING INFORMATION LIST SCREEN

[NEW·CHANGE] [«] [<] [>] [»] [DELETE]

SEARCH RESULTS:30  21 TO 30 ARE DISPLAYED.
TOTAL NUMBER:90,400 SPRAYS   TOTAL AMOUNT:7,479,800 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | LOWEST PRICE | cm | 9 | FLOWER PER SPRAY | STATUS BEFORE CUTTING | |
|---|---|---|---|---|---|---|---|---|---|---|---|---|---|---|---|---|---|---|
| ☐ | 97/08/08 | CHRYSANTHEMUM-LARGE | SEIUN | WHITE | VERY GOOD | HOKKAIDO | | 160 | 100 | 16,000 | SPRAY | 100 | 50 | 100 | | | | |
| ☐ | 97/08/08 | CHRYSANTHEMUM SPRAY CHRYSANTHEMUM | ALPS | WHITE | VERY GOOD | HOKKAIDO | | 160 | 50 | 8,000 | SPRAY | 150 | 100 | 100 | | | | |
| ☐ | 97/08/08 | CHRYSANTHEMUM SPRAY | SUIGYOKU | GREEN | RANK 1 | AICHI | | 100 | | 100 | SPRAY | 65 | 65 | 90 | | | | |
| ☐ | 97/08/08 | CHRYSANTHEMUM SPRAY CHRYSANTHEMUM | VIKING | YELLOW | EXCELLENT | AICHI | | 100 | 3 | 300 | SPRAY | 80 | 80 | 90 | | | | |
| ☐ | 97/08/08 | ROSE | NOBLESSE | UNDECIDED | EXCELLENT | NAGANO | | 100 | 27 | 2,700 | SPRAY | 70 | 70 | 90 | | | | |
| ☐ | 97/08/08 | ROSE | NOBLESSE | UNDECIDED | RANK 1 | AICHI | | 100 | 2 | 200 | SPRAY | 80 | 80 | 90 | | | | |
| ☐ | 97/08/08 | CHRYSANTHEMUM SPRAY | SUIGYOKU | GREEN | RANK 1 | AICHI | | 100 | 1 | 100 | SPRAY | 65 | 65 | 90 | | | | |
| ☐ | 97/08/08 | STATICE | SHUNYUATA (PURPLE/LIGHT PURPLE) | PURPLE | VERY GOOD | HOKKAIDO | | 100 | 5 | 500 | SPRAY | 100 | 100 | 100 | | | | |
| ☐ | 97/08/08 | STATICE | SHUNYUATA (PURPLE/LIGHT PURPLE) | PURPLE | VERY GOOD | HOKKAIDO | | 100 | 5 | 500 | SPRAY | 100 | 100 | 100 | | | | |
| ☐ | 97/08/08 | STATICE | SHUNYUATA (PURPLE/LIGHT PURPLE) | PURPLE | VERY GOOD 4L | HOKKAIDO | | 100 | 100 | 10,000 | SPRAY | 100 | 100 | 100 | | | | |

SELLING INFORMATION SEARCH DISPLAY

[SEARCH] [DELETE CONDITION]   [NEW]

O ARRIVAL DATE OF GOODS [    ] [▼]   O INFORMATION REGISTRATION DATE [    ] [▼]
O FLOWER NAME [    ] [▼]   O BRAND NAME [    ] [▼]   O COLOR [    ] [▼]
O RANK BY PRODUCER [    ] [▼]   O STANDARD (cm) [    ] [▼]   [    ] [▼]   O NAME OF PRODUCER [    ] [▼]   O LOWEST PRICE [    ] [▼]   O SELLING NO. [    ]

# FIG. 14

EP 1 067 471 A1

[ORDER] [PRE-ENGAGEMENT] [COPY] [GENERAL] [CONCLUSION·ARRIVAL OF GOODS] [NUMERICAL STATISTICS] [NOTICE] [END]

NUMERICAL STATISTICS INFORMATION DISPLAY LIST SCREEN

NUMERICAL STATISTICS STARTED ON:97/11/1

| DATE | AVERAGE PRICE | HIGHEST PRICE | LOWEST PRICE | TOTAL NUMBER | DATE | AVERAGE PRICE | HIGHEST PRICE | LOWEST PRICE | TOTAL NUMBER |
|---|---|---|---|---|---|---|---|---|---|
| 97/11/01 | 0 | 0 | 0 | 0 | 97/11/17 | 0 | 0 | 0 | 0 |
| 97/11/02 | 0 | 0 | 0 | 0 | 97/11/18 | 0 | 0 | 0 | 0 |
| 97/11/03 | 0 | 0 | 0 | 0 | 97/11/19 | 0 | 0 | 0 | 0 |
| 97/11/04 | 0 | 0 | 0 | 0 | 97/11/20 | 0 | 0 | 0 | 0 |
| 97/11/05 | 0 | 0 | 0 | 0 | 97/11/21 | 0 | 0 | 0 | 0 |
| 97/11/06 | 0 | 0 | 0 | 0 | 97/11/22 | 0 | 0 | 0 | 0 |
| 97/11/07 | 0 | 0 | 0 | 0 | 97/11/23 | 0 | 0 | 0 | 0 |
| 97/11/08 | 0 | 0 | 0 | 0 | 97/11/24 | 0 | 0 | 0 | 0 |
| 97/11/09 | 0 | 0 | 0 | 0 | 97/11/25 | 0 | 0 | 0 | 0 |
| 97/11/10 | 0 | 0 | 0 | 0 | 97/11/26 | 0 | 0 | 0 | 0 |
| 97/11/11 | 0 | 0 | 0 | 0 | 97/11/27 | 0 | 0 | 0 | 0 |
| 97/11/12 | 115 | 123 | 100 | 1,270 | 97/11/28 | 0 | 0 | 0 | 0 |
| 97/11/13 | 0 | 0 | 0 | 0 | 97/11/29 | 0 | 0 | 0 | 0 |
| 97/11/14 | 0 | 0 | 0 | 0 | 97/11/30 | 0 | 0 | 0 | 0 |
| 97/11/15 | 0 | 0 | 0 | 0 | 97/12/02 | 0 | 0 | 0 | 0 |
| 97/11/16 | 0 | 0 | 0 | 0 | | | | | |

NUMERICAL STATISTICS INFORMATION SEARCH SCREEN                    [SEARCH] [CANCEL CONDITION]

●ARRIVAL DATE OF GOODS [NOVEMBER 1, 1997]

●FLOWER NAME [CHRYSANTHEMUM-LARGE ▼] OBRAND NAME [ ▼] OCOLOR [ ▼]

ORANK BY PRODUCER [ ▼] ODISTRICT OF PRODUCTION [ ▼] ●DISPLAY STYLE [LIST ▼] ●DISPLAY SORTING [DATE ▼]

## FIG. 15

SELLING INFORMATION          BUYING INFORMATION

| SELLING INFORMATION 1 |

| BUYING INFORMATION 1 |
| BUYING INFORMATION 2 |

| SELLING INFORMATION 2 |

| BUYING INFORMATION 3 |
| BUYING INFORMATION 4 |

## FIG. 16

SELLING INFORMATION          BUYING INFORMATION

| SELLING INFORMATION 1 |

| SELLING INFORMATION 2 |

| SELLING INFORMATION 3 |

| BUYING INFORMATION 1 |
| BUYING INFORMATION 2 |
| BUYING INFORMATION 3 |
| BUYING INFORMATION 4 |
| BUYING INFORMATION 5 |

## FIG. 17

**SELLING INFORMATION 1 PROCESSING (100)** → IN THE ORDER OF HIGHER UNIT PRICE

| | |
|---|---|
| BUYING INFORMATION 2 | CONCLUDED (70) |
| BUYING INFORMATION 1 | PARTIALLY CONCLUDED (70) |
| BUYING INFORMATION 3 | UNPROCESSED (60) |

→

**SELLING INFORMATION 2**
- BUYING INFORMATION 1'  (UNCONCLUDED 40)
- BUYING INFORMATION 3  (60)

**SELLING INFORMATION 3**
- BUYING INFORMATION 4
- BUYING INFORMATION 5

---

**SELLING INFORMATION 2 PROCESSING (110)** → IN THE ORDER OF HIGHER UNIT PRICE

| | |
|---|---|
| BUYING INFORMATION 3 | CONCLUDED (60) |
| BUYING INFORMATION 1' | CONCLUDED (40) |
| BUYING INFORMATION 4 | PARTIALLY CONCLUDED (30) |

→

**SELLING INFORMATION 3**
- BUYING INFORMATION 4'  (UNCONCLUDED 20)
- BUYING INFORMATION 5

---

**SELLING INFORMATION 3 PROCESSING (110)** → IN THE ORDER OF HIGHER UNIT PRICE

| | |
|---|---|
| BUYING INFORMATION 5 | CONCLUDED (105) |
| BUYING INFORMATION 4' | PARTIALLY CONCLUDED (20) |

→

BUYING INFORMATION 4"  (UNCONCLUDED 15)

UNCONCLUDED RESIDUAL NUMBER

EP 1 067 471 A1

## FIG. 18

SELLING INFORMATION

FIRST SELLING INFORMATION  SECOND SELLING INFORMATION  BUYING INFORMATION

$\left(\begin{array}{c}\text{IN THE ORDER OF}\\ \text{HIGHER LOWEST PRICE}\end{array}\right)$  $\left(\begin{array}{c}\text{IN THE ORDER OF}\\ \text{HIGHER DESIRED PRICE}\end{array}\right)$

SELLER (x)

SELLING INFORMATION 1
(CHRYSANTHEMUM/WHITE)

SELLING INFORMATION 2
(GERBERA/RED)

x  SELLING INFORMATION 1
(CHRYSANTHEMUM/WHITE)

y  SELLING INFORMATION 3
(CHRYSANTHEMUM/WHITE)

SELLING INFORMATION 5
(CHRYSANTHEMUM/WHITE)

SELLING INFORMATION 3
(CHRYSANTHEMUM/WHITE)

SELLING INFORMATION 1
(CHRYSANTHEMUM/WHITE)

BUYER (y)

SELLING INFORMATION 3
(CHRYSANTHEMUM/WHITE)

SELLING INFORMATION 4
(CHRYSANTHEMUM/YELLOW)

SELLING INFORMATION 5
(ROSE/RED)

x  SELLING INFORMATION 2
(GERBERA/RED)

EP 1 067 471 A1

## FIG. 19

EP 1 067 471 A1

FIG. 20

EP 1 067 471 A1

$C_2$ BUYING REGISTRATION

| BUYING INFORMATION | ⓐ | THE NUMBER OF SPRAY | |
|---|---|---|---|
| | | | |

CHECK "✓" IF DEALING PROCESSING $C_1$ IS NEEDED

# FIG. 21

(B)

SELLERS
NEW REGISTRATION

UNCONCLUDED DEALING DB → COPY → C2 REGISTRATION SELLING INFORMATION

REFERENCE → BUYERS BUYING INFORMATION

WHEN UNCONCLUDED ON C2, BUYING ON C1 IS POSSIBLE — Y / N → END

C2 REGISTRATION BUYING INFORMATION

C2 PROCESSING ※ — UNCONCLUDED / CONCLUDED

C2 DEALING CONCLUSION DB (TEMPORARY)

C2 UNCONCLUDED DEALING DB (TEMPORARY)

C1 BUYING DB

C1 PROCESSING ※

DEALING CONCLUSION DB

UNCONCLUDED DEALING DB

SETTLEMENT

REFER TO PROCESSING RESULT

UPDATE LOWEST SELLING PRICE

※ C1, C2 PROCESSING

# FIG. 22

<u>GENERAL CROSS DEALING BY PRE-ENGAGEMENT SETTLEMENT</u>

| MASTER | INFORMATION | ENGINE | GENERAL ENVIRONMENT | GENERAL ACTIVATION | GENERAL SETTLEMENT | NOTICE | END |

BY CLICKING ON GENERAL SETTLEMENT, GENERAL CROSS DEALING
BY PRE-ENGAGEMENT SETTLEMENT SEARCH SCREEN IS DISPLAYED

MARKET MENU SCREEN
(ENGINE SYSTEM)

GENERAL CROSS DEALING
BY PRE-ENGAGEMENT SETTLEMENT
SEARCH SCREEN

SEARCH CONCLUSION

BY CLICKING ON SEARCH CONCLUSION,
GENERAL CROSS DEALING
BY PRE-ENGAGEMENT SETTLEMENT SCREEN
AND CROSS-DEALING
BY PRE-ENGAGEMENT SETTLEMENT SEARCH SCREEN
ARE DISPLAYED ① AND ② ARE DISPLAYED

SEARCH UNCONCLUDED DEALING

BY CLICKING ON SEARCH UNCONCLUDED DEALING,
GENERAL CROSS DEALING
BY PRE-ENGAGEMENT SETTLEMENT SCREEN
AND GENERAL CROSS DEALING
BY PRE-ENGAGEMENT SETTLEMENT SEARCH SCREEN
ARE DISPLAYED. ③ IS DISPLAYED

① WHEN CONCLUSION
INFORMATION IS
DISPLAYED ON SELLERS

GENERAL CROSS DEALING
BY PRE-ENGAGEMENT SETTLEMENT
LIST SCREEN

② WHEN UNCONCLUDED
INFORMATION IS
DISPLAYED ON BUYERS

SETTLEMENT

ALL TEMPORARY
DEALING CONCLUSION AND
TEMPORARY UNCONCLUDED DEALING
IN TEMPORARY INFORMATION
ARE SETTLED, AND ARE REGISTERED
TO DEALING CONCLUSION
INFORMATION AS FORMAL DEALING CONCLUSION
AND FORMAL UNCONCLUDED DEALING

| DISPLAY FIRST PAGE | DISPLAY PREVIOUS PAGE | DISPLAY FOLLOWING PAGE | DISPLAY LAST PAGE |

# FIG. 23

FUNCTION LIST 201 — ORDER | PRE-ENGAGEMENT | GENERALI | GENERALII

200

RESULT DISPLAY 202

THE NUMBER OF RESULT
202a

THE NUMBER OF DISPLAY ROWS CAN BE SET BY SERVER

DISPLAY THE NUMBER OF SUBSCRIPTION IN CASE OF DEALING (A)
DISPLAY THE NUMBER OF BUYING IN CASE OF DEALING (C)

DISPLAY STYLE EITHER IN NUMBERS
• #### 
OR IN
• LARGE | MEDIUM | SMALL | NONE

CONDITION ENTRY 203

SEARCH CONDITION

COLOR : 203a

FLOWER NAME :
CHRYSANTHEMUM
ROSE
SUNFLOWER

PRODUCER :
α
β
γ

YES
NO
203d

INFORMATION REGISTRATION DATE :

203e

203b

203c

DISPLAY ONLY ON DEALING (C)

TWO DISPLAY BUTTONS, SEARCH SELLING INFORMATION AND SEARCH BUYING INFORMATION ARE DISPLAYED

SELL    BUY

SELLING INFORMATION →
← BUYING INFORMATION

• LISTED IN THE ORDER OF DEALING FREQUENCY
• A PART OF LISTED ITEMS IS FIXED

IN CASE OF DEALING (A) EXISTENCE OF SUBSCRIPTION CAN BE SEARCHED

EP 1 067 471 A1

# FIG. 24

EP 1 067 471 A1

## FIG. 25

### SHIPMENT DISPOSITION MANAGEMENT SCREEN

| GOODS ATTRIBUTE | DEALING CONCLUSION NUMBER | | | RESIDUAL NUMBER | EC DEALING | |
| --- | --- | --- | --- | --- | --- | --- |
| | DEALING A | DEALING B1 | EXCLUSION | AUCTION | DEALING B2 | DEALING C |
| SPRAY CHRYSANTHEMUM 2L YELLOW | 5 ☐ | 10 ☐ | 0 ☐ | 20 ☐ | | |
| SPRAY CHRYSANTHEMUM 2L GREEN | | | | | | |
| ⋮ | ⋮ | ⋮ | ⋮ | ⋮ | ⋮ | ⋮ |

### EXCLUSION PROCESSING SCREEN

EXCLUSION

| GOODS ATTRIBUTE | BUYER | UNIT PRICE | THE NUMBER OF CASES |
| --- | --- | --- | --- |
| SPRAY CHRYSANTHEMUM 2L YELLOW | A COMPANY | 100 | 5 |
| ⋮ | ⋮ | ⋮ | ⋮ |

### (B2／C) DEALING PROCESSING SCREEN

B2／C

| GOODS ATTRIBUTE | UNIT PRICE | INDEX | LOWEST PRICE |
| --- | --- | --- | --- |
| SPRAY CHRYSANTHEMUM 2L YELLOW | A90 | 5 | 35 |
| ⋮ | ⋮ | ⋮ | ⋮ |

EP 1 067 471 A1

# FIG. 26

## FIG. 27

| | ARRIVAL QUANTITY | A, $B_1$ (i) | EXCLUSION (iii) | RESIDUAL NUMBER FOR AUCTION (iv) | $B_2$, C (ii) |
|---|---|---|---|---|---|
| TWO DAYS BEFORE AUCTION (12/1) | UNCLEAR | $X_1$ (200) | | | |
| THE DAY BEFORE AUCTION (12/2) | 1000 FLOWERS | $X_1$ (200) | | $1000 - X_1$ (800) | |
| | | $X_1$ (200) | $X_2$ (100) | $1000 - X_1 - X_2$ (700) | |
| | | $X_1$ (200) | $X'_2$ (50) | $1000 - X_1 - X_2 - X'_2$ (650) | $X_3$ (500) |
| THE DAY OF AUCTION (12/3) | | $X_1$ (200) | | $1000 - X_1 - X_2 - X'_2 - X_3$ (150) | DECIDE NECESSARY QUANTITY FOR AUCTION |

EP 1 067 471 A1

# FIG. 28

SELLING 1
(TWO DAYS
BEFORE AUCTION)

SELLING 2
(THE DAY
BEFORE AUCTION)

SELLING 3
(THE DAY OF AUCTION)

500 — FORECAST SELLING OPERATION Ⓐ Ⓑ1

ⒺⒸ DEALING PROCESSING (A), (B1)

β

500 — | FORECAST SELLING OPERATION Ⓐ Ⓑ1 | RESULT β (200c/s) |

FAX NOTIFICATION

ARRIVAL QUANTITY (SELLING QUANTITY) CONFIRMED

α

500 — | FORECAST SELLING OPERATION Ⓐ Ⓑ1 | RESULT β (200c/s) | ARRIVAL QUANTITY α (1000c/s) | UNPROCESSED α − β (800c/s) |

α − β

600 — | UNPROCESSED SELLING OPERATION Ⓑ2 Ⓒ EXCLUSION | ARRIVAL QUANTITY α (1000c/s) | UNPROCESSED α − β (800c/s) |

ⒺⒸ (B2), (C) DEALING PROCESSING, EXCLUSION PROCESSING

γ

600 — | UNPROCESSED SELLING OPERATION Ⓑ2 Ⓒ EXCLUSION | ARRIVAL QUANTITY α (1000c/s) | RESULT γ (500c/s) | UNPROCESSED α − β − γ (300c/s) |

ARRIVAL QUANTITY (FINAL SELLING QUANTITY) CONFIRMED

α′

600 — | UNPROCESSED SELLING OPERATION Ⓑ2 Ⓒ EXCLUSION | ARRIVAL QUANTITY α′ (950c/s) | RESULT γ (500c/s) | UNPROCESSED α′ − β − γ (250c/s) |

α′ − β − γ

GOODS IN STOCK SELLING

EP 1 067 471 A1

84

## FIG. 29

SHIPMENT DISPOSITION MANAGEMENT TOP SCREEN

| | | |
|---|---|---|
| USER ID | ☒ ☒ ☒ ☒ ☒ | ARRIVAL DATE OF GOODS — MONDAY DECEMBER 15, 1997 |

**DISTRICT OF PRODUCTION**
CODE [ ▼ ]  NAME OF DISTRICT OF PRODUCTION  [ AICHI ATSUMI CHO TOWN ▼ ]

**BRAND**
CODE [ ▼ ]  BRAND NAME  [ ALPS ▼ ]

**NAME OF PRODUCER**
CODE [ ▼ ]  NAME OF PRODUCER  [ OOOOO ▼ ]

**COLOR**
CODE [ ▼ ]  COLOR  [ YELLOW ▼ ]

**FLOWER NAME**
CODE [ ▼ ]  FLOWER NAME  [ CHRYSAMTHEMUM ▼ ]

**RANK**
CODE [ ▼ ]  RANK  [ 2L ▼ ]

**STYLE**
CODE [ ▼ ]  STYLE  [ SPRAY ▼ ]

[ SHIPMENT DISPOSITION SCREEN ]

[ END SHIPMENT DISPOSITION SCREEN ]

EP 1 067 471 A1

## FIG. 30

```
                    ( Start )
                        │
                        ▼
        ┌──────────────────────────────┐
        │ BEGIN SELLING STYLE1 ├─S101
        └──────────────────────────────┘
                        │
                        ▼           S102
                ╱─────────────────╲
          N    ╱       ARE          ╲
        ◀──────  DEALING (A) AND (B1) 
                ╲    CONCLUDED ?    ╱
                 ╲─────────────────╱
                        │ Y
                        ▼
        ┌──────────────────────────────┐
        │ FORECAST SELLING NUMBER      ├─S103
        │ CONFIRMATION ( β =200)       │
        └──────────────────────────────┘
                        │
                        ▼           S104
                ╱─────────────────╲
          N    ╱        IS          ╲
        ◀──────  ARRIVAL QUANTITY α  
                ╲    CONFIRMED ?    ╱
                ╲     (=1000)      ╱
                 ╲─────────────────╱
                        │ Y
                        ▼
        ┌──────────────────────────────┐
        │ CALCULATE UNPROCESSED        ├─S105
        │ NUMBER α−β  (=800)           │
        └──────────────────────────────┘
                        │
                        ▼
        ┌──────────────────────────────┐
        │ BEGIN SELLING STYLE2 ├─S106
        └──────────────────────────────┘
                        │
                        ▼           S107
                ╱─────────────────╲
          N    ╱   ARE DEALING      ╲
        ◀──────  (B2), (C) AND EXCLUSION
                ╲    CONCLUDED ?    ╱
                 ╲─────────────────╱
                        │ Y
                        ▼
        ┌──────────────────────────────┐
        │ SELLING NUMBER+EXCLUSION     ├─S108
        │ NUMBER CONFIRMED ( γ =500)   │
        └──────────────────────────────┘
                        │
                        ▼
        ┌──────────────────────────────┐
        │ CALCULATE UNPROCESSED        ├─S109
        │ NUMBER α−β−γ  (=300)         │
        └──────────────────────────────┘
                        │
                        ▼           S110
                ╱─────────────────╲
          N    ╱     IS FINAL       ╲
        ◀──────  SELLING QUANTITY α' 
                ╲    CONFIRMED ?    ╱
                ╲     (=950)       ╱
                 ╲─────────────────╱
                        │ Y
                        ▼
        ┌──────────────────────────────┐
        │ UPDATE UNPROCESSED NUMBER    ├─S111
        │ α−β−γ → α'−β−γ (=250)        │
        └──────────────────────────────┘
                        │
                        ▼
                       (A)
```

```
                       (A)
                        │
                        ▼           S112
                ╱─────────────────╲
                ╱   IS UNPROCESSED  ╲   N (=0)
               │ NUMBER α'−β−γ ≠0    ├──────▶
                ╲        ?          ╱
                 ╲─────────────────╱
                        │ Y (≠0)
                        ▼
        ┌──────────────────────────────┐
        │ BEGIN SELLING STYLE3 ├─S113
        └──────────────────────────────┘
                        │
                        ▼
        ┌──────────────────────────────┐
        │ GOODS IN STOCK SELLING       ├─S114
        │ QUANTITY CONFIRMED           │
        │ ( α'−β−γ =250)               │
        └──────────────────────────────┘
                        │
                        ▼           S115
                ╱─────────────────╲
          N    ╱    IS GOODS        ╲
        ◀──────  IN STOCK SELLING    
                ╲   CONCLUDED ?     ╱
                 ╲─────────────────╱
                        │ Y
                        ▼
        ┌──────────────────────────────┐
        │ CONCLUDE PROCESSING ├─S116
        └──────────────────────────────┘
                        │
                        ▼
                    ( End )
```

# FIG. 31

## FORECAST SELLING OPERATION SCREEN
## ((A) AND (B1) DEALING UNDER PROCESSING)

| ATTRIBUTE OF GOODS | ARRIVAL QUANTITY | DEALING (A) | DEALING (B1) | RESULT | UNPROCESSED NUMBER |
|---|---|---|---|---|---|
| SPRAY CHRYSANTHEMUM ALPS 2L YELLOW | | (EC) 100c/s | (EC) 100c/s | | |

# FIG. 32

FORECAST SELLING OPERATION SCREEN
((A) AND (B1) AT TIME OF DEALING SETTLEMENT)

| ATTRIBUTE OF GOODS | ARRIVAL QUANTITY | DEALING (A) | DEALING (B1) | RESULT | UNPROCESSED NUMBER |
|---|---|---|---|---|---|
| SPRAY CHRYSANTHEMUM ALPS 2L YELLOW | | (EC) 100c/s | (EC) 100c/s | 200c/s @85 | |

EP 1 067 471 A1

# FIG. 33

## FORECAST SELLING OPERATION SCREEN
## ((A) AND (B1) AT TIME OF ARRIVAL NUMBER CONFIRMATION)

| ATTRIBUTE OF GOODS | ARRIVAL QUANTITY | DEALING (A) | DEALING (B1) | RESULT | UNPROCESSED NUMBER |
|---|---|---|---|---|---|
| SPRAY CHRYSANTHEMUM ALPS 2L YELLOW | 1000c/s | (EC) 100c/s | (EC) 100c/s | 200c/s @85 | 800c/s |

EP 1 067 471 A1

# FIG. 34

| ATTRIBUTE OF GOODS | ARRIVAL QUANTITY | DEALING (B2) | DEALING (C) | EXCLUSION | RESULT | UNPROCESSED NUMBER |
|---|---|---|---|---|---|---|
| SPRAY CHRYSANTHEMUM ALPS 2L YELLOW | 1000c/s | (EC) | (EC) | | | 800c/s |

EP 1 067 471 A1

# FIG. 35

UNPROCESSED SELLING OPERATION SCREEN
(DEALING (B2), (C) AND EXCLUSION UNDER PROCESSING)

| ATTRIBUTE OF GOODS | ARRIVAL QUANTITY | DEALING (B2) | DEALING (C) | EXCLUSION | RESULT | UNPROCESSED NUMBER |
|---|---|---|---|---|---|---|
| SPRAY CHRYSANTHEMUM ALPS 2L YELLOW | 1000c/s | (EC) 150c/s | (EC) 150c/s | 200c/s | | 800c/s |

EP 1 067 471 A1

## FIG. 36

### UNPROCESSED SELLING OPERATION SCREEN
### (AT TIME OF DEALING (B2), (C) AND EXCLUSION PROCESSING CONFIRMATION)

| ATTRIBUTE OF GOODS | ARRIVAL QUANTITY | DEALING (B2) | DEALING (C) | EXCLUSION | RESULT | UNPROCESSED NUMBER |
|---|---|---|---|---|---|---|
| SPRAY CHRYSANTHEMUM ALPS 2L YELLOW | 1000c/s | 150c/s | 150c/s | 200c/s | 500c/s | 800c/s |

EP 1 067 471 A1

## FIG. 37

**UNPROCESSED SELLING OPERATION SCREEN
(AT TIME OF GOODS IN STOCK NUMBER CONFIRMATION)**

| ATTRIBUTE OF GOODS | ARRIVAL QUANTITY | DEALING (B2) | DEALING (C) | EXCLUSION | RESULT | UNPROCESSED NUMBER |
|---|---|---|---|---|---|---|
| SPRAY CHRYSANTHEMUM ALPS 2L YELLOW | 950c/s | 150c/s | 150c/s | 200c/s | 500c/s | 250c/s |

EP 1 067 471 A1

# FIG. 38

**UNPROCESSED SELLING OPERATION SCREEN**
**(AN EXAMPLE FOR A PLURALITY OF ROWS SCREEN)**

| ATTRIBUTE OF GOODS | ARRIVAL QUANTITY | DEALING (B2) | DEALING (C) | EXCLUSION | RESULT | UNPROCESSED NUMBER |
|---|---|---|---|---|---|---|
| SPRAY CHRYSANTHEMUM ALPS 2L YELLOW | 1000c/s | | | | | |
| | | (EC) 150c/s | (EC) 150c/s | 200c/s | 500c/s | |
| | | | | | | 300c/s |
| | 950c/s | | | | | 250c/s |

EP 1 067 471 A1

# FIG. 39

EC

FLOWER NAME : ●●●
BRAND NAME : ▲▲▲
RANK : ■■■

TBL1
TBL2
TBL3

DUTY SYSTEM

PRODUCERS

Fax

FLOWER NAME : ○○○
BRAND NAME : △△△

DATA
ENTRY

FLOWER NAME : ○○○
BRAND NAME : △△△
RANK : □□□

FIG. 40

210

NEW・CHANGE  « < > »  DELETE

221

222

230

SEARCH  CANCEL CONDITION

ARRIVAL DATE OF GOODS  REGISTRATION DATE  DISTRICT OF PRODUCTION  ORDER/SUBSCRIPTION/SHIPMENT/SELLING NO.

FLOWER NAME  BRAND NAME  COLOR  RANK BY PRODUCER  STANDARD

DEALING A SUBSCRIPTION  DEALING B PRODUCER  DEALING C PRODUCER

# FIG. 41

ORDER INFORMATION LIST

SEARCH RESULTS:98  1 TO 20 ARE DISPLAYED.
TOTAL NUMBER:3,103,680 SPRAYS   TOTAL UNSELECTED NUMBER:2,959,740 SPRAYS   TOTAL AMOUNT:309,905,900 YEN

| SELECT | ARRIVAL DATE OF GOODS | FLOWER NAME | BRAND NAME | COLOR | RANK | DESIRED DISTRICT OF PRODUCTION | TOTAL NUMBER | UNCONFIRMED NUMBER | UNIT | DESIRED PRICE (YEN) | SUBSCRIPTION | cm | g | FLOWER PER SPRAY | STATUS BEFORE CUTTING | | DEADLINE | ORDER NO. | COMMENT |
|---|---|---|---|---|---|---|---|---|---|---|---|---|---|---|---|---|---|---|---|
| ☐ | 97/07/28 | GERBERA STANDARD | PHYTHM GERBERA | ORANGE | L | AICHI | 100 | 100 | SPRAY | 23 | 0 | RE | | | | | | 97/07/26 | 0000002575 | |
| ☐ | 97/07/28 | CHRYSANTHEMUM | KOGIKU (WHITE) | WHITE | EXCELLENT | IBARAKI | 200 | 200 | SPRAY | 30 | 0 | RE | | | | | | 97/07/26 | 0000002521 | |
| ☐ | 97/07/28 | CHRYSANTHEMUM | KOGIKU (YELLOW-CREAM) | YELLOW | EXCELLENT | IBARAKI | 600 | 600 | SPRAY | 35 | 0 | RE | | | | | | 97/07/26 | 0000002388 | |
| ☐ | 97/07/28 | CHRYSANTHEMUM | KOGIKU (OTHER) | OTHER | EXCELLENT | IBARAKI | 400 | 400 | SPRAY | 30 | 0 | RE | | | | | | 97/07/26 | 0000002394 | |
| ☐ | 97/07/28 | CHRYSANTHEMUM | SEIUN | WHITE | VERY GOOD L | AICHI | 1,200 | 1,200 | SPRAY | 50 | 0 | RE | | | | | | 97/07/26 | 0000002524 | |
| ☐ | 97/07/28 | STATICE | SOBIA | MIXED COLOR | EXCELLENT L | NAGANO | 100 | 100 | SPRAY | 40 | 0 | RE | | | | | | 97/07/28 | 0000002388 | |
| ☐ | 97/07/28 | STATICE | CRYSTAL YELLOW STATICE | YELLOW | VERY GOOD L | HOKKAIDO | 200 | 200 | SPRAY | 45 | 0 | RE | | | | | | 97/07/28 | 0000002338 | |
| ☐ | 97/07/28 | STATICE | FLASH PINK STATICE | PINK | VERY GOOD L | | 300 | 300 | SPRAY | 45 | 0 | RE | | | | | | 97/07/28 | 0000002343 | |
| ☐ | 97/07/28 | SOLIDAGO | | | A L | NAGANO | 140 | 140 | SPRAY | 25 | 0 | RE | | | | | | 97/07/26 | 0000002558 | |
| ☐ | 97/07/28 | DIANTHUS NADESHIKO | YOUKIHI | PINK | 2L | HOKKAIDO | 100 | 100 | SPRAY | 30 | 0 | RE | | | | | | 97/07/26 | 0000001301 | |
| ☐ | 97/07/28 | PRAIRIE GENTIAN ONE LAYER | AZUMANO NAMI | MIXED COLOR BLUE | A 2L | IWATE | 20 | 20 | SPRAY | 160 | 0 | RE | | | | | | 97/07/26 | 0000002386 | |
| ☐ | 97/07/28 | PRAIRIE GENTIAN ONE LAYER | AZUMANO SHIRABE | YELLOW | A 2L | IWATE | 30 | 30 | SPRAY | 160 | 0 | RE | | | | | | 97/07/26 | 0000002384 | |
| ☐ | 97/07/28 | PRAIRIE GENTIAN ONE LAYER | ASUKANO REN | MIXED COLOR BLUE | 2L | NAGANO | 160 | 160 | SPRAY | 140 | 0 | RE | | | | | | 97/07/26 | 0000002439 | |
| ☐ | 97/07/28 | PRAIRIE GENTIAN ONE LAYER | ASUKANO SHOU | MIXED COLOR PINK | 2L | NAGANO | 80 | 80 | SPRAY | 160 | 0 | RE | | | | | | 97/07/25 | 0000002432 | |
| ☐ | 97/07/28 | PRAIRIE GENTIAN ONE LAYER | ASUKANO SHOU | MIXED COLOR PINK | L | NAGANO | 150 | 150 | SPRAY | 100 | 0 | RE | | | | | | 97/07/26 | 0000002443 | |
| ☐ | 97/07/28 | PRAIRIE GENTIAN ONE LAYER | ASUKANO NISHIKI | MIXED COLOR PINK | 2L | NAGANO | 20 | 20 | SPRAY | 160 | 0 | RE | | | | | | 97/07/26 | 0000002436 | |
| ☐ | 97/07/28 | ROSE SPRAY | BRIDE IN JOY | ORANGE | L | AICHI | 100 | 100 | SPRAY | 40 | 0 | RE | | | | | | 97/07/26 | 0000002286 | |
| ☐ | 97/07/28 | ROSE SPRAY | FANTASY SPRAY ROSE | LIGHT PINK | M | AICHI | 100 | 100 | SPRAY | 50 | 0 | RE | | | | | | 97/07/26 | 0000002282 | |
| ☐ | 97/07/28 | FREESIA | ALADDIN | YELLOW | VERY GOOD L | HOKKAIDO | 200 | 200 | SPRAY | 10 | 0 | RE | | | | | | 97/07/26 | 0000002305 | |
| ☐ | 97/08/04 | GERBERA STANDARD | CHAMPAGNE | PINK | 2L | AICHI | 300 | 300 | SPRAY | 28 | 0 | RE | | | | | | 97/08/02 | 0000002673 | |

EP 1 067 471 A1

# FIG. 42

EP 1 067 471 A1

SHIPMENT INFORMATION LIST

SEARCH RESULTS:8  1 TO 18 ARE DISPLAYED.
GRAND TOTAL NUMBER:121,650 SPRAYS   TOTAL AMOUNT:77,820,000 YEN   TOTAL RESIDUAL NUMBER:177,840 SPRAYS   TOTAL AMOUNT FOR REMAINED NUMBER:64,402,500 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY |
|---|---|---|---|---|---|---|---|---|---|---|---|---|---|---|---|
| ☐ | 97/09/01 | STATICE | SHUNYUATA (PURPLE·LIGHT PURPLE) | PURPLE | VERY GOOD | HOKKAIDO | | 100 | 100 | 100 | SPRAY | 100 | 100 | | |
| ☐ | 97/09/01 | STATICE | SHUNYUATA (PURPLE·LIGHT PURPLE) | PURPLE | VERY GOOD | HOKKAIDO | | 100 | 100 | 100 | SPRAY | 100 | 100 | | |
| ☐ | 97/09/01 | DELPHINIUM × BELLADONNA | BELLADONNA FORUKAFURIDEN | DEEP BLUE | VERY GOOD | IWATE | | 100 | 100 | 100 | SPRAY | 100 | 90 | | |
| ☐ | 97/09/02 | CARNATION SPRAY | BARBARA LIGHT PINK BARBARA | LIGHT PINK | VERY GOOD | HOKKAIDO | | 100 | 100 | 100 | SPRAY | 100 | 90 | | |
| ☐ | 97/09/02 | CHRYSANTHEMUM–LARGE | SEIUN | WHITE | VERY GOOD | HOKKAIDO | | 100 | 100 | 90 | SPRAY | 100 | 90 | | |
| ☐ | 97/10/10 | PERENNIAL ASTER PEACOCK ASTER | BURASUBERI | WHITE | VERY GOOD | MIYAZAKI | | 10 | 5 | 4 | SPRAY | 100 | 90 | 10 | 3 |
| ☐ | 97/10/10 | STATICE HYBRID | MISTY BLUE | PURPLE | VERY GOOD | HOKKAIDO | | 100 | 100 | 96 | SPRAY | 100 | 90 | 10 | 1 |
| ☐ | 97/10/10 | SUNFLOWER | SUNRICH ORANGE | ORANGE | VERY GOOD | IWATE | | 100 | 100 | 100 | SPRAY | 100 | 90 | 10 | 2 |
| ☐ | 97/10/31 | SUNFLOWER | SUNRICH ORANGE | ORANGE | VERY GOOD | IWATE | | 100 | 100 | 100 | SPRAY | 100 | 90 | 10 | 2 |
| ☐ | 97/10/31 | SUNFLOWER | SUNRICH ORANGE | ORANGE | VERY GOOD | IWATE | | 100 | 100 | 100 | SPRAY | 200 | 90 | 10 | 2 |
| ☐ | 97/12/01 | CHRYSANTHEMUM–LARGE | SUMMER YELLOW | YELLOW | VERY GOOD 2L | AICHI | | 100 | 30 | 25 | SPRAY | 85 | 90 | | |
| ☐ | 97/12/02 | CHRYSANTHEMUM–LARGE | SUMMER YELLOW | YELLOW | VERY GOOD 2L | AICHI | | 100 | 30 | 25 | SPRAY | 90 | 90 | | |
| ☐ | 97/12/02 | STATICE | SHUNYUATA (PURPLE·LIGHT PURPLE) | PURPLE | VERY GOOD 2L | WAKAYAMA | | 100 | 10 | 8 | SPRAY | 65,120 | 90 | | |
| ☐ | 97/12/02 | STATICE | SHUNYUATA (PURPLE·LIGHT PURPLE) | PURPLE | VERY GOOD 2L | HOKKAIDO | | 100 | 85 | 85 | SPRAY | 70 | 90 | | |
| ☐ | 97/12/02 | DELPHINIUM × BELLADONNA | BELLADONNA FORUKAFURIDEN | DEEP BLUE | VERY GOOD 2L | HOKKAIDO | | 60 | 10 | 10 | SPRAY | 150 | 90 | | |
| ☐ | 97/12/02 | SUNFLOWER | SUNRICH LEMON | UNDECIDED | VERY GOOD | IWATE | | 50 | 10 | 10 | SPRAY | 50 | 90 | | |
| ☐ | 97/12/03 | CHRYSANTHEMUM–LARGE | SUMMER YELLOW | YELLOW | VERY GOOD 2L | AICHI | | 100 | 20 | 10 | SPRAY | 95 | 90 | | |
| ☐ | 97/12/04 | CHRYSANTHEMUM–LARGE | SUMMER YELLOW | YELLOW | VERY GOOD 2L | AICHI | | 100 | 100 | 100 | SPRAY | 100 | 90 | | |

# FIG. 43

<u>SHIPMENT／BID INFORMATION LIST</u>

SEARCH RESULTS:3  1 TO 3 ARE DISPLAYED. TOTAL RESIDUAL NUMBER:36,000 SPRAYS

| SELECT | ARRIVAL DATE OF GOODS | FLOWER NAME | BRAND NAME | COLOR | RANK | SELLERS | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm |
|---|---|---|---|---|---|---|---|---|---|---|---|---|---|---|
| ☐ | 97／12／01 | ROSE STANDARD | ROTEROSE (=ASAMI RED) | RED | VERY GOOD 2L | | SHIZUOKA | | 60 | 20 | 20 | SPRAY | 160 | 70 |
| ☐ | 97／12／15 | CARNATION SPRAY | CASABLANCA | RED | VERY GOOD 4L | | AICHI | | 100 | 500 | 300 | SPRAY | 80 | 100 |
| ☐ | 97／12／15 | CHRYSANTHEMUM LARGE FLOWER | FRIEND OF AUTUMN | WHITE | VERY GOOD | | FUKUOKA | | 100 | 100 | 500 | SPRAY | 150 | 100 |

## FIG. 44

BUYERS

SELLERS

(EXAMPLE)
BARGAIN INFORMATION OF
"LILY" "CASABLANCA" ON SPECIFIED
ARRIVAL DATE OF GOODS

(A)

(B)

ORDER
INFORMATION
BUYING
INFORMATION

(BUY) α        (RE) α

(BUY) β        (RE) β

SUBSCRIPTION
INFORMATION

DEALING
CONCLUSION
INFORMATION

(CON) x        (SELL) x

(CON) y        (SELL) y

SELLING
INFORMATION

INFORMATION WHICH
BUYER α CAN REFER TO

INFORMATION WHICH
SELLER x CAN REFER TO

100

EP 1 067 471 A1

# FIG. 45

## DEALING SCREEN OF BUYERS

210---

| NEW·CHANGE | ≪ | < | > | ≫ | DELETE |

221

**SHIPMENT / BID INFORMATION LIST**

SEARCH RESULTS:1
1 TO 1 IS DISPLAYED.   TOTAL RESIDUAL NUMBER:250 SPRAYS

| SELECT | ARRIVAL DATE OF GOODS | FLOWER NAME | BRAND NAME | COLOR | RANK | SELLERS | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY | STATUS BEFORE CUTTING | | SHIPMENT NO. | COMMENT |
|---|---|---|---|---|---|---|---|---|---|---|---|---|---|---|---|---|---|---|---|---|
| ☐ | 97/12/13 | LILY ORIENTAL | CASABLANCA | WHITE | VERY GOOD 3 | UENO SECTION | SAITAMA | | 10 | 30 | 25 | SPRAY | 700 | 120 | | | 6 | | | 0000002923 | STEM FIRMING |

**ORDER INFORMATION LIST**

SEARCH RESULTS:0
0 TO 0 IS DISPLAYED.   TOTAL NUMBER:0 SPRAY   TOTAL UNSELECTED NUMBER:0 SPRAY   TOTAL AMOUNT:0 YEN

| SELECT | ARRIVAL DATE | FLOWER NAME | BRAND NAME | COLOR | RANK | DISTRICT OF PRODUCTION | TOTAL NUMBER | UNSELECTED | UNIT | DESIRED PRICE (YEN) | SUBSCRIPTION | | cm | g | FLOWER PER SPRAY | STATUS BEFORE CUTTING | | DEADLINE | ORDER NO. | COMMENT |
|---|---|---|---|---|---|---|---|---|---|---|---|---|---|---|---|---|---|---|---|---|

222

| | | | | | SEARCH | DELETE CONDITION |

| ARRIVAL DATE OF GOODS | REGISTRATION DATE | DISTRICT OF PRODUCTION | ORDER/SUBSCRIPTION/SHIPMENT/SELLING NO. |
| FLOWER NAME | BRAND NAME | COLOR | RANK BY PRODUCER | STANDARD |
| DEALING A | SUBSCRIPTION | DEALING B | PRODUCER | DEALING C | PRODUCER |

---230

EP 1 067 471 A1

# FIG. 46

## DEALING SCREEN OF SELLERS

210

| NEW·CHANGE | ≪ | < | > | ≫ | DELETE |

221

**SHIPMENT INFORMATION LIST**
SEARCH RESULTS:2  1 TO 2 ARE DISPLAYED.  TOTAL NUMBER:3,000 SPRAYS  TOTAL AMOUNT:850,000 YEN
TOTAL REMAINED NUMBER:2,750 SPRAYS  TOTAL AMOUNT FOR REMAINED NUMBER:565,000 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY | STATUS BEFORE CUTTING | | SHIPMENT NO. | COMMENT |
|---|---|---|---|---|---|---|---|---|---|---|---|---|---|---|---|---|---|---|---|
| ☐ | 97/12/13 | ROSE STANDARD | NOBLESSE | LIGHT PINK | VERY GOOD 3L | SAITAMA | | 50 | 50 | 48 | SPRAY | 200 | 70 | | | | | 0000002944 | |
| ☐ | 97/12/13 | ROSE STANDARD | NOBLESSE | LIGHT PINK | 80C | YAMAGATA | | 50 | 10 | 7 | SPRAY | 300 | 80 | | | | | 0000002947 | |

**ORDER/SUBSCRIPTION INFORMATION LIST**
SEARCH RESULTS:1  1 TO 1 IS DISPLAYED.  BUYERS TOTAL NUMBER:2,000 SPRAYS  TOTAL UNSELECTED NUMBER:2,000 SPRAYS  TOTAL AMOUNT:240,000 YEN
SELLERS TOTAL UNSELECTED NUMBER:2,000 SPRAYS  UNSELECTED SUBSCRIPTION TOTAL AMOUNT:260,000 YEN

| SELECT | ARRIVAL DATE OF GOODS | FLOWER NAME | BRAND NAME | COLOR | RANK | DISTRICT OF PRODUCTION | TOTAL NUMBER | UNSELECTED | UNIT | DESIRED PRICE (YEN) | SUBSCRIPTION | cm | g | FLOWER PER SPRAY | STATUS BEFORE CUTTING | | ORDER NO. | COMMENT |
|---|---|---|---|---|---|---|---|---|---|---|---|---|---|---|---|---|---|---|
| | ARRIVAL DATE OF GOODS | NAME OF PRODUCER | BRAND NAME | COLOR | RANK | DISTRICT OF PRODUCTION | NUMBER PER CASE | NUMBER OF CASE | UNIT | SUBSCRIPTION PRICE | | | cm | g | FLOWER PER SPRAY | STATUS BEFORE CUTTING | | SUBSCRIPTION NO. | COMMENT |
| ☐ | 97/12/13 | ROSE STANDARD | NOBLESSE | LIGHT PINK 2L | VERY GOOD | SAITAMA | 2,000 | 2,000 | SPRAY | 120 | 1 | | | | | | 0000003423 | |
| | 97/12/13 | | NOBLESSE | LIGHT PINK 2L | VERY GOOD | SAITAMA | 50 | 40 | SPRAY | 130 | | 70 | | | | | 0000009004 | |

222

| SEARCH | DELETE CONDITION |

| ARRIVAL DATE OF GOODS | REGISTRATION DATE | DISTRICT OF PRODUCTION | ORDER/SUBSCRIPTION/SHIPMENT/SELLING NO. |

| FLOWER NAME | BRAND NAME | COLOR | RANK BY PRODUCER | STANDARD |

| DEALING A | SUBSCRIPTION | DEALING B | PRODUCER | DEALING C | PRODUCER |

230

# FIG. 47

BARGAIN INFORMATION

(C)

(A)

(BUY) α

(BUY) β

ORDER
INFORMATION
BUYING
INFORMATION

(SELL) x

(SELL) y

SELLING
INFORMATION
(UNCONCLUDED)

(C)

(A)

EP 1 067 471 A1

# FIG. 48

## DEALING SCREEN OF BUYERS

210

| NEW·CHANGE | « | < | > | » | DELETE |

221

**SELLING INFORMATION LIST**
SEARCH RESULTS:1
1 TO 1 IS DISPLAYED.  TOTAL SELLING NUMBER:100 SPRAYS  TOTAL BUYING NUMBER:0 SPRAY (0 SPRAY)  TOTAL BUYING AMOUNT:0 YEN

| SELECT | FLOWER NAME | BRAND NAME | COLOR | RANK | SELLERS | DISTRICT OF PRODUCTION | NAME OF PRODUCER | NUMBER PER CASE | NUMBER OF CASE | TOTAL NUMBER | UNIT | DESIRED PRICE (YEN) | | NUMBER OF INFORMATION | cm | g | FLOWER PER SPRAY | STATUS BEFORE CUTTING | SHIPMENT NO. | COMMENT |
|---|---|---|---|---|---|---|---|---|---|---|---|---|---|---|---|---|---|---|---|---|
| □ | CHRYSANTHEMUM | KOGIKU (RED) | RED | | UENO SECTION | YAMAGATA | | 100 | 10 | 1,000 | SPRAY | 100 | BUYING | 0 | 100 | | | | 0000004603 | |

**ORDER INFORMATION LIST**
SEARCH RESULTS:0
0 TO 0 IS DISPLAYED.  TOTAL NUMBER:0 SPRAYS  TOTAL UNSELECTED NUMBER:0 SPRAY  TOTAL AMOUNT:0 YEN

| SELECT | ARRIVAL DATE OF GOODS | FLOWER NAME | BRAND NAME | COLOR | RANK | DISTRICT OF PRODUCTION | TOTAL NUMBER | UNSELECTED | UNIT | DESIRED PRICE (YEN) | SUBSCRIPTION | | cm | g | FLOWER PER SPRAY | STATUS BEFORE CUTTING | W RANK | DEADLINE | ORDER NO. | COMMENT |
|---|---|---|---|---|---|---|---|---|---|---|---|---|---|---|---|---|---|---|---|---|

222

| | | | SEARCH | DELETE CONDITION |

| ARRIVAL DATE OF GOODS | REGISTRATION DATE | DISTRICT OF PRODUCTION | ORDER/SUBSCRIPTION/SHIPMENT/SELLING NO. |
| FLOWER NAME | BRAND NAME | COLOR | RANK BY PRODUCER | STANDARD |
| DEALING A | SUBSCRIPTION | DEALING B | PRODUCER | DEALING C | PRODUCER |

230

EP 1 067 471 A1

## FIG. 49

**DEALING SCREEN OF SELLERS**

210 — NEW·CHANGE | « | < | > | » | DELETE

221

**SELLING INFORMATION LIST**
SEARCH RESULTS:2
1 TO 2 ARE DISPLAYED.    TOTAL NUMBER:400 SPRAYS    TOTAL AMOUNT:24,000 YEN

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | TOTAL NUMBER | UNIT | DESIRED PRICE (YEN) | LOWEST PRICE (YEN) | cm | g | FLOWER PER SPRAY | STATUS BEFORE CUTTING | | PHOTO | SELLING NO. | COMMENT |
|---|---|---|---|---|---|---|---|---|---|---|---|---|---|---|---|---|---|---|---|---|---|
| ☐ | 97/08/04 | | ALPS | WHITE | RANK 1 | AICHI | | 100 | 2 | 200 | SPRAY | 60 | 60 | 90 | | | | | O | 0000004333 | |
| ☐ | 97/08/04 | | ALPS | WHITE | RANK 1 | AICHI | | 100 | 2 | 200 | SPRAY | 60 | 60 | 90 | | | | | O | 0000004361 | |

**ORDER/SUBSCRIPTION INFORMATION LIST**
SEARCH RESULTS:1  1 TO 1 IS DISPLAYED.    BUYERS TOTAL NUMBER:2,000 SPRAYS    TOTAL UNSELECTED NUMBER:2,000 SPRAYS    TOTAL AMOUNT:240,000 YEN
SELLERS TOTAL UNSELECTED NUMBER:2,000 SPRAYS    TOTAL UNSELECTED SUBSCRIPTION AMOUNT:260,000 YEN

| SELECT | ARRIVAL DATE OF GOODS | FLOWER NAME | BRAND NAME | COLOR | RANK | DISTRICT OF PRODUCTION | TOTAL NUMBER | UNSELECTED | UNIT | DESIRED PRICE (YEN) | SUBSCRIPTION | cm | g | FLOWER PER SPRAY | STATUS BEFORE CUTTING | ORDER NO. | COMMENT |
|---|---|---|---|---|---|---|---|---|---|---|---|---|---|---|---|---|---|
| | ARRIVAL DATE OF GOODS | NAME OF PRODUCER | BRAND NAME | COLOR | RANK | DISTRICT OF PRODUCTION | NUMBER PER CASE | NUMBER OF CASE | UNIT | SUBSCRIPTION PRICE | | cm | g | FLOWER PER SPRAY | STATUS BEFORE CUTTING | SUBSCRIPTION NO. | COMMENT |
| ☐ | 97/12/13 | | NOBLESSE | LIGHT PINK | VERY GOOD 2L | SAITAMA | 2,000 | 2,000 | SPRAY | 120 | 1 | | | | | 0000003423 | |
| | 97/12/13 | | NOBLESSE | LIGHT PINK | VERY GOOD 2L | SAITAMA | 50 | 40 | SPRAY | 130 | | 70 | | | | 0000009004 | |

222

SEARCH | DELETE CONDITION

| ARRIVAL DATE OF GOODS | REGISTRATION DATE | DISTRICT OF PRODUCTION | ORDER/SUBSCRIPTION/SHIPMENT/SELLING NO. |
| FLOWER NAME | BRAND NAME | COLOR | RANK BY PRODUCER | STANDARD |
| DEALING A | SUBSCRIPTION | DEALING B | PRODUCER | DEALING C | PRODUCER |

230

EP 1 067 471 A1

FIG. 50

SELLERS

100

WAN

161

SELLING INFORMATION (B1)

SELLING INFORMATION (B2)

SELLING INFORMATION (Bn)

120B1

120B2

120Bn

B1

B2

Bn

SERVER

140

310

INFORMATION RECEIVING AND ALLOTTING

320

APP FUNCTION

DEALING PROCESSING FUNCTION

SYSTEM OPERATION MANAGEMENT FUNCTION

CLUSTERING FUNCTION

328

330

DBM

BUYING INFORMATION

SELLING INFORMATION

BUYING INFORMATION (A1)

BUYING INFORMATION (A2)

BUYING INFORMATION (An)

120A1

120A2

120An

A1

A2

An

BUYERS

410

INFORMATION RECEIVING AND ALLOTTING

410

USER I/F

431, 432

APP FUNCTION

440

DBM

## FIG. 51

《BUYING INFORMATION》

| | FLOWER NAME | BRAND NAME | COLOR | RANK | DISTRICT OF PRODUCTION | BUYING NUMBER | DESIRED BUYING PRICE |
|---|---|---|---|---|---|---|---|
| BUYING INFORMATION (A1) | SUNFLOWER | | ORANGE | | | 1000 | 110YEN |
| BUYING INFORMATION (A2) | CHRYSANTHEMUM−LARGE | SEIUN | WHITE | VERY GOOD | HOKKAIDO | 12000 | 85YEN |
| BUYING INFORMATION (A3) | CHRYSANTHEMUM−LARGE | SEIUN | WHITE | VERY GOOD | HOKKAIDO | 5000 | 130YEN |
| BUYING INFORMATION (A4) | STATICE | SHUNYUATA | PURPLE | VERY GOOD | HOKKAIDO | 8000 | 90YEN |
| BUYING INFORMATION (A5) | SUNFLOWER | SUNRICH ORANGE | ORANGE | VERY GOOD | IWATE | 12000 | 140YEN |
| BUYING INFORMATION (A6) | STATICE | SHUNYUATA | PURPLE | VERY GOOD | HOKAIDO | 7000 | 100YEN |
| BUYING INFORMATION (A7) | CHRYSANTHEMUM−LARGE | | WHITE | | | 10000 | 100YEN |
| BUYING INFORMATION (A8) | SUNFLOWER | SUNRICH ORANGE | ORANGE | VERY GOOD | AICHI | 15000 | 80YEN |
| BUYING INFORMATION (A9) | SUNFLOWER | | ORANGE | | | 10000 | 120YEN |
| ⋮ | | | | | | | |

(CLUSTER a)

| CHRYSANTHEMUM−LARGE・WHITE |
|---|
| BUYING INFORMATION (A2) |
| BUYING INFORMATION (A3) |
| BUYING INFORMATION (A7) |
| ⋮ |

(CLUSTER b)

| SUNFLOWER・ORANGE |
|---|
| BUYING INFORMATION (A1) |
| BUYING INFORMATION (A5) |
| BUYING INFORMATION (A8) |
| BUYING INFORMATION (A9) |
| ⋮ |

(CLUSTER c)

| STATICE・PURPLE |
|---|
| BUYING INFORMATION (A4) |
| BUYING INFORMATION (A6) |
| ⋮ |

# FIG. 52

<SELLING INFORMATION>

| | FLOWER NAME | BRAND NAME | COLOR | RANK | DISTRICT OF PRODUCTION | SELLING NUMBER | DESIRED SELLING PRICE | LOWEST SELLING PRICE |
|---|---|---|---|---|---|---|---|---|
| SELLING INFORMATION (B1) | CHRYSANTHEMUM-LARGE | SEIUN | WHITE | VERY GOOD | HOKKAIDO | 10000 | 100YEN | 80YEN |
| SELLING INFORMATION (B2) | SUNFLOWER | SUNRICH ORANGE | ORANGE | VERY GOOD | IWATE | 8000 | 100YEN | 90YEN |
| SELLING INFORMATION (B3) | SUNFLOWER | SUNRICH ORANGE | ORANGE | VERY GOOD | IWATE | 11000 | 130YEN | 100YEN |
| SELLING INFORMATION (B4) | STATICE | SHUNYUATA | PURPLE | VERY GOOD | HOKKAIDO | 7000 | 110YEN | 80YEN |
| SELLING INFORMATION (B5) | CHRYSANTHEMUM-LARGE | SEIUN | WHITE | VERY GOOD | AICHI | 10000 | 120YEN | 90YEN |
| SELLING INFORMATION (B6) | CHRYSANTHEMUM-LARGE | SEIUN | WHITE | VERY GOOD | HOKKAIDO | 3000 | 90YEN | 80YEN |
| SELLING INFORMATION (B7) | SUNFLOWER | SUNRICH ORANGE | ORANGE | VERY GOOD | AICHI | 5000 | 130YEN | 110YEN |
| SELLING INFORMATION (B8) | STATICE | SHUNYUATA | PURPLE | VERY GOOD | WAKAYAMA | 7000 | 100YEN | 80YEN |
| SELLING INFORMATION (B9) | CHRYSANTHEMUM-LARGE | SEIUN | WHITE | VERY GOOD | HOKKAIDO | 4000 | 140YEN | 85YEN |
| : | | | | | | | | |

(CLUSTER a' )

| CHRYSANTHEMUM-LARGE · WHITE |
|---|
| SELLING INFORMATION (B1) |
| SELLING INFORMATION (B5) |
| SELLING INFORMATION (B6) |
| SELLING INFORMATION (B9) |
| : |

(CLUSTER b' )

| SUNFLOWER · ORANGE |
|---|
| SELLING INFORMATION (B2) |
| SELLING INFORMATION (B3) |
| SELLING INFORMATION (B7) |
| : |

(CLUSTER c' )

| STATICE · PURPLE |
|---|
| SELLING INFORMATION (B4) |
| SELLING INFORMATION (B8) |
| : |

EP 1 067 471 A1

# FIG. 53

```
( Start )
   │
   ▼
┌─────────────────────────────────────┐
│      CLUSTERING PROCESSING          │
│      FOR BUYING INFORMATION         │ ─ S201
│   (FORMING OF CLUSTERS a,b,c...)    │
└─────────────────────────────────────┘
   │
   ▼
┌─────────────────────────────────────┐
│  DECIDE PROCESSING ORDER OF BUYING  │ ─ S202
│  INFORMATION WITHIN CLUSTERS a,b,c..│
└─────────────────────────────────────┘
   │
   ▼
┌─────────────────────────────────────┐
│      CLUSTERING PROCESSING          │
│      FOR SELLING INFORMATION        │ ─ S203
│   (CLUSTERS a',b',c' ...ARE FORMED) │
└─────────────────────────────────────┘
   │
   ▼
┌─────────────────────────────────────┐
│  LINKAGE BETWEEN BUYING INFORMATION │
│      AND SELLING INFORMATION        │ ─ S204
│   IN CLUSTER x AND CLUSTER x'       │
└─────────────────────────────────────┘
   │
   ▼
┌─────────────────────────────┐
│   NOTIFY DEALING RESULT      │ ─ S205
└─────────────────────────────┘
   │
   ▼
( End )
```

# FIG. 54

CLUSTERING PROCESSING

READ OUT BUYING INFORMATION
(OR SELLING INFORMATION) — S211

READ OUT CLUSTER ATTRIBUTE
FOR BUYING INFORMATION
(OR SELLING INFORMATION) — S212

JUDGE CLUSTERING ATTRIBUTE — S213

ASSIGN TO CORRESPONDING CLUSTER — S214

IS
PROCESSING COMPLTED
FOR ALL BUYING INFORMATION
(OR SELLING INFORMATION)
?
S215

No

Yes

End

## FIG. 55

EP 1 067 471 A1

**《CLUSTER a' (CHRYSANTHEMUM LARGE FLOWER·WHITE)》**

| | FLOWER NAME | BRAND NAME | COLOR | RANK | DISTRICT OF PRODUCTION | SELLING NUMBER | DESIRED SELLING PRICE | LOWEST SELLING PRICE |
|---|---|---|---|---|---|---|---|---|
| SELLING INFORMATION (B1) | CHRYSANTHEMUM−LARGE | SEIUN | WHITE | VERY GOOD | HOKKAIDO | 10000 | 100YEN | 80YEN |
| SELLING INFORMATION (B5) | CHRYSANTHEMUM−LARGE | SEIUN | WHITE | VERY GOOD | AICHI | 10000 | 120YEN | 90YEN |
| SELLING INFORMATION (B6) | CHRYSANTHEMUM−LARGE | SEIUN | WHITE | VERY GOOD | HOKKAIDO | 3000 | 90YEN | 80YEN |
| SELLING INFORMATION (B9) | CHRYSANTHEMUM−LARGE | SEIUN | WHITE | VERY GOOD | HOKKAIDO | 4000 | 140YEN | 85YEN |

(b)

4000 FLOWERS     1000 FLOWERS

**《CLUSTER a (CHRYSANTHEMUM LARGE FLOWER·WHITE)》**

| | FLOWER NAME | BRAND NAME | COLOR | RANK | DISTRICT OF PRODUCTION | BUYING NUMBER | DESIRED BUYING PRICE |
|---|---|---|---|---|---|---|---|
| BUYING INFORMATION (A3) | CHRYSANTHEMUM−LARGE | SEIUN | WHITE | VERY GOOD | HOKKAIDO | 5000 | 130YEN |
| BUYING INFORMATION (A2) | CHRYSANTHEMUM−LARGE | SEIUN | WHITE | VERY GOOD | HOKKAIDO | 12000 | 85YEN |
| BUYING INFORMATION (A7) | CHRYSANTHEMUM−LARGE | | WHITE | | | 10000 | 100YEN |

PROCESSING ORDER

(a)

# FIG. 56

```
            ( LINKING PROCESSING )
                      │
                      ▼
        ┌──────────────────────────────┐
        │   SEARCH SELLING INFORMATION  │
        │ WHICH MEETS CONDITION FOR DESIRED │─ S221
        │ BUYING PRICE OF BUYING INFORMATION │
        └──────────────────────────────┘
                      │
                      ▼         S222
                   ╱      IS      ╲
         No  ╱  SELLING INFORMATION OF SEARCHED ╲
        ◄───╲   SELLING INFORMATION ≠ 0        ╱
              ╲              ?              ╱
                      │
                    Yes
                      ▼
        ┌──────────────────────────────┐
        │ MATCH SEARCHED SELLING INFORMATION │
        │    AND BUYING INFORMATION     │─ S223
        │    (CONCLUSION OF DEALING)    │
        └──────────────────────────────┘
                      │
                      ▼
        ┌──────────────────────────────┐
        │    UPDATE SELLING NUMBER OF   │─ S224
        │  SEARCHED SELLING INFORMATION │
        └──────────────────────────────┘
                      │
                      ▼              S225
              ╱                          ╲
            ╱      IS THERE RESIDUAL NUMBER  ╲        No
           ╲  IN BUYING NUMBER OF BUYING INFORMATION ?╱────►
            ╲  (BUYING NUMBER-SELLING INFORMATION ≠ 0)╱
              ╲                          ╱           │
                      │                              ▼
                    Yes                          ( End )
                      ▼
        ┌──────────────────────────────┐
        │   UPDATE BUYING NUMBER OF     │─ S226
        │      BUYING INFORMATION       │
        └──────────────────────────────┘
```

## FIG. 57

BUYING NUMBER

12000
9000
5000
4000

A2
A3

85  130  BUYING PRICE

《BUYING INFORMATION》

SELLING NUMBER

10000
9000
4000

B1
B9

80 85  100  140  SELLING PRICE

《SELLING INFORMATION》

## FIG. 58

Start

DETERMINE PROCESSING ORDER
FOR BUYING INFORMATION — S301

READ OUT BUYING INFORMATION — S302

READ OUT CLUSTERING ATTRIBUTE
OF READ OUT BUYING INFORMATION — S303

CLUSTERING PROCESSING FOR
SELLING INFORMATION ACCORDING
TO READ OUT CLUSTERING ATTRIBUTE
(CLUSTER x' IS FORMED) — S304

LINKAGE BETWEEN READ OUT
BUYING INFORMATION AND
SELLING INFORMATION IN CLUSTER x' — S305

NOTIFY DEALING CONCLUSION RESULT — S306

S307

No — IS
PROCESSING ENDED FOR ALL
BUYING INFORMATION ?

Yes

End

## FIG. 59

| | FLOWER NAME | BRAND NAME | COLOR | RANK | DISTRICT OF PRODUCTION | BUYING NUMBER | DESIRED BUYING PRICE |
|---|---|---|---|---|---|---|---|
| BUYING INFORMATION (A5) | SUNFLOWER | SUNRICH ORANGE | ORANGE | VERY GOOD | IWATE | 12000 | 110YEN |
| BUYING INFORMATION (A3) | CHRYSANTHEMUM LARGE FLOWER | SEIUN | WHITE | VERY GOOD | HOKKAIDO | 5000 | 130YEN |
| BUYING INFORMATION (A6) | STATICE | SHUNYUATA | PURPLE | VERY GOOD | HOKKAIDO | 7000 | 100YEN |
| BUYING INFORMATION (A4) | STATICE | SHUNYUATA | PURPLE | VERY GOOD | HOKKAIDO | 8000 | 90YEN |
| BUYING INFORMATION (A6) | STATICE | SHUNYUATA | PURPLE | VERY GOOD | HOKKAIDO | 7000 | 100YEN |
| BUYING INFORMATION (A2) | CHRYSANTHEMUM LARGE FLOWER | SEIUN | WHITE | VERY GOOD | HOKKAIDO | 12000 | 85YEN |
| BUYING INFORMATION (A8) | SUNFLOWER | SUNRICH ORANGE | ORANGE | VERY GOOD | AICHI | 15000 | 80YEN |
| BUYING INFORMATION (A9) | SUNFLOWER · | | ORANGE | | | 10000 | 120YEN |
| BUYING INFORMATION (A1) | SUNFLOWER | | ORANGE | | | 1000 | 110YEN |
| BUYING INFORMATION (A7) | CHRYSANTHEMUM LARGE FLOWER | | WHITE | | | 10000 | 100YEN |

PROCESSING ORDER

EP 1 067 471 A1

# FIG. 60

| | FLOWER NAME | BRAND NAME | COLOR | RANK | DISTRICT OF PRODUCTION | BUYING NUMBER | DESIRED BUYING PRICE |
|---|---|---|---|---|---|---|---|
| BUYING INFORMATION (A5) | SUNFLOWER | SUNRICH ORANGE | ORANGE | VERY GOOD | IWATE | 12000 | 140YEN |

CLUSTERING

| | FLOWER NAME | BRAND NAME | COLOR | RANK | DISTRICT OF PRODUCTION | SELLING NUMBER | DESIRED SELLING PRICE | LOWEST SELLING PRICE |
|---|---|---|---|---|---|---|---|---|
| SELLING INFORMATION (B1) | CHRYSANTHEMUM-LARGE | SEIUN | WHITE | VERY GOOD | HOKKAIDO | 10000 | 100YEN | 80YEN |
| SELLING INFORMATION (B2) | SUNFLOWER | SUNRICH ORANGE | ORANGE | VERY GOOD | IWATE | 8000 | 100YEN | 90YEN |
| SELLING INFORMATION (B3) | SUNFLOWER | SUNRICH ORANGE | ORANGE | VERY GOOD | IWATE | 11000 | 130YEN | 100YEN |
| SELLING INFORMATION (B4) | STATICE | SHUNYUATA | PURPLE | VERY GOOD | HOKKAIDO | 7000 | 110YEN | 80YEN |
| SELLING INFORMATION (B5) | CHRYSANTHEMUM-LARGE | SEIUN | WHITE | VERY GOOD | AICHI | 10000 | 120YEN | 90YEN |
| SELLING INFORMATION (B6) | CHRYSANTHEMUM-LARGE | SEIUN | WHITE | VERY GOOD | HOKKAIDO | 3000 | 90YEN | 80YEN |
| SELLING INFORMATION (B7) | SUNFLOWER | SUNRICH ORANGE | ORANGE | VERY GOOD | AICHI | 5000 | 130YEN | 110YEN |
| SELLING INFORMATION (B8) | STATICE | SHUNYUATA | PURPLE | VERY GOOD | WAKAYAMA | 7000 | 100YEN | 80YEN |
| SELLING INFORMATION (B9) | CHRYSANTHEMUM-LARGE | SEIUN | WHITE | VERY GOOD | HOKKAIDO | 4000 | 140YEN | 85YEN |

(CLUSTER b')

| SUNFLOWER·ORANGE |
|---|
| SELLING INFORMATION (B2) |
| SELLING INFORMATION (B3) |
| SELLING INFORMATION (B7) |

EP 1 067 471 A1

# FIG. 61

**(A)**

A-① CLUSTER BUYING
INFORMATION ON LEVEL 1
(EXAMPLE:FLOWER NAME
/COLOR )

A-③ LINKAGE AND DECIDE
PRICE/QUANTITY
IN SAME CLUSTER

A-② CLUSTER SELLING
INFORMATION ON LEVEL 1

**(B)**

B-① CLUSTER BUYING
INFORMATION ON LEVEL 2
(EXAMPLE:FLOWER NAME
/COLOR/STANDARD )

B-③ LINKAGE AND DECIDE
PRICE/QUANTITY
IN SAME CLUSTER

B-② CLUSTER SELLING
INFORMATION ON LEVEL 2

**(C)**

C-① CLUSTER BUYING
INFORMATION ON LEVEL 3
(EXAMPLE:FLOWER NAME/
COLOR/STANDARD
PRODUCER
=SPECIFY SELLING
INFORMATION )

C-③ LINKAGE AND DECIDE
PRICE/QUANTITY
IN SAME CLUSTER

C-② CLUSTER SELLING
INFORMATION ON LEVEL 3

EP 1 067 471 A1

# FIG. 62

**(a)**

① DECIDE PROCESSING ORDER OF BUYING INFORMATION

② CLUSTER SELLING INFORMATION ACCORDING TO CONDITION OF BUYING INFORMATION

③ LINKAGE AND DECIDE PRICE/QUANTITY

**(b)**

① DECIDE PROCESSING ORDER OF SELLING INFORMATION

② CLUSTER BUYING INFORMATION ACCORDING TO CONDITION OF SELLING INFORMATION

③ LINKAGE AND DECIDE PRICE/QUANTITY

# FIG. 63

HIGH

DESIRED
BUYING PRICE

BUYERS

(1)·(4)

(3)

(2)

SHORT QUANTITY
ACCEPTABLE

— QUANTITY → LARGE

HIGH

DESIRED
SELLING PRICE

@1

@2
(LOWEST PRICE)

SELLERS

(c)

(a)

(b)

— QUANTITY → LARGE

·LINKAGE PROCESSING ORDER

SAME PRICE AND QUANTITY  1
1 HAS PRIORITY DUE TO     ↓
EARLIER ENTRY TIME        4
                          ↓
                          3
                          ↓
                          2

INTERIOR DIVISION POINT
100 = @1
 50 = (@1+@2)∕2
  0 = @2

·LINKAGE PROCESSING ORDER

c     b
↓  or ↓
a     a
↓     ↓
b     c

# FIG. 64

●EXAMPLE OF FLOWER     ●EXAMPLE OF AIRLINE TICKET

OFFER FROM SELLERS →

| ALL ITEMS BELOW AND PRICE RANGE |
|---|

REQUEST FROM BUYERS →
HIGH ABSTRACTNESS

↑

PROCESSING ORDER

LOW ABSTRACTNESS

COMMON ITEMS

| ARRIVAL DATE OF GOODS | | OD |
|---|---|---|
| FLOWER NAME | | FLIGHT DATE |
| BRAND/COLOR | | TIME RANGE |
| RANK | | AIRLINE |
| NAME OF PRODUCER | | FLIGHT NO. |

&

| PRICE | | PRICE |
|---|---|---|
| QUANTITY | | QUANTITY |

EP 1 067 471 A1

## FIG. 65

BROKERS PREPARE CLUSTERS (SPECIFIC OD)

■BUYING INFORMATION (BETWEEN HANEDA KUMAMOTO)

| | BUYER 1 TERMINAL | | BUYER 2 TERMINAL | | BUYER 3 TERMINAL | |
|---|---|---|---|---|---|---|
| CLUSTER LEVEL 1 | FLIGHT DATE | 29 30 | FLIGHT DATE | 29 30 | FLIGHT DATE | 30 |
| CLUSTER LEVEL 2 | AM/PM | ALL DAY | AM/PM | AM | AM/PM | PM |
| CLUSTER LEVEL 3 | AIRLINE | | AIRLINE | AN | AIRLINE | JA |
| CLUSTER LEVEL 4 | FLIGHT NO. | | FLIGHT NO. | | FLIGHT NO. | 191 OR 193 |
| | DECEMBER 29 | AN641 | DECEMBER 29 | AN641 | DECEMBER 30 | JA191 |
| | DECEMBER 29 | AN645 | DECEMBER 29 | AN645 | DECEMBER 30 | JA193 |
| | DECEMBER 29 | AN649 | DECEMBER 30 | AN641 | | |
| | DECEMBER 30 | AN641 | DECEMBER 30 | AN645 | | |
| | DECEMBER 30 | AN645 | | | | |
| | DECEMBER 30 | AN649 | | | | |
| | DECEMBER 30 | JA191 | | | | |
| | DECEMBER 30 | JA193 | | | | |
| | DECEMBER 30 | JA195 | | | | |
| BUYING CONDITION | PRICE | 20000YEN | PRICE | 22000YEN | PRICE | 24000YEN |
| | QUANTITY (SEATS) | 2 SEATS | QUANTITY (SEATS) | 4 SEATS | QUANTITY (SEATS) | 1 SEAT |

← PROCESSING ORDER

EP 1 067 471 A1

## FIG. 66

BUYERS FORM CLUSTERS

| | BUYER 1 | BUYER 2 | BUYER 3 | BUYER 4 |
|---|---|---|---|---|
| FLIGHT DATE | 29, 30 | 30 | 30 | 30 |
| FLIGHT TIME | | 10 TO 15 O'CLOCK | AM | |
| AIRLINE | JA | | JA OR AN | JA193 |
| PRICE | 18000YEN | 20000YEN | 24000YEN | 24000YEN |
| THE NUMBER OF SEATS | 10 | 20 | 4 | 2 |

| | | | | | | | | |
|---|---|---|---|---|---|---|---|---|
| DECEMBER 29 | AN641 | 19800YEN200SEATS | ⑦ | ○ | | | |
| DECEMBER 29 | AN645 | 24800YEN150SEATS | ① | ○ | | | |
| DECEMBER 29 | AN649 | 24800YEN100SEATS | ③ | ○ | | | |
| DECEMBER 30 | AN641 | 19800YEN200SEATS | ⑧ | ○ | ○ | | |
| DECEMBER 30 | AN645 | 24800YEN150SEATS | ② | ○ | ○ | | |
| DECEMBER 30 | AN649 | 24800YEN100SEATS | ④ | ○ | | | |
| DECEMBER 30 | JA191 | 19800YEN150SEATS | ⑨ | ○ | ○ | ○ | |
| DECEMBER 30 | JA193 | 24800YEN100SEATS | ⑤ | ○ | ○ | ○ | ○ |
| DECEMBER 30 | JA195 | 24800YEN100SEATS | ⑥ | ○ | | | |

↑
PROCESSING ORDER I
( PROCESSING ACCORDING TO SELLING INFORMATION )

PROCESSING ORDER II
( PROCESSING ACCORDING TO BUYING INFORMATION )

④　③　②　①

EP 1 067 471 A1

## FIG. 67

EP 1 067 471 A1

## FIG. 68

| SELLERS | SERVER | BUYERS |
|---------|--------|--------|

SELLERS REGISTER EC
REGISTER SHIPPING PLACE
(DISTRICT OF PRODUCTION)

┌─── DBM ───┐
DISTRIBUTION
INFORMATION
143

BUYERS REGISTER EC
REGISTER ARRIVAL PLACE

PARTICIPATE
IN DEALING

PARTICIPATE
IN DEALING

BUYING INFORMATION

┌─── DBM ───┐
DISTRIBUTION
INFORMATION

DISCOUNT
TABLE
143

REFERENCE

BUYING INFORMATION
+
DISTRIBUTION COST
INFORMATION

SELECT

DEALING
CONCLUSION

REGISTRATION

EP 1 067 471 A1

## FIG. 69

SELLING INFORMATION {

| | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | REMAINED NUMBER OF CASE | UNIT | DESIRED PRICE (YEN) | cm | g | FLOWER PER SPRAY |
|---|---|---|---|---|---|---|---|---|---|---|---|---|---|---|---|
| SELLING INFORMATION a | 97/09/01 | STATICE | SHUNYUATA (PURPLE·LIGHT PURPLE) | PURPLE | VERY GOOD | HOKKAIDO | OOOO | 100 | 100 | 100 | SPRAY | 100 | 99 | | |
| SELLING INFORMATION b | 97/09/01 | STATICE | SHUNYUATA (PURPLE·LIGHT PURPLE) | PURPLE | VERY GOOD | MIYAZAKI | OOOO | 100 | 100 | 100 | SPRAY | 110 | 99 | | |
| SELLING INFORMATION c | 97/10/10 | CHRYSANTHEMUM -LARGE | SEIUN | WHITE | VERY GOOD 2L | HOKKAIDO | OOOO | 10 | 5 | 4 | SPRAY | 200 | 100 | | |
| SELLING INFORMATION d | 97/09/02 | SUNFLOWER | SUNRICH ORANGE | ORANGE | VERY GOOD | IWATE | OOOO | 100 | 100 | 95 | SPRAY | 100 | 100 | | 2 |
| SELLING INFORMATION e | 97/09/01 | STATICE | SHUNYUATA (PURPLE·LIGHT PURPLE) | PURPLE | VERY GOOD | AICHI | OOOO | 100 | 100 | 100 | SPRAY | 100 | 100 | | 1 |
| SELLING INFORMATION f | 97/09/02 | SUNFLOWER | SUNRICH ORANGE | ORANGE | VERY GOOD | MIYAZAKI | OOOO | 100 | 100 | 100 | SPRAY | 130 | 100 | | 2 |
| | | | | | | | | | | | | | | | |

[3]

(ADDRESS OF BUYERS : SENDAI)

OOPREFECTURE

MIYAZAKI PREFECTURE

IWATE PREFECTURE

HOKKAIDO

| NUMBER OF CASE | DISTRIBUTION COST |
|---|---|
| 1 TO 10 CASES | 400 YEN PER CASE |
| 10 TO 50 CASES | 350 YEN PER CASE |
| 50 TO 100 CASES | 350 YEN PER CASE |

[4]
[5]

$T(1)_m$
$T(1)_3$
$T(1)_2$
$T(1)_1$

EP 1 067 471 A1

# FIG. 70

SELLING INFORMATION SCREEN

[11]

[10]

SHIPMENT INFORMATION LIST

SEARCH RESULTS: 1 TO 18 ARE DISPLAYED
TOTAL NUMBER: 121,550 SPRAYS  TOTAL AMOUNT: 77,620,000 YEN  TOTAL RESIDUAL NUMBER: 177,840 SPRAYS
TOTAL AMOUNT FOR RESIDUAL NUMBER: 64,402,500 SPRAYS

[6]   [7]

NEW

| SELECT | ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | DISTRIBUTION COST | DISCOUNT | NUMBER OF DESIRED BUYING CASE | cm | g | FLOWER PER SPRAY |
|---|---|---|---|---|---|---|---|---|---|---|---|---|---|---|---|---|---|---|
| ☐ | 97/09/01 | STATICE | SHUNYUATA (PURPLE·LIGHT PURPLE) | PURPLE | VERY GOOD | HOKKAIDO | OOOO | 100 | 100 | 100 | SPRAY | 100 | 400/CASES | ☐ | | 99 | | |
| ☑ | 97/09/01 | STATICE | SHUNYUATA (PURPLE·LIGHT PURPLE) | PURPLE | VERY GOOD | MIYAZAKI | OOOO | 100 | 100 | 100 | SPRAY | 110 | 500/CASES | ☐ | | 99 | | |
| ☐ | 97/10/10 | CHRYSANTHEMUM -LARGE | SEIUN | WHITE | VERY GOOD 2L | HOKKAIDO | OOOO | 10 | 5 | 4 | SPRAY | 200 | 400/CASES | ☐ | | 100 | | |
| ☐ | 97/09/02 | SUNFLOWER | SUNRICH ORANGE | ORANGE | VERY GOOD | IWATE | OOOO | 100 | 100 | 95 | SPRAY | 100 | 300/CASES | ☐ | | 100 | 2 | |
| ☐ | 97/09/01 | STATICE | SHUNYUATA (PURPLE·LIGHT PURPLE) | PURPLE | VERY GOOD | AICHI | OOOO | 100 | 100 | 100 | SPRAY | 100 | 400/CASES | ☐ | | 100 | 1 | |
| ☐ | 97/09/02 | SUNFLOWER | SUNRICH ORANGE | ORANGE | VERY GOOD | MIYAZAKI | OOOO | 100 | 100 | 100 | SPRAY | 130 | 500/CASES | ☐ | | 100 | 2 | |
| | | | | | | | | | | | | | | | | | | |
| | | | | | | | | | | | | | | | | | | |

◄ - SELLING INFORMATION a
◄ - SELLING INFORMATION b

EP 1 067 471 A1

## FIG. 71

**(a)**

| HOKKAIDO | |
|---|---|
| NUMBER OF CASE | DISTRIBUTION COST |
| 1 TO 10 CASES | 400 YEN PER CASE |
| 10 TO 50 CASES | 350 YEN PER CASE |
| 50 TO 100 CASES | 350 YEN PER CASE |

← [8]

**(b)**

| MIYAZAKI PREFECTURE | |
|---|---|
| NUMBER OF CASE | DISTRIBUTION COST |
| 1 TO 10 CASES | 500 YEN PER CASE |
| 10 TO 50 CASES | 200 YEN PER CASE |
| 50 TO 100 CASES | 100 YEN PER CASE |

← [9]

EP 1 067 471 A1

# FIG. 72

EP 1 067 471 A1

**REGISTRATION SCREEN**

[14]

[ REGISTRATION ]

[13]

TOTAL AMOUNT [ 230,000 ] YEN    DISTRIBUTION COST [    ]

| ARRIVAL DATE OF GOODS | FLOWER NAME | BRAND NAME | COLOR | RANK | DISTRICT OF PRODUCTION | NAME OF PRODUCER | NUMBER PER CASE | NUMBER OF CASE | RESIDUAL NUMBER OF CASE | UNIT | DESIRED PRICE (YEN) | cm | g | FLOWER PER SPRAY |
|---|---|---|---|---|---|---|---|---|---|---|---|---|---|---|
| 97/09/01 | STATICE | SHUNYUATA (PURPLE/LIGHT PURPLE) | PURPLE | VERY GOOD | MIYAZAKI | OOOO | 100 | 100 | 100 | SPRAY | 120 | 99 | | |

DESIRED BUYING NUMBER OF CASE [    100   ] CASES ◄——— [12]

BUY IF THE NUMBER OF CASE SMALLER THAN DESIRED? :  Yes [✓] ◄——— [15]

                               No [ ]

## FIG. 73

(ADDRESS OF BUYERS : OO)

...

(ADDRESS OF BUYERS : YOKYO)

(ADDRESS OF BUYERS : SENDAI)

[1]

OOPREFECTURE

...

MIYAZAKI PREFECTURE

IWATE PREFECTURE

HOKKAIDO

| NUMBER OF CASE | DISTRIBUTION COST | |
|---|---|---|
| 1 TO 10 CASES | 400 YEN PER CASE | ~T(1)$_3$ |
| 10 TO 50 CASES | 350 YEN PER CASE | ~T(1)$_2$ |
| 50 TO 100 CASES | 350 YEN PER CASE | ~T(1)$_1$ |

T(1)$_m$

~T(n)

~T(2)

T(1)

[2]

EP 1 067 471 A1

## FIG. 74

```
                        ( Start )
                            │
                            ▼
        ┌──────────────────────────────────────┐
        │ OBTAIN ADDRESS OF BUYER WHO REQUESTED │─S401
        └──────────────────────────────────────┘
                            │
                            ▼
            ┌──────────────────────────────┐
            │ SEARCH CORRESPONDING TABLES T(x) │─S402
            └──────────────────────────────┘
                            │
            ┌───────────────┘
            │               ▼
            │   ┌──────────────────────────────────────┐
            │   │   SEARCH TABLE T(x)y WHICH CORRESPONDS │
            │   │           TO SELLING INFORMATION        │─S403
            │   │ "DISTRICT OF PRODUCTION" FROM TABLES T(x)│
            │   └──────────────────────────────────────┘
            │               │
            │               ▼
            │   ┌──────────────────────────────────────┐
            │   │ OBTAIN DISTRIBUTION COST FROM TABLE T(x)y │─S404
            │   └──────────────────────────────────────┘
            │               │
            │               ▼        S405
            │          ╱─────────────────────╲
            │    No   ╱           IS            ╲
            └────────▶  PROCESSING ENDED FOR ALL  ╲
                       ╲     SELLING INFORMATION ? ╱
                        ╲─────────────────────────╱
                            │ Yes
                            ▼
            ┌──────────────────────────────┐
            │ SEND SELLING INFORMATION SCREEN │─S406
            └──────────────────────────────┘
                            │
                            ▼          S407
                       ╱──────────────╲
                      ╱   IS DISCOUNT   ╲   No
                      ╲ DISPLAY REQUIRED?╱────────┐
                       ╲──────────────╱           │
                            │ Yes                 │
                            ▼                      │
            ┌──────────────────────────────┐       │
            │ SEARCH CORRESPONDING TABLE T(x)y │─S408 │
            │        FROM TABLES T(x)         │       │
            └──────────────────────────────┘       │
                            │                      │
                            ▼                      │
                ┌────────────────────┐             │
                │  SEND TABLE T(x)y   │─S409        │
                └────────────────────┘             │
                            │◀────────────────────┘
                            ▼          S410
       ②              ╱──────────────╲
        │            ╱   IS BUYING      ╲    No
        ▼       S414 ╲ REQUEST REQUIRED? ╱─────────┐
   ╱──────────╲       ╲──────────────╱            │
  ╱    IS       ╲          │ Yes                  │
 ╱  REGISTRATION ╲ No      ▼                       │
 ╲   REQUIRED ?  ╱────┐ ┌──────────────────────┐    │
  ╲──────────╱        │ │ SEND REGISTRATION SCREEN │─S411 │
        │ Yes  S415   │ └──────────────────────┘    │
        ▼             │          │                  │
 ┌──────────────┐     │          ▼        S412       │
 │   DEALING     │    │     ╱──────────────╲         │
 │ CONCLUSION    │    │    ╱      IS          ╲  No    │
 │ PROCESSING    │    │    ╲ DESIRED BUYING NUMBER OF ╱──┤
 └──────────────┘     │     ╲    CASE ENTERED ?    ╱     │
        │             │      ╲──────────────╱           │
        │◀────────────┘          │ Yes                  │
        │◀──────────────①        ▼                       │
        │              ┌──────────────────────────┐     │
        │              │ CALCULATE AND SEND TOTAL AMOUNT │─S413 │
        │              └──────────────────────────┘     │
        ▼                        │                       │
    ( End )                      ②                      ①
```

## FIG. 75

EP 1 067 471 A1

**50 TO 100 CASES**

**10 TO 50 CASES**

**1 TO 10 CASES**

| SELLERS \ BUYERS | HOKKAIDO | SENDAI | IWATE PREFECTURE | | MIYAZAKI PREFECTURE | |
|---|---|---|---|---|---|---|
| HOKKAIDO | 100 YEN PER CASE | 150 YEN PER CASE | 180 YEN PER CASE | | 400 YEN PER CASE | |
| SENDAI | 150 YEN PER CASE | 100 YEN PER CASE | 130 YEN PER CASE | | 350 YEN PER CASE | |
| IWATE PREFECTURE | 180 YEN PER CASE | 130 YEN PER CASE | 100 YEN PER CASE | | 330 YEN PER CASE | |
| | | | | | | |

# INTERNATIONAL SEARCH REPORT

| International application No. |
| --- |
| PCT/JP98/05522 |

**A. CLASSIFICATION OF SUBJECT MATTER**
Int.Cl⁶ G06F17/60

According to International Patent Classification (IPC) or to both national classification and IPC

**B. FIELDS SEARCHED**

Minimum documentation searched (classification system followed by classification symbols)
Int.Cl⁶ G06F17/60

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
WPI (DIALOG)

**C. DOCUMENTS CONSIDERED TO BE RELEVANT**

| Category* | Citation of document, with indication, where appropriate, of the relevant passages | Relevant to claim No. |
| --- | --- | --- |
| | JP, 5-314139, A (Reuters Ltd.), 26 November, 1993 (26. 11. 93), | |
| X | Full text ; Figs. 1 to 36 | 1-8 |
| X | Full text ; Figs. 1 to 36 | 13-31 |
| Y | Full text ; Figs. 1 to 36 (Family: none) | 32-45 |
| | EP, 0434224, A2 (REUTERS LIMITED), 26 June, 1991 (26. 06. 91), | |
| X | Full text ; Figs. 1 to 36 | 1-8 |
| X | Full text ; Figs. 1 to 36 | 13-31 |
| Y | Full text ; Figs. 1 to 36 (Family: none) | 32-45 |
| X | JP, 6-251022, A (Fujitsu Ltd.), 9 September, 1994 (09. 09. 94), Par. Nos. [0001] to [0013] ; Figs. 1 to 17 (Family: none) | 9-12 |
| Y | JP, 4-184678, A (Ricoh Co., Ltd.), 1 July, 1992 (01. 07. 92), Full text ; Figs. 1 to 9 (Family: none) | 32-38 |

| ☒ Further documents are listed in the continuation of Box C. | ☐ See patent family annex. |
| --- | --- |

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| 22 January, 1999 (22. 01. 99) | 2 February, 1999 (02. 02. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

International application No.

PCT/JP98/05522

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 9-62738, A (Kawasaki Steel Corp.), 7 March, 1997 (07. 03. 97), Par. Nos. [0001] to [0013] ; Figs. 1 to 17 (Family: none) | 39-45 |
| | JP, 10-320494, A (Toshiba Corp.), 4 December, 1998 (04. 12. 98), | |
| P, Y | Full text ; Figs. 1 to 62 | 1-4 |
| P, X | Full text ; Figs. 1 to 62 | 5-8 |
| P, X | Full text ; Figs. 1 to 62 | 32-38 |
| P, X | Full text ; particularly Par. No. [0096] ; Figs. 1 to 62 (Family: none) | 39-45 |
| P, Y | JP, 10-320481, A (K.K. Supureddo Iguru), 4 December, 1998 (04. 12. 98), Full text ; Figs. 1 to 7 (Family: none) | 1-4 |

Form PCT/ISA/210 (continuation of second sheet) (July 1992)